(19) **Europäisches Patentamt**

**European Patent Office**

**Office européen des brevets**

(11) **EP 1 513 154 A1**

(12) **EUROPEAN PATENT APPLICATION**

(43) Date of publication:
**09.03.2005 Bulletin 2005/10**

(51) Int Cl.[7]: **G11B 27/10**, G11B 27/32

(21) Application number: **04021019.7**

(22) Date of filing: **03.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **05.09.2003 JP 2003314278**
**17.03.2004 JP 2004077116**

(71) Applicant: **Kabushiki Kaisha Toshiba**
**Tokyo 105-8001 (JP)**

(72) Inventors:
• **Yamagaka, Yoichiro**
  **Intellectual Property Division**
  **Minato-ku Tokyo 105-8001 (JP)**
• **Taira, Kazuhiko Intellectual Property Division**
  **Minato-ku Tokyo 105-8001 (JP)**
• **Mimura, Hideki Intellectual Property Division**
  **Minato-ku Tokyo 105-8001 (JP)**
• **Ando, Hideo Intellectual Property Division**
  **Minato-ku Tokyo 105-8001 (JP)**

(74) Representative: **Henkel, Feiler & Hänzel**
**Möhlstrasse 37**
**81675 München (DE)**

(54) **Information storage medium, information reproduction device, information reproduction method**

(57) An audio object for background comprising at least one elementary audio object is recorded in an information storage medium. The playback range in the audio object is designated by designating an elementary audio object number.

F I G. 67

## Description

The present invention relates to an information storage medium (or an information recording medium), an information reproduction device, and an information reproduction method.

As such an information storage medium, there has been an optical disk called a digital versatile disk (DVD) capable of reproducing digital information using a focused light. Specifications of the current DVD include read-only DVD-ROM specifications, write-once DVD-R specifications, rewritable-type (about 10,000 times) DVD-RW, and rewritable-type (10,000 times or more) DVD-RAM specifications. Any specifications have format specifications which define a data structure recorded on an optical disk (information storage medium) of video information (video data, sub-picture data, and audio data, generically referred to as video objects) itself, and a data structure of management data for managing video information.

The read-only current DVD video specifications simultaneously deal with a large number of languages, and multi-scene presentation is possible such as multi-angle and multi-story. Additionally, there are varieties of menu screens, it is easy for users to directly access desired scenes, and the specifications have formats capable of providing video content which is easily used by the users (see U.S. Pat. No. 5,636,200, and Japanese Patent No. 2,677,775, for example).

As described above, the read-only current DVD video specifications have the formats capable of the video content easily usable by the users, but there has been a demand for improvements of the specifications in order that the users may further easily use the content and content representing power may be further enriched for the users.

Moreover, there is a problem that authoring (preparation and edition of programs to be recorded in the DVD video disk) is complicated in order to provide the content easy to use by the users.

Parts of the current DVD video specifications lacking in content representing power for the users, and parts difficult for the users to use or parts which are complicated in the authoring for providing the content easy to use by the users will be specifically listed.

[1] Difficult for the user to use. Alternatively, the authoring has been complicated in order to prepare the content easy to use by the users.

(A) Disadvantages with respect to a presentation start position at a time when presentation of a title is interrupted halfway to perform another processing, and the presentation of the title is restarted.

(A1) The presentation of video is interrupted, presentation is switched to menu or another video, and the presentation cannot be restarted from the interrupted position.

The presentation of a specific video title is interrupted halfway during the presentation to switch to the menu screen, bonus content is then played back halfway or to the end, and afterwards the video title interrupted halfway is to be played back. However, the content prepared by conventional DVD video specifications cannot be played back only from a start position of the video title in many cases. This is because resume information (presentation interrupted position information) of the previous specific video title is rewritten into position information of the bonus content in a stage in which the presentation of the bonus content is started. A complicated authoring process is required in order to obtain the content such that the presentation can be started from the interrupted position of the previous video title after the bonus content is played back halfway or to the end.

(A2) The presentation cannot be started from a good place to start, when a game is to be resumed after the interruption of the presentation in the game or the like.

In case of the "game" (e.g., role playing game) instead of the above-described video as the specific title, there is a request from a content provider that the game is to be started from an end of a chapter of the game, not from an interrupted position in a case where the game is resumed after returning to the menu screen. However, this request cannot be satisfied with the current DVD video specifications.

(B) There is a portion difficult to use concerning language setting for display.

(B1) A menu description language code cannot be changed with a command which can be designated in the content, and the authoring is complicated.

In the current DVD video specifications, the menu description language code M_LCD is set into SPRM(0) (0-th system parameter: 16 bits) of navigation data, and the value is stored in the memory of the information reproduction device. In the current DVD video specifications, a command for changing the value of SPRM(0) does not exist in a command list which can be set in the content, and it is possible to change the value of SPRM(0) only by user designation under a special condition. Specifically, the value of SPRM(0) can be changed using a user operation function called Menu_Language_Select () in user functions arranged in the information reproduction device, but there is a restriction that the user operation called Menu_Language_Select () can be set only during the stopping of the operation of the information reproduction device. A screen for exclusive use is displayed to set the user operation using a remote controller.

The value of SPRM(0) cannot be changed with the command which can be set in the content in this manner. Therefore, a screen for selecting the menu description language code needs to be prepared with respect to a plurality of menu description language codes in the content (especially VOB data on menu information) so that any setting of the value of SPRM(0) can be handled. The authoring operation at the time of preparation of the content has been very difficult.

(B2) There is a danger that menu description language code information set by the user is deleted.

For example, supposing that a command capable of changing the value of SPRM(0) is newly added in order to solve problem (B1). Then, even when the user carefully sets a specific menu description language code (e.g., set Japanese to SPRM(0)), there is a danger that the value of SPRM(0) is automatically changed by the presentation of the content. When the menu description language code is automatically changed by the command, the user feels dissatisfied. Additionally, a necessity to set the menu description language code again by the user is generated, and this causes a problem that burdens on the user increase.

[2] There is a problem where a content representing power for the user is lacking.

(C) Disadvantage concerning seamless play with respect to a still picture

(C1) A seamless play between a moving picture and still picture is not possible with the current DVD video content.

The current DVD video assures the seamless play of the moving picture (Movie Content), and connection/play is seamlessly possible between different VOBs (or different titles) (without interrupting the screen of the moving picture halfway). On the other hand, for example, when the still picture displayed in a slide show (one display method with respect to the still picture, in which the displayed still picture is automatically switched) is switched to the moving picture, the seamless play is not assured, and video or audio stands still halfway depending on the information reproduction device in some case. Reasons why the seamless connection is not assured at a time of the switching to the moving picture from the still picture with the current DVD video content are as follows.

i) In an extended system target decoder (E-STD) in which the seamless play is assured, an access unit is defined in a moving picture object, and the values of a system time clock (STC: a clock value forming a reference) set to a separation unit, video decoder unit, sub-picture decoder unit, and audio decoder unit are switched in a boundary position of the access unit. On the other hand, the access unit cannot be defined with respect to the still picture in the current DVD.

That is, a picture continues to be output constantly continuously by a field unit of the moving picture, whereas the picture is only intermittently output in the still picture displayed, for example, in the slide show. In a data structure in a still picture object, a sequence end code (sequence_end_code) is arranged immediately after an I picture (intra picture) constituting a still picture in accordance with specifications of moving picture experts group 2 (MPEG-2). In the video decoder unit, when this sequence end code is detected, the decoding is stopped until the next I picture is input. Therefore, in the conventional DVD video, the access unit such as the moving picture cannot be set in a timing period in which the still picture is intermittently output.

ii) Switching between common parities has been permitted as a switching timing between the still pictures in the conventional DVD video. That is, after the previous still picture ends in a top field (or a bottom field), the next still picture is permitted to be started from the top field (or the bottom field). Therefore, when the still picture is switched to the moving picture halfway in a frame, the seamless connection is not performed, and there is a danger that the screen is disturbed at a switching end.

(C2) Multi-angle play in which the still pictures are combined or multi-angle play between the moving picture and still picture cannot be performed.

In the current DVD video, it is difficult to perform the multi-angle play in which slide shows of still pictures (still picture content) are combined or the multi-angle play in which the slide show of the still pictures is combined with the moving picture. When multi-angle play handling content is forcibly prepared, the seamless play is not assured with respect to the still picture. Therefore, multi-angled still pictures cannot be continuously played back (the still picture is stopped halfway without being continuously switched), or the screen stops halfway without being smoothly switched at the switching end between a screen of multi-scene and that of one sequential scene.

In the moving picture, an interleaved unit (ILVU) is defined in which scattered arrangement is performed for each angle in an interleaved block, whereas the definition of the ILVU with respect to the still picture is not clarified in the current DVD video. A period until the switching of the screen is long in the still picture (the same still picture continues to be played back for a long time), and therefore there has not been a mechanism capable of displaying the corresponding still picture immediately after angle switching at present. Furthermore, as described in (C1), on detecting the sequence end code arranged immediately after the I picture corresponding to the still picture, a decode process of the video decoder unit is temporarily stopped until the next I picture comes. Therefore, the arrangement of the sequence end code is inhibited in video data in a cell constituting the interleaved block in the current DVD video specifications.

(D) The seamless play is not assured in VOB where the command by a cell unit is included.

In the DVD video of the current standard definition (SD), it is possible to designate the command by the cell unit in a program chain (PGC). This command information is recorded in a cell command region in program chain information (PGCI) which is a region where management information of the PGC is recorded.

The cell command is executed at the time of the ending of the presentation of the cell in which this cell command is set. Therefore, the presentation of the next cell can be temporarily interrupted. Therefore, the seamless play between the cells is not assured at the presentation time of VOB including the cell command in the current SD DVD video.

(E) Disadvantage on highlight information

(E1) There is a deviation of a display period (set period) between highlight information and sub-picture.

A menu of the highlight information is displayed at the presentation time of a video title image, and content can be prepared in such a manner that the user can perform an interactive operation. In this case, it is necessary to switch the highlight information or to change the content of the highlight information in accordance with the content of the video title image being played back, and therefore precision of a display period or executable period of the highlight information is important. In the DVD video content of the conventional SD, a button displayed in the screen includes a combination of two types of different streams of a sub-picture stream presenting the image of the button and a video stream including the highlight information required for executing the command designated by the button.

The effective executable period of the highlight information is determined by time information of start and end (PTM: presentation time), and completely coincides with a display period of the sub-picture for use mainly in subtitles. There is a problem that menu selection ends, when the sub-picture ends. Therefore, when a content producer is to prepare the content of the subtitles simultaneously combined with the menu, there are restrictions as to the preparation of the content. For example, the user has to select the menu within an effective (display) period of the sub-picture. The content producer cannot prepare the content as imaged, a degree of freedom is limited, and the content supplied to the user is forced to be limited.

(E2) A selection item image of the menu is not multicolored.

Since only a combination of 16 colors can be represented in the current SD DVD video content, a degree of appeal to the user is low, and multicolored presentation cannot be performed.

(E3) A designated region of the highlight information cannot be set to a shape other than a rectangular shape.

The shape other than the rectangular shape cannot be set as the designated region of the highlight information in the DVD video content of the current SD, and it has not been possible to prepare the content having varieties of highlight information such as a triangular shape and a star shape.

(E4) The same button cannot be set with respect to a plurality of regions distant from one another on the screen.

The same button can be set only in an integrated region in the DVD video content of the current SD.

On the other hand, it is easy to link the same URL to a plurality of regions in the screen of PC or a homepage screen of internet, and the current SD DVD video content has been inferior to the PC screen or the homepage screen of internet.

(F) There is a problem that a background music discontinues at the switching time of the menu screen.

In the current SD DVD video content, audio information (background music) at a menu screen display time accompanies to each menu. Therefore, every time the menu screen changes, the audio information accordingly changes.

The DVD video content of the current SD cannot satisfy a content provider's request that the background music is to be played back continuously without being interrupted, even when the menu is switched. Furthermore, it is not possible to satisfy the content provider's demand that the content be prepared in such a manner that:

a] the background sound (background music) is continuously played back without the interruption of any sound at the time of the switching of the menu, and a repeat playback range of the background sound (background music) changes with the menu screen (e.g., while an only "music piece No. 1" is repeatedly played back at the time of the display of a "top menu screen", "music piece Nos. 1 to 3" are repeatedly played back during the display of "specific menu screen A", and an only "characteristic part of the music piece No. 1" is repeatedly played back during the display of the "specific menu screen B"); or

b] the background sound (background music) corresponding to the switched menu image is continuously started immediately after a series of background sound .(background music) corresponding to the menu image before the switching ends without changing the background sound (background music) discontinuously simultaneously with the switching of the menu screen, and thereafter the background sound (background music) corresponding to the switched menu image is repeatedly played back.

In short, in the existing DVD video specifications, each menu is accompanied by the background sound (background music) for the time of the display of the menu screen. Therefore, the sound information changes every time the menu screen is changed. Therefore, a problem occurs that the background sound cannot be played back continuously without any interruption, even when the menu is switched.

An object of the present invention is to provide an information storage medium, an information reproduction apparatus, or an information reproduction method which continuously plays back background sound (background music), even when a menu is switched at the time of presentation of a menu screen.

According to an embodiment of the present invention, an information storage medium stores an audio object for background having at least one elementary audio object. A playback range in the audio object is designated by designating the number of the elementary audio object.

According to another embodiment of the present invention, an information reproduction apparatus for an information storage medium storing an audio object for background having at least one elementary audio object plays back at least a part of the audio object by designating the number of the elementary audio object.

According to another embodiment of the present invention, an information reproduction method for an information storage medium storing an audio object for background having at least one elementary audio object includes a step of reproducing at least a part of the audio object by designating the number of the elementary audio object.

This summary of the invention does not necessarily describe all necessary features so that the invention may also be a sub-combination of these described features.

The invention can be more fully understood from the following detailed description when taken in conjunction with the accompanying drawings, in which:

FIGS. 1A, 1B, 1C, 1D, 1E, and 1F show contents of information recorded in a disc-shaped information storage medium 1 in an embodiment of the present invention;

FIG. 2 is a diagram showing a file system of a conventional SD DVD video content;

FIG. 3 is a diagram showing a data structure in an HD video manager information (HDVMGI) 31 shown in FIG. 1E;

FIG. 4 is a diagram showing a data structure in an HD video manager information management table (HDVMGI_MAT) 310 of FIG. 3;

FIG. 5 is a diagram showing a data structure in a title search pointer table (TT_SRPT) 311 shown in FIG. 3;

FIG. 6 is a diagram showing a data structure in an HD video manager menu PGCI unit table (HDVMGM_PGCI_UT) 312 shown in FIG. 3;

FIG. 7 is a diagram showing a data structure in an HD video manager menu language unit #n (HDVMGM_LU #n) 312c (FIG. 6) recorded in the HD video manager menu PGCI (HDVMGM_PGCI_UT) 312 shown in FIG. 3;

FIG. 8 is a diagram showing a data structure in an HD video manager menu program chain category (HDVMGM_PGC_CAT) recorded in the HD video manager menu/language unit #n (HDVMGM_LU #n) 312c (FIG. 6) shown in FIG. 7;

FIG. 9 is a diagram showing a data structure in a parental management information table (PTL_MAIT) 313 shown in FIG. 3;

FIG. 10 is a diagram showing a data structure in parental management information (PTL_MAI) 313c shown in FIG. 8;

FIG. 11 is a diagram showing a data structure in an HD video title set attribute table (HDVTS_ATRT) 314 shown in FIG. 3;

FIG. 12 is a diagram showing a data structure in a text data manager (TXTDT_MG) 315 shown in FIG. 3;

FIG. 13 is a diagram showing a data structure in a text data language unit (TXTDT_LU) 315c in the text data manager (TXTDT_MG) 315 shown in FIG. 12;

FIG. 14 is a diagram showing a data structure in text data (TXTDT) 315c4 in the text data language unit (TXTDT_LU) 315c shown in FIG. 13;

FIG. 15 is a diagram showing a data structure in an HD video manager menu cell address table (HDVMGM_C_ADT) 316 shown in FIG. 3;

FIG. 16 is a diagram showing a data structure in an HD video manager menu video object unit address map (HDVMGM_VOBU_ADMAP) 317 shown in FIG. 3;

FIG. 17 is a diagram showing contents of management information with respect to AOB for HD video content menu (HDMENU_AOB);

FIG. 18 is a diagram showing a data structure in a video object set for HD video manager menu (HDVMGM_VOBS) 32 shown in FIG. 1E grouped and stored in an HD_VMG01.HDV file of FIG. 2;

FIG. 19 is a diagram showing a data structure in an audio object set for HD video manager menu (HDMENU_AOBS);

FIG. 20 is a diagram showing a data structure in an HD video title set (HDVTSI) 41 shown in FIGS. 1F;

FIG. 21 is a diagram showing a data structure in an HD video title set information management table (HDVTSI_MAT) 410;

FIG. 22 is a diagram showing a data structure in an HD video title set PTT search pointer table (HDVTS_PPT_SRPT) 411 shown in FIG. 20;

FIG. 23 is a diagram showing a data structure in an HD video title set program chain information table (HDVTS_PGCIT) 412 shown in FIG. 20;

FIG. 24 is a diagram showing a data structure in the HD video title set program chain category (HDVTS_PGC_CAT) recorded in HDVTS_PGCI search pointer (HDVTS_PGCI_SPR) shown in FIG. 23;

FIG. 25 is a diagram showing a data structure in an HD video title set menu/PGCI/unit table (HDVTSM_PGCI_UT) 413 shown in FIG. 20;

FIG. 26 is a diagram showing a data structure in an HD video title set menu/language unit (HDVTSM_LU) 413c shown in FIG. 25;

FIG. 27 is a diagram showing a data structure in the HD video title set program chain category information (HDVTSM_PGC_CAT) shown in FIG. 26;

FIG. 28 is a diagram showing a data structure in an HD video title set time map table (HDVTS_TMAPT) 414 shown in FIG. 20;

FIG. 29 is a diagram showing a data structure in an HD video title set menu cell address table (HDVTSM_C_ADT) 415 shown in FIG. 20;

FIG. 30 is a diagram showing a data structure in an HD video title set menu video object unit address map (HDVTSM_VOBU_ADMAP) 416 shown in FIG. 20;

FIG. 31 is a diagram showing a data structure in an HD video title set cell address table (HDVTS_C_ADT) 417 shown in FIG. 20;

FIG. 32 is a diagram showing a data structure in the HD video title set/cell/address table (HDVTS_C_ADT) 417 shown in FIG. 20;

FIG. 33 is a diagram showing a data structure in program chain information (PGCI);

FIG. 34 is a diagram showing a data structure in program chain/general information (PGCI_GI) in program chain information (PGCI);

FIG. 35 is a diagram showing a data structure in a program chain/command table (PGCI_CMDT) in program chain information (PGCI) shown in FIG. 34;

FIG. 36 is a diagram showing a data structure in program chain/command table information (PGC_CMDTI) and resume command (RSM_CMD) in the program chain/command table (PGCI_CMDT) shown in FIG. 35;

FIG. 37 is a diagram showing a data structure in program chain/program map (PGC_PGMAP) and cell/position information table (C_POSIT) 54 arranged in the program chain information (PGCI);

FIG. 38 is a diagram showing a data structure in a cell/Playback information table (C_PBIT) arranged in the program chain information (PGCI);

FIGS. 39A, 39B, 39C, and 39D are arrangement diagrams of a graphic unit (GU) in a video object;

FIG. 40 is a diagram showing a substream ID of a graphic unit stream;

FIG. 41 is a diagram showing one example of a data structure in the graphic unit;

FIG. 42 is a diagram showing another example of a data structure in the graphic unit;

FIGS. 43A and 43B are diagrams showing contents of header information and contents of general information in the graphic unit;

FIG. 44 is an explanatory view of an image of mask data and graphic data in the graphic unit;

FIG. 45 is a diagram showing a video synthesis example including a mask pattern;

FIG. 46 is a diagram showing one example of a color contrast information table stored in color pallet information b22;

FIG. 47 is a diagram showing bit definition of mask data b3 of one bit/pixel stored in the graphic unit (GU);

FIG. 48 is a block diagram showing a constitution of an information reproduction device (player) of an embodiment of the present invention;

FIG. 49 is a diagram showing a decoder model A of a decoder block in a video system of and after a separation unit 103 of FIG. 48;

FIG. 50 is a diagram showing a decoder model B of the decoder block in the video system of and after the separation unit 103 of FIG. 48;

FIG. 51 is a diagram showing a decoder model C of the decoder block in the video system of and after the separation unit 103 of FIG. 48;

FIG. 52 is an explanatory view of button position information in the graphic unit;

FIG. 53 is a diagram showing one example of video synthesis including the graphic unit having the button position information shown in FIG. 52;

FIG. 54 is a diagram showing another example of the video synthesis in which the video synthesis shown in FIG. 45 further includes sub-picture data;

FIG. 55 is a diagram showing a flowchart of the video synthesis associated with the video decoder including the graphic decoder;

FIG. 56 is a diagram showing another example concerning the data structure in an audio object set for HD video manager menu (HDMENU_AOBS) 33, shown in FIG. 19;

FIG. 57 is a diagram showing contents of header information of the audio object set for HD video manager menu (HDMENU_AOBS) 33, shown in FIG. 56;

FIG. 58 is a diagram showing another example of the data structure in the HD video manager menu program chain category (HDVMGM_PGC_CAT);

FIG. 59 is a diagram showing another example of the data structure in the HD video title set program chain category (HDVTS_PGC_CAT);

FIG. 60 is a diagram showing another example of the data structure in HDVTSM_PGC category information (HDVTSM_PGC_CAT);

FIG. 61 is a flowchart showing a presentation process of the audio object set for HD video manager menu (HDMENU_AOB);

FIG. 62 is a diagram showing contents of a system parameter SPRM;

FIG. 63 is a diagram showing an example of the data structure of an instruction operand of SetGPRMMD belonging to a SetSystem instruction group described in the data structure in command information;

FIGS. 64A, 64B, 64C, 64D, 64E, 64F, 64G, and 64H are diagrams showing concrete examples of the command information in which operand numerical values are set under specific use conditions;

FIG. 65 is a diagram showing structures of a video manager (VMG) and a video title set (VTS) in a case where all elementary audio objects (EVOBs) are recorded in continued blocks;

FIG. 66 is a diagram showing a modification of a file system (directory structure) of DVD video contents shown in FIG. 2;

FIG. 67 is an explanatory view of an operation for designating a range of repeat playback of audio data by an elementary audio object (EAOB) number;

FIG. 68 is a diagram showing a structure example of an elementary audio object set (EAOBS);

FIG. 69 is an explanatory view showing an operation for reproducing two or more continuous EAOBs in a PGC group constituted of one or a plurality of PGCs using start EAOBN and end EAOBN in the PGCI search pointer;

FIG. 70 is a diagram showing contents of the elementary audio object set (EAOBS);

FIG. 71 is a diagram showing contents of EAOBS header information;

FIG. 72 is a diagram showing contents of VMGM_PGC_CAT in VMGM_PGCI_SRP in VGMV_PGCI_UT in VMGI;

FIG. 73 is a diagram showing contents of VTS_PGC_CAT in VTS_PGCI_SRP in VTS_PGCIT in VTSI;

FIG. 74 is a diagram showing contents of VTSM_PGC_CAT in VTSM_PGCI_SRP in VTSM_LU in VTS;

FIG. 75 is a flowchart of a presentation of menu audio object (HDMENU_AOB) in a case where an audio repeat playback range is designated by start and end EAOBs instead of start and end points;

FIG. 76 is a diagram showing a reference player model which plays back asynchronous audio EAOBS;

FIG. 77 is a diagram showing a language selection menu;

FIG. 78 is a diagram showing a structure of video manager information (VMGI);

FIG. 79 is a diagram showing a modification of a detailed data structure in the HD video manager information management table (HDVMGI_MAT) 310;

FIG. 80 is a diagram showing contents of a sub-picture stream attribute (FP_PGCM_SPST_ATR) of FP_PGCM of FIG. 79;

FIG. 81 is a diagram showing contents of an FP_PGC category (FP_PGC_CAT) of FIG. 79;

FIG. 82 is a diagram showing a structure of an FP_PGC menu cell address table (FP_PGCM_C_ADT) in VMGI;

FIG. 83 is a diagram showing a structure of an FP_PGC menu enhanced video object unit address map (FP_PGCM_EVOBU_ADMAP) in VMGI;

FIG. 84 is a diagram showing contents of presentation control information (PCI);

FIG. 85 is a diagram showing a modification of a graphic unit header (GRUH);

FIG. 86 is a diagram showing contents of highlight general information (HL_GI);

FIG. 87 is a diagram showing 32 pull-down processes for converting a movie frame into an NTSC video frame;

FIGS. 88A, 88B, 88C, 88D, 88E, 88F, 88G, 88H, and 88I are diagrams showing a run length compression rule of button pattern data;

FIG. 89 is a diagram showing a data structure in a sub-picture unit (SPU);

FIG. 90 is a diagram showing definitions of size information (SPU_SZ) and sub-picture display control sequence table start address information (SP_DCSQT_SA) of the sub-picture unit;

FIGS. 91A, 91B, and 91C are diagrams showing a data structure in a sub-picture unit header for SD and HD;

FIGS. 92A, 92B, and 92C are diagrams showing a data structure in the sub-picture unit header (SPUH) for HD shown in FIGS. 91A, 91B, and 91C from another viewpoint;

FIG. 93 is a diagram showing contents of a sub-picture display control command (SP_DCCMD) recordable in a sub-picture display control sequence table (SP_DCSQT);

FIG. 94 is a flowchart showing presentation of the sub-picture unit performed in accordance with the contents of a pre-header in the sub-picture unit header (SPUH);

FIG. 95 is a diagram showing contents of a sub-picture stream attribute (VMGM_SPST_ATR) of VMGM in VMGI_MAT shown in FIG. 79;

FIG. 96 is a diagram showing contents of a sub-picture stream attribute (HDVTS_SPST_ATR) of HDVTS in an HD video title set information management table (HDVTSI_MAT) shown in FIG. 21;

FIG. 97 is a diagram showing contents of one piece of PGC sub-picture stream control information (PGC_SPST_CTL) in a PGC sub-picture stream control table (PGC_SPST_CTLT) shown in FIG. 34;

FIG. 98 is a diagram showing a modification of PGC_GI shown in FIG. 33;

FIG. 99 is a diagram showing a basic player reference model;

FIG. 100 is a diagram showing a type of a player reference model;

FIG. 101 is a diagram showing the player reference model of Case-1;

FIG. 102 is a diagram showing the player reference model of Case-2;

FIG. 103 is a diagram showing the player reference model of Case-3;

FIG. 104 is a diagram showing the player reference model of Case-3';

FIG. 105 is a diagram showing the player reference model of Case-4;

FIG. 106 is a diagram showing one example of a resume process;

FIG. 107 is a diagram showing a modification of cell playback information (C_PBI) shown in FIG. 38; and

FIG. 108 is a diagram showing contents of a sequence C_CMD_SEQ of cell commands which describe information of a sequence of cell commands shown in FIG. 107.

Embodiments of an information storage medium, an information reproduction apparatus, and an information reproduction method according to the present invention will be described hereinafter with reference to the drawings.

First, a total main subject in the embodiments will be generally viewed, and relations between the main subjects will be described. Next, points concerning "control of an audio object (AOB) for an HD menu", which are major technical contents noted in the present specification, will be described. Then, concrete embodiments will be described.

The embodiments include appropriate combinations of the following (1) to (3).

(1) HDMENU_AOB header information and an audio object AOB for a menu are recorded in an audio object set for HD video manager menu (HDMENU_AOBS), and the HDMENU_AOB header information includes an end address (AOB_EA) of HDMENU_AOB, entry point number (AOB_EP_Ns) of HDMENU_AOB, an attribute (AOB_ATR) of HDMENU_AOB, and first to fifth entry point start addresses (AOB_1ST_EP, AOB_2ND_EP, AOB_3RD_EP, AOB_4TH_EP, AOB_5TH_EP) of HDMENU_AOB.

(2) HD program chain PGC category information (HDVMGM_PGC_CAT) includes an audio information selection flag (two bits). When the audio information selection flag indicates '00b', it is indicated that the playback of a menu audio object (HDMENU_AOB) stops and audio in a menu video object (HDVMGM_VOB) is played back. When the audio information selection flag indicates '01', it is indicated that the audio in the menu audio object (HDMENU_AOB) is ignored and the playback of the menu audio object (HDMENU_AOB) continues. When the audio information selection flag indicates '11b', it is indicated that the playback of the menu audio object (HDMENU_AOB) is started.

(3) Start and end numbers of entry points designated in the menu audio object (HDMENU_AOB) are also recorded in the PGC category information for HD (HDVMGM_PGC_CAT), and a repeat playback position of the menu audio object (HDMENU_AOB) is determined by the start/end number.

In the present specification, video data, subpicture data, sound data, and graphic data are generically referred to as video objects, and the video objects and control data of the video objects are generically referred to as contents. To clarify differences, conventional DVD video contents are referred to as standard definition (SD) contents, and contents which are objects of the embodiments of the present invention, having the following main subjects (A) to (G) are referred to as high definition (HD) contents.

<<General Description>>

[1] A problem that the content is difficult to use by a user or that authoring is complicated in preparing the content easy to use by the user is solved.

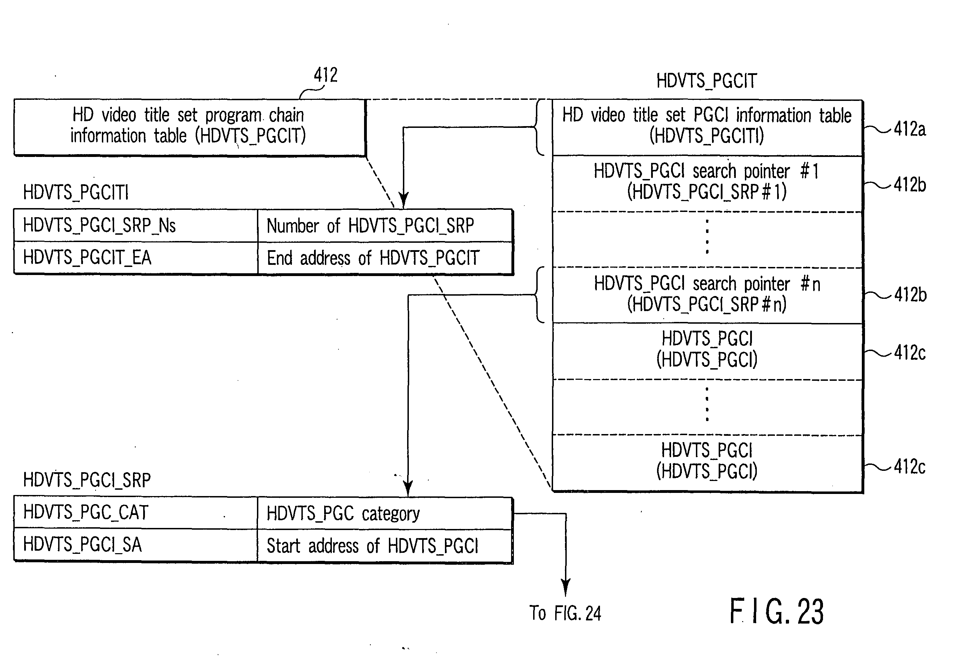

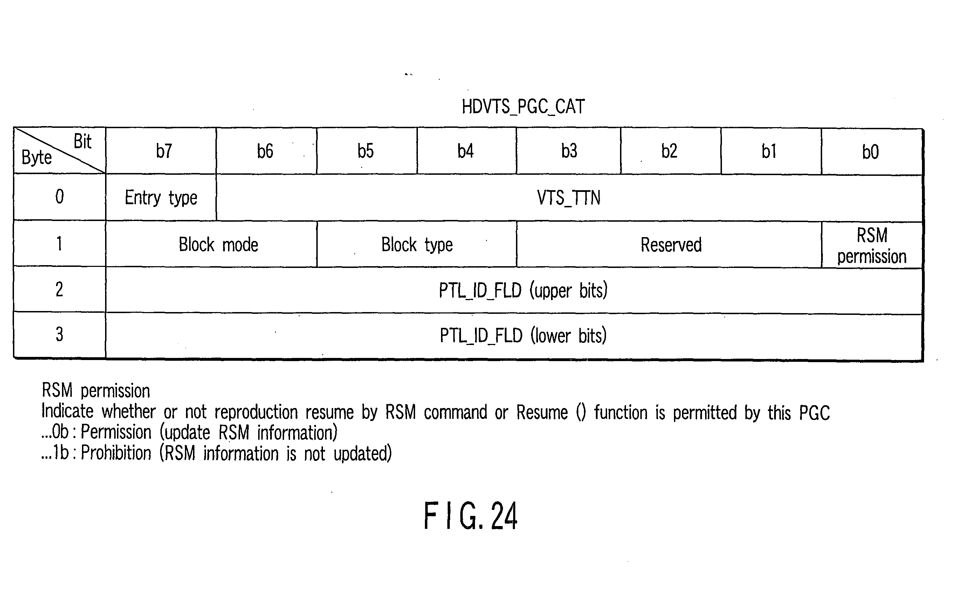

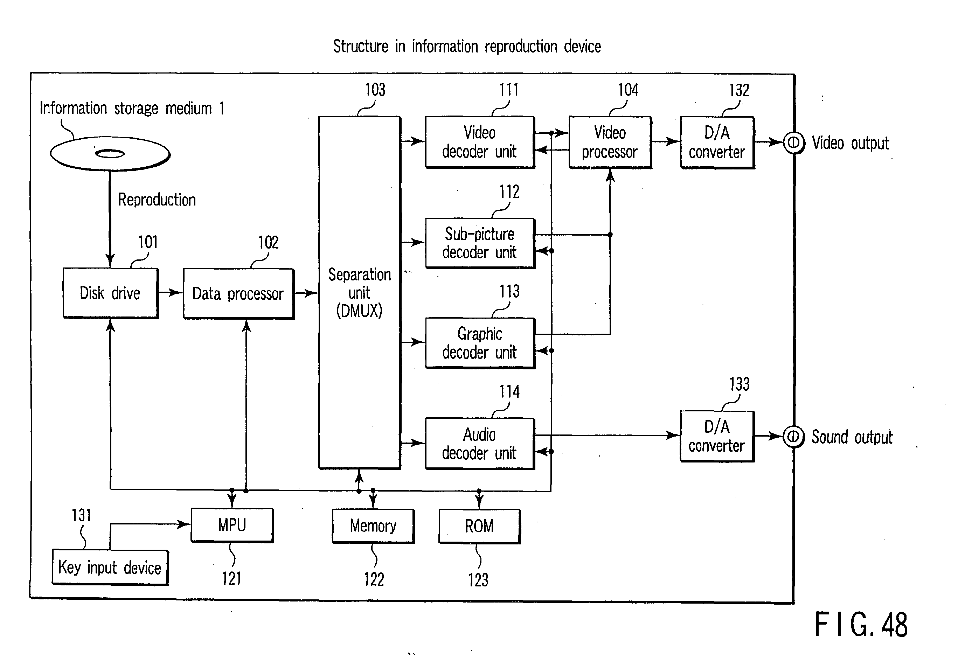

(A) Interrupted Position Information Control Method at Title Interruption Time
[Point 1]
Storage/discharge rules of resume information are modified with respect to the current SD DVD video specifications, and rewrite/change prohibition/discharge process of contents of resume information recorded in a memory 122 of an information reproduction device shown in FIG. 48 are finely controllable.
[Point 2]
When the resume information to be recorded in the memory 122 of the information reproduction device is rewritten, the information is held until a control instruction comes with respect to the next resume information. For example, in the conventional DVD video specifications, there has been a rule of deletion of contents of the resume information in a case where a JumpTT, JumpVTS_TT, or JumpVTS_PTT command is executed. This is changed in the present embodiment. Even after the above-described command is executed, the contents of the resume information are held, and a part of the problem described in (A1) is solved.
[Point 3]
As measures against the problem shown in (A1), as shown in FIG. 24, with respect to each PGC, a resume (RSM: presentation resume) command (command by selection on a screen), or a resume permission flag (=RSM permission flag) indicating whether or not the presentation resume by a resume ( ) function (command performed by the reproduction device) executed, for example, in accordance with user designation is permitted is newly set. As a specific content, at the time of execution of a CallSS command described later, the content of the resume information is updated, when the RSM permission flag is set to "0b". When the flag is set to "1b", the update is inhibited.

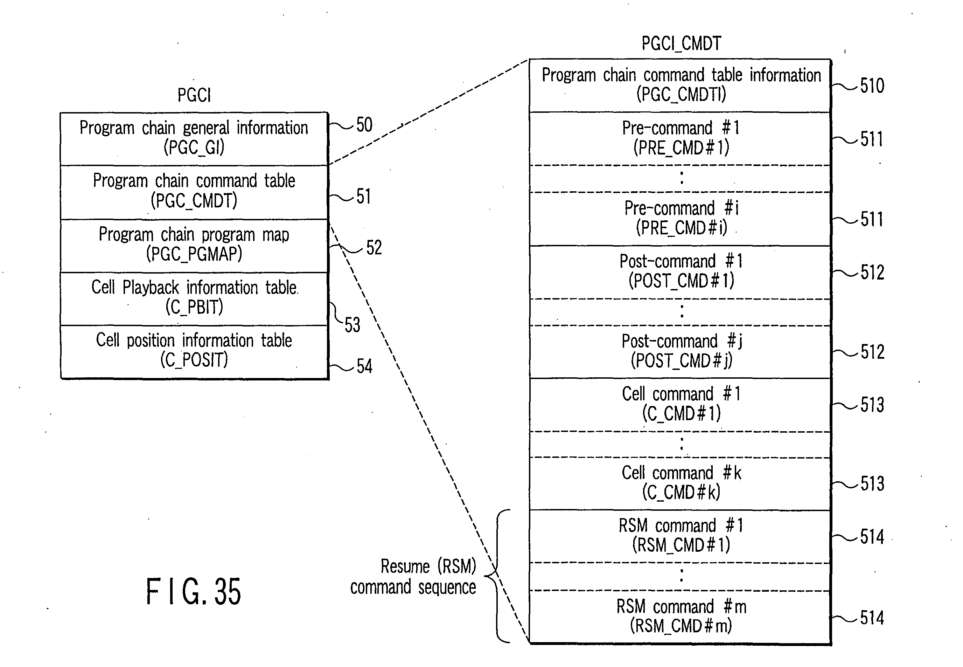

For example, when the resume information is prohibited from being updated with respect to the PGC including bonus content in an example described in (A1), the resume information with respect to a specific video title interrupted before is held as the resume information recorded in the memory 122 of the information reproduction device shown in FIG. 48 (details will be described later in detail).
[Point 4]
As the measures against the problem described in (A2), as shown in FIG. 35, a program chain command table (PGC_CMDT) 51 is newly set in program chain information (PGCI), and resume sequence information is recorded. The resume sequence information described in the program chain command table (PGC_CMDT) 51 means a command string (continuous link order of commands) executed immediately before returning to the PGC of the corresponding title from the menu screen. When returning to the PGC corresponding to the interrupted title from the menu screen, the presence/absence of the resume sequence information is surely confirmed before starting the presentation based on the resume information.

When there is not any resume sequence information, the presentation from the interrupted position is started based on the resume information.

If there is the resume sequence information, the presentation is started from a place designated by the resume sequence information.

For example, as the measures against the problem described in (A2), a command to rewrite "position information of stop of game" into the resume information is set in the resume sequence information recorded in the program chain command table (PGC_CMDT) 51. Accordingly, immediately after returning from the menu screen, the presentation can be started from the stop of the game (detailed contents will be described later).

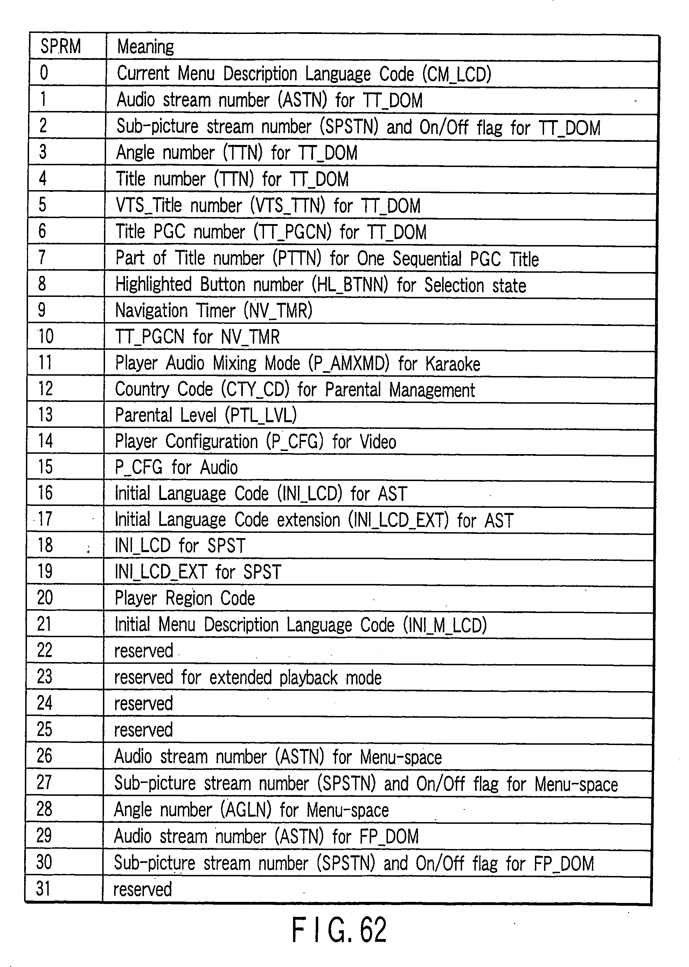

A cell number which is information indicating a position where the presentation has been interrupted; address information of a navigation pack arranged in a start position of a cell; PGC presentation control situation; video title set (VTS) number; title number (TTN) in a title domain (the value of the title number is stored as that of SPRM(4) as shown in FIG. 62); title number (VTS_TTN) in VTS in the title domain (this value is stored as the value of SPRM(5)); PGC number (TT_PGCN) (SPRM(6)) of the title in the title domain; a part of title number (PTTN) (SPRM(7)) with respect to the title of a sequential PGC; and highlight button number (HL_BTNN) (SPRM(8)) of highlight in a selected state are recorded as the resume information. Not only in a case where the menu screen is returned to PGC corresponding to the interrupted title as described above, but also in cases where situations change, for example, where at least a part of the resume information changes, or highlight position information changes in association of information of SPRM (8), the process is set to be surely executed to the end of the resume sequence information.

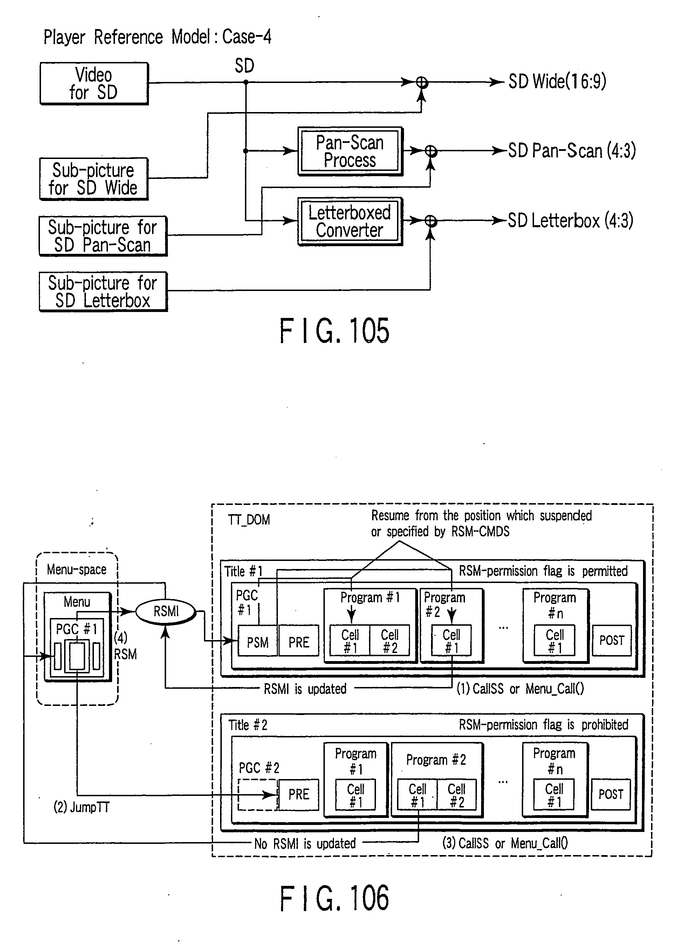

FIG. 106 shows one example of a resume process.

The resume process is basically performed as follows.

(1) Either a CallSS command or a Menu_Call() operation is executed (in the PGC in which the RSM permission flag is in a permission state). RSMI is updated, and the menu is played back.
(2) A JumpTT command is executed (jump to the PGC in which the RSM permission flag is in a prohibition state). The PGC is played back.
(3) Either the CallSS command or the Menu_Call() operation is executed (in the PGC in which the RSM permission flag is in the prohibition state). The RSMI is not updated, and the menu is played back.
(4) An RSM command is executed. RSM_CMD is executed using RSMI, and the PGC is resumed from an interrupted portion or a part designated by RSM_CMDs.

PGC presentation order:

0) In a resume condition phase (the only PGC in TT_DOM in which the updating of RSM information is permitted), a navigation command in a resume command area is executed, when the presentation of the PGC is resumed as resume presentation. When the presentation of the PGC is resumed as presentation other than the resume presentation, this phase is not executed.
1) Pre-command phase
The navigation command is executed in a pre-command area.

2) Playback initialization phase
A mode of PG presentation which is one of sequential play, random presentation, and shuffle presentation is processed.

a) A shuffle mode is initialized.
b) An audio/sub-picture is selected using PGC_AST_CTLT and PGC_SPST_CTLT.

3) Program presentation phase
A program is played back in accordance with the PG presentation mode.
The next step is executed with respect to each cell of the program.

a) Cell presentation (including EVOBU still)
b) Cell still
c) Cell command

4) Loop count phase
The presentation is resumed from Phase-3 in accordance with the PG presentation mode.
Refer to PGC general information for the PG presentation mode.
5) PGC still phase (only with respect to the random or shuffle presentation)
The PGC still presentation is executed in accordance with a still time value in the PGC.
Refers to the PGC general information for a still time value.
The PGC still presentation is not set to the PGC in which a PGC execution mode is the sequential play.
6) Post command phase
A navigation command is executed in a post-command area.
7) Next link phase
If Next_PGCN is effective, the process shifts to the execution of the PGC by Next_PGCN. If not, the process shifts to a stop state.

Refers to the PGC general information for Next_PGCN.

Note 1: The phase-2 to phase-5 constitute a presentation control block.

Note 2: In steps of all phases except the step a) of the phase-3, the step b) of the phase-3, and the phase-5, an execution time is 0 in the steps other than the step c) of the phase-3. The execution time is 0.5 seconds or less in the step c) of the phase-3.

A navigation timer and general parameter in a counter mode are frozen.

The user operation is not executed. In actual, the operation is postponed to the step a) of the phase-3 or the phase-5.

Note 3: Each phase is executed only in a case where the associated information is described in the PGCI.

[Management Information Recording Place]

In an arrangement place of information for managing the resume information, in the first embodiment, as shown in FIG. 23, the RSM permission flag (update permission flag of resume information) is recorded in an HDVTS_PGC category (HDVTS_PGC_CAT) in an HDVTS_PGCI search pointer 412b in an HD video title set program chain information table (HDVTS_PGCIT) 412.

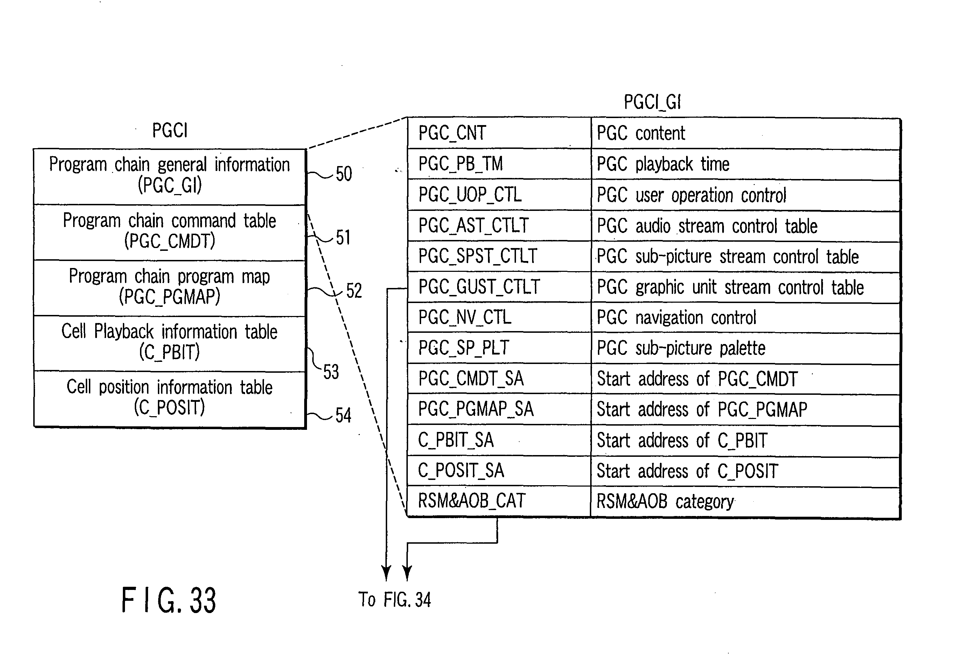

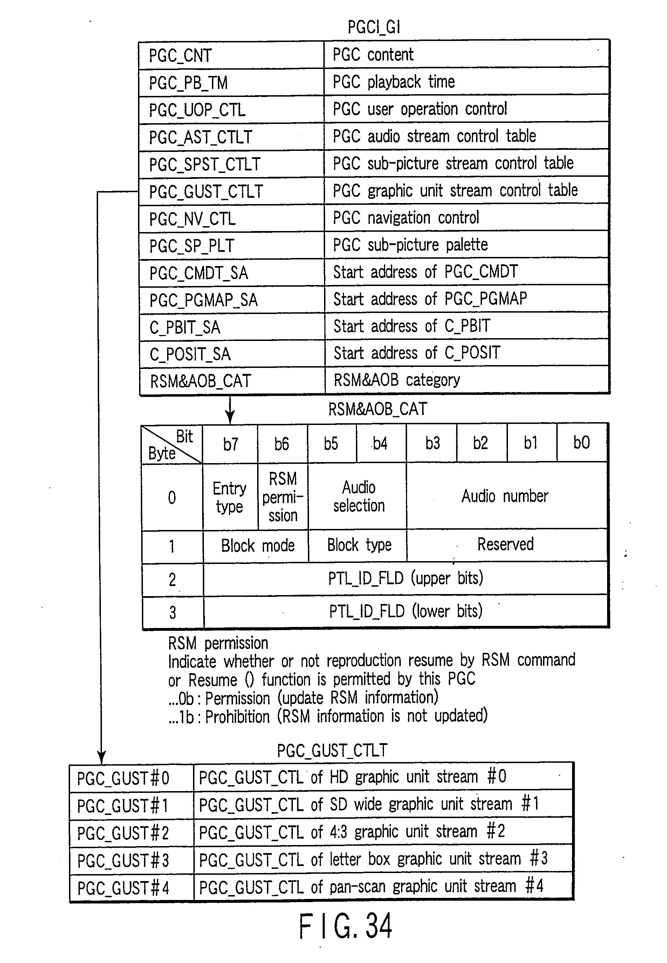

Moreover, in another embodiment (second embodiment), as shown in FIGS. 33 and 34, the RSM permission flag (update permission flag of the resume information) is recorded in RSM&AOB category (RSM&AOB_CAT) in a program chain general information (PGC_GI) 50.

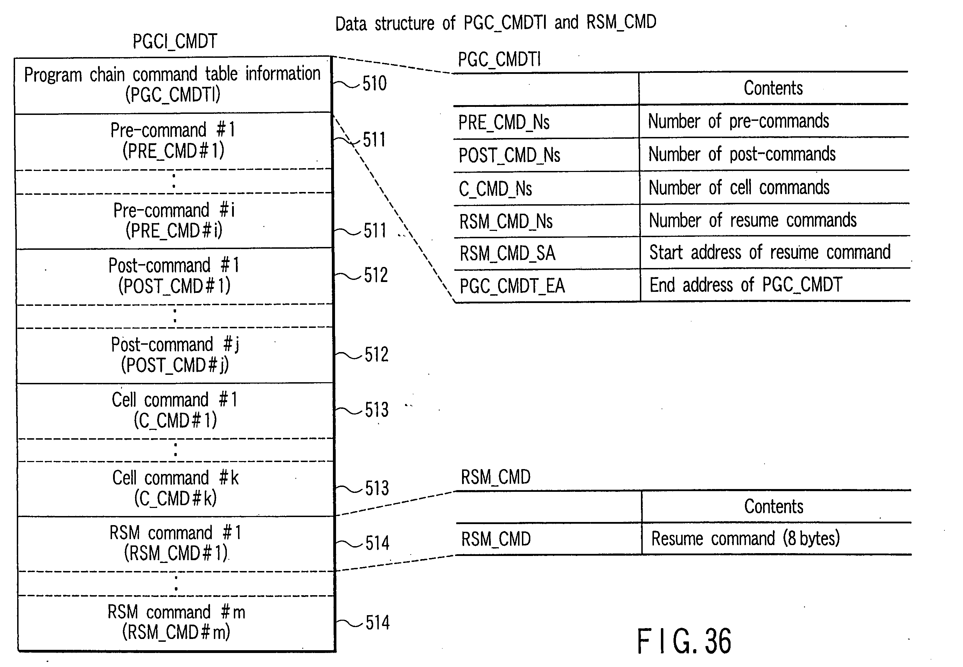

Moreover, in the resume sequence information indicating the command string (continuous link order of the commands) executed immediately after returning to the PGC of the title as described in [Point 4] concerning the subject matter (A) which solves the problem of (A2), as shown in FIG. 35, RSM commands (RSM_CMD) 514 are recorded as a resume (RSM) command sequence in the program chain command table (PGC_CMDT) 51. Number information (RSM_CMD_Ns) of the RSM commands (RSM_CMD) 514 recorded in the program chain command table (PGC_CMDT) 51 is recorded in a program chain command table information (PGC_CMDTI) 510 as shown in FIG. 36.

[Management Information Contents]

The RSM permission flag (update permission flag of the resume information) indicates whether or not the content of the resume information is updated in a stage in which the presentation of the corresponding HDVTS_PGC is started (the resume information is successively updated in accordance with presentation situation of the corresponding PGC). That is, when the flag is "0b", the resume information is updated. When the flag is "1b", the resume information is not updated, and a process of holding the presentation interrupted information of HDVTS_PGC (corresponding program chain in the video title set of the present embodiment) played back before is performed.

In the specific data structure in the RSM command (RSM_CMD) 514, as shown in FIG. 36, a region "for eight bytes" is allocated to each command, and the command content is recorded in the region "for eight bytes".

(B) Language Setting for Display

[Point 1]

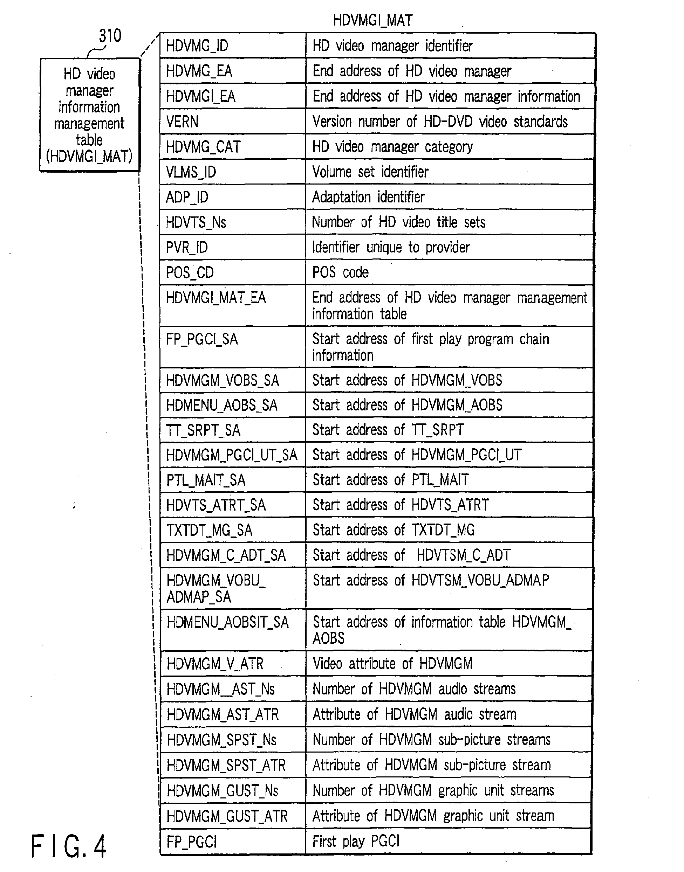

To solve the problem described in (B1), a screen in which a menu description language code can be set in the content is provided. Specifically, the setting of the menu description language code is allowed to be possible with first play PGC (FP_PGC) which can be first displayed immediately after the insertion of the information storage medium. To deal with the content capable of setting the menu description language code in the selection on the screen by the user, FP_PGC is set to include a video object (VOB), and this VOB is assumed to be usable only in a language selection menu. When the content supports only a language or when the content automatically takes over the value of the current menu description language code, FP_PGC does not include the VOB for the menu screen in some case. In an example of the content which automatically takes over the value of the menu description language code, there is an embodiment in which the value of SPRM(0) owned by the information reproduction device is automatically compared with the language supported by the HD DVD video content, and the menu description language code is adapted to the value in case of agreement. In this case, the resume sequence information which is a command process sequence to be automatically compared is recorded in first play program chain information (FP_PGCI: FIG. 4) which is management information on FP_PGC.

Furthermore, as a restrictive condition on the FP_PGC, a structure capable of holding one or less cell is constituted (one cell is defined when there is VOB; when the content which does not have a screen for selecting the menu description language code do not have any VOB, any cell is not included in FP_PGC). This FP_PGC permits only sequential play of the program, and a parental block structure or a multi-scene structure is inhibited. Furthermore, the use of only one audio stream (one or zero) is permitted as a usable stream in the FP_PGC, further the use of sub-picture stream is inhibited, and, instead, the use of the graphic unit (GU) described later is introduced.

Therefore, in the embodiment of the present invention, screens for selecting the menu description language code do not have to be prepared in accordance with a plurality of menu description language codes, and an authoring operation at the time of preparation of the content is simplified. As a result, since an authoring operation time is shortened, the selling prices of the content can be reduced.

The program chain information (PGCI) is navigation data which controls the display of the PGC. The PGC is basically constituted of PGCI and EVOBs, but there is also a PGC which does not have any EVOB and which includes the PGCI only. The PGC constituted of the PGCI only is used in deciding display conditions and transferring the display to another PGC. PGCI numbers are assigned to PGCI search pointers in VMGM_LU, VTSM_LU, VTS_PGCIT in order from '1'. The PGC number is the same as PGCI. Even when the PGC has a block structure, PGCN in the block matches a sequence number in the PGCI search pointer.

The PGC is classified into four types in accordance with the domain and purpose. A structure of PGCI only, and a structure of PGCI and EVOB are applicable to the first play PGC (FP_PGC), video manager menu PGC (VMGM_PGC), video title set menu PGC (VTSM_PGC), and title PGC (TT_PGC). The PGC described in an FP_DOM domain in a VMG space is FP_PGC, and one PGC only exists. The FP_PGC has the following restrictions.

1) A case where any cell does not exist in one EVOB, and a case where a plurality of cells exist are permitted.
2) The only "sequential play of the program" is permitted concerning the PG presentation mode.
3) The parental block is not permitted.
4) The language block is not permitted.

The FP_PGCM_EVOB is an enhanced video object (EVOB) for use in selecting the menu language. The VMGM_EVOBS is a set of enhanced video objects (EVOBs) for use in a menu which supports a volume access. The EAOBS is a set of elementary audio objects for use in background music and the like.

The PGC is classified into four in accordance with a description place and purpose. Here, first play PGC (FP_PGC) described in VMG is automatically executed in order to reproduce the set of initial conditions and FP_PGC menu (if any) at the time of first access.

A system menu is classified in accordance with the described domain, and the language menu described in FP_DOM selects the language of the menu played back on the menu in a language unit.
[Point 1-1]

Next, a modification associated with the menu will be described.

A menu is a display image including selection items (buttons). A system menu is a predefined menu with respect to a specific user operation. A menu freely prepared by the content provider is recorded for each title. The buttons for the menu are prepared by graphic, button pattern, or highlight information in a graphic unit. Commands executed at the time activated by the user are described on the buttons. The system menu exists in each type of domain. The system menu existing in FP_DOM is a language menu, and a menu language displayed on the menu in the language unit is selected. There is not a function of calling the language menu in FP_DOM by the user operation. However, the menu is automatically played back, when the first play PGC is played back.

The language menu in FP_DOM has the following main subjects.

1) The FP_PGC has a language menu FP_PGCM_EVOB for use only in selecting the language.
2) When the language is determined by the language menu, the language (code) is used for selecting the VMG menu, and the language unit in each VTS menu.

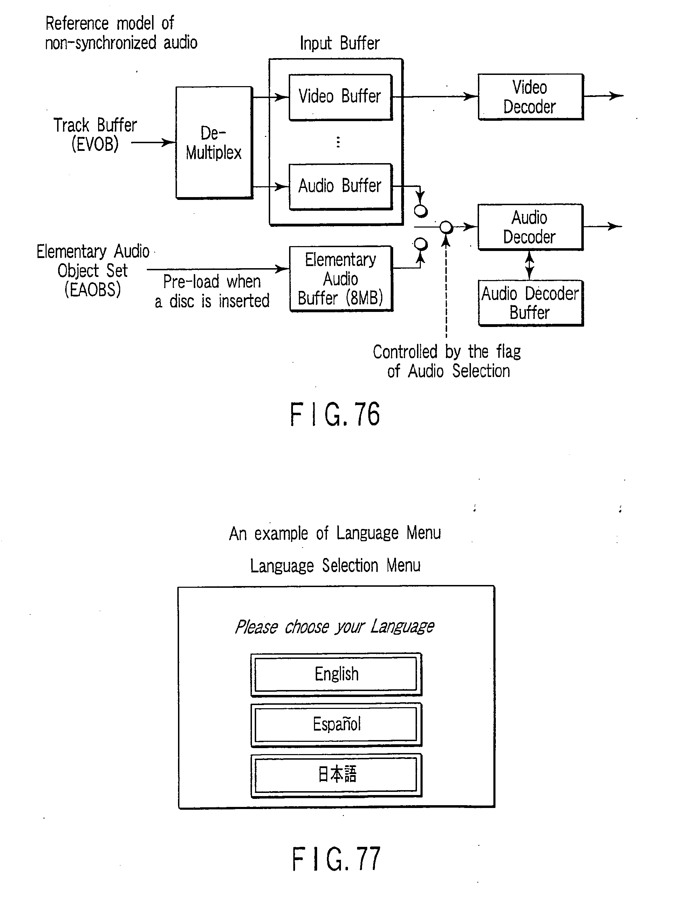

One example of the menu for selecting the language is shown in FIG. 77.
[Point 2]

To solve the problem described in (B1), a new SetM_LCD command is defined as described later. The value of SPRM(0) can be changed by this SetM_LCD command. This SetM LCD command is included in the command region of SetSystem as described later, and is usable only in FP_PGC. As a specific command content, the value of SPRM(0) is set as a language code by a general parameter or a specific value which can be designated in SetM_LCD.
[Point 3]

To solve the problem described in (B2), as shown in FIG. 62, SPRM(21) is newly set as a place where only the user can change/set the language code and the changing by the command is impossible, so that the menu description language code set by the user can be held. Moreover, the meaning of SPRM(0) which has heretofore existed is changed a little. That is, the SPRM(21) is newly defined as a storage place of an initial menu language which is a parameter set to the information reproduction device. This SPRM(21) is a player setting language which can be changed/set only by the user, and cannot be changed by the command in the program of the content.

Moreover, the meaning of SPRM(0) is changed to a storage place of "current menu language being played back". This SPRM(0) can be changed/set both by the user and by the command in the content. As a result, even when SPRM(0) is changed by the command described in (B2), the menu description language code set by the user can be held, and any discomfort or excessive burden is not applied to the user.

[Concrete Description of Relation between SPRM(0) and SPRM(21)]

To describe a relation between SPRM(0) and SPRM(21), an example of the operation immediately after the insertion of the information storage medium into the information reproduction device (player) will be described. First, the value of the initial setting menu language SPRM(21) which is the menu description language code set to the information reproduction device by the user is copied to SPRM(0) before executing the process of the first play PGC (FP_PGC).

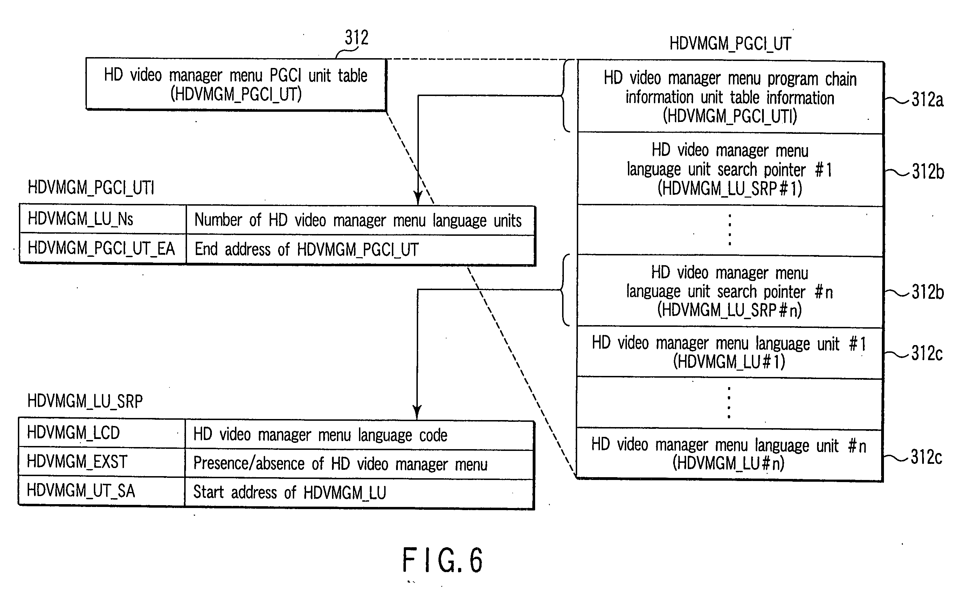

When the SetM_LCD command exists in FP_PGC, the value of SPRM(0) can be changed in accordance with the command, but in order to avoid the problem of (B2), the value copied from SPRM(21) is preferably held as the value of SPRM(0). If SPRM(0) is rewritten into a value different from that of SPRM(21) by the SetM_LCD command in the content recorded in the information storage medium, the value of SPRM(21) is held. Therefore, when another information storage medium is next inserted, the value of SPRM(0) is automatically rewritten to that of SPRM(21). Therefore, after the next information storage medium is inserted, the problem of (B2) is avoidable. For example, when VOB for the menu does not exist in FP_PGC, and exists in an HD video manager menu language unit (HDVMGM_LU) 312c shown in the language selection menu in FIG. 6, the HD video manager menu language unit (HDVMGM_LU) 312c corresponding to the value of the SPRM(0) is selected. The value of SPRM(21) is persistently changeable only by the user in a stage in which the operation of the information reproduction device is stopped. However, even when the value of SPRM(21) is rewritten by the user, the value of SPRM(0) is not simultaneously rewritten, and the conventional value is held.

[Parameter Information Recording Place in Information Reproduction Device]

Areas in which system parameters SPRM "0" to "31" are recorded are allocated into the memory 122 in a system block diagram in the information reproduction device shown in FIG. 48. The current menu language code information being played back is recorded in the SPRM(0), and the initial setting menu language code information is recorded in the SPRM(21).

[Object Information Recording Place]

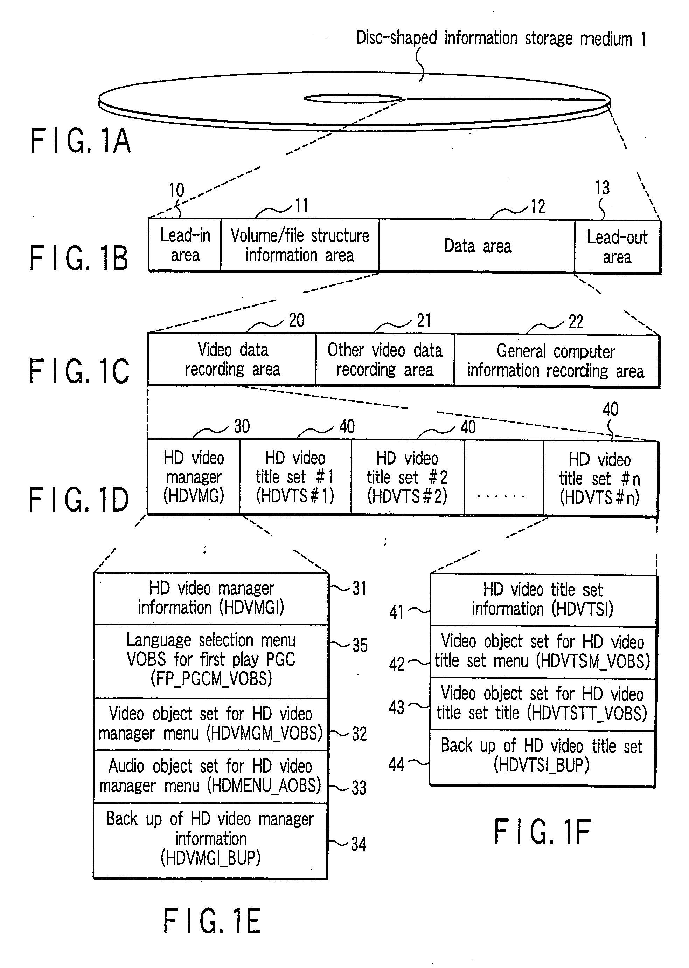

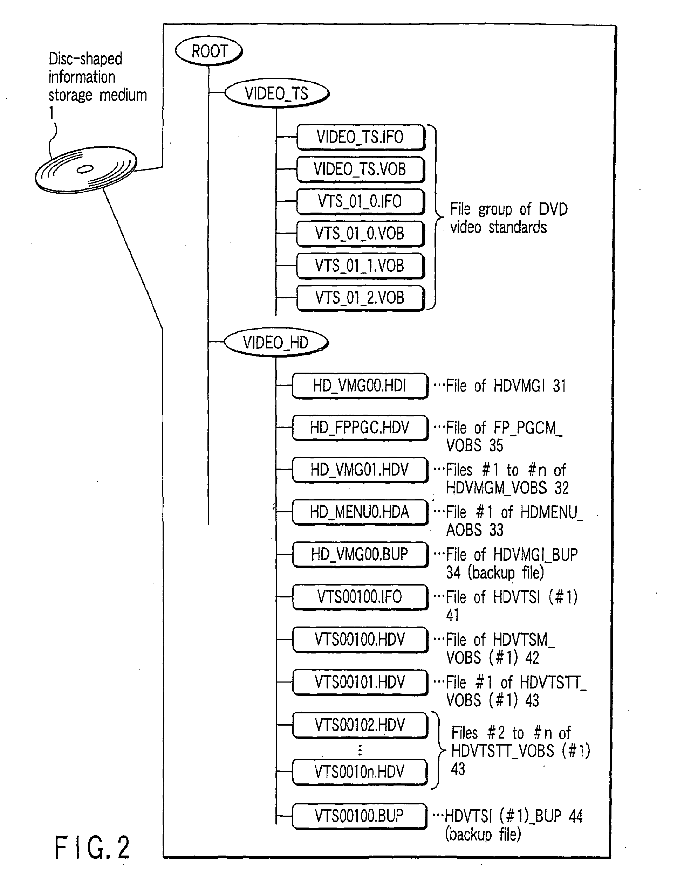

As shown in FIG. 1E, a screen in which the menu description language code can be set is recorded in the area of a language selection menu VOBS for first play PGC (FP_PGCM_VOBS) 35. This object information (video data) is independent as a single file named HD_FPPGC.HDV as shown in FIG. 2.

[Management Information Recording Place]

As shown in FIG. 4, management information with respect to the language selection menu in which the menu description language code can be set is recorded in first play PGCI (FP_PGCI) in an HD video manager information management table (HDVMGI_MAT) 310.

[2] Problem in which a content representing power to the user is lacking

(C) Seamless Play of Still Picture

[Point 1]

Seamless connection between moving pictures is assured even in the conventional DVD content. Therefore, to solve the problems described in the above (C1) and (C2), even in the video object set (VOBS) in which the still picture is recorded, the contents of VOB are defined by the same image as those of VOBS in which the moving picture is recorded. Accordingly, the seamless connection (C1) from the still picture to the moving picture in the same manner as in the seamless connection between the conventional moving pictures and the multi-angle play (C2) of the still picture can be assured.

[Point 2]

A concrete method for realizing a way of thinking in [Point 1] will be described hereinafter. To apply an extended system target decoder (E-STD) which assures the seamless play, an "imaginary access unit" is set in a period between I pictures in which the still picture is recorded. In a method of setting the access unit, in the embodiment of the present invention, an interval between I picture to record the still picture and the next I picture by a unit of a period of a video frame or a period integer times the period of the video frame is imaginarily and finely time-divided for each period of the access unit. Moreover, in the information reproduction device it is imaginarily regarded that the still picture is repeatedly played back/displayed for each imaginary access unit. A decoding time stamp (DTS) indicating a timing at which the still picture is input into a decoder and a presentation time stamp (PTS) indicating a timing at which the still picture is displayed are set beforehand for each still picture. A video frame period is determined by a national television system committee (NTSC) system and a phase alternation by line (PAL) system, and therefore the timing of a boundary position of the "imaginary access unit" can be easily calculated. The problem of (C1) is solved even with respect to the still picture by setting the access unit. That is, the values of STC set in a separation unit 103, video decoder unit 111, sub-picture decoder unit 112, and audio decoder unit 114 shown in FIG. 48 are switched in the boundary position of the access unit to make possible the seamless connection play to the moving picture from the still picture.

When the seamless play/connection to the moving picture from the still picture is assured, the user can comfortably enjoy the content, and further the representing power of the content provider to the user is enhanced. Moreover, the seamless connection/display to the moving picture from the still picture is possible only by the change in an imaginary definition without substantially changing the object structure of the conventional DVD video. Therefore, a most part of an authoring tool of the conventional DVD video is usable, and a rise in medium price in producing the present invention can be minimized.

[Point 3]

As one of the points for solving the problem of (C1), definition (restriction) with respect to the VOBU including the still picture is modified in accordance with the contents of [Point 2] as follows. That is, an integer number of "imaginary access units" are imaginarily set so as to constitute one VOBU. As a result, a display period of the VOBU of each still picture is integer times that of the video frame. Since the switching timing to the moving picture from the still picture surely coincides with a boundary timing of the video frame by the above-described definition (restriction), the screen can be prevented from being disturbed at the switching time (the frame with a filled gap can be displayed instead of interleaved field display), and the screen immediately before/after the switching can be clearly displayed.

Since one I picture indicating the still picture exists in a video access unit VAU, and an imaginary video access unit IVAU does not include any I picture, any video data does not exist in the IVAU. Only one I picture exists in each of the VOBU comprising VAU1 to IVAU15 and the VOBU comprising VAU16 to IVAU30. In the embodiment of the present invention, a plurality of I pictures are prohibited from being included in the same VOBU, and it is defined (restricted) that one VOBU should surely have one or less I picture. Since the sequence end code is arranged after the I picture in conformity to the specifications of MPEG-2, it is defined (restricted) that the VOBU including the I picture in this manner should surely have one sequence end code (i.e., both the I picture and the sequence end code are surely included in the same VOBU without separating the picture and the code into separate VOBUs).

Moreover, the same VOBU has a structure in which VAU is surely (imaginarily) arranged before IVAU. By the structure in which VAU is (imaginarily) arranged in the start position of the VOBU, when the moving picture is switched to the still picture, it is possible to decode the I picture in the VAU at a high rate, and the seamless play to the still picture from the moving picture is possible.

Any video data (I picture) is not included in the VOBU comprising IVAU30 to IVAU45. It is also possible to define the VOB in which any video data is not held.

[Point 4]

As means for solving the problem of (C2), the IVAU is imaginarily defined with respect to a still picture object, and it is further possible to arrange still picture data (still picture object) into an interleaved unit ILVU by the following method. That is, a restriction that "the sequence end code is prohibited from being arranged in the video data in the cell constituting the interleaved block ILVB" in the current DVD video as described in (C2) is imposed. Moreover, when the VOB is used in ILVU, the presentation period in one VOBU is set to be integer times that of the video frame with respect to the VOB including one or more sequence end codes, and a restriction is imposed that each VOBU has only one I picture as the video data or is structured not to have any video data. Furthermore, one sequence end code is arranged in the VOBU including the I picture, and the video data (I picture in which the still picture is recorded) is surely arranged in the first VOBU in ILVU. Immediately after the angle is switched by user instruction or the like, the start position of the ILVU having the corresponding angle is surely accessed. Therefore, when the video data is surely arranged in the first VOBU of ILVU, a time can be shortened until the display of the still picture at the angle switching time.

[Object Information Recording Place]

The still picture data in which the imaginary access unit is defined is recorded in a video object set for title (HDVTSTT_VOBS) 43 in FIG. 1F. This area constitutes a VTS00102.HDV file of FIG. 2.

[Management Information Recording Place]

The management information to manage the still picture data in which the imaginary access unit is defined exists in an HD video title set information (HDVTSI) 41 of FIG. 1F, and this area is grouped in a VTGS00100.IFO file of FIG. 2. As described above, since the period of the access unit is imaginarily and finely time-divided and imaginarily set by the unit of the period of the video frame or the period integer times that of the video frame, an actual boundary position of the imaginary access unit is calculated.

(D) Seamless Play of Cell including Cell Command

[Point 1]

The seamless play between the cells having cell commands is not assured in the conventional SD DVD video specifications, whereas the seamless play between the cells is assured even with respect to the cells which execute the cell commands in a case where there is not any branching point as in multi-angle. That is, the video presentation of the next cell is started as continuously as possible as long as there is not any branching point as in the multi-angle in the video presentation (even when the cell command is executed). As means for realizing this presentation, a physical arrangement of contents or the like is devised in such a manner that the presentation of the next cell can be started within 0.5 second after completion of the presentation of the previous cell.

[Point 2]

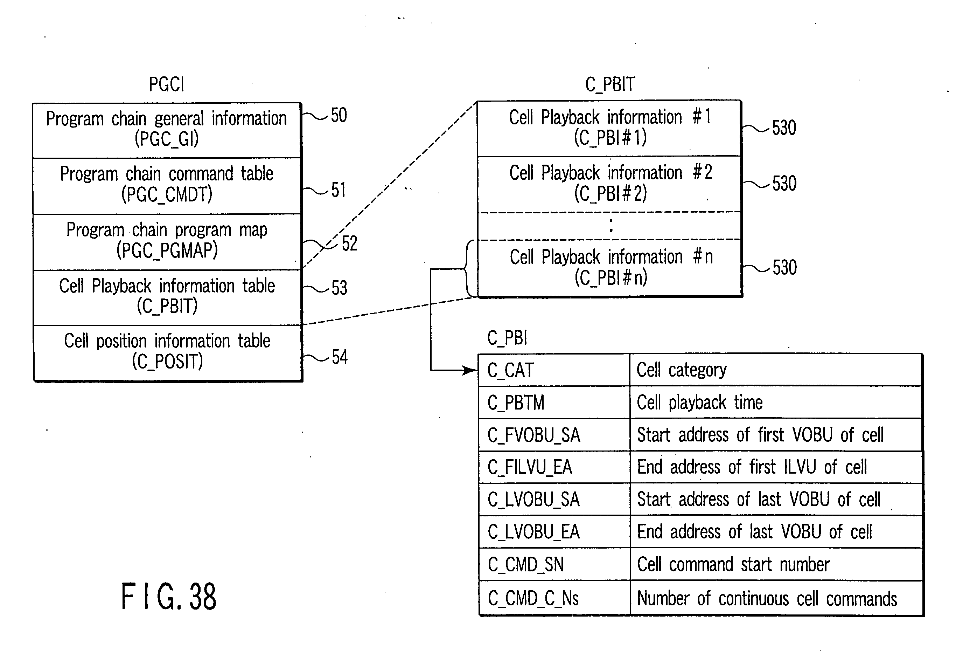

Moreover, the following is clearly described in the management information of the object (video data) concerning a place where the seamless play between the cells is assured with respect to the cell in which the cell command is to be executed. Although not shown, a seamless play flag, interleaved arrangement flag, STC discontinuous flag, and cell playback mode information exist in cell category information (C_CAT) in cell playback information (C_PBI) 530 shown in FIG. 38.

Even with respect to the cell in which the cell command is to be executed, concerning a place where the seamless play between the cells is assured, it is set with respect to the seamless play flag that "the cell should be seamlessly played back", it is set with respect to the interleaved arrangement flag that "the flag exists in a continuous block", it is set with respect to the STC discontinuous flag that "the resetting of STC is unnecessary", and "continuous presentation" is set to the cell playback mode.

[Point 3]

In the conventional SD DVD video, one command is selected and executed from a set of cell commands at the end of the playback of each cell. However, the restriction is abolished, and the execution of the cell command is not necessarily limited to the execution at the end of the playback of the cell. The execution of the cell command with respect to the cell is not limited to one command, and a plurality of commands can be sequentially executed. That is, as shown in FIG. 38, cell command start number information (C_CMD_SN) and number of continuous cell commands (C_CMD_C_Ns) are recorded in cell playback information (C_PBI) of the management information with respect to one cell in the HD DVD video.

As shown in FIG. 35, cell commands (C_CMDs) 513 are sequentially recorded in the program chain command table (PGC_CMDT) 51. The cell command start number information (C_CMD_SN) indicates the number of the cell command to be executed counted from the top of the string of arranged cell commands (C_CMDs) 513, and the number of continuous cell commands (C_CMD_C_Ns) indicates the number of commands which are sequentially and continuously executed.

(E) Measure against Unmatched Highlight Information and Sub-Picture

[Point 1]

To solve the problem of (E1), an independent stream "graphic unit" is newly defined, both the highlight information and the graphic data (heretofore arranged in the "sub-picture") are simultaneously arranged in the graphic unit, and the sub-picture information is separated. Accordingly, as described in the above (E1), a content producer can produce the content as imaged without being influenced by the display period of the sub-picture information, a degree of freedom is enhanced, and, as a result, variety of contents can be presented to the user.

Moreover, five types of graphic units can be set in accordance with 16:9 HD image, 16:9 SD image, 4:3 SD image, letterboxed SD image, and pan-scan SD image, and five types of substream IDs can also be set for the respective types.

The highlight information is recorded in PCI recording area in the navigation pack in the conventional SD DVD video content, whereas the recording position of the highlight information is shifted into the graphic unit (GRU) and 24 buttons at maximum can be simultaneously set in one screen in the HD DVD video content of the present embodiment. With respect to each button, 256 colors at maximum can be designated, it is possible to change the color by the highlight at the selection time. Furthermore, mixing of contrasts up to 256 gradations can also be represented.

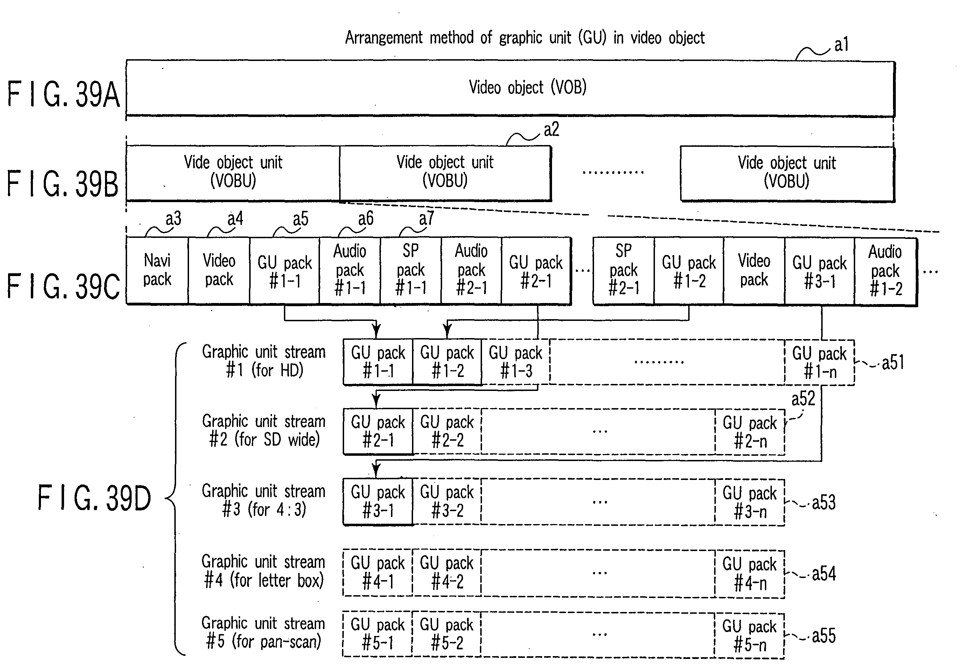

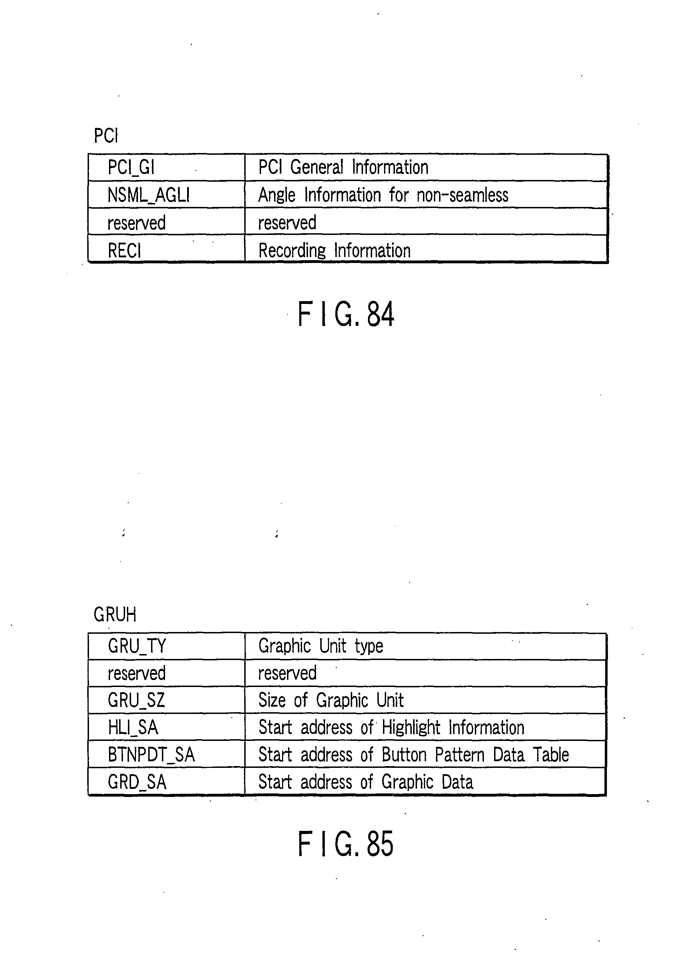

FIG. 84 shows contents of presentation control information (PCI). The PCI is navigation data for controlling the presentation of the EVOB unit (EVOBU), and includes three data: PCI general information (PCI_GI); non-seamless angle information (NSML_AGLI); and recording information (RECI). A player does not see "reserved". The PCI is described in a PCI packet (PCI_PKT) in a navigation pack (NV_PCK). The contents are updated for each EVOBU. HLI has heretofore been disposed in the navigation pack. In the present embodiment, the HLI is moved into the graphic unit (GRU), the HLI in the navigation pack is set to "reserved", and the recording of HLI information is inhibited (when the HLIs are recorded in both the graphic unit and the navigation pack, the apparatus does not normally operate, and therefore the recording of the HLI information is inhibited in the PCI). FIG. 84 shows the data structure of the PCI existing in a navigation pack a3 shown in FIG. 39C. In conventional DVD-Video specifications, the HLI has existed in the reserved region in FIG. 84, but in FIG. 84, the recording of the HLI information is inhibited in the reserved region. Accordingly, the HLI information is recordable only in the graphic unit, and ease of managing/controlling is secured.

[Point 2]

To solve the problem described in (E2), instead of increasing the number of colors with respect to the conventional sub-picture stream, the number of usable colors is set to 256 (color presentation by eight bits) with respect to the graphic data in the "graphic unit". As a result, it is possible to display a graphic unit image having bright colors to the user, a display impact to the user is enhanced, and the user can easily select the menu.

[Point 3]

To solve the problem described in (E3), the graphic data and mask data are recorded in the "graphic unit", display patterns of both the data can be set in a bit map form, and accordingly an optional shape can be set. As a result, it is possible to prepare a star-shaped or elliptic highlight information designated region (optional button shape), and there can be provided a screen much more attractive than that of the DVD content of the conventional SD.

[Point 4]

To solve the problem described in (E4), the mask data is recorded in the "graphic unit", and it is possible to simultaneously set a plurality of regions (hot spots) apart from one another in the screen as the mask data. That is, masking data can be superposed upon and set to the respective buttons of the highlight information. As a result, there can be provided a menu screen which is not inferior to the PC screen including the same URL settable with respect to a plurality of regions apart from one another in the screen or to the homepage screen of internet and which is easy to use by the user.

[Point 5]

Graphic stream

An enhanced video object (EVOB) includes a part of presentation and navigation data. The navigation data recorded in the EVOB are presentation control information (PCI) and data search information (DSI). The presentation data are video data, audio data, and sub-picture data. The EVOBS is a set of EVOBs. The EVOB is divided into cells constituted of EVOBUs. The EVOBU includes a navigation pack, audio pack, video pack, graphic pack, and sub-picture pack.

A graphic stream is completed in the EVOB. The end PTM of the end graphic unit (GRU) is not more than a time described in EVOB_V_E_PTM. The graphic presentation is effective only in the cell in which the GRU is recorded. The PTM of the first GRU is not less than a time described in EVOB_V_S_PTM. The PTM of a certain GRU in the graphic stream is larger than that of a preceding GRU. It is to be noted that the definitions of "completed" are: 1) each stream starts with the first data of each access unit; and 2) each stream ends uniformly in each access unit. Therefore, when a length of the pack including the end data of each stream is not more than 2,048 bytes, the length is adjusted.

[Object Information Recording Place]

The graphic units can be recorded in the following four places.

(1) The information is grouped in an HD_FPPGC. HDV file of FIG. 2 recorded in language selection menu VOBS for first play PGC (FP_PGCM_VOBS) 35 of FIG. 1E.

(2) The information is grouped in an HD_VMG01.HDV file of FIG. 2 recorded in the video object set for HD video manager menu (HDVMGM_VOBS) 32 of FIG. 1E.

(3) The information is grouped in a VTS00100.HDV file of FIG. 2 recorded in the video object set for HD video manager title set menu (HDVTSM_VOBS) 42 of FIG. 1F.

(4) The information is grouped in a VTS00101.HDV or VTS00102.HDV file of FIG. 2 recorded in the video object set for HD video title set menu (HDVTSTT_VOBS) 43 of FIG. 1F.

[Data Structure in Object Information]

As shown in FIG. 39D, five types of streams are separately recorded in accordance with the 16:9 HD image, 16:9 SD image, 4:3 SD image, letterboxed SD image, and pan-scan SD image.

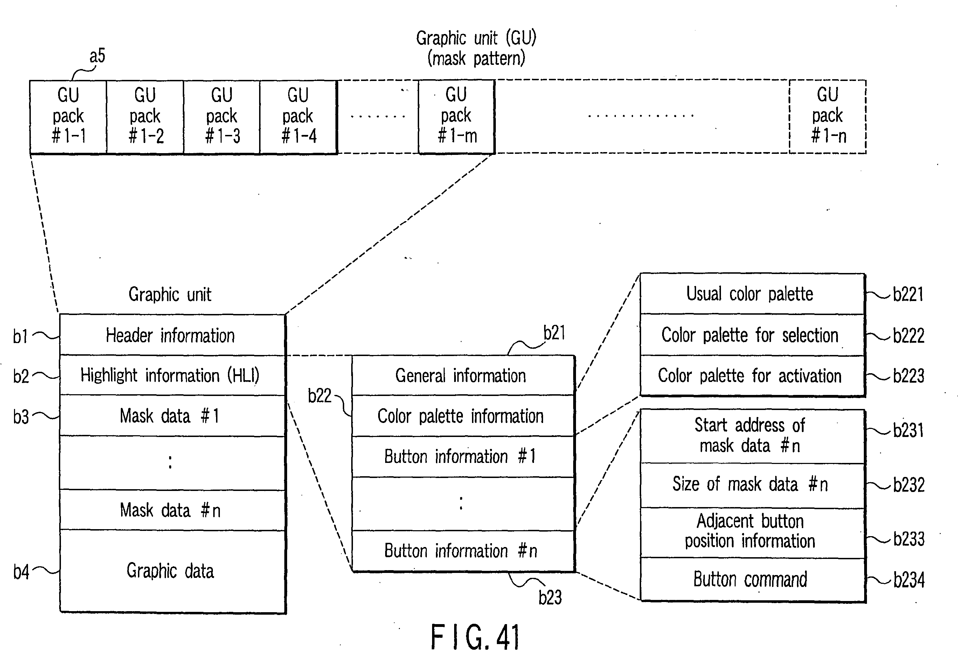

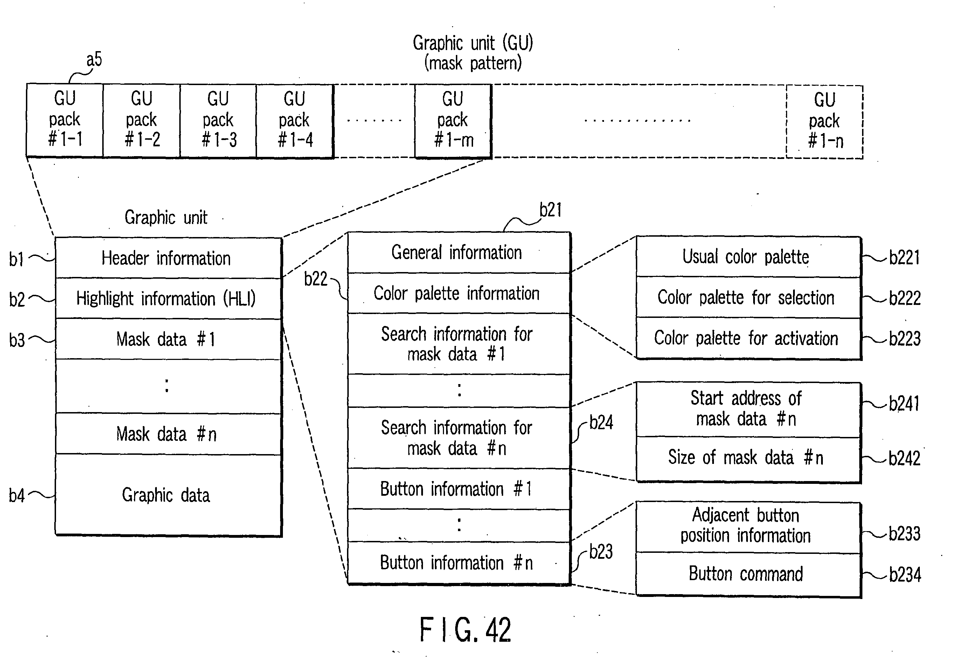

Moreover, as shown in FIGS. 41 and 42, the graphic unit (GU) includes highlight information (HIL) b2, mask data b3, and graphic data b4.

[Management Information Recording Place]

The management information on the structure of the graphic units to be recorded in the PGC is recorded in PGC graphic unit structure control table (PGC_GUST_CTLT) of FIGS. 33 and 34.

[Management Information Contents]

As the management information on the graphic unit included in the menu of the HD video manager, number of HDVMGM graphic unit stream information items (HDVMGM_GUST_Ns) and HDVMGM graphic unit stream attribute (HDVMGM_GUST_ATR) are recorded in the HD video manager information management table (HDVMGI_MAT) 310 as shown in FIG. 4.

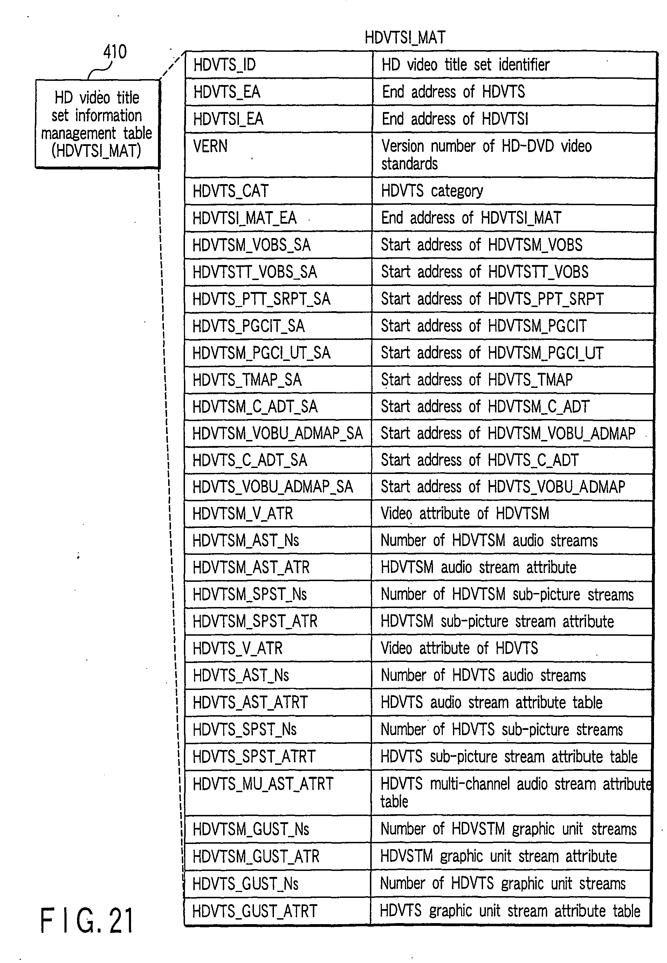

Moreover, as shown in FIG. 21, in the management information on the graphic unit included in the HD video title set (HDVTS), graphic unit stream number information and attribute are divided into the menu screen and title (display video) in HDVTS, and are recorded as information of HDVTSM_GUST_Ns, HDVTSM_GUST_ATR, HDVTS_GUST_Ns, and HDVTS_GUST_ATRT.

The information in a PGC graphic unit stream control table (PGC_GUST_CTLT) in which the management information on the stream of the graphic units to be recorded in the PGC is recorded is recorded in separate regions in accordance with fifth types of images (16:9 HD image, 16:9 SD image, 4:3 SD image, letterboxed SD image, and pan-scan SD image) as shown in FIGS. 33 and 34.

(F) Audio Data Playback at Menu Screen Switching Display Time

[Point 1]

To solve the problem described in (F), a unique audio data storage place is set in accordance with the menu. The playback of the unique audio data is started simultaneously at a presentation start time of the PGC in which the menu is displayed. The playback of the audio data is stopped simultaneously with the start of the presentation of PGC (e.g., of VTS) which does not require the playback of the audio data, for example, with the completion of the display of a series of menu. The audio data is copied in the memory 122 of FIG. 48 before the menu is displayed, and the audio data copied in the memory 122 is continuously and repeatedly played back for a period for which the user shifts and displays the menu. A maximum capacity of the audio data which can be copied in the memory 122 is set to 8 MB. When a transfer rate of compressed audio data is, for example, 384 Kbps, it is possible to store the audio data for 2.5 minutes with the maximum capacity of 8 MB.

[Point 2]

Selection designation information of the audio data is recorded in PGCI which is the management information of PGC so as to make possible selective playback instruction between the audio data recorded in VOBS for video present in the DVD video for the conventional SD and the above-described unique audio data. As a result, the content provider can designate the selection of the audio data continuously displayed even with the switching of the menu or the audio data set to be optimum for each menu, and the representing power of the content provider to the user is enhanced.

[Point 3]

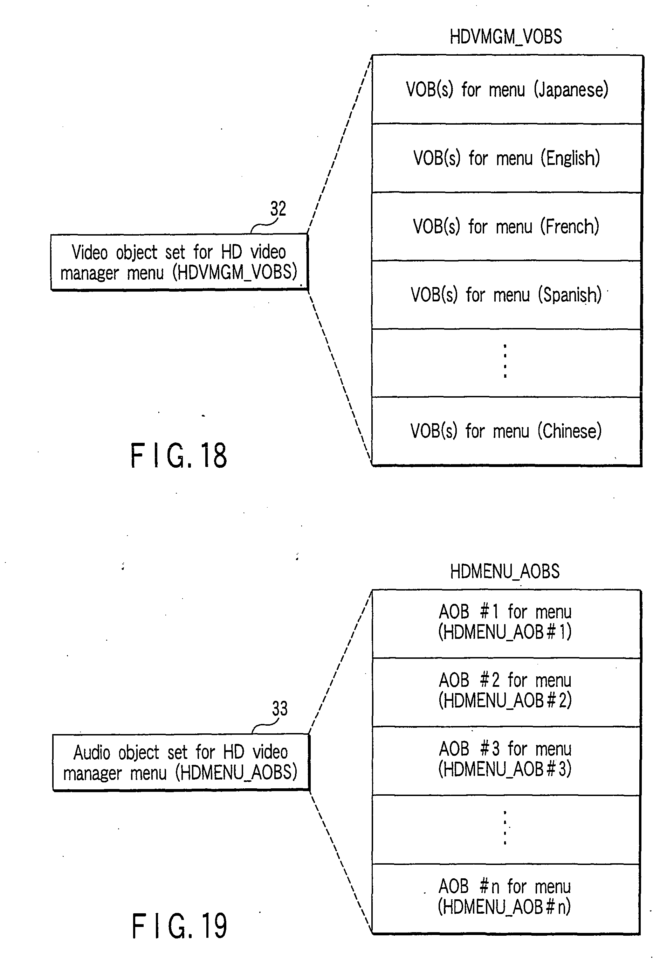

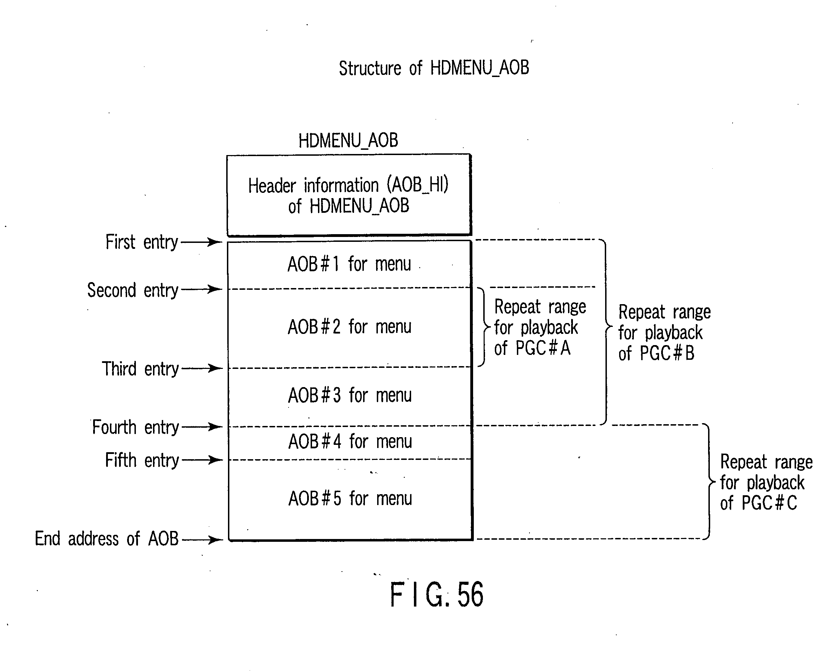

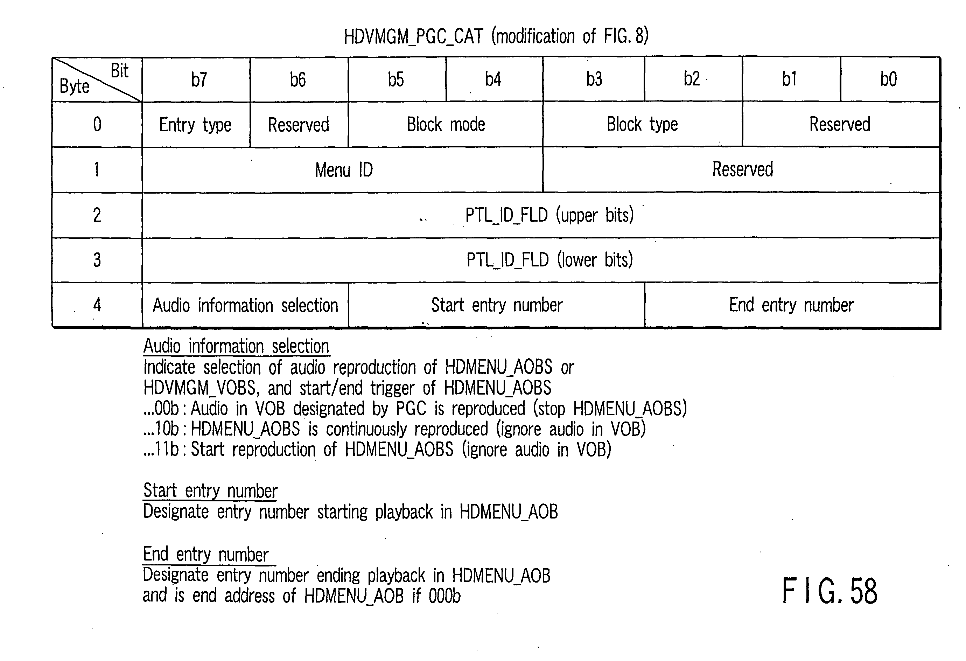

Instead of recording a plurality of AOB #1 to AOB #n for the menu in the audio object set for HD video manager menu (HDMENU AOBS) 33 (FIG. 1E) as shown in FIG. 19, a menu audio object only (audio object file HD_MENU0.HDA only) is recorded as shown in FIG. 56. Sound information is continued everywhere (including a "silent period" which can be inserted halfway) in the audio object set for HD video manager menu (audio object file HD_MENU0.HDA), and the information is recorded in such a manner as to prevent sound from being flied halfway. Furthermore, the audio object set for HD video manager menu (audio object file HD_MENU0.HDA) can be finely divided by $n$ entries (entry points). Accordingly, information of a start number (start entry number) and end number (end entry number) of the entry set beforehand in the audio object set for HD video manager menu (audio object file HD_MENU0.HDA) is held in PGC_CAT information (FIGS. 58 to 60) in which the management information of each menu screen is recorded. A playback range of the background sound (background music) played back simultaneously with the display of the corresponding menu screen can be designated.

As a result, the following individual effects are produced.

(1) In a case where partial background sound (background music) is shared in a plurality of different menu screens (e.g., a range of "second entry" to "third entry" is shared in repeat playback ranges of PGC #A and PGC #B, for example, as shown in FIG. 56), an amount of the data of the audio object for the menu, which is recorded in the information storage medium, is reduced, and therefore a recording efficiency of the information played back with respect to the information storage medium is enhanced.

(2) To shorten a display start time until the menu screen and the background sound (background music) are simultaneously displayed immediately after the user's designation, the information of the audio object set for menu (audio object file HD_MENU0.HDA) needs to be temporarily stored in the memory 122 (FIG. 48) beforehand. As described in (1), since the data amount of the audio object for the menu is reduced, the capacity required by the memory 122 is reduced, and prices of information reproduction apparatuses can be lowered.

(3) For example, when the "start menu screen" is displayed, "music piece No. 1" only is repeatedly played back. On the other hand, "music piece Nos. 1 to 3" are repeatedly played back during the displaying of "specific menu screen A", and an only "powerful part of the music piece No. 1" is repeatedly played back during the displaying of the "specific menu screen B". When the repeat playback range of the background sound (background music) changes by the menu screen in this manner, as described in (1), the data amount of the audio object set for the menu is reduced, and further the management information of each menu screen is simplified. Therefore, playback control of the information reproduction apparatus is simplified. The information of the start number (start entry number) and end number (end entry number) of the preset entry is only recorded in PGC_CAT information (FIGS. 58 to 60) in which the management information of each menu screen is recorded, then the repeat playback range can be easily designated, and contents producers' intentions can be reflected.

(4) Since the data is continued everywhere in the audio object for the menu, continuity of sound is ensured, for example, between the end position of the repeat playback range of PGC #B and the start position of the repeat playback range of PGC #C of FIG. 56. Therefore, in a case where the user switches the menu screen corresponding to PGC #B to that corresponding to PGC #C as described in b] of (F), immediately after a series of background sound (background music) corresponding to the screen (PGC #B) before the switching ends, the background sound (background music) corresponding to the "continuously" switched menu image (PGC #C) can be started. There can be provided more comfortable menu display environments (continuity of the background music) with respect to the user.

[Point 4]

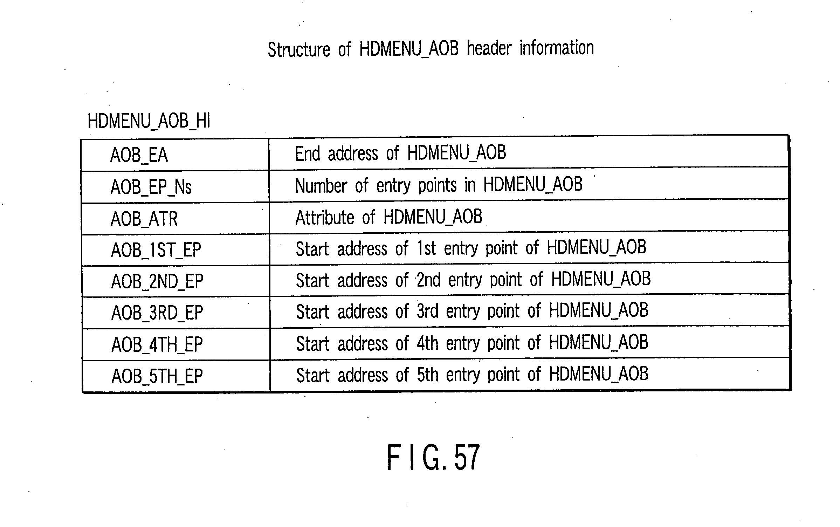

As shown in FIG. 56, HDMENU_AOB header information (HDMENU_AOB_HI) is recorded in the start position of the only audio object set for menu (only audio object file HD_MENU0.HDA) in the audio object set for menu (HDMENU_AOBS) 33 (FIG. 1E), and management information on the audio object set for menu, including the start address of each entry point, is recorded (FIG. 57). Since the management information on the audio object set for menu is recorded together in the audio object set for menu (HDMENU_AOBS) 33 (FIG. 1E) (only audio object file HD_MENU0.HDA) in this manner, the contents of the audio object set for menu can be easily changed or replaced in all the contents, and thus the authoring of the contents (preparation and edition operations of the contents) is simplified. As a result, the reduction of the price of the information storage medium can be realized.

[Object Information Recording Place]

As shown in FIG. 1E, the audio object set for HD menu (HDMENU_AOBS) 33 in which audio information to be output in parallel with menu display is recorded is newly recorded in an HD video manager (HDVMG) 30. A recording place of the audio object set for HD menu (HDMENU_AOBS) 33 in a file structure is an HD_MENU0.HDA file which is a unique file in a common directory (folder) of VIDEO_HD as shown in FIG. 2. In the embodiment of the present invention, it is possible to record a plurality of types of menu audio objects (audio data) in the information storage medium. Audio objects for menu (HDMENU_AOBs) are recorded in order in the audio object set for HD menu (HDMENU_AOBS) 33 as shown in FIG. 19. In the embodiment shown in FIG. 56, the structure includes the only audio object (audio data) for the menu, and an inner structure can be finely divided by a plurality of entries.

[Management Information Recording Place]

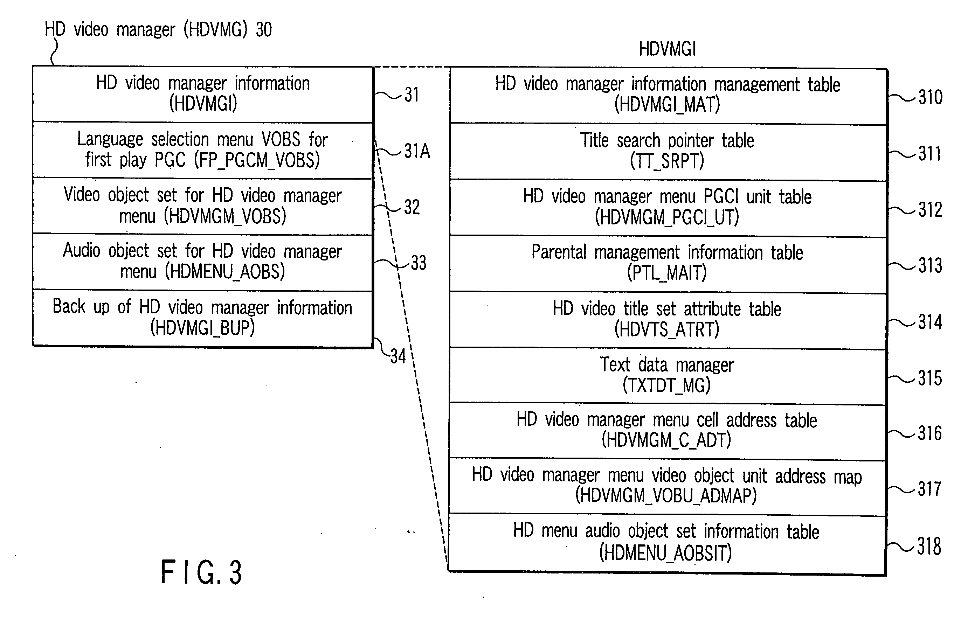

As shown in FIG. 3, management data with respect to the object of the audio object region for the menu (HDMENU_AOBS) 33 is recorded in an HD menu audio object set information table (HDMENU_AOBSIT) 318 in an HD video manager information (HDVMGI) 31. In the embodiment shown in FIG. 56, a header information recording region (HDMENU_AOB_HI) is recorded in the start position of the only audio object (audio data) for the menu (HDMENU_AOB), and start address information (AOB_nTH_EP) of each entry (entry point) and the like are recorded in the data structure as shown in FIG. 57.

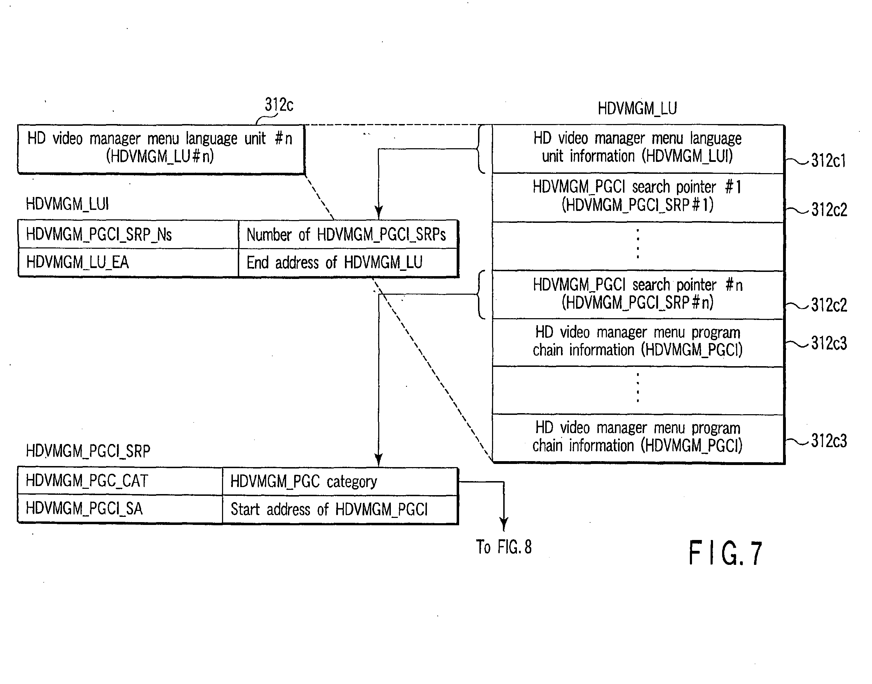

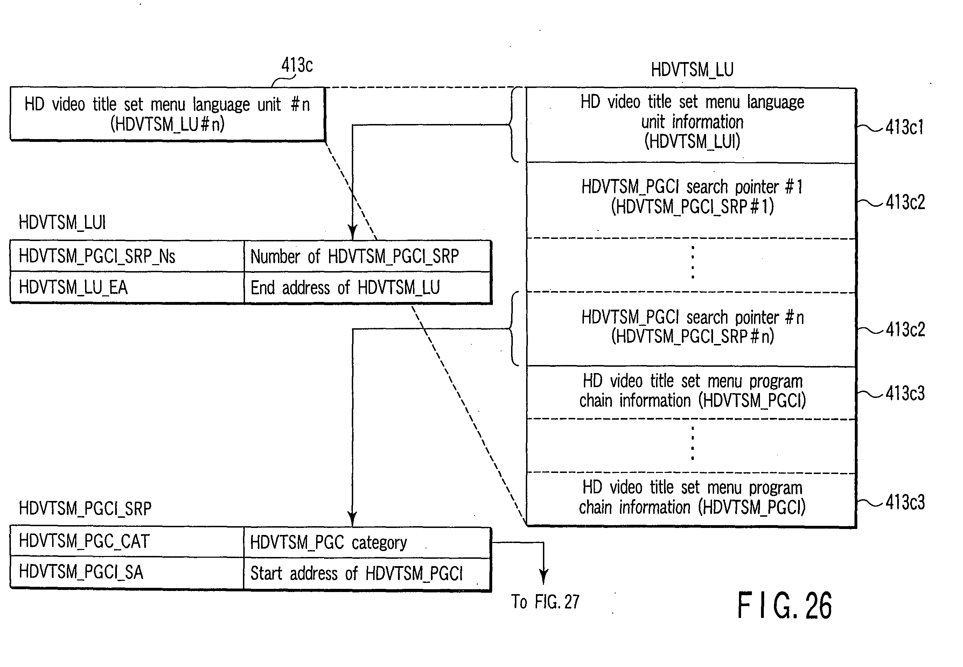

Moreover, in a place where information for referring to (designating) HD menu AOB (HDMENU_AOB) is set with respect to the whole menu in the embodiment of the present invention, as shown in FIG. 7, the information is recorded in HDVMGM_PGC category information (HDVMGM_PGC_CAT) in an HDVMGM_PGCI search pointer #n (HDVMGM_PGCI_SRP #n) 312c2 in an HD video manager menu language unit (HDVMGM_LU #n) 312c. Concerning the menu by an HDVTS unit, as shown in FIG. 26, the information is recorded in an HDVTSM_PGC category information (HDVTSM_PGC_CAT) in an HDVTS_PGCI search pointer #n (HDVTSM_PGCI_SRP #n) 413c2.

In another embodiment of the present invention, as shown in FIGS. 33 and 34, the information is recorded in an RSM&AOB category (RSM&AOB_CAT) in the program chain general information (PGC_GI) 50.

[Management Information Content]

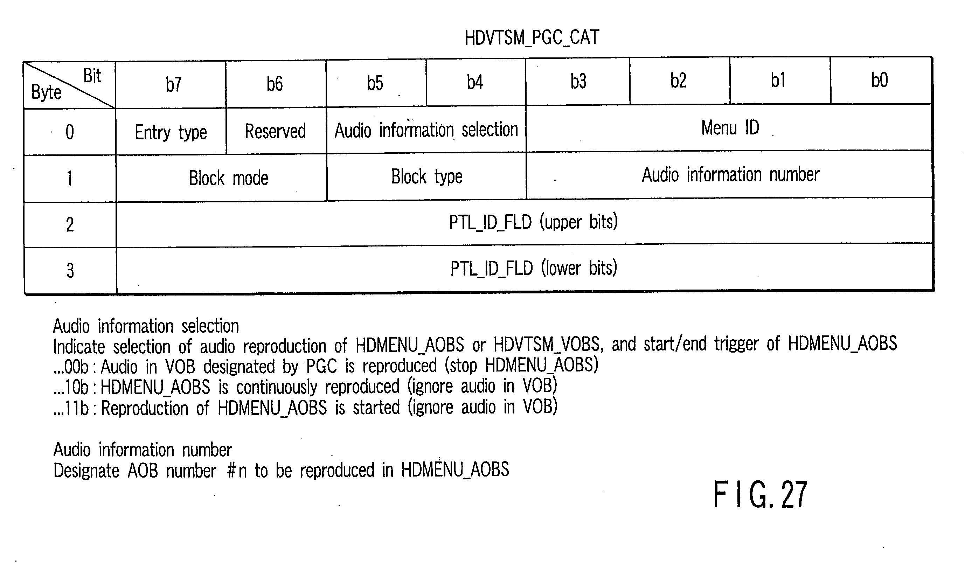

Concerning the whole menu, as shown in FIG. 7, the followings are recorded in the HDVMGM_PGC category information (HDVMGM_PGC_CAT) in the HDVMGM_PGCI search pointer #n (HDVMGM_PGCI_SRP #n) 312c2 in the HD video manager menu language unit 312c. Concerning the menu by the HDVTS unit, as shown in FIGS. 26 and 27, the followings are recorded in the HDVTSM_PGC category information (HDVTSM_PGC_CAT) in the HDVTS_PGCI search pointer #n (HDVTSM_PGCI_SRP #n) 413c2:

(1) Audio information number designating AOB number #n to be played back in HDMENU_AOBS (the number of the corresponding AOB in the AOBs for the menu (HDMENU_AOB) recorded as shown in FIG. 19); and
(2) Audio information selection flag indicating selected information of audio information to be played back simultaneously with the screen display of the HD content menu, and start/continue/end trigger information of audio information playback.

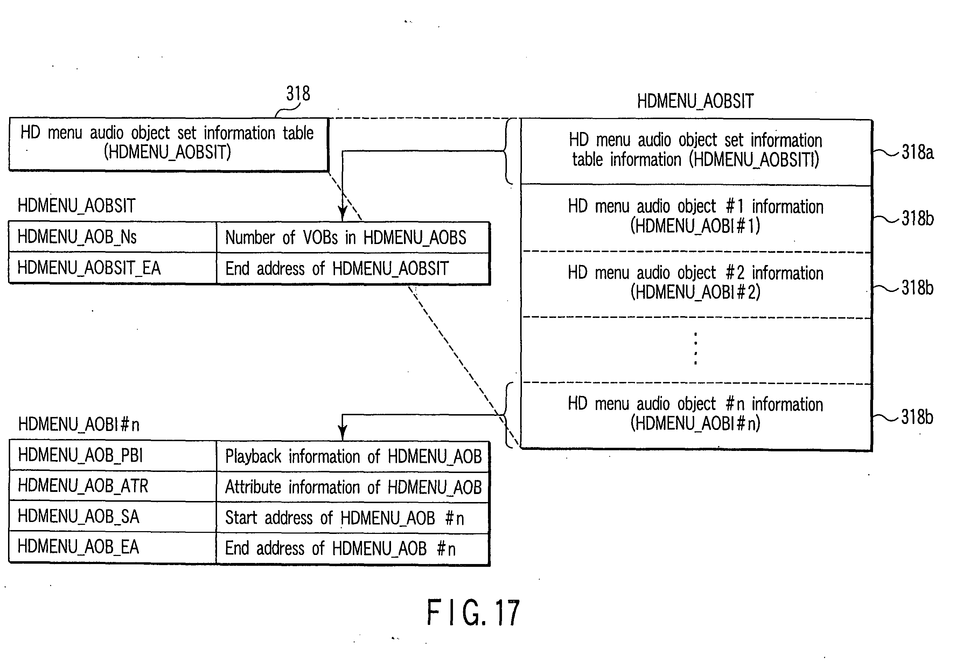

FIGS. 7 and 24 or 33 and 34 show management information which designates the HD menu audio object to be played back simultaneously with the display of the menu screen. Accordingly, as shown in FIG. 17, contents of management information with respect to the menu audio object include HD menu audio object set information table information (HDMENU_AOBSITI) 318a and HD menu audio object information (HDMENU_AOBI) 318 which are individual management information with respect to the AOBs for the menu recorded in the information storage medium.

This HDMENU_AOBI includes HDMENU_AOB_PBI indicating playback information (playback time of music) of HDMENU_AOB; HDMENU_AOB_ATR indicating attributes (LPCM, AC-3, and the like) of the object; and HDMENU_AOB_SA and HDMENU_AOB_EA indicating a start address and an end address of HDMENU_AOB#n. An absolute or relative size of HDMENU_AOB#n is sometimes recorded with respect to the start or end address.

Moreover, the information of (1), (2) may also be represented by RSM&AOB_CAT in FIG. 33.

[Access Information]

As shown in FIG. 4, HDMENU_AOBS start address information HDMENU_AOBS_SA indicating a place where the audio object set for HD menu (HDMENU_AOBS) 33 is recorded, and HDVMGM_AOB information table start address information (HDMENU_AOBSIT_SA) indicating a place where the HD menu audio object set information table (HDMENU_AOBSIT) 318 is recorded are recorded in the HD video manager information management table (HDVMGI_MAT) 310. The audio information to be output simultaneously with the menu display in the information storage medium (optical disk or HD DVD disk) is recorded in the area 33, and the management information for the audio object for the menu is recorded in the table 318.

Moreover, in the embodiment shown in FIG.

56, as shown in FIGS. 58 to 60, the playback range in the audio object set for the menu (HDMENU_AOB) at the time of the display of the corresponding menu screen is designated by the information of a set of "the start entry number" and "the end entry number".

(G) The above-described subject matters are provided, and the representing power to the user is further enhanced. Moreover, the content easy to use by the user is managed in a directory (folder) separated from a place where the conventional DVD video content is recorded as shown in FIG. 2. That is, in the conventional DVD video content, video information (video data, sub-picture data, and audio data are generically referred to as the video object) and the management data for managing the video information are grouped, recorded, and managed under the directory (folder) named VIDEO_TS.

On the other hand, in the content having the subject matters (A) to (G), the video and the management data for managing the video information are managed together in another directory (folder) named VIDEO_HD as shown in FIG. 2, and convenience of presentation control of the information reproduction device is enhanced.

In the HD content of the present embodiment, the HD_MENU0.HDA file exists in which the audio information to be output simultaneously with the menu display is recorded, but the file does not exist in the conventional DVD video content.

Moreover, the information reproduction device according to the present embodiment includes a graphic decoder unit 113 as shown in FIG. 48, but the information reproduction device for reproducing the conventional DVD video content does not include the graphic decoder unit 113. Therefore, when the conventional DVD video content and the HD content are mixed/played back, a circuit and control program for use in each content need to be switched on an information reproduction device side. When the directory (folder) is divided for each content as shown in FIG. 2, it is easy to identify the content on the information reproduction device side. By the process of switching the circuit and control program at the time of access to the file, a switching process is smoothly performed at a high rate, when the HD and SD contents are mixed/played back.

<<Relation among Subject Matters>>

In the present embodiment, the content easy to use by the user by simple authoring is provided by a combination of subject matters (A), (B), the content representing power to the user is further improved by a combination of subject matters (C) to (F), and the appeal of the DVD video to the user is further enhanced.

An effect of the combination of the subject matters (A) to (F) will be concretely described in accordance with two examples.

[I] Example of a case where the user selects an optimum language from the menu and thereafter searches for a place to see using another menu

After the HD DVD video disk (information storage medium) is attached to the information reproduction device, a screen for selecting the language by the user is displayed in a first displayed screen (FP_PGC) (subject matter B). At this time, a unique shape different from a conventional rectangular shape is displayed with respect to the highlight information indicating the language to be selected by the user in the screen (subject matter E), and accordingly the user can easily select the language. For example, when the language of each country is displayed in the screen, the shape of the corresponding country on the geographical map is displayed in a display range of the highlight information, and the user can only identify the shape of the display range of the highlight information without reading the language to be selected to designate the desired language. Japan is marked in red on the terrestrial globe or global map in many cases. Therefore, 256 display colors of the graphic units are recorded (subject matter E), each language is displayed in the corresponding color (Japanese is displayed in red), and the user can only identify the color to identify the corresponding language.

Moreover, after selecting the language, the user shifts to a thumbnail (reduced image indicating a top screen designating a presentation start position) list of titles, and searches for a video place to see in many cases. Even in the conventional DVD video menu, a text indicating the presentation start position is displayed under the thumbnail in many cases. At this time, the user can further easily search for the place to see using the graphic unit (subject matter E). That is, the display range of the highlight information is displayed in the "star shape" in a place indicating a large pause such as a large change of scene in a video title, the inside of the star is represented in conspicuous colors such as red. A place which belongs a lower class and which indicates a skip destination is displayed by a "round mark" and is represented in light yellow or blue and can be graphically displayed so that a large pause is eliminated.

Furthermore, when the subject matter described in (F) is used, the audio information can be output continuously without being interrupted in a period of a series of operation in which "the user shifts to the thumbnail list of the titles, after selecting the language, to search for the video to see" (even when the menu screen for the language selection switches to the title thumbnail list screen). The user can readily switch the menu. Especially, the structure of HDMENU_AOB shown in FIG. 56 is used as the audio object set for menu. Accordingly, when a small number of audio objects are only recorded in the information storage medium, these objects can be used among a plurality of menus. Moreover, audio object ranges repeatedly played back among different menus can be subtly adjusted. In a case where the user switches the menu screen corresponding to PGC #B to that corresponding to PGC #C, for a while after ending the switching of the menu screen, (1) the background sound (background music) of the menu screen corresponding to the PGC #B is played back, (2) the background sound (background music) of the menu screen corresponding to the PGC #B ends to the last, (3) thereafter the background sound (background music) of the menu screen corresponding to the PGC #C is continuously played back from the beginning, and (4) thereafter the background sound (background music) of the menu screen corresponding to the PGC #C is repeatedly played back in a designated range. A direction of an effective background sound (background music) can be presented to the user in this manner.

A concrete process method for enabling the above-described process will be described in an information reproduction apparatus shown in FIG. 48. When a DVD video disk (information storage medium 1) of HD is attached to the information reproduction apparatus, a disk drive 101 reads an HD video manager information (HDVMGI) 31 and an HD video title set information (HDVTSI) 41 which are management information shown in FIG. 1E to store the information in the memory 122. For example, next an MPU 121 analyzes contents temporarily stored in the memory 122 to confirm presence/absence of audio data AOB which is a preload reproduction object. On judging the presence of the audio data AOB which is the preload reproduction object, the MPU 121 controls the disk drive 101 to read audio object set for menu HD video manager (HDMENU_AOBS) 33 shown in FIG. 1E. The information is temporarily stored in the memory 122. For example, when the audio data set for HD video manager menu (HDMENU_AOB) takes the structure of FIG. 56 (a total data amount of the audio data AOB is comparatively small in many cases), all audio data set for HD video manager menu (HDMENU_AOB) are temporarily stored in the memory 122, and the audio data AOB can be switched/played back at a high speed at the time of the switching of the menu screen. Next, the menu screen for selecting the language is displayed to the user in accordance with information of first play PGCI (FP_PGCI) shown in FIG. 4, and simultaneously the playback of the audio data AOB temporarily stored in the memory 122 is started. Next, when the user switches the screen to a screen showing the thumbnail list of the titles, an audio information number in HDVTSM_PGC_CAT shown in FIG. 27 matches the AOB number played back at the time of the display of the menu for selecting the language. When the audio information selection flag is set to '10b' (HDMENU_AOBS is continuously played back), the audio data is continuously output without being influenced by the switching of the menu screen.

[II] Example of the returning to the video title display after displaying the menu screen and bonus content halfway in the video title presentation

The presentation of the multi-angle comprising a plurality of types of slide shows for continuously reproducing the still pictures by the definition of the imaginary VAU (IVAU), or the presentation of the multi-angle comprising the slide show of the still pictures and the moving pictures is seamlessly performed (subject matter C). The presentation between the cells in which the cell command is executed can be seamlessly performed (subject matter D). By a method of setting an RSM permission flag in HDVTS_PGC_CAT (setting of "0b: permission") shown, for example, in FIG. 24 which is the management information for managing the seamless play, the user calls the menu screen halfway in the seamless play of the above-described multi-angle or halfway in the seamless play between the cells in which the cell command is executed. Thereafter, for example, when returning from the display of the bonus content such as a movie preview and a shooting spot (additionally, in a case where the RSM permission flag in HDVTS_PGC_CAT corresponding to the bonus content is set to "1b: prohibition"), it is possible to continue the seamless play of the multi-angle or the seamless play between the cells to execute the cell command (subject matter A). Especially, the seamless play is not assured with respect to the multi-angle comprising the slide show of still pictures and the moving picture in the conventional SD DVD video specifications. However, by the combination of the subject matters (A) and (C) or (A) and (D), after the screen jumps from "menu screen" → "bonus content presentation" halfway in the multi-angle video presentation, the screen returns to the original multi-angle video comprising the slide show of still pictures and the moving picture, and subsequently the seamless play is continued. This and versatile presentation modes can be realized.

Furthermore, a combination effect of these subject matters will be described in a case where the following process is performed as an example indicating versatile presentation modes by a combination of these subject matters.

(1) Halfway in the display of painters' names (in sub-pictures) and continuously switching paintings with sound explanations,
(2) sound language for the explanation is switched at the menu screen. Furthermore,
(3) the menu screen is instructed so as to delete the painters' names simultaneously displayed in the sub-pictures.
(4) After the presentation of bonus video in which a specific painting is explained in detail,
(5) the presentation is continued from the painting immediately before the shifting to the menu screen.

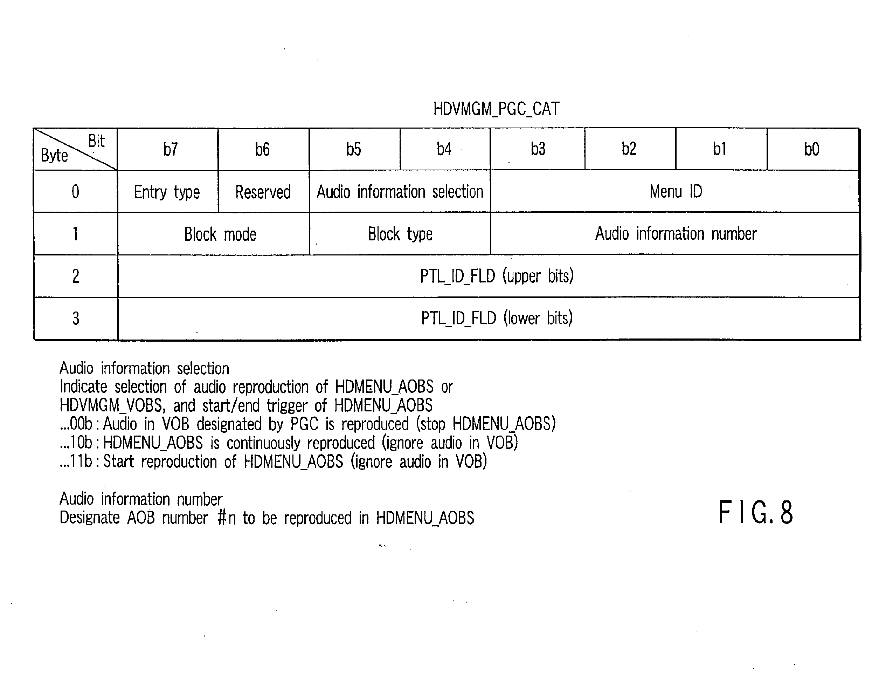

In the conventional SD DVD video specifications, when returning to the operation of (5), it is not easy to "continue the presentation from the painting immediately before the shifting to the menu screen". When returning to the operation of (5), the user needs to turn over the paintings from the beginning. A complicated authoring process is required in a case where the forcible continuing of the presentation from the painting just before is programmed. When (2) and (3) are performed, the continuous playback without interrupting the audio data is impossible in the conventional DVD video, and this is not possible until the subject matter (F) is achieved. A data structure in which the subject matters (A), (C), (D), and (F) can be simultaneously achieved is defined in the specifications, accordingly the memory capacity of the memory 122 of the information reproduction device shown in FIG. 48 is set, the management method in a memory region is set, and it is possible to simultaneously achieve the subject matters (A), (C), (D), and (F). That is, at the time of the switching to the menu screen in accordance with the subject matter (A), the values of system parameter SPRM (4) (title number) to SPRM (8) (highlight button number) shown in FIG. 62 are set. Moreover, a region in the memory 122 is reserved in which the corresponding cell number information, address information of the navigation pack recorded first in the corresponding cell, and information of the number of VTS are recorded, and the information is managed based on the RSM permission flag information of FIG. 24. A place where the data for the interleave unit ILVU corresponding to the imaginary video access unit IVAU can be recorded is reserved in the memory 122 in order to execute subject matter (C) in parallel. A storage area of (preload) audio data to be temporarily stored beforehand is allocated into the memory 122 in such a manner that subject matter (F) can be achieved, and the allocated region is managed based on audio information selection and audio information number shown in FIGS. 8 and 27. In the information reproduction device in the embodiment, the memory 122 is managed in this manner, and simultaneous achievement of the subject matters (A), (C), (D), and (F) is made possible.

Moreover, the subject matter (E) is used in the stage of the operation of the subject matters (2) and (3), 256 colors are represented, and the display contour of the highlight information is set to a unique shape (other than the rectangular shape), so that the user can easily see and select the selection menu (this has been impossible in the conventional DVD video specifications). By combining the subject matters (E) and (F), further comfort can be presented to the user.

Moreover, in the embodiment of the present invention, FP_PGC is prohibited from including the sub_picture stream, and instead FP_PGC is defined to include the graphic unit. The 256 color presentation in which the language selection menu screen to the user is defined by the graphic unit and the contour shape (not limited to the rectangular shape) of the screen region in which the highlight information is shown can be variously set. Therefore, the language selection menu screen to the user is further easily selected.

For example, the user can select the language code by the shape or the color without reading characters by the following presentation.

(a) "Japanese" is described, a screen region is formed in "a shape of Japanese map", and the inside is marked in "red" often used in the terrestrial globe or the global map in a place where Japanese is selected.

(b) "English" is described, and the screen region is formed in "a star shape" while conscious of Stars and Stripes where English (American language) is selected.

(c) Furthermore, the inside of the star shape is marked in "blue" using the color of a part including the stars in Stars and Stripes.

Especially, as shown in FIG. 4, first play PGCI (FP_PGCI) exhibiting the subject matter (B); start address information (HDMENU_AOBS_SA) of HDMENU_ AOBS and start address information (HDMENU_ AOBSIT_SA) of HDMENU_AOBS information table exhibiting the subject matter (F); and HDVMGM graphic unit stream number information (HDVMGM_GUST_Ns) and HDVMGM graphic unit stream attribute (HDVMGM_GUST_ATR) exhibiting the subject matter (E) are recorded in the common HD video manager information management table (HDVMGI_MAT) 310 so that they are easily managed. The first play PGCI (FP_PGCI) records the management information with respect to the menu for the language selection to the user. When the structure of FIG. 56 is used, the management information of all the audio objects for the menu is entirely managed in the HDMENU_AOB header information recording region (AOB_HI), and therefore the management is further simplified. As a result, in the information reproduction apparatus of the present embodiment, the process program in a case where the main subjects (A) to (G) are simultaneously or continuously represented to the user is simplified, reliability and stability of the information reproduction apparatus are enhanced, and further the reduction of the price of the information reproduction apparatus attributed to the simplification of the program can be achieved.

Similarly, as shown in FIGS. 33 and 34, RSM permission flag information exhibiting the subject matter (A), PGC graphic unit stream control table information (PGC_GUST_CTLT) exhibiting the subject matter (E), and the audio information selection flag and audio information number exhibiting the subject matter (F) are recorded in the common program chain general information (PGC_GI) 50 to facilitate the management. In the simultaneous or continuous presentation of the subject matters (A) to (G) to the user in the information reproduction device, the process program is simplified, the reliability and stability of the information reproduction device are enhanced, and the price reduction of the information reproduction device can be achieved by the simplification of the program.

Contents of information to be recorded in a disc-shaped information storage medium 1 will be described with reference to FIGS. 1A, 1B, 1C, 1D, 1E, and 1F. The information storage medium 1 includes a lead-in area 10, data area 12, and lead-out area 13 from an inner peripheral side.

In the information storage medium 1, a bridge structure of ISO9660 and UDF, and a part of the data area 12 has a volume/file structure information region 11 of ISO9660 and UDF. Mixed arrangement of a video data recording area 20 and general computer information recording area 22 is permitted in the data area 12. The video data recording area 20 records an HD video manager (HDVMG) 30 in which management information on the whole HD DVD video content recorded in the video data recording area 20 is recorded; and HD video title sets (HDVTS) 40 which are grouped for titles and in which the management information and video information (video object) are grouped/recorded for each title.

The HD video manager (HDVMG) 30 includes an HD video manager information (HDVMGI) 31 indicating the management information on the whole video data recording area 20; a back up of HD video manager information (HDVMGI_BUP) 34, in which the same information as that of the HD video manager information (HDVMGI) 31 is recorded; and a video object set for HD video manager menu (HDVMGM_VOBS) 32 in which a top menu screen indicating the whole video data recording area 20 is recorded. Furthermore, an audio object set for HD menu (HDMENU_AOBS) 33 in which the audio information to be output in parallel at the menu display time is recorded is newly recorded in the HD video manager 30. In the embodiment, a screen capable of setting the menu description language code is recorded in the region of the language selection menu VOBS for first play PGC (FP_PGCM_VOBS) 35.

The HD video title set (HDVTS) 40 in which the management information and video information (video object) for each title are grouped and recorded includes an HD video title set information (HDVTSI) 41 in which the management information on all the contents in the HD video title set (HDVTS) 40 is recorded; a back up of HD video title set (HDVTSI_BUP) 44 in which the same information as that of the HD video title set information (HDVTSI) 41 is recorded as the backup data; a video object set for HD video title set title (HDVTSM_VOBS) 42 in which the information of the menu screen is recorded by a video title set unit; and a video object set for HD video title set title (HDVTSTT_VOBS) 43 in which video object (video information of title) data in the video title set is recorded.

Each region constitutes a separate file in a file system including the bridge structure of ISO9660 and UDF. As shown in FIG. 2, the conventional SD DVD video contents are grouped and recorded under the directory named "VIDEO_TS". On the other hand, in the embodiment of the present invention, the directory is divided, and the HD DVD video contents are grouped and recorded under the directory named "VIDEO_HD".

That is, the recording place in the file structure of the audio object set for HD video manager menu 33 is a unique file which is an HD_MENU0.HDA file in the common directory (folder) of VIDEO_HD shown in FIG. 2. Screen data (video data) for setting the menu description language code is independent as a single file first in the region of the language selection menu VOBS for first play PGC (FP_PGCM_VOBS) 35, and the file name is HD_FPPGC.HDV. The HD video manager information (HDVMGI) 31 is stored in an HD_VMG00.HDI file. The back up of HD video manager information (HDVMGI_BUP) 34 is stored in an HD_VMG00.BUP file. The video object set for HD video manager (HDVMGM_VOBS) 32 is stored in an HD_VMG01.HDV file. The HD video title set information (HDVTSI) 41 is stored in a VTS00100.IFO file. The back up of HD video title set information (HDVTSI_BUP) 44 is stored in a VTS00100.BUP file.

The video object set for HD video title set menu (HDVTSM_VOBS) 42 is stored in a VTS00100.HDV file. The video object set for HD video title set title (HDVTSTT_VOBS) 43 is stored in a VTS00101.HDV file or VTS00102.HDV file. The information are stored in the individual files in this manner.

A detailed data structure in the HD video manager information (HDVMGI) 31 shown in FIG. 1E is shown in FIG. 3.

The management data with respect to the audio object set for HD video manager menu (HDMENU_AOBS) 33 is recorded in an HD menu audio object set information table (HDMENU_AOBSIT) 318 in the HD video manager information (HDVMGI) 31 as shown in FIG. 3. A data structure from the HD video manager information management table (HDVMGI_MAT) 310 to the HD video manager menu video object unit address map (HDVMGM_VOBU_ADMA) 317 matches the management information of the conventional SD DVD video specifications. In the embodiment of the present invention, the newly added HD menu audio object set information table (HDMENU_AOBSIT) 318 is recorded separately from and behind a part matching the management information of the conventional DVD video specifications. Accordingly, the conventional control program using the management information of the conventional SD DVD video can also be used, and the control program of the information reproduction device for the embodiment of the present invention can be simplified.

The HD video manager information (HDVMGI) 31 further includes HD video manager information management table (HDVMGI_MAT) 310 in which the management information common to the whole HD DVD video content recorded in the video data recording area 20 is grouped and recorded; title search pointer table (TT_SRPT) 311 in which information useful for searching for each title present in the HD DVD video content (presentation start position detection) is recorded; HD video manager menu PGCI unit table (HDVMGM_PGCI_UT) 312 in which the management information of the menu screen grouped and recorded for each menu description language code displaying the menu is recorded; parental management information table (PTL_MAIT) 313 in which information for managing video which can be shown or cannot be shown to children as parental information is recorded; HD video title set attribute table (HDVTS_ATRT) 314 in which attributes of the title set are grouped and recorded; text data manager (TXTDT_MG) 315 in which text information displayed to the user is grouped and recorded; HD video manager menu cell address table (HDVMGM_C_ADT) 316 in which information useful for searching for the start address of the cell constituting the menu screen is recorded; and HD video manager menu video object unit address map (HDVMGM_VOBU_ADMAP) 317 in which address information of VOBU indicating a minimum unit of the video object constituting the menu screen is recorded.

A detailed data structure in the HD video manager information management table (HDVMGI_MAT) 310 of FIG. 3 is shown in FIG. 4.

As shown in FIG. 4, the information of the first play PGCI (FP_PGCI) in which the management information on the menu for the language selection by the user, exhibiting the subject matter (B); the start address information (HDMENU_AOBS_SA) of HDMENU_AOBS and the start address information (HDMENU_AOBSIT_SA) of HDVMGM_AOBS information table, exhibiting the subject matter (F); and graphic unit stream number information (HDVMGM_GUST_Ns) of HDVMGM and graphic unit stream attribute (HDVMGM_GUST_ATR) of HDVMGM, exhibiting the subject matter (E) are recorded in the common HD video manager information management table (HDVMGI_MAT) 310.

Further, the HD video manager information management table (HDVMGI_MAT) 310 records various information such as an HD video manager identifier (HDVMG_ID); end address (HDVMG_EA) of HD video manager; end address (HDVMGI_EA) of HD video manager information; version number (VERN) of HD-DVD video specifications; HD video manager category (HDVMG_CAT); volume set identifier (VLMS_ID); adaptation identifier (ADP_ID); number of HD video title sets (HDVTS_Ns); identifier (PVR_ID) unique to provider; POS code (POS_CD); end address (HDVMGI_MAT_EA) of HD video manager information management table; start address (FP_PGCI_SA) of first play program chain information; start address (HDVMGM_VOBS_SA) of HDVMGM_VOBS; start address (TT_SRPT_SA) of TT_SRPT; start address (HDVMGM_PGCI_UT_SA) of HDVMGM_PGCI_UT; start address (PTL_MAIT_SA) of PTL_MAIT; start address (HDVTS_ATRT_SA) of HDVTS_ATRT; start address (TXTDT_MG_SA) of TXTDT_MG; start address (HDVMGM_C_ADT_SA) of HDVMGM_C_ADT; start address (HDVMGM_VOBU_ADMAP_SA) of HDVMGM_VOBU_ADMAP; video attribute of HDVMGM (HDVMGM_V_ATR); number of HDVMGM audio streams (HDVMGM_AST_Ns); attribute of HDVMGM audio stream (HDVMGM_AST_ATR); number of HDVMGM sub-picture streams (HDVMGM_SPST_Ns); attribute of HDVMGM sub-picture stream (HDVMGM_SPST_ATR); number of HDVMGM graphic unit streams (HDVMGM_GUST_Ns); attribute of HDVMGM graphic unit stream (HDVMGM_GUST_ATR).

The graphic stream attribute (HDVMGM_GUST_ATRT) for VMGM_EVOBS shown in FIG. 4 is 16-bit information, b15 to b14 denote a graphic compression mode, b13 denotes a GR_EXST flag, and the others are reserved. When the graphic compression mode is non-compressed, '00b' is set, and the others are reserved. The GR_EXST flag indicates whether or not the graphic stream exists. When the graphic stream does not exist, '0b' is set. When the graphic stream exists, '1b' is set, and the others are reserved.

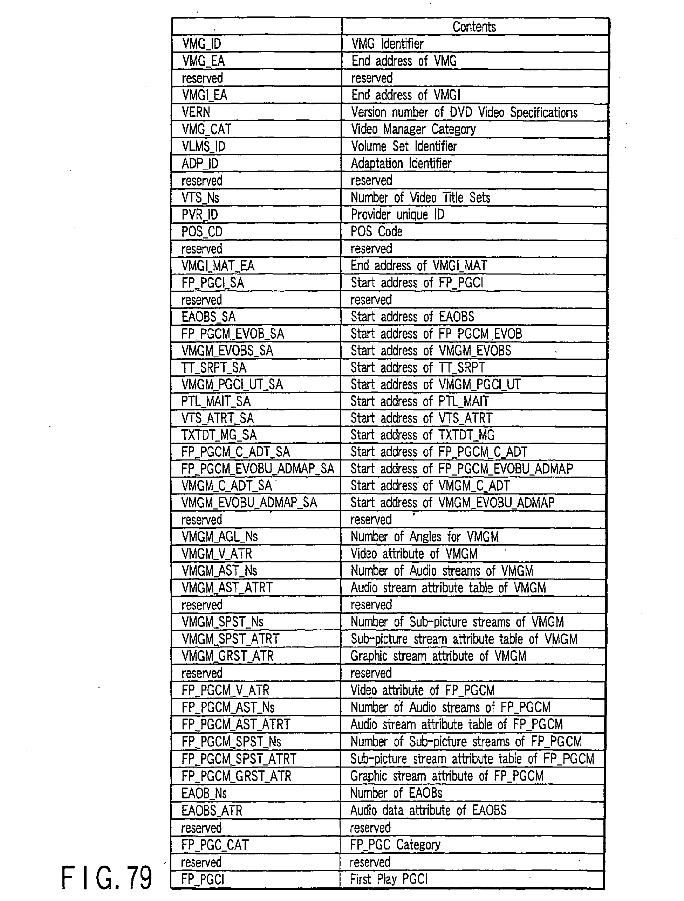

A modification of the detailed data structure in the HD video manager information management table (HDVMGI_MAT) 310 (FIG. 4) is shown in FIG. 79.

FIG. 79 shows contents of the HD video manager information management table (HDVMGI_MAT).

In the table, video manager (VMG), a size of video manager information (VMGI), a start address of each information in the video manager (VMG), attribute of the enhanced video object set (VMGM_EVOBS) for the video manager menu and the like are described.

    VMG_ID: VMG Identifier
    VMG_EA: End address of VMG
    VMGI_EA: End address of VMGI
    VERN: Version number of DVD video specifications
    VMG_CAT: Video Manager Category
    VLMS_ID: Volume Set Identifier
    ADP_ID: Adaptation Identifier
    VTS_Ns: Number of Video Title Sets
    PVR_ID: Provider unique ID
    POS_CD: POS Code
    VMGI_MAT_EA: End address of VMGI_MAT
    FP_PGCI_SA: Start address of FP_PGCI
    EAOBS_SA: Start address of EAOBS
    FP_PGCM_EVOB_SA: Start address of FP_PGCM_EVOB
    VMGM_EVOBS_SA: Start address of VMGM_EVOBS

    TT_SRPT_SA: Start address of TT_SRPT
    VMGM_PGCI_UT_SA: Start address of VMGM_PGCI_UT
    PTL_MAIT_SA: Start address of PTL_MAIT
    VTS_ATRT_SA: Start address of VTS_ATRT
    TXTDT_MG_SA: Start address of TXTDT_MG
    FP_PGCM_C_ADT_SA: Start address of FP_PGCM_C_ADT
    FP_PGCM_EVOBU_ADMAP_SA: Start address of FP_PGCM_EVOBU_ADMAP
    VMGM_C_ADT_SA: Start address of VMGM_C_ADT
    VMGM_EVOBU_ADMAP_SA: Start address of VMGM_EVOBU_ADMAP
    VMGM_AGL_Ns: Number of Angles for VMGM
    VMGM_V_ATR: Video attribute of VMGM
    VMGM_AST_Ns: Number of Audio streams of VMGM
    VMGM_AST_ATRT: Audio stream attribute table of VMGM
    VMGM_SPST_Ns: Number of Sub-picture streams of VMGM
    VMGM_SPST_ATRT: Sub-picture stream attribute table of VMGM
    VMGM_GRST_ATR: Graphic stream attribute of VMGM
    FP_PGCM_V_ATR: Video attribute of FP_PGCM
    FP_PGCM_AST_Ns: Number of Audio streams of FP_PGCM
    FP_PGCM_AST_ATRT: Audio stream attribute table of FP_PGCM
    FP_PGCM_SPST_Ns: Number of Sub-picture streams of FP_PGCM
    FP_PGCM_SPST_ATRT: Sub-picture stream attribute table of FP_PGCM
    FP_PGCM_GRST_ATR: Graphic stream attribute of FP_PGCM
    EAOB_Ns: Number of EAOBs
    EAOBS_ATR: Audio data attribute of EAOBS
    FP_PGC_CAT: FP_PGC category
    FP_PGCI: First Play PGCI

Here, the sub-picture stream number (VMGM_SPST_Ns) of VMGM is equal to HDVMGM_SPST_Ns of FIG. 4. The sub-picture stream attribute table (VMGM_SPST_ATRT) of VMGM corresponds to HDVMGM_SPST_ATR of FIG. 4. The graphic stream attribute (VMGM_GRST_ATR) of VMGM is the same as HDVMGM_GUST_ATR of FIG. 4.

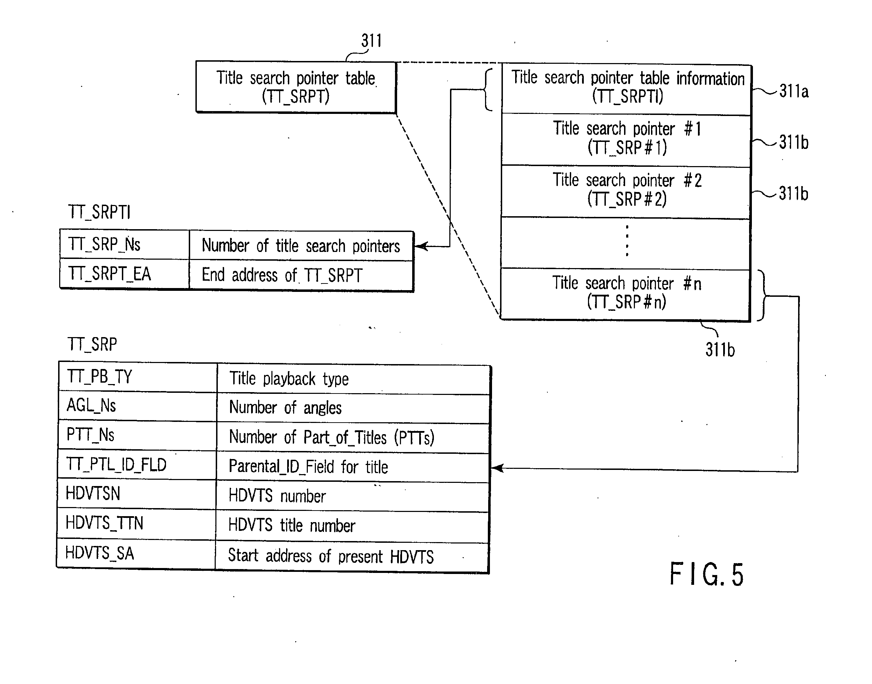

A data structure in the title search pointer table (TT_SRPT) 311 shown in FIG. 3 is shown in FIG. 5. The title search pointer table (TT_SRPT) 311 includes title search pointer table information (TT_SRPTI) 311a and title search pointer (TT_SRP) 311b. An optional number of pieces of title search pointers (TT_SRPs) 311b in the title search pointer table (TT_SRPT) 311 can be set in accordance with the title number in the HD DVD video content. Common management information of the title search pointer table (TT_SRPT) 311 is recorded in the title search pointer table information (TT_SRPTI) 311a. The common management information includes the number of title search pointers (TT_SRP_Ns) included in the title search pointer table (TT_SRPT) 311 and end address (TT_SRPT_EA) of the title search pointer table (TT_SRPT) 311 in the file (HD_VMG00.HDI) of HD video manager information region (HDVMGMI).

Moreover, in one piece of title search pointer (TT_SRP) information 311b, various information are recorded such as title playback type (TT_PB_TY) concerning the title indicated by this search pointer; number (AGL_Ns) of angles; number (PTT_Ns) of Part_of_Title (PTT); parental_ID_Field (TT_PTL_ID_FLD) for title; HDVTS number (HDVTSN); HDVTS title number (HDVTS_TTN); and start address (HDVTS_SA) of present HDVTS.

Next, a data structure in the HD video manager menu PGCI unit table (HDVMGM_PGCI_UT) 312 shown in FIG. 3 is shown in FIG. 6. The HD video manager menu PGCI unit table (HDVMGM_PGCI_UT) 312 includes an HD video manager menu program chain information unit table information (HDVMGM_PGCI_UTI) 312a in which common management information in the HD video manager menu PGCI unit table (HDVMGM_ PGCI_UT) 312, and an HD video manager menu language units (HDVMGM_LUs) 312c which are grouped for each menu description language code to display the menu and in which the management information on the menu information is recorded. The HD video manager menu language units (HDVMGM_LUs) 312c are recorded by the number of menu description language codes supported by the HD DVD video content. In order to facilitate the access to the HD video manager menu language units (HDVMGM_LUs) 312c for each menu description language code, the HD video manager menu PGCI unit table (HDVMGM_PGCI_UT) 312 includes the number of pieces of HD video manager menu language unit search pointers (HDVMGM_LU_SRPs) 312b including a start address of each HD video manager menu language unit (HDVMGM_LU) 312c. The number of pieces of the HD video manager menu language unit search pointers (HDVMGM_LU_SRPs) 312b is equal to that of HD video manager menu language units (HDVMGM_LU) 312c.

The HD video manager menu PGCI unit table (HDVMGM_PGCI_UT) 312 includes information on the number (HDVMGM_LU_Ns) of HD video manager menu language units, and end address (HDVMGM_ PGCI_UT_EA) of the HD video manager menu PGCI unit table (HDVMGM_PGCI_UT) 312 in the file (HD_VMG00.HDI in FIG. 2) of HD video manager information (HDVMGI).

Moreover, the HD video manager menu language unit search pointer (HDVMGM_LU_SRP) 312b includes not only difference address information (HDVMGM_UT_SA) of the start position of the HD video manager menu PGCI unit table (HDVMGM_PGCI_UT) 312 to the start position of the corresponding HD video manager menu language unit (HDVMGM_LU) 312c in the file (HD_VMG00.HDI of FIG. 2) of the HD video manager information (HDVMGI) described above; but also an HD video manager menu language code (HDVMGM_LCD) indicating the menu description language code of the corresponding HD video manager menu language unit (HDVMGM_LU) 312c; and HD video manager presence/absence (HDVMGM_EXST) information indicating whether or not the corresponding HD video manager menu language unit (HDVMGM_LU) 312c includes the menu screen displayed to the user as VOB.

A detailed data structure in the HD video manager menu language unit #n (HDVMGM_LU #n) 312c (FIG. 6) recorded in the HD video manager menu PGCI (HDVMGM_PGCI_UT) 312 shown in FIG. 3 is shown in FIG. 7.

The HD video manager menu language unit (HDVMGM_LU) 312c includes various information such as HD video manager menu language unit information (HDVMGM_LUI) 312c1 in which common management information on the menu in the HD video manager menu language unit (HDVMGM_LU) 312c is recorded; HD video manager menu program chain information (HDVMGM_PGCI) 312c3 including the structure shown in FIG. 7; and HDVMGM_PGCI search pointer (HDVMGM_PGCI_SRP #1) information 312c2 indicating the difference address of the start position of the HD video manager menu language unit (HDVMGM_LU) 312c to the start position of each HD video manager menu program chain information (HDVMGM_PGCI) 312c3 in the file (HD_VMG00.HDI of FIG. 2) of the HD video manager information (HDVMGI).

The HD video manager menu language unit information (HDVMGM_LUI) 312c1 recorded in the first portion in the HD video manager menu language unit #n (HDVMGM_LU #n) 312c stores the number (HDVMGM_PGCI_SRP_Ns) of HDVMGM_PGCI_ SRPs, and end address (HDVMGM_LU_EA) of HDVMGM_LU. The HDVMGM_PGCI search pointer (HDVMGM_PGCI_SRP #1) 312c2 stores a start address (HDVMGM_PGCI_SA) of HDVMGM_PGCI, and HDVMGM_PGC category (HDVMGM_PGC_CAT).

In the HDVMGM_PGC category (HDVMGM_ PGC_CAT) in the HDVMGM_PGCI search pointer #n (HDVMGM_PGCI_SRP #n) 312c2, selection information of audio information produced simultaneously with the screen display of the menu of HD content, and an audio information selection flag (audio information selection) indicating the start/end trigger of audio information playback are recorded. Either of the following can be selected as the audio data played back simultaneously with the screen display of the menu of the HD content:

(1) audio data recorded in the video object set for HD menu (HDVMGM_VOBS) 32 shown in FIG. 1E (scattered/recorded in the audio pack although not shown); and

(2) audio data which exists in the audio object set for HD menu (HDMENU_AOBS) 33 shown in FIG. 1E and in which one or more HD menu AOBs (HDMENU_AOBs) are recorded in order as shown in FIG. 19.

Here, when "00b" of the audio information selection flag is selected, the audio data of (1) is played back, and sound playback is interrupted at the switching time of the menu. When "10b" of "11b" of the audio information selection flag is selected, the audio data of the HD menu AOB (HDMENU_AOB) present in the audio object set for HD menu (HDMENU_AOBS) 33 shown in (2) is played back. To reproduce the audio data shown in (2), when "11b" is designated, the playback of the audio data is started from the beginning every change of the menu screen. When "10b" is designated, the playback of the audio data is continued regardless of the switching of the menu screen. As shown in FIG. 19, a plurality of types of HD menu AOBs (HDMENU_AOBs) are stored beforehand in the audio object set for HD menu (HDMENU_AOBS) 33. The audio information number shown in FIG. 8 shows the selection information of the HD menu AOB (HDMENU_AOB) played back simultaneously with the display of the corresponding PGC for menu display. The AOB is selected from the HD menu AOBs as shown in FIG. 19 by number information indicating "the number of AOBs to be selected from above" which is the selection information of the HD menu AOB.

As shown in FIG. 8, in the HDVMGM_PGC category (HDVMGM_PGC_CAT), entry type for determining whether or not the PGC is an entry PGC, menu ID indicating identification of the menu (e.g., the menu of the title or the like), block mode, block type, and PTL_ID_FLD are recorded.

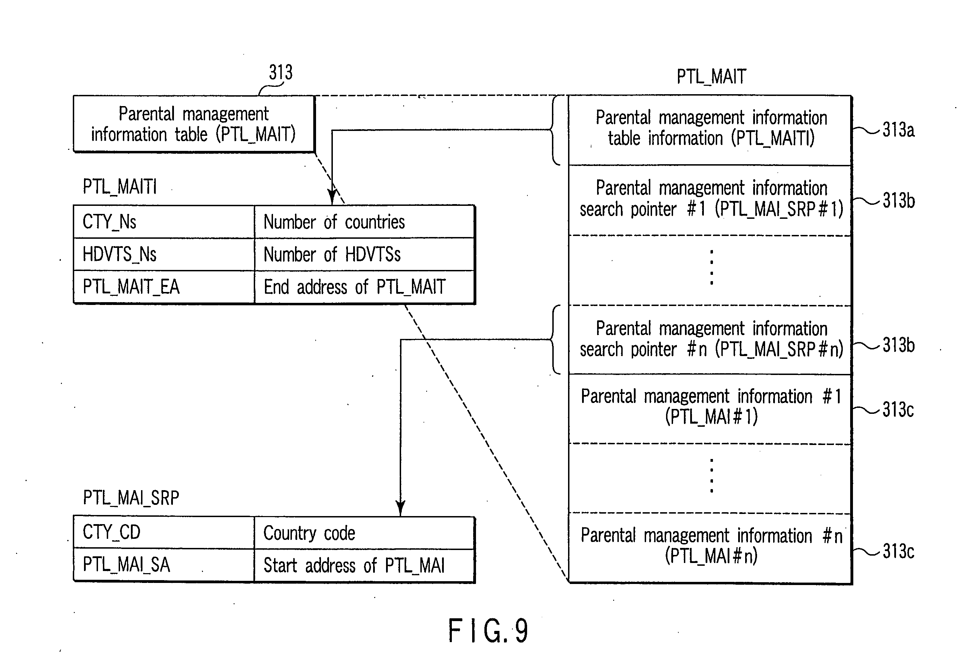

A data structure in the parental management information table (PTL_MAIT) 313 shown in FIG. 3 is shown in FIG. 9. In parental management information table information (PTL_MAITI) 313a, various information are recorded such as the number of countries (CTY_Ns), the number of HDVTS (HDVTS_Ns), and an end address (PTL_MAIT_EA) of PTL_MAIT. A parental management information search pointer (PTL_MAI_SRP) 313b records a country code (CTY_CD) and start address (PTL_MAI_SA) of PTL_MAI.

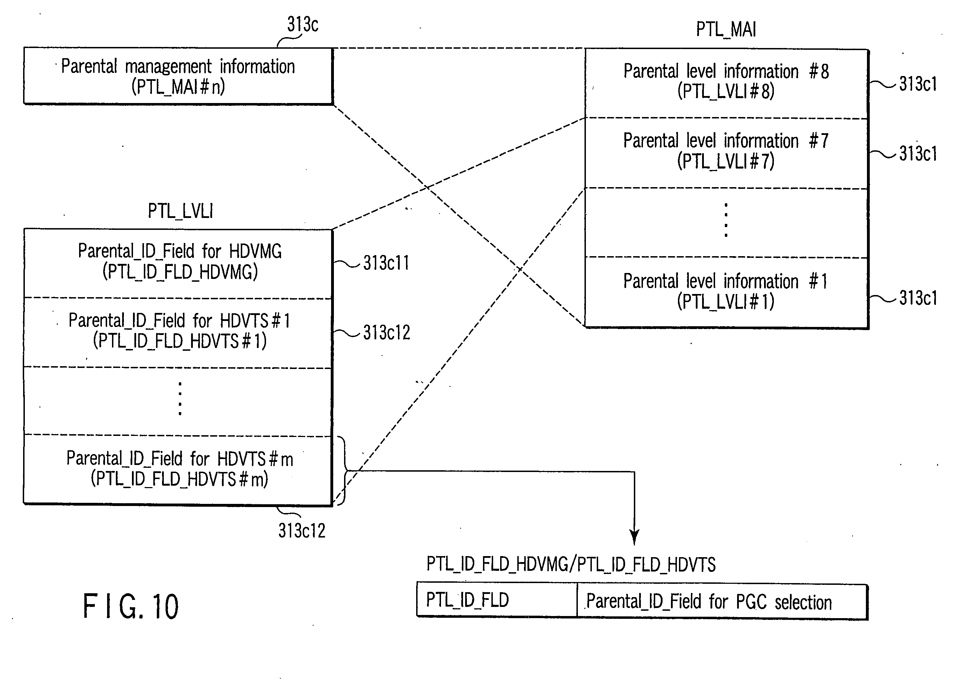

Moreover, the data structure in the parental management information (PTL_MAI) 313c shown in FIG. 9 includes parental level information (PTL_LVLI) 313c1 as shown in FIG. 10. The parental level information (PTL_LVLI) 313c1 records Parental_ID_Field (PTL_ID_FLD_HDVMG) 313c11 for HDVMG and Parental_ID_Field (PTL_ID_FLD_HDVTS) 313c12 for HDVTS. Furthermore, Parental_ID_Field (PTL_ID_FLD) exists in the Parental_ID_Field (PTL_ID_FLD_HDVTS) 313c12 for HDVTS.

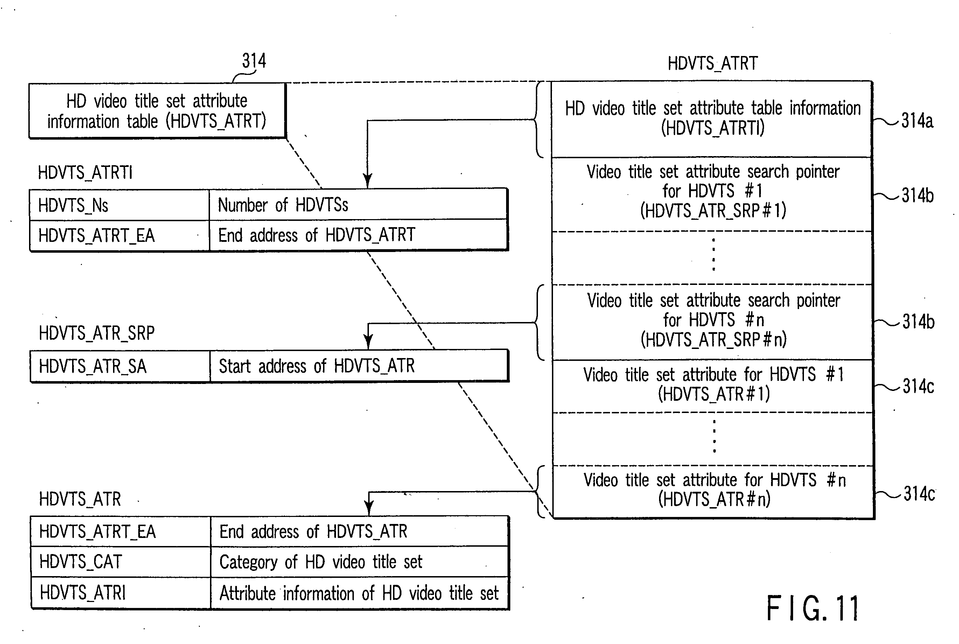

As shown in FIG. 11, the HD video title set attribute table (HDVTS_ATRT) 314 shown in FIG. 3 records:

(a) HD video title set attribute table information (HDVTS_ATRTI) 314a recording the number of HDVTS (HDVTS_Ns) and an end address (HDVTS_ATRT_EA) of HDVTS_ATRT;
(b) HD video title set attribute search pointers (HDVTS_ATR_SRPs) 314b in which a start address (HDVTS_ATR_SA) of HDVTS_ATR is recorded; and
(c) HD video title set attributes (HDVTS_ATRs) 314c recording an end address (HDVTS_ATRT_EA) of HDVTS_ATR, category of the HD video title set (HDVTS_CAT), and attribute of the HD video title set (HDVTS_ATRI).

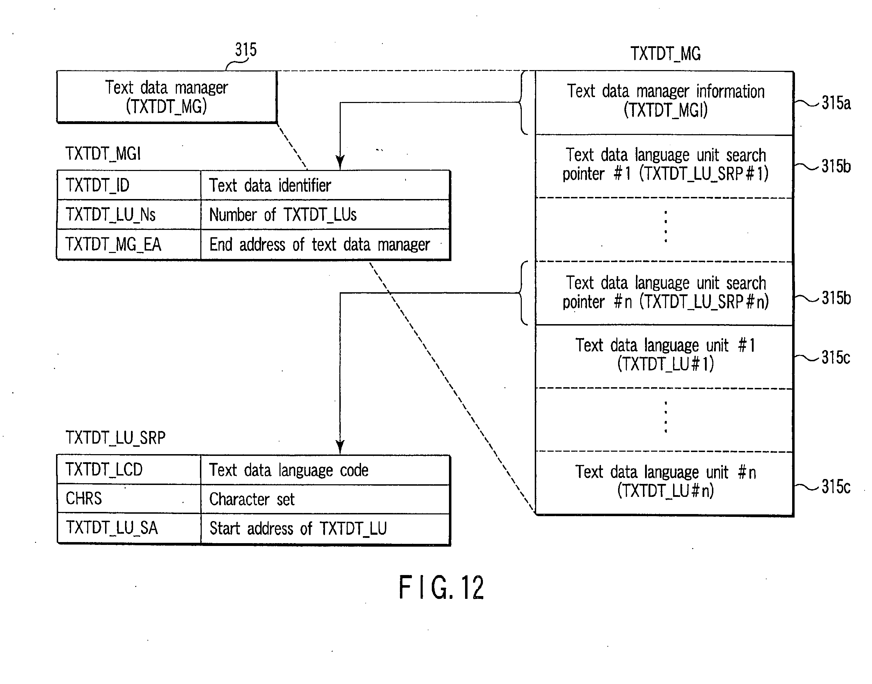

As shown in FIG. 12, the text data manager (TXTDT_MG) 315 shown in FIG. 3 records:

(a) text data manager information (TXTDT_MGI) 315a recording a text data identifier (TXTDT_ID), the number (TXTDT_LU_Ns) of TXTDT_LUs, and an end address (TXTDT_MG_EA) of the text data manager;
(b) text data language unit search pointers (TXTDT_LU_SRPs) 315b in which a text data language code (TXTDT_LCD), character set (CHRS) and start address (TXTDT_LU_SA) of TXTDT_LU are recorded; and
(c) text data language units (TXTDT_LUs) 315c.

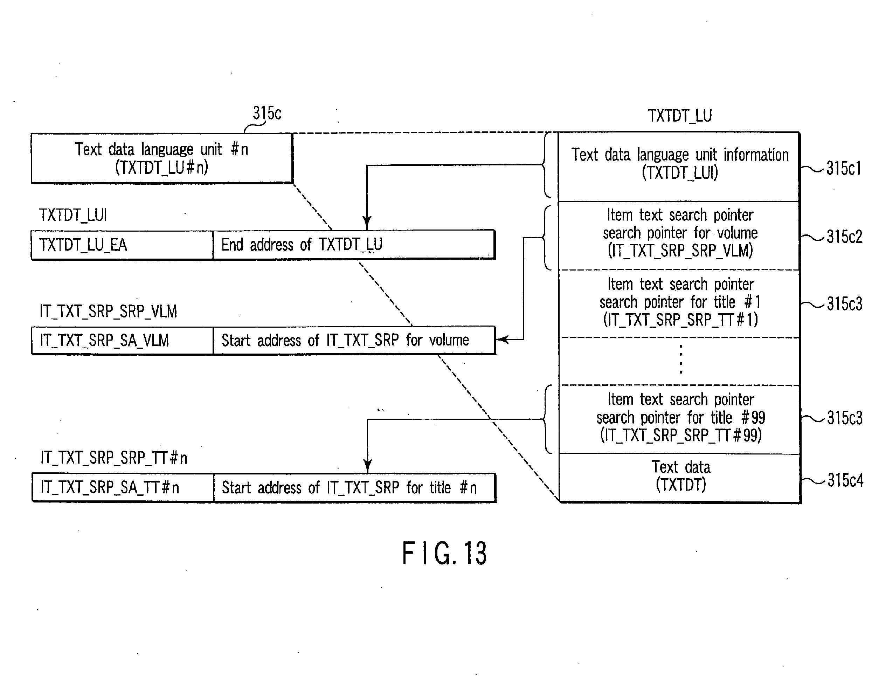

Furthermore, as shown in FIG. 13, the text data language unit (TXTDT_LU) 315c records:

(a) text data language units (TXTDT_LUIs) 315c1 in which end address information (TXTDT_LU_EA) of TXTDT_LU is recorded;
(b) an item text search pointer search pointer for volume (IT_TXT_SRP_SRP_VLM) 315c2 in which a start address (IT_TXT_SRP_SA_VLM) of IT_TXT_SRP for volume is recorded;
(c) item text search pointer search pointers for title (IT_TXT_SRP_SRP_TTs) 315c3 in which a start address (IT_TXT_SRP_SA_TT) of IT_TXT_SRP for title is recorded; and
(d) text data (TXTDT) 315c4.

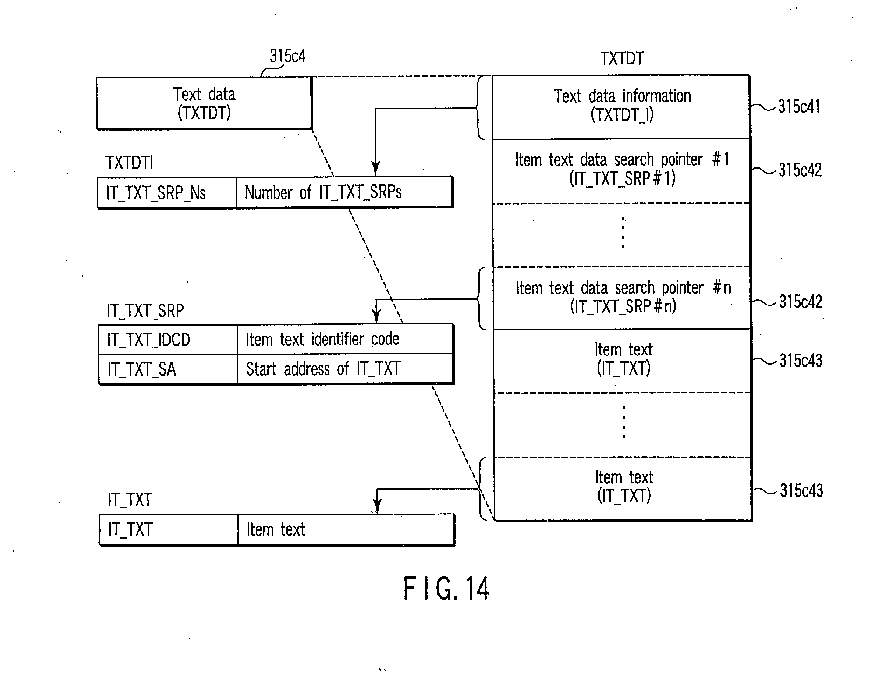

As shown in FIG. 14, in the text data (TXTDT) 315c4, various information is recorded:

(a) text data information (TXTDTI) 315c41 recording the number (IT_TXT_SRP_Ns) of IT_TXT_SRP;
(b) item text data search pointers (IT_TXT_SRPs) 315c42 in which an item text identifier code (IT_TXT_IDCD) and a start address (IT_TXT_SA) of IT_TXT are recorded; and

(c) item texts (IT_TXTs) 315c43.

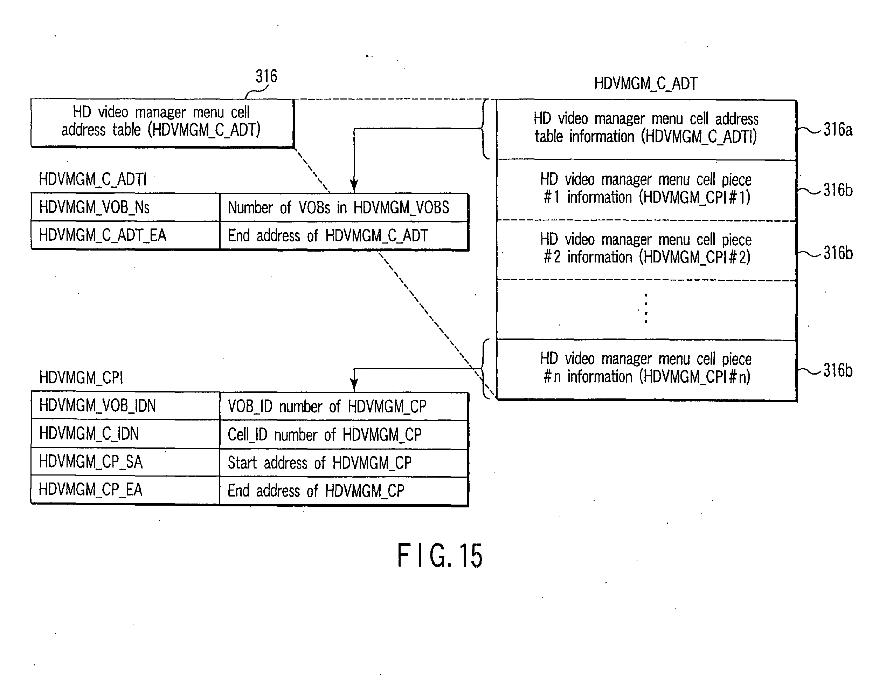

As shown in FIG. 15, in the HD video manager menu cell address table (HDVMGM_C_ADT) 316 shown in FIG. 3, various information is recorded such as:

(a) HD video manager menu cell address table information (HDVMGM_C_ADTI) 316a recording various information such as the number (HDVMGM_VOB_Ns) of VOBs in HDVMGM_VOBS and an end address (HDVMGM_C_ADT_EA) of HDVMGM_C_ADT; and
(b) HD video manager menu cell piece information (HDVMGM_CPI) 316b in which various information is recorded such as VOB_ID number (HDVMGM_VOB_IDN) of HDVMGM_CP, Cell_ID number (HDVMGM_C_IDN) of HDVMGM_CP, a start address (HDVMGM_CP_SA) of HDVMGM_CP, and an end address (HDVMGM_CP_EA) of HDVMGM_CP.

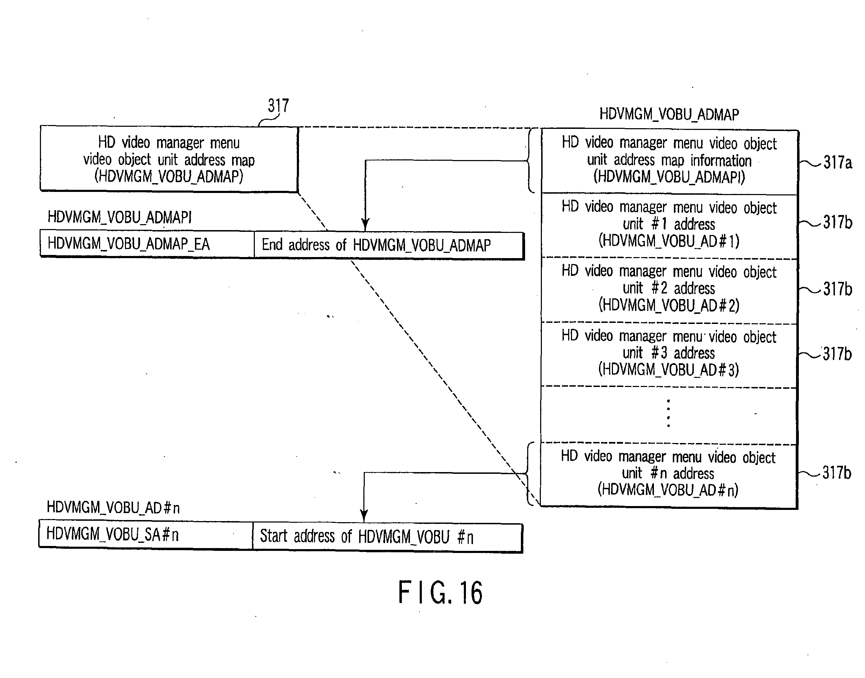

As shown in FIG. 16, in the HD video manager menu video object unit address map (HDVMGM_VOBU_ADMAP) 317 shown in FIG. 3, various information is recorded such as:

(a) HD video manager menu video object unit address map information (HDVMGM_VOBU_ADMAPI) 317a recording an end address (HDVMGM_VOBU_ADMAP_EA) of HDVMGM_VOBU_ADMAP; and
(b) HD video manager menu video object unit address (HDVMGM_VOBU_AD #n) 317b recording a start address (HDVMGM_VOBU_SA #n) of HDVMGM_VOBU #n.

FIG. 17 shows a management information content with respect to the HD menu AOB (HDMENU_AOB), and shows the inner data structure of the HD menu audio object set information table (HDMENU_AOBSIT) 318 shown in FIG. 3, which exists in the HD video manager information (HDVMGI) 31 shown in FIG. 1E. In the HD menu audio object set information table information (HDMENU_AOBSITI) 318a recorded in the first portion of the HD menu audio object set information table (HDMENU_AOBSIT) 318, the number (HDMENU_AOB_Ns) of VOBs in HDMENU_AOBS, and an end address (HDMENU_AOBSIT_EA) of HDMENU_AOBSIT are recorded. A plurality of types of audio objects (audio data) for the menu can be recorded in the information storage medium.

In FIG. 17, HD menu audio object information (HDMENU_AOBI) 318b indicates the management information on the audio object (audio data) for each menu, and records playback information (HDMENU_AOB_PBI) of HDMENU_AOB; attribute (HDMENU_AOB_ATR) of HDMENU_AOB; a start address (HDMENU_AOB_SA) of HDMENU_AOB #n (corresponding HDMENU_AOB); and an end address information (HDMENU_AOB_EA) of HDMENU_AOB #n (corresponding HDMENU_AOB).

In a data structure in the video object set for HD menu (HDVMGM_VOBS) 32 shown in FIG. 1E, grouped and stored in the HD_VMG01.HDV file of FIG. 2, as shown in FIG. 18, menu screens (video objects) in which the same menu screen is recorded in different menu description language codes are recorded.

In the embodiment of the present invention, a plurality of types of audio objects (audio data) for the menu can be recorded in the information storage medium. As described above, the recording place of the audio object (AOB) for the menu is the audio object set for HD menu (HDMENU_AOBS) 33 in the HD video manager (HDVMGI) 30 as shown in FIG. 1D. This audio object set for HD menu (HDMENU_AOBS) 33 includes one file named HD_MENU0.HDA as shown in FIG. 2. The respective audio objects (AOB) for the menu are recorded/recorded in order in the audio object set for HD menu (HDMENU_AOBS) 33 forming one file named HD_MENU0.HDA as shown in FIG. 19.

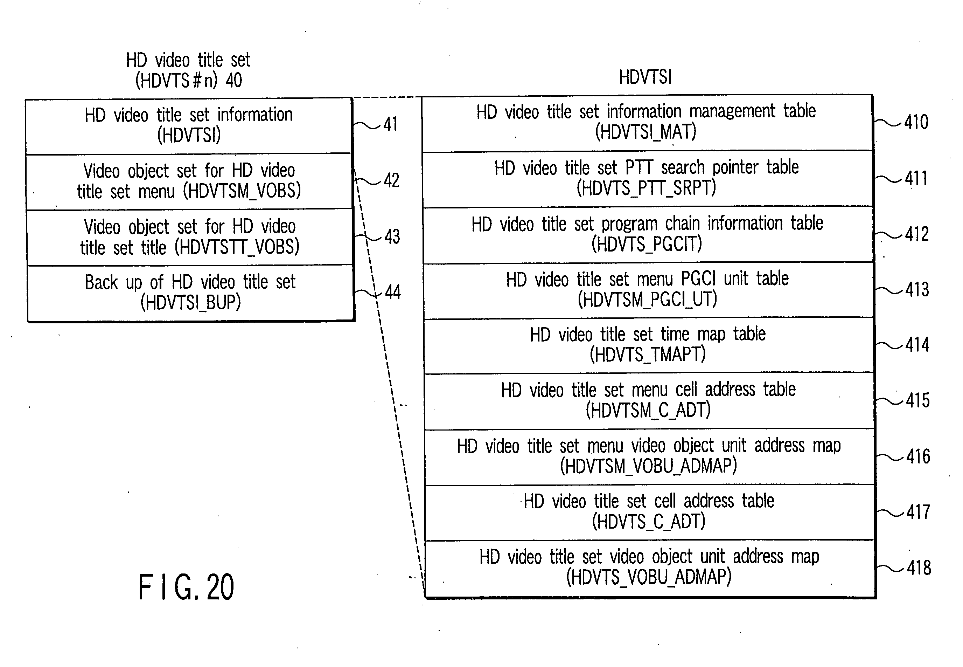

The HD video title set information region (HDVTSI) 41 shown in FIG. 1F is grouped and recorded in the VTS00100.IFO file shown in FIG. 2, and is, as shown in FIG. 20, divided into regions (management information groups) such as an HD video title set information management table (HDVTSI_MAT) 410; HD video title set PTT search pointer table (HDVTS_PPT_SRPT) 411; HD video title set program chain information table (HDVTS_PGCIT) 412; HD video title set menu PGCI unit table (HDVTSM_PGCI_UT) 413; HD video title set time map table (HDVTS_TMAPT) 414; HD video title set menu cell address table (HDVTSM_C_ADT) 415; HD video title set menu video object unit address map (HDVTSM_VOBU_ADMAP) 416; HD video title set cell address table (HDVTS_C_ADT) 417; and HD video title set video object unit address map (HDVTS_VOBU_ADMAP) 418.

The management information common to the corresponding video title set is recorded in the HD video title set information management table (HDVTSI_MAT) 410. The common management information is recorded in the first region (management information group) of the HD video title set information region (HDVTSI) 41, therefore, the common management information in the video title set is immediately read. A presentation control process of the information reproduction device is simplified, and a control process time is shortened.

The management information on the graphic unit included in HDVTS (HD video title set of the present invention) is recorded in the HD video title set information management table (HDVTSI_MAT) 410 (see FIG. 20) recorded in the first region (group) in the HD video title set information region (HDVTSI) 41 shown in FIG. 1E. As shown in FIG. 21, in a concrete management information content of the HD video title set information management table (HDVTSI_MAT) 410, graphic unit stream number information and attribute are divided into a menu screen and title (display video) in HDVTS. The information is recorded as the number of HDVTSM graphic unit streams (HDVTSM_GUST_Ns), HDVTSM graphic unit stream attribute (HDVTSM_GUST_ATR), the number of HDVTS graphic unit streams (HDVTS_GUST_Ns), and HDVTS graphic unit stream attribute table information (HDVTS_GUST_ATRT).

Moreover, in addition to the common management information in the video title set, as shown in FIG. 21, various information are recorded in the HD video title set information management table (HDVTSI_MAT) 410 such as an HD video title set identifier (HDVTS_ID); end address (HDVTS_EA) of HDVTS; end address (HDVTSI_EA) of HDVTSI; version number (VERN) of HD-DVD video specifications; HDVTS category (HDVTS_CAT); end address (HDVTSI_MAT_EA) of HDVTSI_MAT; start address (HDVTSM_VOBS_SA) of HDVTSM_VOBS; start address (HDVTSTT_VOBS_SA) of HDVTSTT_VOBS; start address (HDVTS_PTT_SRPT_SA) of HDVTS_PTT_SRPT; start address (HDVTS_PGCIT_SA) of HDVTS_PGCIT; start address (HDVTSM_PGCI_UT_SA) of HDVTSM_PGCI_UT; start address (HDVTS_TMAP_SA) of HDVTS_TMAP; start address (HDVTSM_C_ADT_SA) of HDVTSM_C_ADT; start address (HDVTSM_VOBU_ADMAP_SA) of HDVTSM_VOBU_ADMAP; start address (HDVTS_C_ADT_SA) of HDVTS_C_ADT; start address (HDVTS_VOBU_ADMAP_SA) of HDVTS_VOBU_ADMAP; video attribute (HDVTSM_V_ATR) of HDVTSM; number of HDVTSM audio streams (HDVTSM_AST_Ns); audio stream attribute (HDVTSM_AST_ATR) of HDVTSM; number (HDVTSM_SPST_Ns) of HDVTSM sub-picture streams; HDVTSM sub-picture stream attribute (HDVTSM_SPST_ATR); video attribute (HDVTS_V_ATR) of HDVTS; number (HDVTS_AST_Ns) of HDVTS audio streams; HDVTS audio stream attribute table (HDVTS_AST_ATRT); number (HDVTS_SPST_Ns) of HDVTS sub-picture streams; HDVTS sub-picture stream attribute table (HDVTS_SPST_ATRT); HDVTS multi-channel audio stream attribute table (HDVTS_MU_AST_ATRT); number (HDVTSM_GUST_Ns) of HDVTSM graphic unit streams; HDVTSM graphic unit stream attribute (HDVTSM_GUST_ATR); number (HDVTS_GUST_Ns) of HDVTS graphic unit streams; and HDVTS graphic unit stream attribute (HDVTS_GUST_ATRT).

The graphic stream attribute (HDVTSM_GUST_ATRT) for VTSM_EVOBS shown in FIG. 21 includes a plurality of graphic stream attribute (HDVTSM_GUST_ATR). The graphic stream attribute (HDVTSM_GUST_ATR) is 16-bit information, b15 to b14 denote graphic compression modes, b13 denotes a GR_EXST flag, and the others are reserved. When the graphic compression mode is non-compressed, '00b' is set, and the others are reserved. The GR_EXST flag indicates whether or not the graphic stream exists. When the graphic stream does not exist in VTSM_EVOBS, '0b' is set. When the graphic stream exists in VTSM_EVOB, '1b' is set, and the others are reserved.

The graphic stream attribute (HDVTS_GUST_ATRT) for VTSTT_EVOBS shown in FIG. 21 includes a plurality of graphic stream attribute (HDVTS_GUST_ATR). Each graphic stream attribute (HDVTS_GUST_ATRT) for VTSTT_EVOBS is 16-bit information, b15 to b14 denote graphic compression modes, b13 denotes a GR_EXST flag, and the others are reserved. When the graphic compression mode is non-compressed, '00b' is set, and the others are reserved. The GR_EXST flag indicates whether or not the graphic stream exists. When the graphic stream does not exist in VTSTT_EVOBS, '0b' is set. When the graphic stream exists in VTSTT_EVOBS, '1b' is set, and the others are reserved.

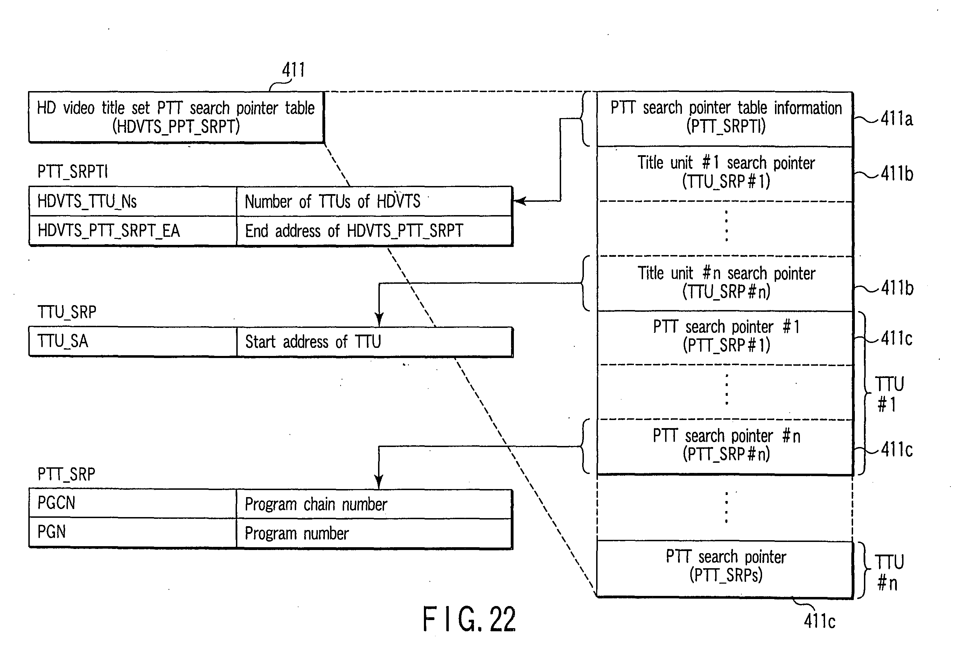

The data structure in the HD video title set PTT search pointer table (HDVTS_PPT_SRPT) 411 shown in FIG. 20 is shown in FIG. 22. The HD video title set PTT search pointer table (HDVTS_PPT_SRPT) 411 includes various information such as:

(a) PTT search pointer table information (PTT_SPRTI) 411a including the number (HDVTS_TTU_Ns) of HDVTS_TTUs of HDVTS and an end address (HDVTS_PTT_SRPT_EA) of HDVTS_PTT_SRPT;

(b) title unit search pointers (TTU_SRPs) 411b in which a start address (TTU_SA) of TTU is recorded; and

(c) PTT search pointers (PTT_SRPs) 411c including a program chain number (PGCN) and program number (PGN).

According to the first embodiment of the present invention, the RSM permission flag (update permission flag of resume information) is recorded in the HDVTS_PGC category in the HDVTS_PGCI search pointer 412b, as shown in FIGS. 23 and 24. The HDVTS_PGCI search pointer 412b is recorded in the HD video title set program chain information table (HDVTS_PGCIT) 412 shown in FIG. 20, included in the HD video title set information (HDVTSI) 41 shown in FIG. 1F. Further, the HD video title set program chain information table (HDVTS_PGCIT) 412, as shown in FIG. 23, records an HD video title set PGCI information table (HDVTS_PGCITI) 412a including the number (HDVTS_PGCI__SRP_Ns) of HDVTS_PGCI_SRPs and an end address (HDVTS_PGCIT_EA) of HDVTS_PGCIT. Moreover, a start address (HDVTS_PGCI_SA) of HDVTS_PGCI is also recorded in the HDVTS_PGCI search pointer (HDVTS_PGCI_SRP) 412b together with the above-described HDVTS_PGC category (HDVTS_PGC_CAT).

The RSM permission flag shown in FIG. 24 (update permission flag of the resume information) designates whether or not the contents of the resume information are updated (resume information is successively updated in accordance with a presentation situation of the corresponding PGC) in a stage in which the presentation of the corresponding HDVTS_PGC is started. That is, when the flag is "0b", the resume information is updated. When the flag is "1b", the resume information is not updated, and the presentation interrupted information of HDVTS_PGC played back before (the corresponding program chain in the HD video title set of the present invention) is stored. Further, the HDVTS_PGC category (HDVTS_PGC_CAT) includes entry type information for determining whether or not the PGC is an entry PGC, title number information (VTS_TTN) in the video title set (VTS) indicated by the corresponding PGC, block mode information, block type information, and PTL_ID_FLD information.

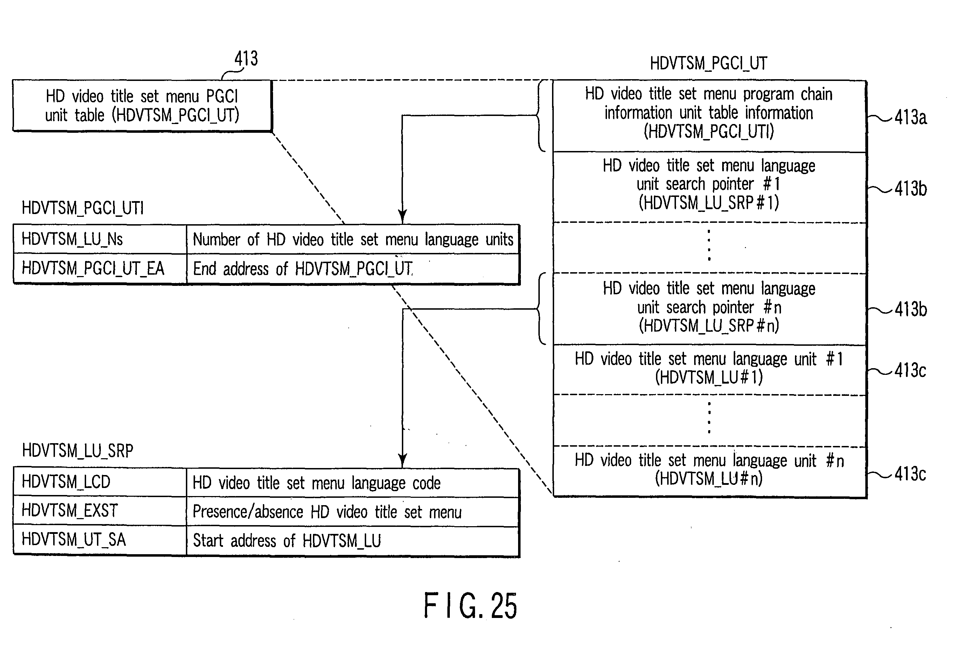

The data structure in the HD video title set menu PGCI unit table (HDVTSM_PGCI_UT) 413 shown in FIG. 20 is shown in FIG. 25. The HD video title set menu PGCI unit table (HDVTSM_PGCI_UT) 413 includes various information such as:

(a) HD video title set menu program chain information unit table information (HDVTSM_PGCI_UTI) 413a including information such as the number (HDVTSM_LU_Ns) of HD video title set menu language units and an end address (HDVTSM_PGCI_UT_EA) of HDVTSM_PGCI_UT;
(b) HD video title set menu language unit search pointers (HDVTSM_LU_SRPs) 413b in which an HD video title set menu language code (HDVTSM_LCD), presence/absence of HD video title set menu (HDVTSM_EXST), and a start address (HDVTSM_UT_SA) of HDVTSM_LU are recorded; and
(c) HD video title set menu language units (HDVTSM_LUs) 413c.

Moreover, as shown in FIG. 26, the data structure in the HD video title set menu language unit (HDVTSM_LU) 413c includes:

(a) HD video title set menu language unit information (HDVTSM_LUI) 413c1 including the number (HDVTSM_PGCI_SRP_Ns) of HDVTSM_PGCI_SRPs and an end address (HDVTSM_LU_EA) of HDVTSM_LU;
(b) HD video title set menu program chain information (HDVTSM_PGCIs) 413c3 including the same data structure as that of FIGS. 33 and 34; and
(c) HDVTSM_PGCI search pointers (HDVTSM_PGCI_SRPs) 413c2 in which an HDVTSM_PGC category (HDVTSM_PGC_CAT) and a start address (HDVTSM_PGCI_SA) of HDVTSM_PGCI are recorded.

According to the first embodiment of the invention, information for referring to (or designating) the HD menu AOB (HDMENU_AOB) with respect to the menu by an HDVTS unit is recorded in the HDVTSM_PGC category information (HDVTSM_PGC_CAT) in the HDVTS_PGCI search pointer #n (HDVTSM_PGCI_SRP #n) 413c2 as shown in FIG. 26.

The audio information number in the HDVTSM_PGC category information (HDVTSM_PGC_CAT) shown in FIG. 27 means an audio information number (AOB number) which designates AOB number #n to be played back in HDMENU_AOBS (the corresponding AOB number in AOBs (HDMENU_AOB) for the menu recorded in FIG. 19).

The audio information selection means the selection information of the audio information to be played back simultaneously with the screen display of the menu of the HD content in the present embodiment, and the audio information selection flag (audio information selection) indicating the start/end trigger information of the audio information playback.

Here, when the audio information selection flag (audio information selection) "00b" is selected, the audio data recorded in each video object for the menu is played back, and the sound playback is interrupted at the switching time of the menu. When the audio information selection flag (audio information selection) "10b" or "11b" is selected, the audio data of the HD menu AOB (HDMENU_AOB) existing in the audio object set for HD menu (HDMENU_AOBS) 33 is played back. To reproduce the audio data (AOB) for the menu, when "11b" is designated, the playback of the audio data is started from the beginning every change of the menu screen. When "10b" is designated, the playback of the audio data is continued regardless of the switching of the menu screen. In the embodiment of the present invention, as shown in FIG. 19, a plurality of types of AOBs (HDMENU_AOB) for the menu are recorded beforehand in the audio object set for HD menu (HDMENU_AOBS) 33. The audio information number shown in FIG. 27 indicates the selection information of the HD menu AOB (HDMENU_AOB) to be played back simultaneously with the display of the corresponding PGC for the menu display. The AOB is selected from the AOBs for the menu shown in FIG. 19 by number information indicating "the number of AOBs to be selected from above" which is selection information of the HD menu AOB. Further, the HDVTSM_PGC category (HDVTSM_PGC_CAT) records the entry type information for determining whether or not the PGC is an entry PGC, menu ID information indicating the identification of the menu (e.g., the menu of the title or the like), block mode information, block type information, and PTL_ID_FLD information.

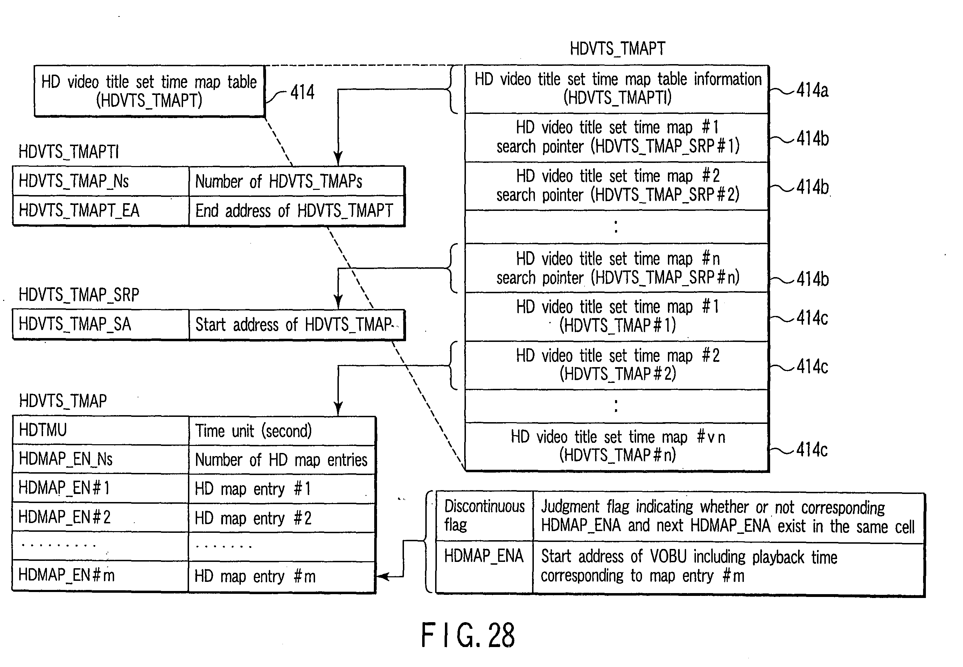

The data structure in the HD video title set time map table (HDVTS_TMAPT) 414 shown in FIG. 20 is shown in FIG. 28. The HD video title set time map table (HDVTS_TMAPT) 414 includes:

(a) HD video title set time map table information (HDVTS_TMAPTI) 414a in which the number (HDVTS_TMAP_Ns) of HDVTS_TMAPs and an end address (HDVTS_TMAPT_EA) of HDVTS_TMAPT are recorded;
(b) HD video title set time map search pointers (HDVTS_TMAP_SRPs) 414b including a start address (HDVTS_TMAP_SA) of HDVTS_TMAP; and
(c) HD video title set time maps (HDVTS_TMAPs) 414c in which a length (HDTMU) of a time unit (second) constituting a reference in map entry, the number (MAP_EN_Ns) of HD map entries, and map entries (MAP_ENs).

The HD map entry (HDMAP_EN) includes a "discontinuous flag" indicating a flag for determining whether or not the corresponding HDMAP_ENA and the next HDMAP_ENA exist in the same cell; and a start address (HDMAP_ENA) of VOBU including a presentation time corresponding to the corresponding HD map entry (HDMAP_EN).

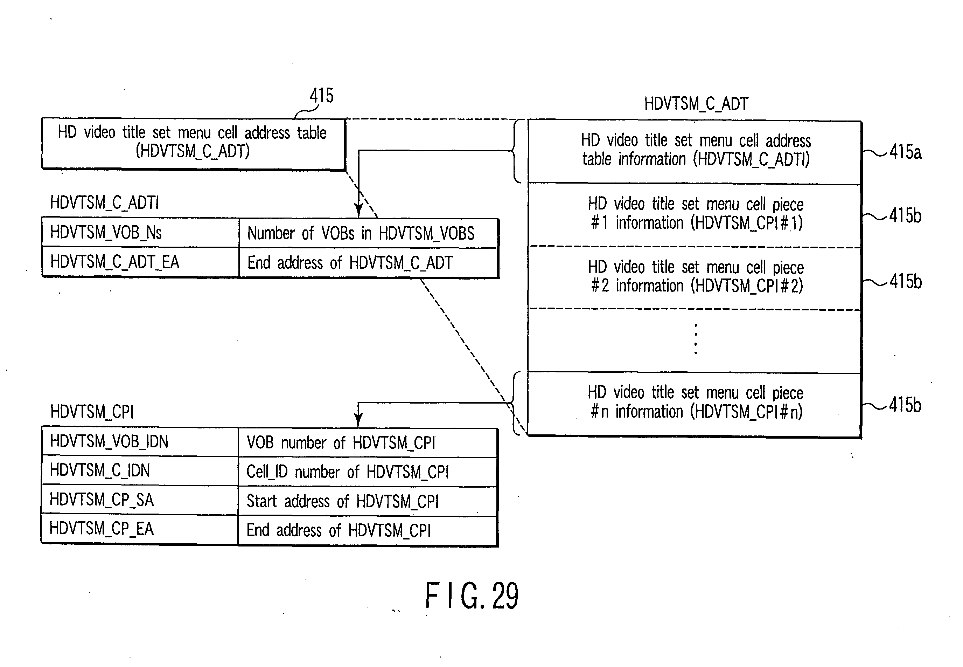

Moreover, as shown in FIG. 29, the data structure in the HD video title set menu cell address table (HDVTSM_C_ADT) 415 shown in FIG. 20 includes:

(a) HD video title set menu cell address table information (HDVTSM_C_ADTI) 415a including the number (HDVTSM_VOB_Ns) of VOBs in HDVTSM_VOBS and an end address (HDVTSM_C_ADT_EA) of HDVTSM_C_ADT; and
(b) HD video title set menu cell piece information (HDVTSM_CPIs) 415b in which VOB_ID number (HDVTSM_VOB_IDN) of HDVTSM_CP, Cell_ID number (HDVTSM_C_IDN) of HDVTSM_CP, a start address (HDVTSM_CP_SA) of HDVTSM_CP, and an end address (HDVTSM_CP_EA) of HDVTSM_CP are recorded.

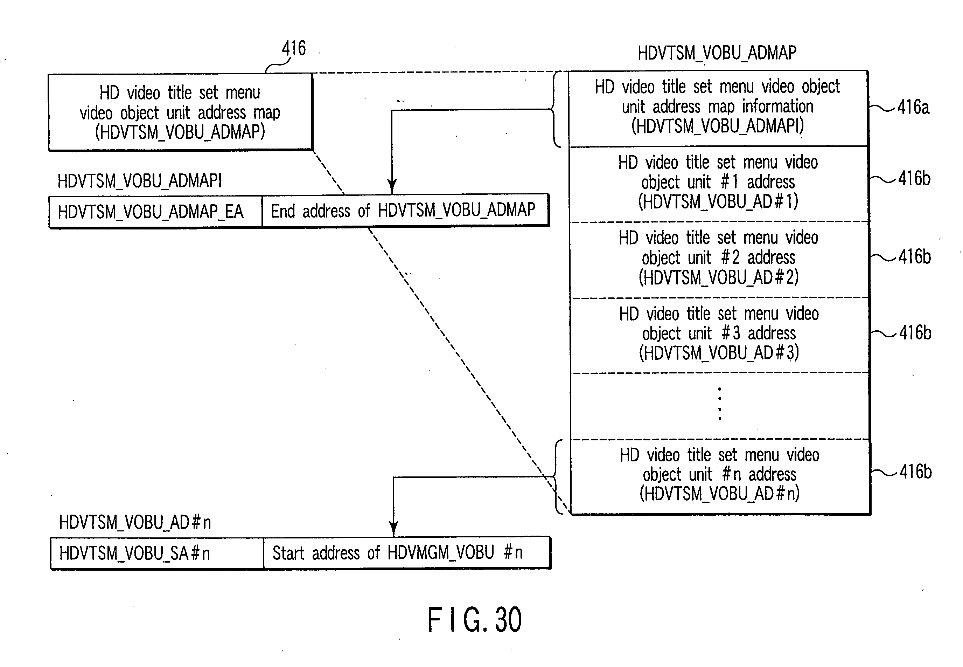

As shown in FIG. 30, the HD video title set menu video object unit address map (HDVTSM_VOBU_ADMAP) 416 shown in FIG. 20 includes information such as:

(a) HD video title set menu video object unit address map information (HDVTSM_VOBU_ADMAPI) 416a in which an end address (HDVTSM_VOBU_ADMAP_EA) of HDVTSM_VOBU_ADMAP is recorded; and
(b) HD video title set menu video object unit addresses (HDVTSM_VOBU_ADs) 416b including a start address (HDVTSM_VOBU_SA) of HDVTSM_VOBU.

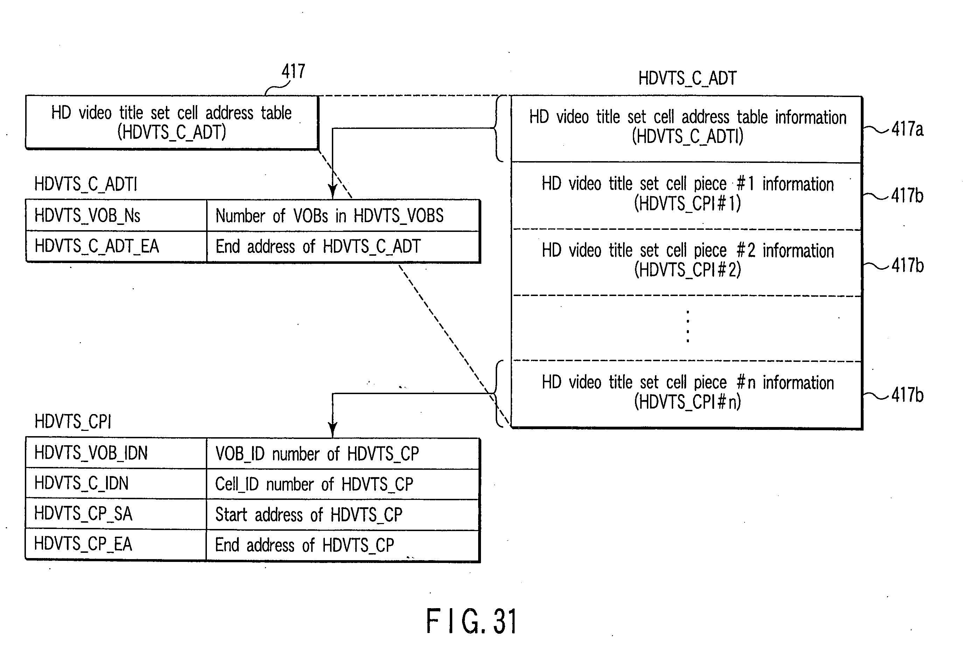

Moreover, the data structure in the HD video title set cell address table (HDVTS_C_ADT) 417 shown in FIG. 20 is shown in FIG. 31. The HD video title set cell address table (HDVTS_C_ADT) 417 includes various information such as:

(a) HD video title set cell address table information (HDVTS_C_ADTI) 417a including the number (HDVTS_VOB_Ns) of VOBs in HDVTS_VOBS and an end address (HDVTS_C_ADT_EA) of HDVTS_C_ADT; and
(b) HD video title set cell piece information (HDVTS_CPIs) 417b including a VOB_ID number (HDVTS_VOB_IDN) of HDVTS_CP, Cell_ID number (HDVTS_C_IDN) of HDVTS_CP, start address (HDVTS_CP_SA) of HDVTS_CP, and end address (HDVTS_CP_EA) of HDVTS_CP.

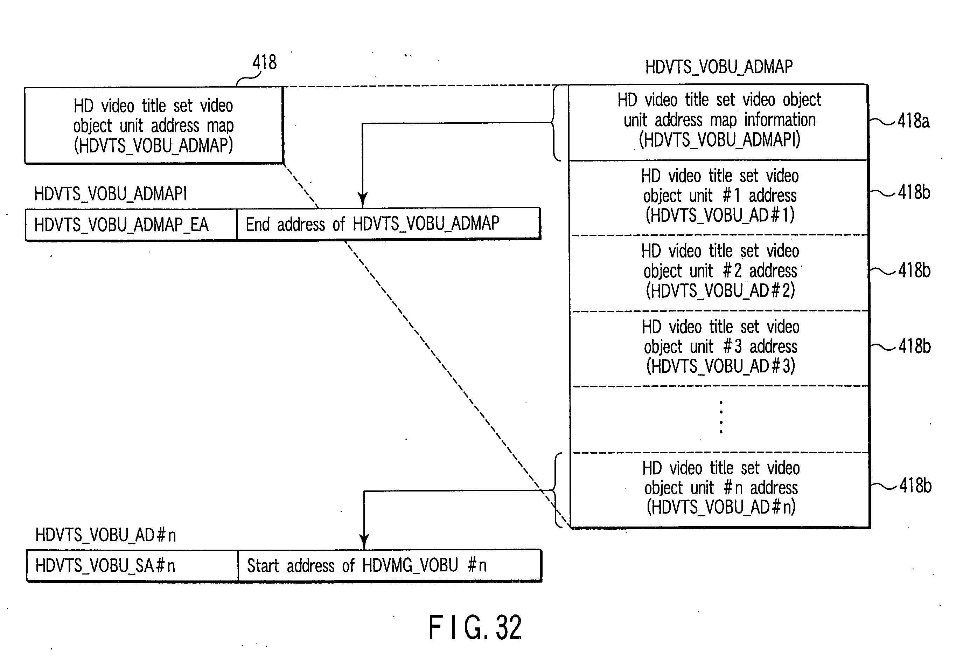

Furthermore, the data structure in the HD video title set video object unit address map (HDVTS_VOBU_ADMAP) 418 shown in FIG. 20 is shown in FIG. 32. The HD video title set video object unit address map (HDVTS_VOBU_ADMAP) 418 includes various information such as:

(a) HD video title set video object unit address map information (HDVTS_VOBU_ADMAPI) 418a including an end address (HDVTS_VOBU_ADMAP_EA) of HDVTS_VOBU_ADMAP; and
(b) HD video title set video object unit addresses (HDVTS_VOBU_ADs) 418b in which a start address (HDVTS_VOBU_SA) for an HDVTS_VOBU is recorded.

RSM permission flag information which realizes the subject matter (A) and the audio information selection flag/audio information number which realize the subject matter (F) are recorded in the search pointer information of program chain information (PGCI) as shown in FIGS. 22, 7, and 24 in the first embodiment of the present invention. The present invention is not limited to this embodiment, and they may also be recorded in PGCI itself. Another embodiment (second embodiment) of the present invention is shown in FIGS. 33 and 34. The PGCI information shown in FIGS. 33 and 34 correspond to:

[a] the HD video manager menu program chain information (HDVMGM_PGCI) 312c3 shown in FIG. 7 and concerning the HD video manager menu language unit (HDVMGM_LU) 312 of FIG. 6 existing in the HD video manager menu PGCI unit table (HDVMGM_PGCI_UT) 312 (FIG. 3) in the HD video manager information (HDVMGI) 31 of FIG. 1E;
[b] the HD video title set menu program chain information (HDVTSM_PGCI) 413c3 shown in FIG. 26 and recorded in the HD video title set menu language unit (HDVTSM_LU) 413c in FIG. 25 in the HD video title set menu PGCI unit table (HDVTSM_PGCI_UT) 413 in FIG. 20 showing the data structure in the HD video title set information (HDVTSI) 41 of FIG. 1F; and
[c] the HDVTS_PGCI 412c (FIG. 23) in the HD video title set program chain information table (HDVTS_PGCIT) 412 in FIG. 20 showing the data structure in the HD video title set information (HDVTSI) 41 of FIG. 1F.

The PGCI information shown in FIGS. 33 and 34 may be recorded in three places [a] to [c].

As shown in FIGS. 33 and 34, the program chain information (PGCI) includes five regions (five management information groups) including program chain general information (PGC_GI) 50; program chain command table (PGC_CMDT) 51; program chain program map (PGC_PGMAP) 52; cell playback information table (C_PBIT) 53; and cell position information table (C_POSIT) 54.

As shown in FIGS. 33 and 34, RSM&AOB category information (RSM&AOB_CAT) is recorded in the last of the program chain general information (PGC_GI) 50 recorded in the first region (management information group) in PGCI. RSM permission flag information, audio information selection flag, and audio information number are recorded in RSM&AOB category information (RSM&AOB_CAT). This RSM permission flag information means the same content as that described in FIG. 24. The contents of the audio information selection flag and audio information number match those described in FIG. 8 or 27. Further, the RSM&AOB category information (RSM&AOB_CAT) records the entry type information for determining whether or not the PGC is an entry PGC, block mode information, block type information, and PTL_ID_FLD information.

As shown in FIGS. 33 and 34, the information in the PGC graphic unit stream control table (PGC_GUST_CTLT) in which the management information on the stream of the graphic units to be recorded in the PGC is recorded is individually recorded in separate regions in accordance with five types of images (16: 9 HD image, 16:9 SD image, 4:3 SD image, letterboxed SD image, and pan-scanned SD image). The separate regions are PGC_GUST_CTL region (PGC_GUST #0) of an HD graphic unit stream #0; PGC_GUST_CTL region (PGC_GUST #1) of an SD wide graphic unit stream #1; PGC_GUST_CTL region (PGC_GUST #2) of a 4:3 graphic unit stream #2; PGC_GUST_CTL region (PGC_GUST #3) of a letterboxed SD graphic unit stream #3; and PGC_GUST_CTL region (PGC_GUST #4) of a pan-scanned SD graphic unit stream #4.

In addition to the above-described information, the program chain general information (PGC_GI) 50 further records various information such as a PGC content (PGC_CNT); PGC playback time (PGC_PB_TM); PGC user operation control (PGC_UOP_CTL); PGC audio stream control table (PGC_AST_CTLT); PGC sub-picture stream control table (PGC_SPST_CTLT); PGC graphic unit stream control table (PGC_GUST_CTLT); PGC navigation control (PGC_NV_CTL); PGC sub-picture palette (PGC_SP_PLT); start address (PGC_CMDT_SA) of PGC_CMDT; start address (PGC_PGMAP_SA) of PGC_PGMAP; start address (C_PBIT_SA) of C_PBIT; and start address (C_POSIT_SA) of C_POSIT.

The command information adapted for each PGC is grouped and recorded in the program chain command table (PGC_CMDT) 51 as shown in FIG. 35. The PGCI information may be recorded at least one of the three places [a] to [c] as described with reference to FIGS. 33 and 34. The resume sequence information described in [Point 4] described in the subject matter (A) is recorded in the program chain command table (PGC_CMDT) 51 as shown in FIG. 35. The information content of the resume sequence information in the embodiment of the present invention (resume (RSM) command sequence clearly described with reference to FIG. 35) is described in a form in which the RSM commands (RSM_CMDs) 514 are successively recorded in this region. The RSM command (RSM_CMD) 514 described in one region in FIG. 35 means a command which can be designated in the HD DVD video content, and the RSM commands (RSM_CMDs) 514 recorded in the resume (RSM) command sequence region are continuously (sequentially) executed in order from above.

In the embodiment of the present invention, the arrangement of cell commands (C_CMDs) 513 described in FIG. 35 also means a sequential command series. That is, it is meant that the command processes are successively executed from above in accordance with the arrangement order of the cell commands (C_CMDs) 513 shown in FIG. 35. As described with reference to FIG. 36, in a series of cell command process procedure designated from the cell command #1 (C_CMD #1) 513 to the cell command #k (C_CMD #k) 513, a part (a first cell command number to start the sequential process of the cell commands for each cell, and an execution range of the sequential process of the cell commands) of the cell command process procedure can be designated for each cell.

The RSM command (RSM_CMD) 514 indicates a part of the command procedure to be executed "immediately before the presentation from halfway in PGC" whose presentation is interrupted before, after returning to the corresponding PGC (e.g., from the menu screen). On the other hand, a pre-command (PRE_CMD) 511 means a command to be executed "immediately before reproducing the corresponding PGC from the beginning". The command executed after presentation of the corresponding PGC is a post-command (POST_CMD) 512. In FIG. 35, the numbers of pre-commands (PRE_CMDs) 511, post-commands (POST_CMDs) 512, cell commands (C_CMDs) 513, and RSM commands (RSM_CMD) 514 which can be recorded in one program chain command table (PGC_CMDT) 51 can be freely set (any of the numbers of commands described above may also be "0"). Additionally, in the embodiment of the present invention, an upper limit of a total value of added numbers of pre-commands (PRE_CMDs) 511, post-commands (POST_CMDs) 512, cell commands (C_CMDs) 513, and RSM commands (RSM_CMDs) 514 which can be recorded in one program chain command table (PGC_CMDT) 51 is defined as 1,023. Therefore, for example, when all the numbers of pre-commands (PRE_CMDs) 511, post-commands (POST_CMDs) 512, and RSM commands (RSM_CMDs) 514 are 0, the number of cell commands (C_CMDs) 513 may be set to 1,023 at maximum.

As shown in FIG. 36, the number PRE_CMD_Ns of pre-commands (PRE_CMDs) 511, the number POST_CMD_Ns of post-commands (POST_CMDs) 512, the number C_CMD_Ns of cell commands (C_CMDs) 513, and the number RSM_CMD_Ns of RSM commands (RSM_CMDs) 514 which can be recorded in one program chain command table (PGC_CMDT) 51 are recorded in the program chain command table information (PGC_CMDTI) 510.

A concrete data structure in the RSM command (RSM_CMD) 514 recorded in the program chain command table (PGC_CMDT) 51 will be described hereinafter. Here, the concrete data structure in the RSM command (RSM_CMD) 514 will be described. The data structures in the pre-command (PRE_CMD) 511, post-command (POST_CMD) 512, and cell command (C_CMD) 513 are also the same as the concrete data structure in the RSM command (RSM_CMD) 514. In the concrete data structure in the RSM command (RSM_CMD) 514, as shown in FIG. 36, a region for eight bytes is allocated to each command. The contents of command are recorded in the region for eight bytes. In any command, three bits from the MSB of eight bytes stores data of "command ID-1". The contents of data of and after the three bits from the MSB differs based on the value of the "command type", but the contents have information such as "I-flag for comparison" and "Compare Field" in common regardless of the command type.

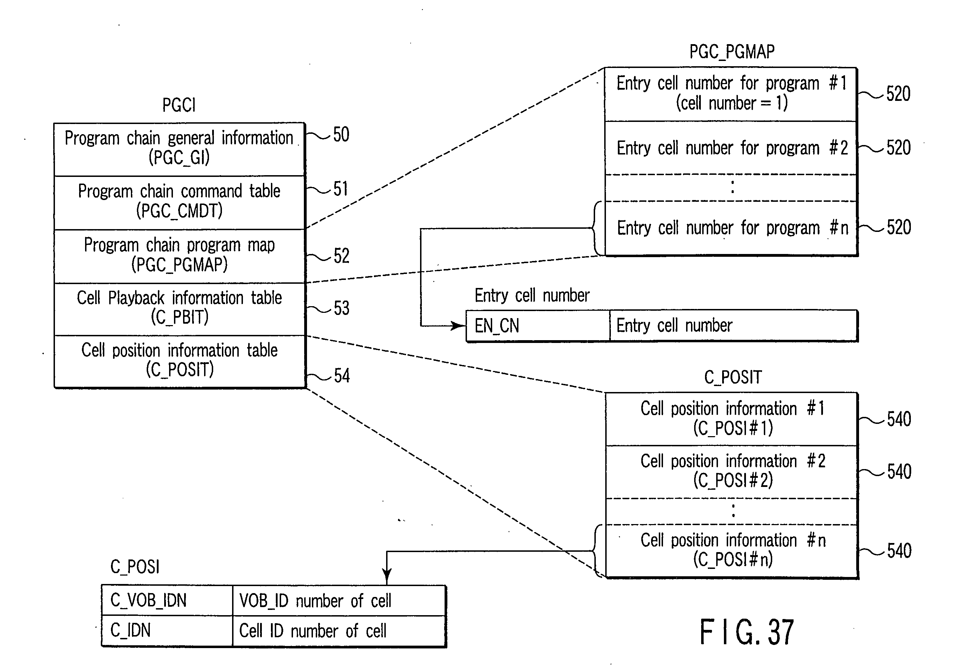

Detailed structures of the program chain program map (PGC_PGMAP) 52 and cell position information table (C_POSIT) 54 recorded in the program chain information (PGCI) are shown in FIG. 37.

Entry cell number 520 for program information in which an entry cell number (EN_CN) is recorded in accordance with each entry is recorded in the program chain program map (PGC_PGMAP) 52, and the number of pieces of entry cell numbers 520 corresponding to the number of entry numbers are recorded. The cell position information table (C_POSIT) 54 has a structure in which cell position information (C_POSI) 540 comprising a set of VOB ID number (C_VOB_IDN) and cell ID number (C_IDN) of the cell is arranged in order.

It has been described with reference to FIG. 35 that a part of the cell command process procedure (the first cell command number to start the sequential process of the cell command and an execution range of the sequential process of the cell command for each cell) can be designated for each cell in a series of cell command process procedure designated to the cell command #k (C_CMD #k) 513 from the cell command #1 (C_CMD #1) 513. Execution range information of the sequential process of the cell command which can be set for each cell is shown in FIG. 38. The PGCI information can be recorded in at least one of three places [a] to [c] as described with reference to FIGS. 33 and 34. As shown in FIG. 38, the management information on the individual cells constituting the PGC is recorded in cell playback information (C_PBIs) 530 in the cell playback information table (C_PBIT) 53 in the PGCI which is the management information of the corresponding PGC.

Information on the first cell command number to start the sequential process of the cell command specified for each cell in a series cell command process procedure designated to the cell command #k (C_CMD #k) 513 from the cell command #1 (C_CMD #1) 513 shown in FIG. 35 is recorded in cell command start number information (C_CMD_SN) in the cell playback information (C_PBI) 530 as shown in FIG. 38. Moreover, the number (C_CMD_C_Ns) of continuous cell commands indicating the number of commands to execute the command process continuously is recorded in the cell playback information (C_PBI) 530, including the cell command (C_CMD) 513 designated by the cell command start number information (C_CMD_SN). The execution range of the sequential process of the cell command executed by the corresponding cell is specified from both information. In the embodiment of the present invention, after ending the presentation of the corresponding cell, a series of command procedures (command sequence) is executed in a range designated by the cell command start number information (C_CMD_SN) and the number (C_CMD_C_Ns) of continuous cell commands of FIG. 38.

Moreover, the cell playback information (C_PBI) 530 includes various information such as a cell category (C_CAT) indicating whether the corresponding cell constitutes the interleaved block corresponding to the multi-angle or constitutes a part of a general continuous block, or corresponds to the first or last cell of the interleaved block in a case where the cell constitutes a part of the interleaved block for the multi-angle; a cell playback time (C_PBTM) indicating a presentation time required at the time of the presentation of the corresponding whole cell; start address of first VOBU of cell (C_FVOBU_SA); end address of first ILVU of cell (C_FILVU_EA); start address of last VOBU of cell (C_LVOBU_SA); end address of last VOBU of cell (C_LVOBU_EA); cell command start number (C_CMND_SN); and the number (C_CMD_C_Ns) of continuous cell commands.

FIGS. 39A to 39D show a structure in which the graphic unit (GU) of the present embodiment is stored as an MPEG program stream. A video object (VOB) a1 shown in FIG. 39A includes a plurality of video object units (VOBUs) a2 as shown in FIG. 39B. As shown in FIG. 39C, one VOBU includes an MPEG program stream having a plurality of different data packs such as a navigation pack a3; a video pack a4; a graphic unit (GU) pack a5; an audio pack a6; a sub-picture (SP) pack a7; and the like. As shown in FIG. 39D, by differences of five display types (HD, SD wide, 4:3, letterbox, pan-scan), the GU pack a5 is stored as streams including graphic unit stream #1 (a51) for HD; graphic unit stream #2 (a52) for SD 16:9 wide; graphic unit stream #3 (a53) for SD 4:3; graphic unit stream #4 (a54) for SD 4:3 letterbox; and graphic unit stream #5 (a55) for SD pan-scan. These streams are appropriately selected/switched in accordance with a display type of a main picture or display conversion with respect to a display unit of an output target, and the user does not directly switch the stream.

Next, a graphic pack (GR_PCK) will be described. The graphic pack (GR_PCK) includes a pack header, and a graphic packet (GR_PKT). The graphic data is aligned in a boundary of a logic block (LB) in the graphic unit (GRU). The GR_PCK may include a padding packet or a stuffing byte only in the last packet of GRU. The GR_PKT includes a packet header, a graphic stream number, and graphic data.

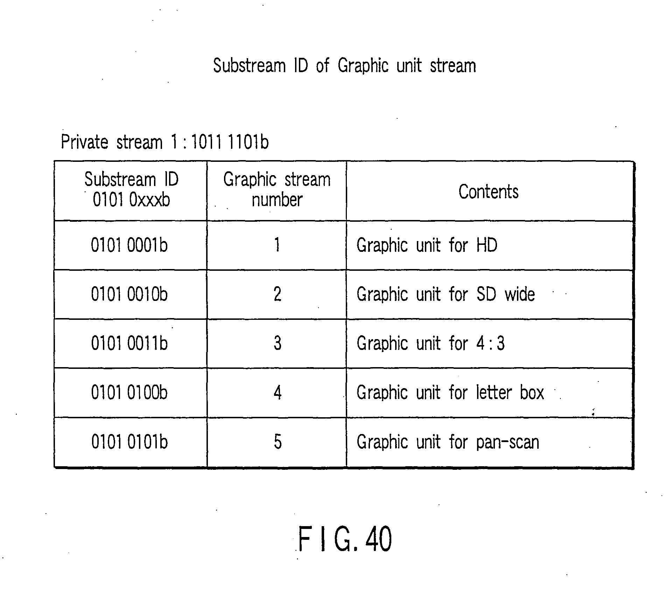

FIG. 40 shows substream ID and graphic stream number assigned to the stream of the graphic unit (GU). Each stream has a stream ID of private stream 1 (1011 1101b), and has a substream ID (0101 0xxxb) such that the stream is distinguished as a graphic unit stream. Furthermore, to distinguish the display types, (0101 0001b) for HD, (0101 0010b) for SD 16:9 wide, (0101 0011b) for SD 4:3, (0101 0100b) for SD letterbox, and (0101 0101b) for SD pan-scan are defined.

FIG. 41 shows an example of the data structure of the graphic unit (GU) having mask data. As shown in the figure, payload data of a plurality of GU packs a5 are connected to one another to constitute one graphic unit (GU). In FIG. 41, additional data such as a pack header and a padding packet are not illustrated. The graphic unit (GU) is roughly constituted of header information b1, highlight information (HLI) b2, one or more mask data b3 corresponding to one or more pieces of button information b23 described later, and graphic data b4. Here, detailed contents of the highlight information (HLI) b2 will be described (the remaining will be described later). The highlight information (HLI) b2 includes general information b21, color pallet information b22, and one or more pieces of button information b23. The color pallet information b22 gives a button color on the menu, and has a usual color pallet b221 designated in a non-highlighted button color; color pallet b222 for selection designated in a highlighted/selected button color by user's input selection of an arrow key or the like; and a color pallet b223 for activation designated in a determined color from a selected color, when the user determines the highlighted/selected button. The button information b23 has a start address b231 of mask data which simulates a button shape, a size b232 of mask data, adjacent button position information b233, and button command b234 executed when the button is activated, which are information for moving the button to front/back/left/right adjacent buttons. A command sequence in which one or more commands are continuously recorded can be constituted in the button command, and eight commands at maximum can be recorded in the present embodiment. When the button is activated, one to eight commands are continuously executed, and accordingly a compound process such as setting and branching can be executed at once.

FIG. 42 shows another example of the data structure of the graphic unit having the mask data of FIG. 41. As shown in FIG. 42, the highlight information (HLI) b2 is different from that of FIG. 41, and includes the general information b21; the color pallet information b22; one or more pieces of search information b24 for mask data corresponding to one or more pieces of button information described later; and one or more pieces of button information b23. The color pallet information b22 controls the button color on the menu, and includes the usual color pallet b221 designated in the non-highlighted button color; the color pallet b222 for selection designated in the highlighted/selected button color by the user's input selection of the arrow key or the like; and the color pallet b223 for activation designated in the determined color from the selected color, when the user determines the highlighted/selected button. The mask data search information b24 includes a start address b241 of mask data, and a size b242 of mask data. Furthermore, the button information b23 includes the adjacent button position information b233 and the button command b234 executed when the button is activated as the information for moving the button to the front/back/left/right adjacent buttons by the user input. A command sequence in which one or more commands are continuously arranged can be constituted in the button command, and eight commands at maximum can be recorded in the present embodiment. When the button is activated, one to eight commands are continuously executed, and accordingly a compound process such as setting and branching can be executed at once.

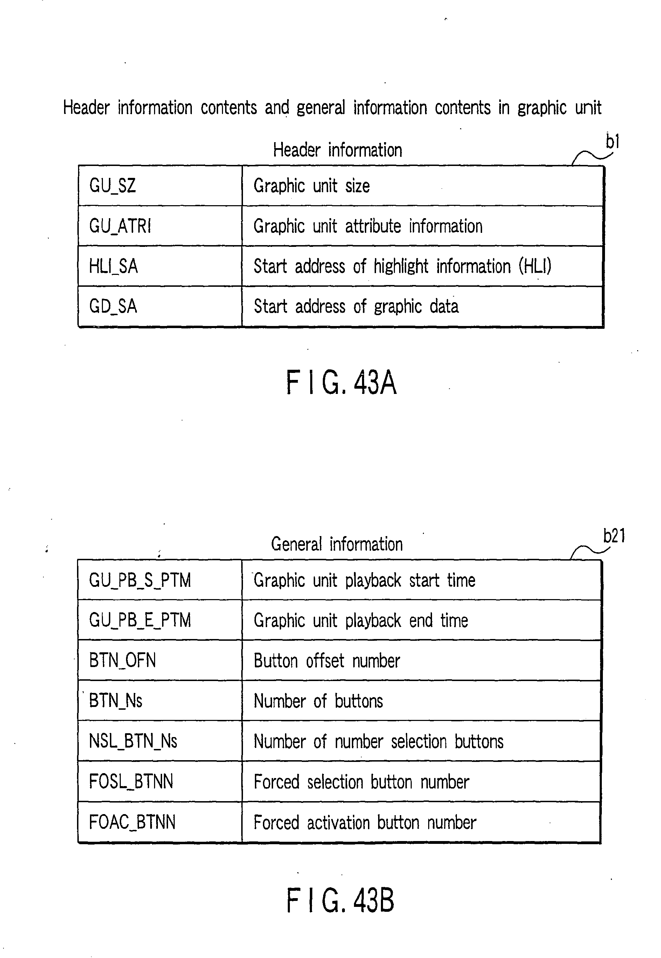

FIGS. 43A and 43B show the contents of the header information b1 and the general information b21. The header information b1 includes a graphic unit size (GU_SZ) indicating a size of the whole graphic unit; graphic data stored in the graphic unit; graphic unit attribute information (GU_ATRI), such as resolutions (1,920×1,080; 1,440×1,080; 1,280×720) of the mask pattern, aspect ratios (16:9; 4:3), and display types (HD, SD wide, SD 4:3, SD letterbox, SD pan-scan); start address (HLI_SA) of the highlight information (HLI); and start address (GD_SA) of the graphic data.

Moreover, the general information b21 includes a graphic unit presentation start time (GU_PB_S_PTM) having a value equal to that of a presentation time stamp (PTS) included in the header of the graphic unit (GU) pack a5, and graphic unit playback end time (GU_PB_E_PTM). A display time of the graphic unit, and a valid time of the graphic unit (start/end times of both completely match each other) capable of executing the command are set using these PTS information, or the playback start time (GU_PB_S_PTM) of the graphic unit, and the playback end time (GU_PB_E_PTM) of the graphic unit. In the start/end time information, PTS/PTM is used, and therefore it is possible to set a time range with very high precision. The general information b21 also includes a button offset number (BTN_OFN) which gives a start number of the button in the menu screen in a case where the menu extends over a plurality of screens; the number (BTN_Ns) of the buttons in the menu screen; the number (NSL_BTN_Ns) of number selection buttons indicating the number of the buttons selectable by number input; a forced selection button number (FOSL_BTNN) for intentionally bringing the arbitrary button number into a selected state in a case where the menu screen is displayed; and a forced activation button number (FOAC_BTNN) indicating the button number forcibly activated in a case where a time zone selectable by the user has passed.

Next, a modification of the graphic unit will be described.

A modification of a graphic unit header (GRUH) shown in FIG. 85 includes address information of each data of the graphic unit (GRU). The graphic unit header (GRUH) includes the following contents.

GRU_TY: Graphic Unit type
GRU_SZ: Size of Graphic Unit
HLI_SA: Start address of Highlight Information
BTNPDT_SA: Start address of Button Pattern Data Table
GRD_SA: Start address of Graphic Data

The graphic unit type GRU_TY includes GRU_SS and display resolution, and GRU_SS is described as follows.

00b: Graphic data exists
01b, 10b: reserved
11b: No graphic data exist and previous Graphic data is used
Note: HLI and BTNPDT may change from the previous GRU.

The display resolution of the graphic data shall be the same as video resolution.

In the graphic unit size (GRU_SZ), the size of the GRU is described in a byte number.

In the start address (HLI_SA) of the highlight information, the start address of the HLI is described in a relative byte number from a first byte of the GRU.

In the start address (BTNPDT_SA) of the button pattern data table, the start address of the BTNPDT is described in a relative byte number from the first byte of the GRU.

In the start address (GRD_SA) of the graphic data, the start address of the GRD is described in a relative byte number from the first byte of the GRU.

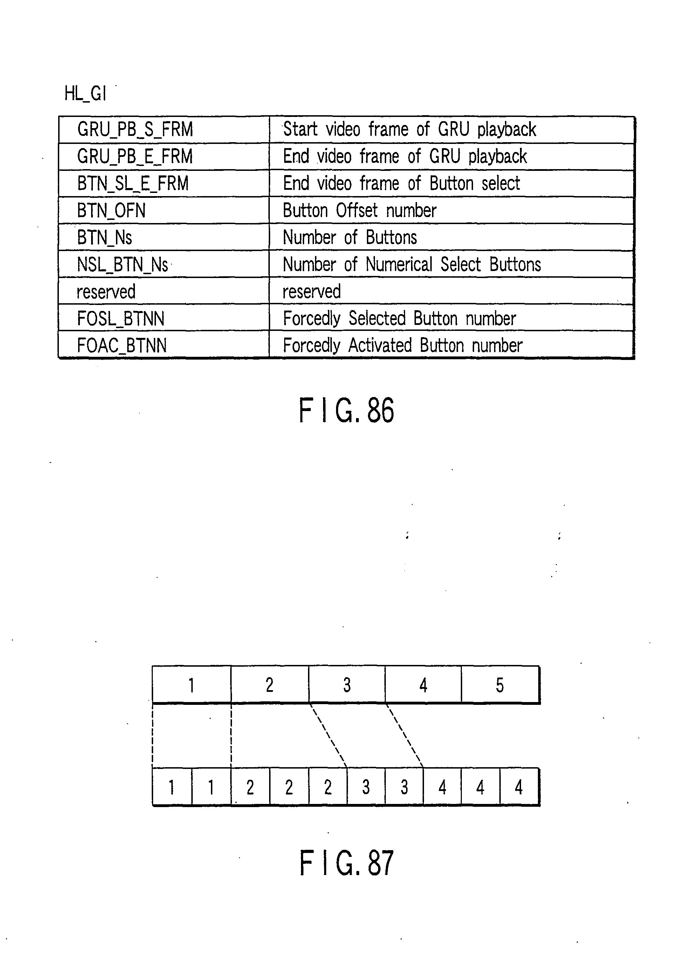

FIG. 86 shows contents of the highlight general information (HL_GI). HL_GL is information of the HLI.

GRU_PB_S_FRM: Start video frame of GRU playback

GRU_PB_E_FRM: End video frame of GRU playback

BTN_SL_E_FRM: End video frame of Button select

BTN_OFN: Button Offset number
BTN_Ns: Number of buttons
NSL_BTN_Ns: Number of Numeric Select Buttons
FOSL_BTNN: Forcedly Selected Button number
FOAC_BTNN: Forcedly Activated Button number

**[0176]** The start video frame of GRU presentation (GRU_PB_S_FRM) describes the presentation start video frame of the graphic unit with relative video frame number from video frame which have same PTS with PTS described in the GR_PKT when this HLI becomes valid. This field shall be set to '0'.

The end video frame of GRU presentation (GRU_PB_E_FRM) describes the presentation termination video frame of the graphic unit with relative video frame number from video frame which have same PTS with PTS described in the GR_PKT when this HLI becomes invalid. The termination video frame shall be smaller than the start video frame which have same PTS with PTS described in the graphic packet containing the next GRU. In addition, the termination time of the button selection valid period shall be equal to this termination time. When HLI is used during the cell still, GRU_PB_E_FRM shall describe (FFFF FFFFh).

The end video frame of button select (BTN_SL_E_FRM) describes the termination video frame of the button selection valid period with relative video frame number from video frame which have same PTS with PTS described in the GR_PKT. The button select termination video frame shall be equal to or before the presentation termination video frame of this graphic unit. When button selection is used during the cell still, BTN_SL_E_FRM shall describe (FFFF FFFFh).

The button offset number (BTN_OFN) describes the button offset number for user button number (U_BTNN). The range of BTN_OFN is between '0' and '255'.

The number of buttons (BTN_Ns) describes the number of valid buttons. The range of the number of buttons is between '0' and '24'.

The number of numeric select buttons (NSL_BTN_Ns) describes the number of buttons selectable by the U_BTNN. The range of the number of buttons is between '0' and '24'. The value of NSL_BTN_Ns shall be equal to or less than the value of BTN_Ns.

The forcedly selected button number (FOSL_BTNN) describes the button number which is forcedly selected at the video frame of GRU_PB_S_FRM. The range of the button number is between '0' and '24'. The button number 0 is described when the button number forcedly selected is nonexistent.

The forcedly activated button number (FOAC_BTNN) describes the button number which is forcedly activated at the video frame of GRU_PB_E_ FRM. The range of the button number is between '0' and '24', and '63'. The button number 0 is described when the button number forcedly activated is nonexistent. The button number 63 is described when the selected button number is forcedly activated.

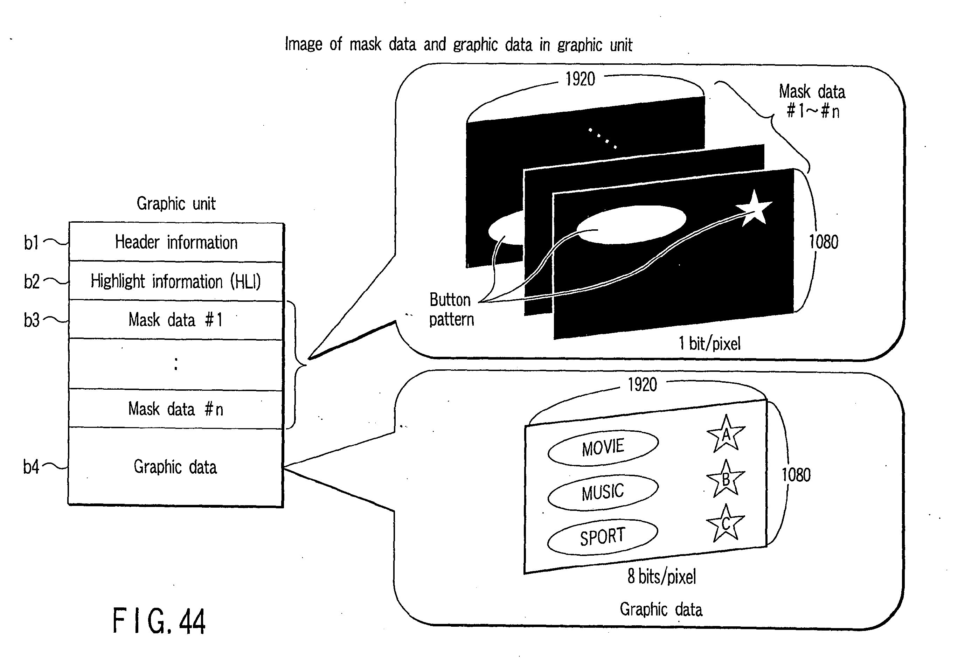

FIG. 44 shows a data image stored in the graphic unit. On the upper right, an image stored in the mask data b3 is shown, and the mask data is a mask (button) pattern constituted of one bit/pixel. Each mask data corresponds to the button on the menu screen. On the lower right, the data stored in the graphic data b4 is shown, and the graphic data is 256-color graphic patterns constituted of eight bits/pixel.

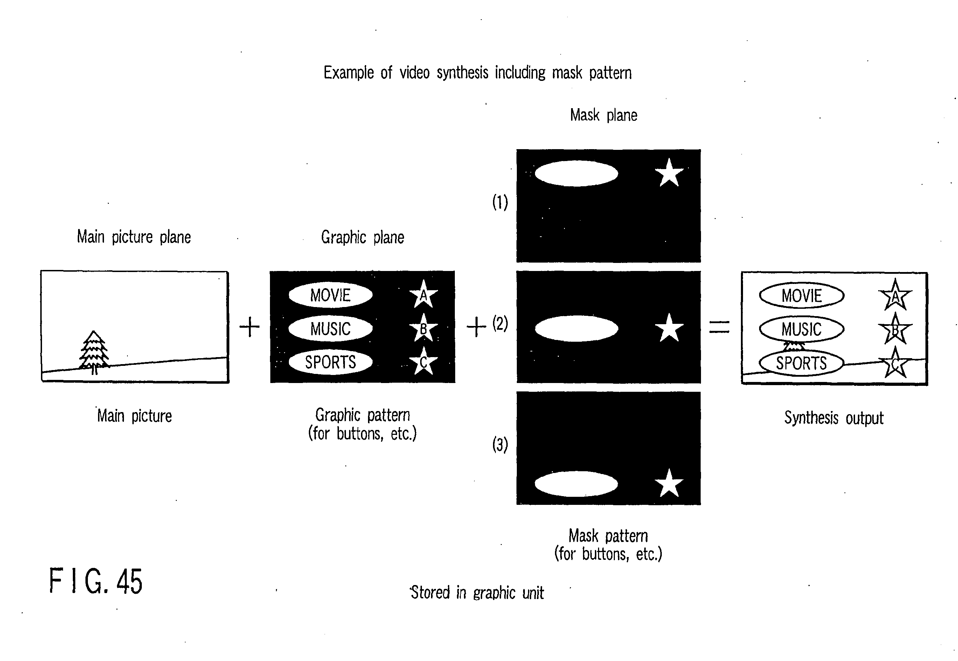

FIG. 45 shows one example of video synthesis including the mask pattern. In FIG. 45, a video synthesis output comprises three planes of a main picture, graphic pattern (for buttons, etc.), and mask pattern (for buttons, etc.), and data of the main picture + graphic pattern + mask pattern is superimposed on one another to synthesize video. In the mask plane, the buttons selected from the buttons (1) to (3) are superimposed. In FIG. 45, the video synthesis output shows a state in which the mask (button) pattern (1) is selected. The data of the graphic pattern and the mask (button) pattern are stored in the graphic unit (GU).

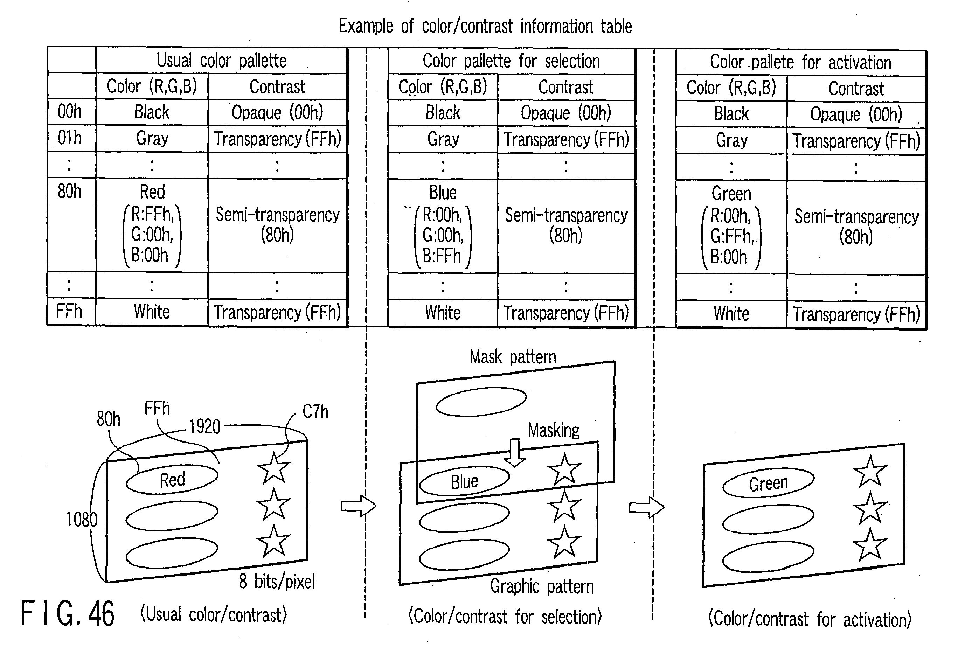

FIG. 46 shows one example of a color contrast information table stored in the color pallet information b22. A left end shows an example of the usual color pallet b221, a middle shows an example of the color pallet b222 for selection, and a right end shows an example of the color pallet b223 for activation. The table comprises 256 color contrast tables '00h' to 'FFh', and is represented by four bytes in total of color data of eight bits each of R(Red), G(Green), B(Blue), and eight bits of contrast data. In the example of FIG. 46, an elliptic button part of the graphic data is '80h', a star-shaped button part is 'C7h', and a background part is 'FFh'. In a button pixel part '80h', red (R: 'FFh', G:'00h', B: '00h'), and translucent ('80h') are assigned to the usual color pallet b221. Blue (R: '00h', G: '00h', B: 'FFh'), and translucent ('80h') are assigned to the color pallet b222 for selection. Green (R: '00h', G: 'FFh', B: '00h'), and translucent ('80h') are assigned to the color pallet b223 for activation. Each background pixel part of 'FFh' comprises white (R: 'FFh', G: 'FFh', B: 'FFh'), and transparent ('FFh').

FIG. 46 shows an example in which a place corresponding to the "button part" of the superimposed mask patterns changes to blue from red by the color pallet for selection, and further changes to green from blue by user's button activation operation. Accordingly, the button is highlighted by the user's selection operation on the menu screen, the user is allowed to grasp the selected button, the button is highlighted by the user's activation operation, and the user can grasp the activated button.

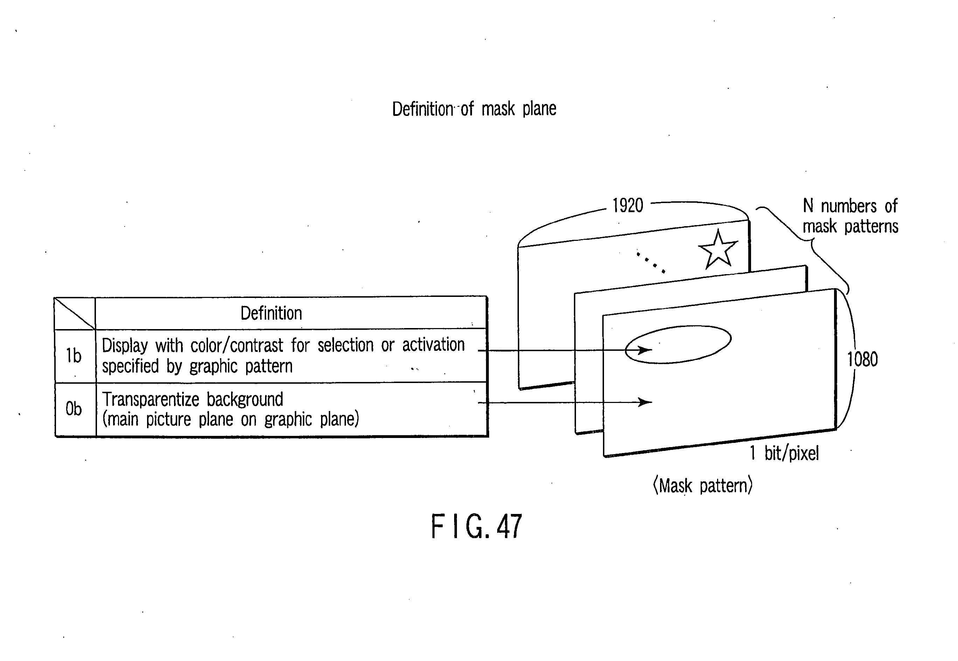

FIG. 47 shows a bit definition of the mask data b3 of one bit/pixel, stored in the graphic unit (GU). When the value of the bit is '1b', selection (color, contrast) designated by the graphic pattern or activation (color, contrast) is displayed. When the bit value is '0b', the background (usual (color, contrast) of the main picture plane or the graphic plane is displayed) is transmitted.

FIG. 48 shows an information reproduction apparatus (player) which reads and plays back information stored in a disk-shaped information storage medium 1. The information storage medium 1 is attached to a disk drive 101. The disk drive 101 rotates/drives the attached information storage medium 1, and reads information stored in the information storage medium 1 using an optical pickup (not shown).

The information read by the disk drive 101 is supplied to a data processor 102, subjected to an error correction process, and stored in a track buffer (not shown) in the data processor 102. Moreover, in the information stored in the track buffer, the management information of the HD video manager information region 31 and HD video title set information region 41 is recorded in the memory 122, and used in presentation control, data management and the like. In the information stored in the track buffer, the information of the video object regions 32, 42, 43 is transferred to a separation unit 103, and separated for each video pack a4, graphic unit pack a5, audio pack a6, and sub-picture pack a7. The information of the video pack a4 is supplied to a video decoder unit 111, that of the sub-picture pack a7 is supplied to a sub-picture decoder unit 112, that of the graphic unit pack a5 is supplied to a graphic decoder unit 113, and that of the audio pack a6 is supplied to an audio decoder unit 114. The information is decoded.

Main picture information decoded by the video decoder unit 111, sub-picture information decoded by the sub-picture decoder unit 112, and graphic information decoded by the graphic decoder unit 113 are supplied to a video processor 104, and subjected to a superposition process. Thereafter, the information is converted to analog information by a digital/analog (D/A) converter 132, and output as a video signal to a video display device (not shown) such as a cathode ray tube (CRT). The sound information decoded by the audio decoder unit 114 is converted to analog information by a D/A converter 133, and is output as an audio signal to an audio reproduction device such as a speaker (not shown).

A series of presentation operation with respect to the information storage medium 1 is generally controlled by a micro processing unit (MPU) 121. On receiving operation information from a key input device 131, the MPU 121 controls each section based on a program stored in a read only memory (ROM) 123.

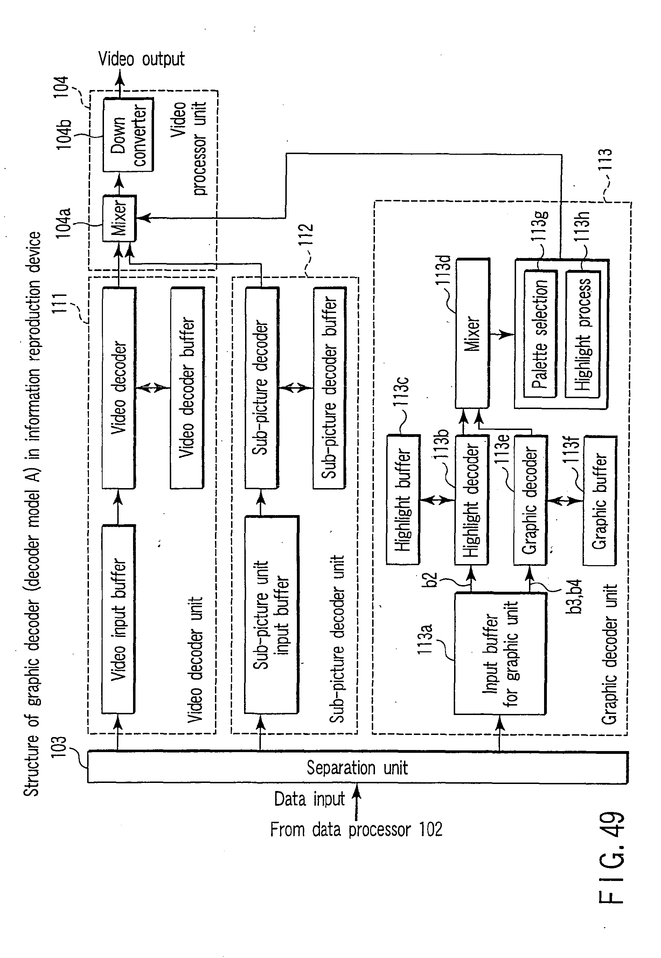

FIGS. 49, 50, and 51 are explanatory views of model examples A, B, and C of a video system decoder block of and after the separation unit 103 of FIG. 48. The video decoder unit 111 comprises a video input buffer, video decoder, and video decoder buffer, and the video data decoded by the video decoder is sent to the video processor 104 in the subsequent stage. The sub-picture decoder unit 112 comprises a sub-picture unit input buffer, sub-picture decoder, and sub-picture decoder buffer, and the sub-picture data decoded by the sub-picture decoder is sent to the video processor 104 in the subsequent stage. The graphic decoder unit 113 buffers the graphic unit pack a5 separated by the separation unit 103, and comprises a graphic unit input buffer 113a capable of storing at least one graphic unit; a highlight decoder 113b which decodes the highlight information b2 and mask data b3 of the graphic unit stored in the input buffer 113a; a highlight buffer 113c; a graphic decoder 113e which decodes the graphic data b4 of the graphic unit stored in the input buffer 113a; and a graphic buffer 113f. Furthermore, the button pattern decoded by the highlight decoder 113b is mixed with the graphic data decoded by the graphic decoder 113e by a mixer 113d in the subsequent stage, subjected to pallet selection 113g and highlight process 113h, and thereafter sent to the video processor 104.

FIG. 49 shows an example of the decoder model A having the graphic decoder. In the decoder model A, the data decoded by the respective decoders 111, 112, and 113 described above are supplied to the video processor 104. The video data, sub-picture data, and graphic data are mixed with and superposed by a mixer 104a in the video processor 104. Furthermore, when a connected display unit is standard television (SDTV), a down-convert process for a mixed signal output from the mixer 104a is performed by a down converter 104b, and the video is output.

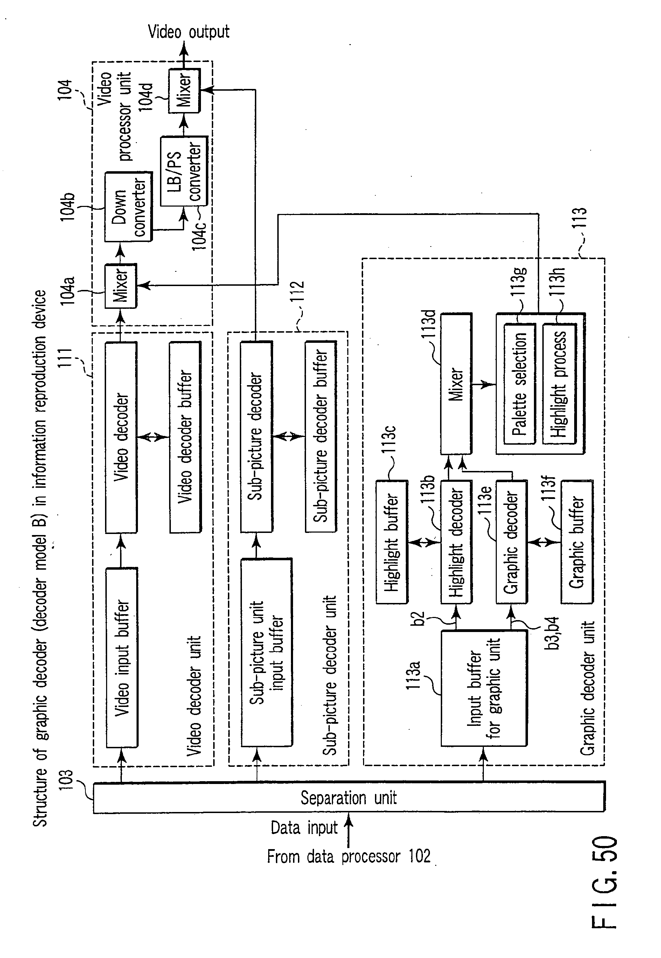

FIG. 50 shows an example of a decoder model B having a graphic decoder. In the decoder model B, the data decoded by the above-described decoders 111, 112, and 113 are supplied to the video processor 104. The video data and graphic data are first mixed with and superposed by a first mixer 104a. Thereafter, when a connected display unit is standard television (SDTV), an output from the mixer 104a is subjected to a down-convert process by a down converter 104b. Furthermore, when an aspect ratio of the connected display unit is 4:3, an output form the down converter 104b is subjected to a letterbox or pan-scan conversion process by a letterbox (LB)/pan-scan (PS) converter 104c. Thereafter, an output from the converter 104c is mixed with and superposed on the sub-picture data in accordance with the display type (HD, SD wide, SD 4:3, SD pan-scan, SD letterbox) output form the sub-picture decoder 112 by a second mixer 104d, and the video is output.

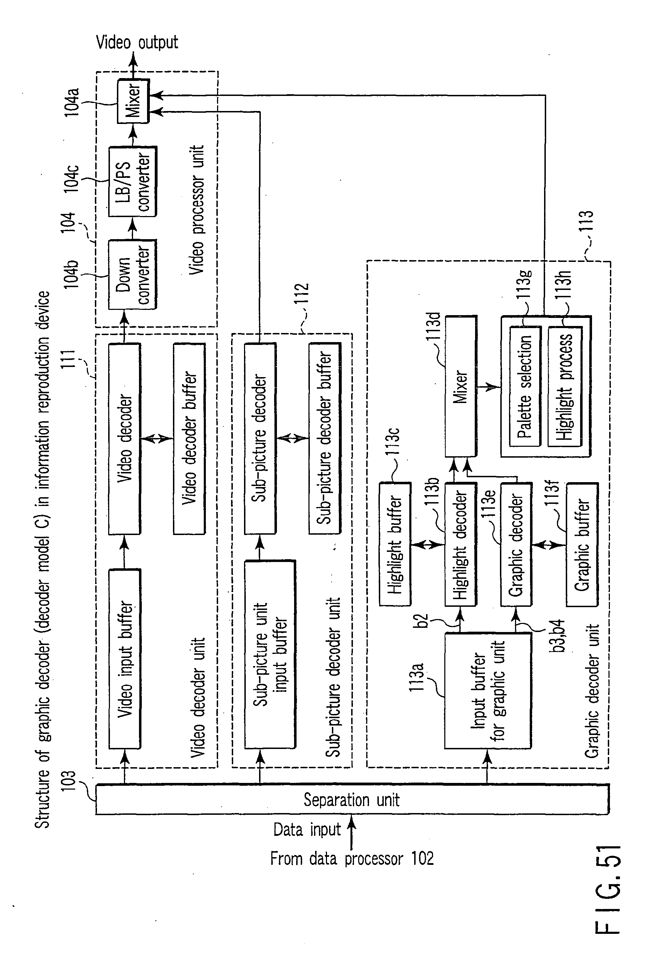

FIG. 51 shows an example of a decoder model C having a graphic decoder. In the decoder model C, the video data decoded by the video decoder 111 is first subjected to a down conversion by a down converter 104b in the video processor 104 when a connected display unit is standard television (SDTV). Furthermore, when an aspect ratio of the connected display unit is 4:

3, a letterbox or pan/scan conversion process is performed by a letterbox/pan scan converter 104c. Thereafter, the data is mixed with and superposed on the sub-picture data in accordance with the display type (HD, SD wide, SD 4:3, SD pan-scan, SD letterbox) and graphic data by a mixer 104a in the subsequent stage, and the video is output.

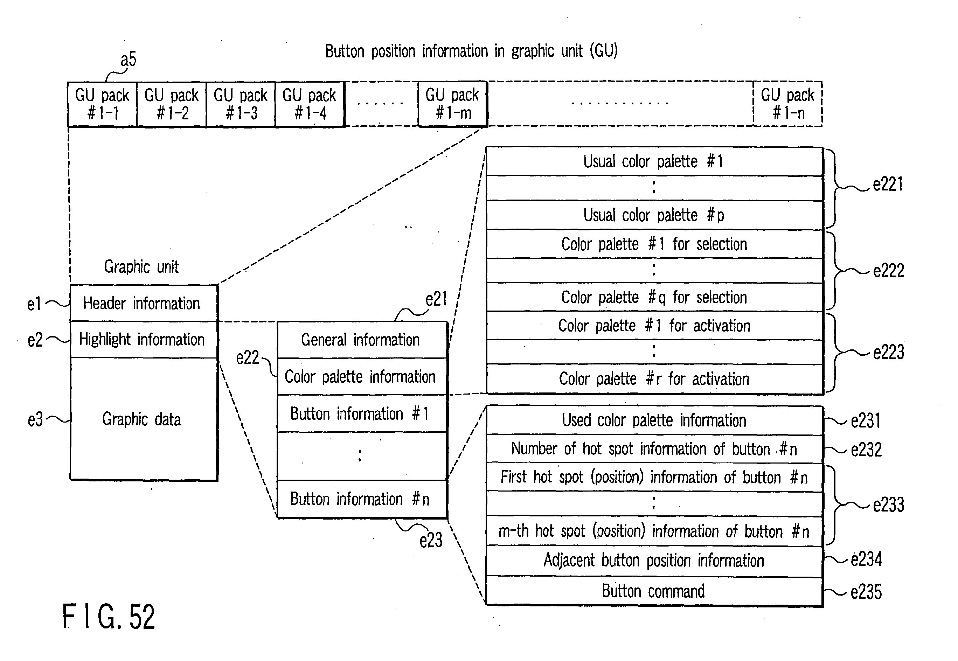

FIG. 52 shows another example having button position information in the data structure of the graphic unit (GU) shown in FIGS. 41 and 42. As shown in FIG. 52, payload data of a plurality of GU packs a5 are connected to one another to constitute one graphic unit (GU). In the figure, additional data such as pack header and padding packet are not illustrated. The graphic unit (GU) is roughly constituted of header information e1, highlight information (HLI) e2, and graphic data e3, and does not have any mask data.

Here, detailed contents of the highlight information (HLI) e2 will be described (the header information e1 and general information e21 are the same as those of FIGS. 41, 42).

The highlight information e2 includes general information e21, color pallet information e22, and one or more pieces of button information e23. The color pallet information e22 controls a button color on the menu, and comprises a plurality of usual color pallets e221 designated in non-highlighted button colors; a plurality of color pallets e222 for selection designated in highlighted/selected button colors by user's input selection of an arrow key or the like; and further a plurality of color pallets e223 for activation designated from selected colors to activated colors, when the user determines the highlighted/selected button.

The button information e23 includes use color pallet information e231 which designates numbers of a plurality of color pallets for usual use, selection and activation; the number e232 of pieces of hot spot information of the buttons, in which a plurality of selectable positions (hot spots) are given on the menu screen by one piece of button information; a plurality of pieces of hot spot (position) information e233 of the corresponding number of the buttons; adjacent button position information e234 which is information for moving the button to front/back/left/right buttons by user input; and a button command e235 executed when the button is activated. A command sequence in which one or more commands are continuously arranged can be constituted in the button command, and eight commands at maximum can be arranged in the present embodiment. When the button is activated, one to eight commands are continuously executed, and accordingly compound processes such as setting and branching can be executed at once.

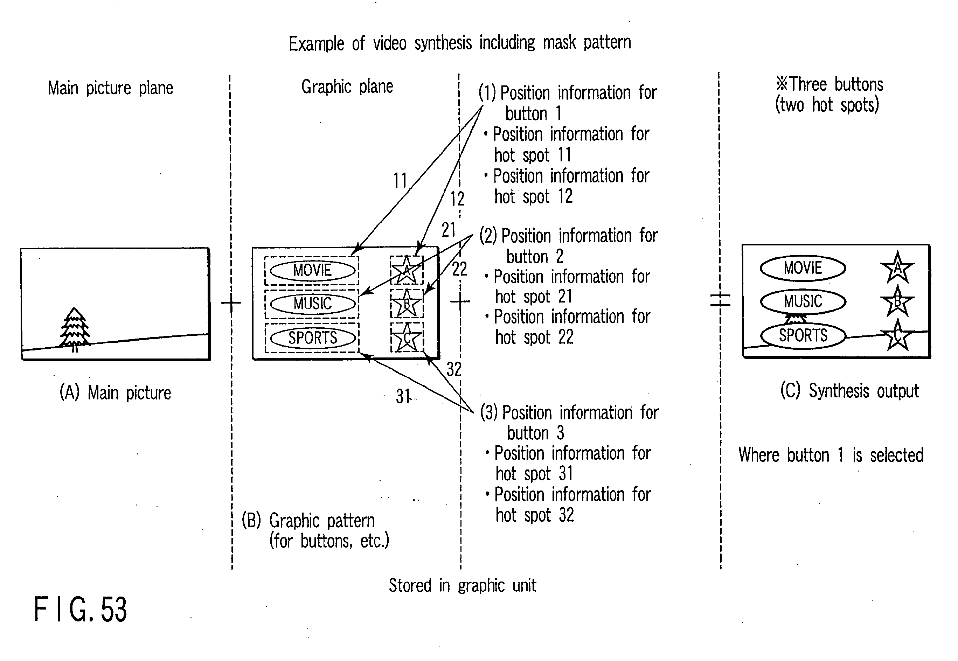

FIG. 53 shows an example of video synthesis including the graphic unit having the button position information shown in FIG. 52. In FIG. 53, the video synthesis output comprises two planes of the main picture and graphic pattern (for buttons, etc.) and the button position information e233 of the respective buttons (the user can designate a plurality of pointable hot spots with respect to one piece of button information on the menu screen, the executed button command is the same). The main picture + graphic pattern + button position information (1) to (3) are superimposed upon one another to synthesize the video. In FIG. 53, the video synthesis output shows a state in which the button position information (1) is selected. The graphic pattern and each button position information are stored in the graphic unit. In the example of FIG. 53, two hot spots are designated in each button position information. The button position information (1) for button 1 includes position information of hot spots 11 and 12, and the respective spots correspond to elliptic and star-shaped buttons in an upper part of the graphic pattern. Even when either button is selected/activated, the same button command e235 is issued, and a selection/activation operation of the menu is the same. Similarly, the button position information (2) for button 2 includes the position information of hot spots 21 and 22, and the respective spots correspond to elliptic and star-shaped buttons in a middle part of the graphic pattern. The button position information (3) for button 3 includes position information of hot spots 31 and 32, and the respective spots correspond to elliptic and star-shaped buttons in a lower part of the graphic pattern.

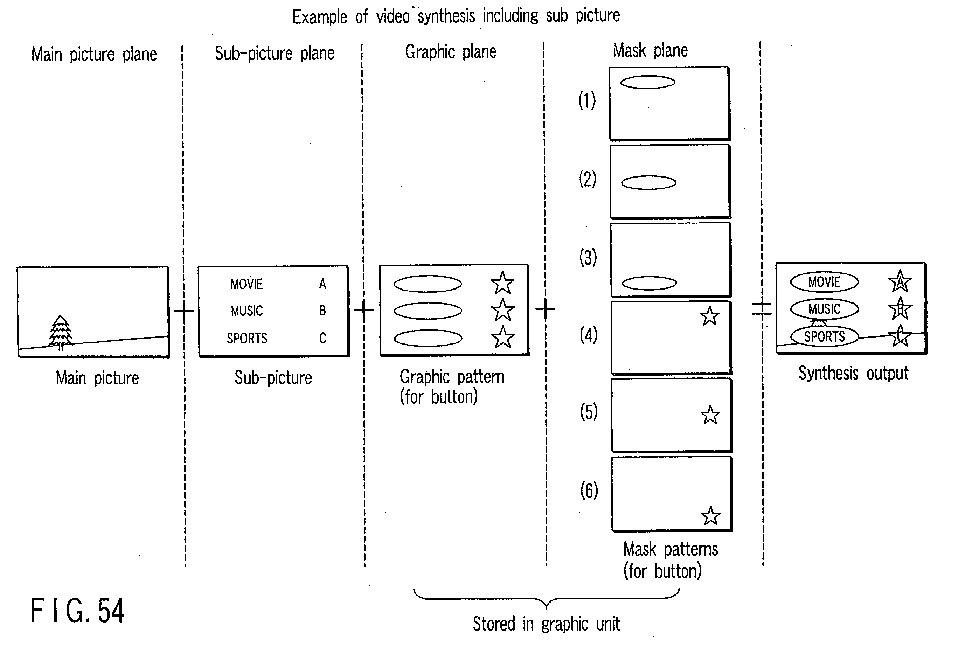

FIG. 54 shows an example of the video synthesis further including sub-picture data in the video synthesis shown in FIG. 45. In FIG. 54, a video synthesis output comprises four planes of the main picture, sub-picture, graphic pattern (for buttons, etc.), and mask pattern (for buttons, etc.), and data of the main picture + sub-picture + graphic pattern + mask pattern are superimposed upon one another to synthesize the video. In the mask plane, the buttons selected from the buttons (1) to (6) are superimposed. In FIG. 54, the video synthesis output shows a state in which the mask (button) pattern of (1) is selected. The data of the graphic pattern and the mask (button) pattern are stored in the graphic unit (GU).

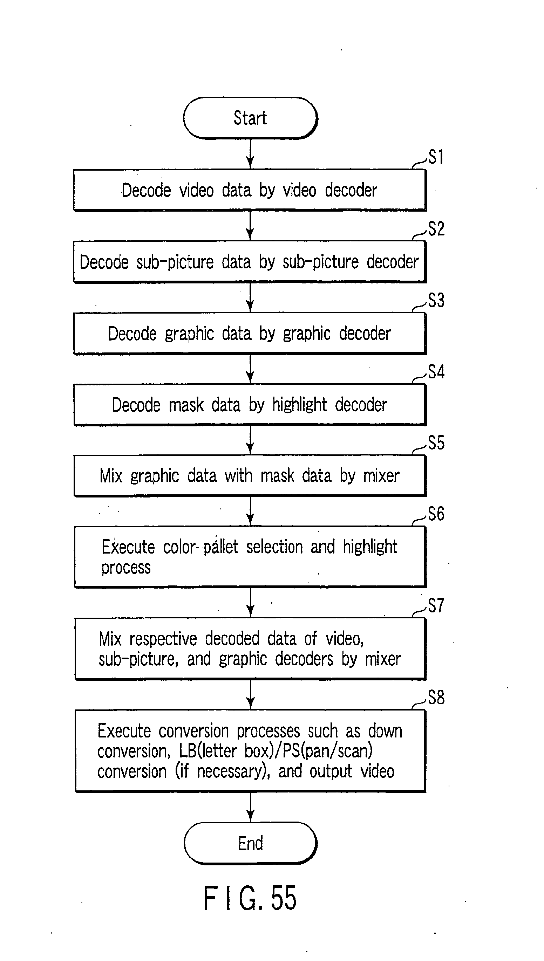

FIG. 55 shows a video synthesis flow associated with a video decoder including a graphic decoder. In FIG. 55, the video is synthesized as follows.

(1) The video data is decoded by the video decoder 111 (step S1).
(2) The sub-picture data is decoded by the sub-picture decoder 112 (step S2).
(3) The graphic data is decoded by the graphic decoder 113 (step S3)
(4) The mask data is decoded by the highlight decoder 113b (step S4).
(5) The graphic data is mixed with the mask data by the mixer 113d (step S5).
(6) Color pallet selection 113g and highlight process 113h are executed (step S6).
(7) The respective data decoded by the video, sub-picture, and graphic decoders are mixed by the mixer 104a or 104 104d (step S7).

(8) Conversion processes such as down conversion, letterbox (LB) conversion, and pan-scan (PS) conversion are executed if necessary, and the video is output (step S8).

As described above, in an information storage medium in which the graphic unit (GU) is recorded and a system capable of decoding the graphic unit (GU), not only conventional rectangular buttons but also complicated button shapes such as an elliptic shape and a star shape can be constructed by 256 color graphics, and varieties of menu screens can be presented to the user. Furthermore, since the graphic unit (GU) is constructed separately from a sub-picture stream for use in a subtitle or the like, a menu selection period can be set with time information of the graphic unit (GU) without being influenced by the display period of the sub-picture as in the DVD menu of the conventional SD. Therefore, contents producer's degree of freedom is broadened, and varieties of contents can be presented to the users.

Another example concerning the data structure in the audio object set for HD menu (HDMENU_AOBS) 33 shown in FIG. 19 is shown in FIG. 56. Unlike FIG. 19, in FIG. 56, the only audio object for menu (HDMENU_AOB) can be recorded in the audio object set for HD menu (HDMENU_AOBS) 33. The inside of the menu audio object (HDMENU_AOB) can be finely divided by one or a plurality of entries (entry points) which can be set in arbitrary positions. The playback range of the background sound (background music) played back simultaneously at the time of the display of each menu screen is repeatedly played back, using a start boundary position or last boundary position (AOB end address) in the menu audio object (HDMENU_AOB), in which the audio data is recorded, or entry position set beforehand as a boundary range. That is, in the example shown in FIG. 56, the playback is repeatedly performed in a range of a second entry position to a third entry position at the time of the display of the menu screen corresponding to PGC #A. At the time of the display of the menu screen corresponding to PGC #B, the playback is repeatedly performed in a range of the first entry position as the start boundary position in which the audio data is recorded in the menu audio object (HDMENU_AOB) to a fourth entry position. At the time of the display of the menu screen corresponding to PGC #C, the playback is repeatedly performed in a range of the fourth entry position to the last boundary position (AOB end address) of the menu audio object (HDMENU_AOB). The position of each entry is defined in header information (AOB_HI) disposed in the preceding position in the menu audio object (HDMENU_AOB).

A data structure in the HDMENU_AOB header information (AOB_HI) is shown in FIG. 57. A data size of the whole menu audio object (HDMENU_AOB) is seen by an end address (AOB_EA) of HDMENU_AOB, and the number of entries (entry points) set in FIG. 56 is seen by the number (AOB_EP_Ns) of HDMENU_AOB.

Start address information AOB_1ST_EP to AOB_5TH_EP of the entry points of HDMENU_AOB are defined by a relative address (difference information of the address) from the start position (HDMENU_AOB start position) of the header information recording region (AOB_HI) in the menu audio object (HDMENU_AOB). Here, since the audio data of HDMENU_AOB is recorded as elements, the address information is represented by the byte unit. The audio data of the HDMENU_AOB can be recorded by the pack unit constituted of 2,048 bytes. At this time, since a logical block number (LBN) is set by a unit of 2,048 bytes, the address information can be described by a relative logical block number (RLBN). In the example shown in FIG. 56, the start boundary position in which the audio data is recorded in the menu audio object (HDMENU_AOB) matches the first entry position. Therefore, the data size in the HDMENU_AOB header information recording region (AOB_HI) is seen by start address information (AOB_1ST_EP) of the first entry point of the HDMENU_AOB. In the audio data for the menu, as shown in FIG. 56, five entries at maximum including the first entry to a fifth entry can be set. Therefore, as shown in FIG. 57, information from start address information (AOB_2ND_EP) of the second entry point of the HDMENU_AOB to start address information (AOB_5TH_EP) of the fifth entry point of the HDMENU_AOB is surely recorded. If the number of the entries set in the audio data for the menu is three or less (e.g., n), start address AOB_(n+1 or more)TH_EP of the 'n+1'-th or more entry point is set to '00000000h'. By this setting method, the audio data for the menu can be finely divided by five or less arbitrary entries (entry points). In the example of FIG. 56, five entries are set at maximum, but more entries may be set.

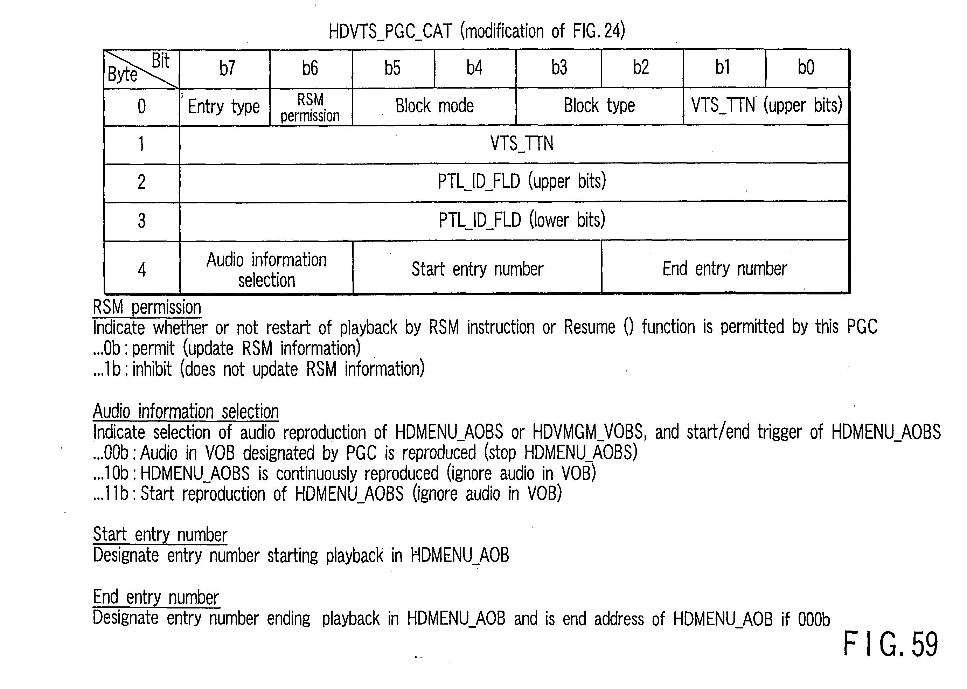

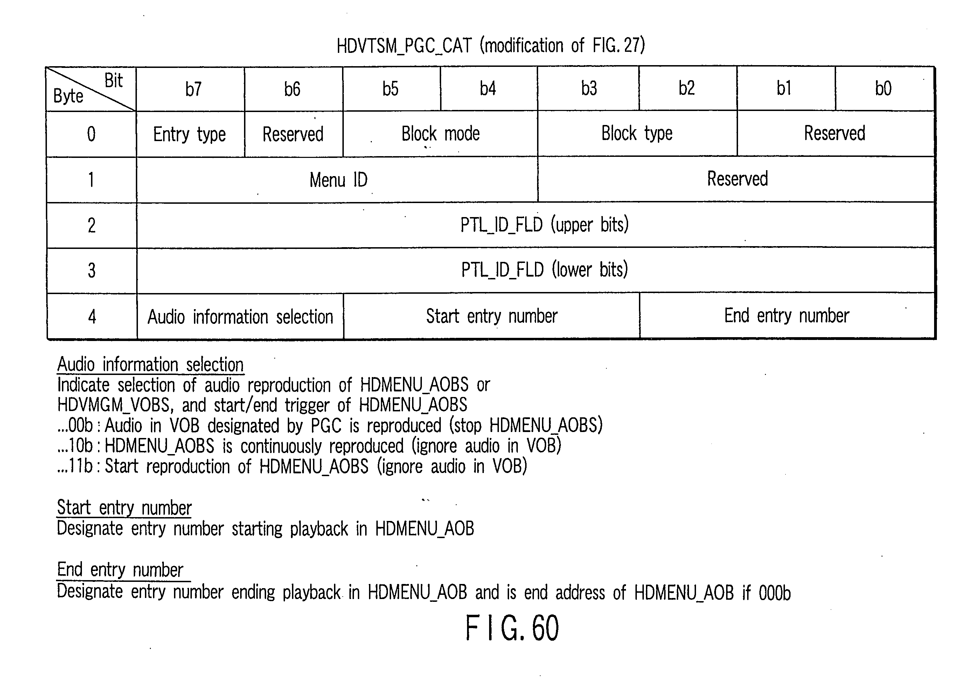

Following the example shown in FIG. 56, another example of FIG. 8 is shown in FIG. 58, another example of FIG. 24 is shown in FIG. 59, and another example of FIG. 27 is shown in FIG. 60.

As shown in FIG. 58, in video manager program chain category information HDVMGM_PGC category (HDVMGM_PGC_CAT) information, entry type information for determining whether or not the PGC is an entry PGC, block mode information, block type information, menu ID information indicating identification of the menu (e.g., whether or not the menu is of the title), PTL_ID_FLD information, audio information selection flag, start entry number, and end entry number are recorded. The audio information selection flag indicates the selection of the playback of the menu audio object (HDMENU_AOB) or audio of menu video object (HDVMGM_VOB), and start/end trigger of the HDMENU_AOB. When the audio information selection flag is '00', the audio in the HDVMGM_VOB designated by PGC is played back (playback of HDMENU_AOB is stopped). When the audio information selection flag is '10', the audio of the HDMENU_AOB continues to be played back (the audio in HDVMGM_VOB is ignored). When the audio information selection flag is '11', the audio of the HDMENU_AOB continues to be played back (the audio in HDVMGM_VOB is ignored). The start entry number designates an entry number to start the playback of the audio of the HDMENU_AOB. The end entry number designates an entry number to end the playback of the audio of the HDMENU_AOB. When the value is '000', the end address of the HDMENU_AOB is indicated.

As shown in FIG. 59, in an HDVTS_PGC category (HDVTS_PGC_CAT) in the HDVTS_PGCI search pointer 412, entry type information, RSM permission flag, block mode information, block type information, menu ID information, PTL_ID_FLD information, audio information selection flag, start entry number, and end entry number are recorded. The RSM permission flag indicates whether or not presentation restart by an RSM command or Resume() function is permitted for this PGC. When the RSM permission flag is '0', the updating of the RSM information is permitted. When the RSM permission flag is '1', the updating of the RSM information is inhibited.

In HDVTSM_PGC category information (HDVTSM_PGC_CAT) shown in FIG. 60, entry type information, block mode information, block type information, menu ID information, PTL_ID_FLD information, audio information selection flag, start entry number, and end entry number are recorded.

In FIGS. 58 to 60, a playback range in the menu audio data shown in FIG. 56 is defined by the start and end entry numbers. When the end position of the repeat playback range matches the AOB end address shown in FIG. 56, the end entry number is set to '000b'. For example, as shown in FIG. 56, since the start position of the repeat playback range of the background sound (background music) played back at the display time of the menu screen corresponding to PGC #B matches the start position start (first entry) of the audio data for the menu, a start entry number is set to '1'. Since the end position matches the fourth entry position, the end entry number is set to '4'. Since the start position of the repeat playback range of the background sound (background music) played back at the display time of the menu screen corresponding to PGC #C matches the fourth entry position, the start entry number is set to '4'. Since the end position matches the AOB end address, the end entry number is set to '000b'. The audio information selection flag indicates the selection of the audio playback of HDMENU_AOB or the audio playback of VOBS (HDVMGM_VOBS, HDVTSM_VOBS, or HDVTS_VOBS), and the start/end trigger of the HDMENU_AOB. That is, when the audio information selection flag is '00b', it is indicated that the audio in the VOB designated by the PGC is played back (HDMENU_AOB is stopped). With '10b', the HDMENU_AOB continues to be played back (the audio in the VOB is ignored). The flag of '11b' means that the playback of the HDMENU_AOB is started (the audio in the VOB is ignored).

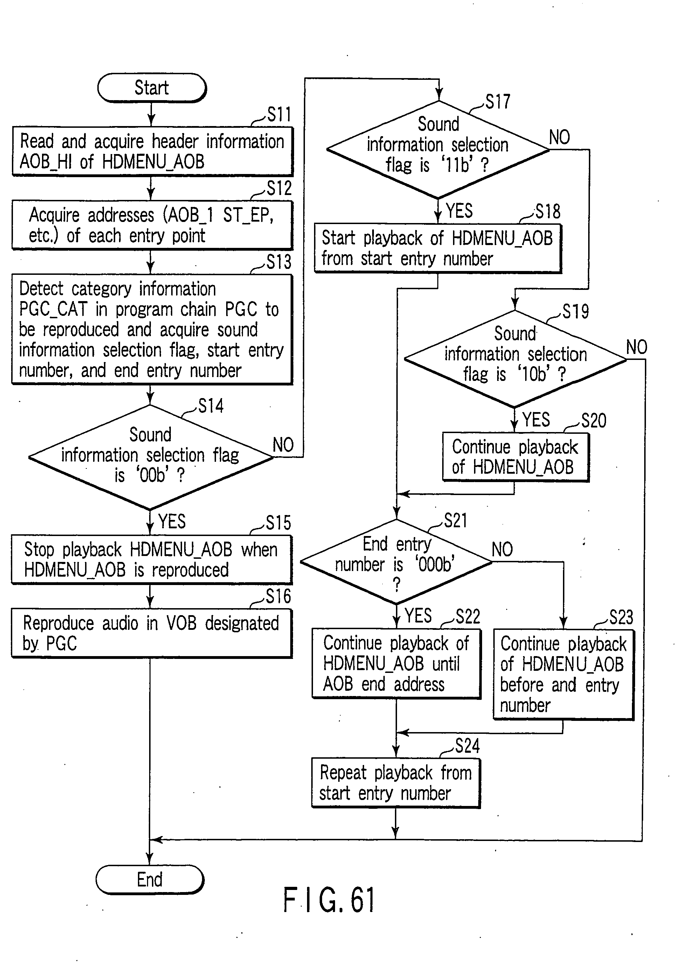

FIG. 61 shows a playback flowchart of the menu audio object (HDMENU_AOB). First, the header information (AOB_HI) of the HDMENU_AOB is read and acquired (step S11), the address (AOB_1ST_EP, etc.) of each entry point is acquired (step S12), the category information (PGC_CAT) in the program chain PGC to be played back is detected, and "audio information selection flag", "start entry number", and "end entry number" are acquired (step S13). It is determined whether or not the acquired "audio information selection flag" is '00b' (step S14). When the flag indicates '00b', and the HDMENU_AOB is played back, the playback is stopped (step S15), and the audio in the VOB designated by the PGC is played back (step S16).

If the "audio information selection flag" is not '00b', it is further determined whether or not the "audio information selection flag" indicates '11b' (step S17). When the "audio information selection flag" indicates '11b', the playback of the HDMENU_AOB is started from the "start entry number" (step S18), and it is determined whether or not the end entry number is '000b' (step S21). When the end entry number is '000b', the object is played back to the AOB end address (step S22). When the end entry number is not '000b', the object is played back before the "end entry number" (step S23), and thereafter the object is repeatedly played back from the "start entry number" (step S24). When the "audio information selection flag" is not '11b', it is determined whether or not the "audio information selection flag" is '10b' (step S19). If the "audio information selection flag" is '10b', the HDMENU_AOB continues to be played back (step S20).

Next, commands and system parameters in the above-described embodiment will be described. The commands are contents designating an interactive process operation method at a time when the user interactively plays back DVD-video. For example, there is a command indicating that a chapter menu is played back in the menu screen, and is clicked to thereby start the presentation from this place. In the system parameters, various information for controlling the player is set.

Regions to store system parameters SPRM(0) to SPRM(31) in which various types of information are stored as shown in FIG. 62 are assigned into the memory 122 in the system block diagram of the information reproduction apparatus shown in FIG. 48. A current menu description language code (CM_LCD) is stored in SPRM(0); audio stream number (ASTN) for TT_DOM is stored in SPRM(1); sub-picture stream number (SPSTN) and on/off flag for TT_DOM are stored in SPRM(2); angle number (AGLN) for TT_DOM is stored in SPRM(3); title number (TTN) for TT_DOM is stored in SPRM(4); VTS title number (VTS_TTN) for TT_DOM is stored in SPRM(5); title PGC number (TT_PGCN) for TT_DOM is stored in SPRM(6); part_of_title number (PTTN) for One_Sequential_PGC_Title is stored in SPRM(7); highlighted button number (HL_BTNN) for selection state is stored in SPRM(8); navigation timer (NV_TMR) is stored in SPRM(9); TT_PGCN for NV_TMR is stored in SPRM(10); player audio mixing mode (P_AMXMD) for Karaoke is stored in SPRM(11); country code (CTY_CD) for parental management is stored in SPRM(12); parental level (PTL_LVL) is stored in SPRM(13); player configuration (P_CFG) for video is stored in SPRM(14); player configuration (P_CFG) for audio is stored in SPRM(15); initial language code (INI_LCD) for AST is stored in SPRM(16); initial language code extension (INI_LCD_EXT) for AST is stored in SPRM(17); INI_LCD for SPST is stored in SPRM(18); INI_LCD_EXT for SPST is stored in SPRM(19); player region code (P_RCD) is stored in SPRM(20); initial menu description language code (INI_M_LCD) is stored in SPRM(21); audio stream number (ASTN) for menu-space is stored in SPRM (26); sub-picture stream number (SPSTN) and on/off flag for menu-space are stored in SPRM(27); angle number (AGLN) for menu-space is stored in SPRM(28); audio stream number (ASTN) for FP_DOM is stored in SPRM(29); and sub-picture stream number (SPSTN) and on/off flag for FP_DOM are stored in SPRM(30). The SPRM(22) to SPRM(25) and SPRM(31) are reserved.

SPRM(21) specifies the initial menu description language code (INI_M_LCD) and is read-only for Navigation Commands.

    i) At the initial access
        This parameter value shall be set and be copied to SPRM(0).
    ii) In stop state
        This parameter may be changed by user operation.
        Whenever SPRM(21) is changed, this parameter value shall be copied to SPRM(0).
    iii) In other domains
        This parameter shall not be changed.

The default value of SPRM(21) is (FFFFh).

SPRM(26) specifies the current selected ASTN for menu-space. The value of SPRM(26) may be changed by a user operation, a navigation command or algorithm for the selection of audio and sub-picture stream in menu-space.

    a) In the menu-space
        When the value of SPRM(26) is changed, the audio stream to be presented shall be changed.
    b) In the FP_DOM or TT_DOM

The value of SPRM(26) which is set in menu-space is maintained.

The value of SPRM(26) shall not be changed by a user operation.

If the value of SPRM(26) is changed in either FP_DOM or TT_DOM by a navigation command, it becomes valid in the menu-space.

The default value is (Fh).

Note : This parameter does not specify the current decoding audio stream number.

For details, refer to algorithm for the selection of audio and sub-picture stream in menu-space.

ASTN···

0 to 7 : ASTN value

Fh : There is no available AST, nor AST is selected.

Others : reserved

SPRM(27) specifies the current selected SPSTN for menu-space and whether the sub-picture is displayed or not. The value of SPRM(27) may be changed by a user operation, a navigation command or algorithm for the selection of audio and sub-picture stream in menu-space.

a) In the menu-space

When the value of SPRM(27) is changed, the sub-picture stream to be presented and the sub-picture display status shall be changed.

b) In the FP_DOM or TT_DOM

The value of SPRM(27) which is set in the menu-space is maintained.

The value of SPRM(27) shall not be changed by a user operation.

If the value of SPRM(27) is changed in either FP_DOM or TT_DOM by a navigation command, it becomes valid in the menu-space.

c) The sub-picture display status is defined as follows:

c-1) When a valid SPSTN is selected:

When the value of the SP_disp_flag is '1b', the specified sub-picture is displayed all throughout its display period.

When the value of the SP_disp_flag is '0b', refer to sub-picture forcedly display in system-space.

c-2) When an invalid SPSTN is selected:

Sub-picture does not display.

The default value of SPRM(27) is 62.

Note : This parameter does not specify the current decoding sub-picture stream number.

When this parameter is changed in menu-space, presentation of current sub-picture is discarded.

For details, refer to algorithm for the selection of audio and sub-picture stream in menu-space.

SP_disp_flag···

0b : Sub-picture display is disabled.

1b : Sub-picture display is enabled.

SPSTN···

0 to 31 : SPSTN value

62 : There is no available SPST, nor SPST is selected.

Others : reserved

SPRM(28) specifies the current AGLN for menu-space. The value of SPRM(28) may be changed by a user operation or a navigation command.

a) In the FP_DOM

If the value of SPRM(28) is changed in the FP_DOM by a navigation command, it becomes valid in the menu-space.

b) In the menu-space

When the value of SPRM(28) is changed, the angle to be presented is changed.

c) In the TT_DOM

The value of SPRM(28) which is set in the menu-space is maintained.

The value of SPRM(28) shall not be changed by a user operation.

If the value of SPRM(28) is changed in the TT_DOM by a navigation command, it becomes valid in the menu-space.

The default value of SPRM(28) is '1'.

AGLN···

1 to 9 : AGLN value

Others : reserved

SPRM(29) specifies the current selected ASTN for FP_DOM. The value of SPRM(29) may be changed by a user operation, a navigation command or algorithm for the selection of audio and sub-picture stream in FP_DOM.

a) In the FP_DOM

When the value of SPRM(29) is changed, the audio stream to be presented shall be changed.

b) In the menu-space or TT_DOM

The value of SPRM(29) which is set in FP_DOM is maintained.

The value of SPRM(29) shall not be changed by a user operation.

If the value of SPRM(29) is changed in either menu-space or TT_DOM by a navigation command, it becomes valid in the FP_DOM.

The default value of SPRM(29) is (Fh).

Note : This parameter does not specify the current decoding audio stream number.

For details, refer to algorithm for the selection of audio and sub-picture stream in FP_DOM.

ASTN···

0 to 7 : ASTN value

Fh : There is no available AST, nor AST is selected.

Others : reserved

SPRM(30) specifies the current selected SPSTN for FP_DOM and whether the sub-picture is displayed or not. The value of SPRM(30) may be changed by a user operation, a navigation command or algorithm for the selection of audio and sub-picture stream in FP_DOM.

a) In the FP_DOM

When the value of SPRM(30) is changed, the sub-picture stream to be presented and the sub-picture display status shall be changed.

b) In the menu-space or TT_DOM

The value of SPRM(30) which is set in the FP_DOM is maintained.

The value of SPRM(30) shall not be changed by a user operation.

If the value of SPRM(30) is changed in either menu-space or TT_DOM by a navigation command, it becomes valid in the FP_DOM.

c) The sub-picture display status is defined as follows:

c-1) When a valid SPSTN is selected:

When the value of the SP_disp_flag is '1b', the specified sub-picture is displayed all throughout its display period.

When the value of the SP_disp_flag is '0b', refer to sub-picture forcedly display in system-space.

c-2) When an invalid SPSTN is selected:

Sub-picture does not display.

The default value of SPRM(30) is 62.

Note : This parameter does not specify the current decoding sub-picture stream number.

When this parameter is changed in FP_DOM, presentation of current sub-picture is discarded.

For details, refer to algorithm for the selection of audio and sub-picture stream in FP_DOM.

SP_disp_flag···

0b : Sub-picture display is disabled.

1b : Sub-picture display is enabled.

SPSTN···

0 to 31 : SPSTN value

62 : There is no available SPST, nor SPST is selected.

Others : reserved

The current menu language code (CM_LCD) being played back can be changed/set both by the user operation and the command, but the initial menu description code (INI_M_LCD) can be changed/set only by the user operation.

Examples of the commands for use in the HD DVD video contents in the present embodiment are as follows.

Go To command group: command to change an execution order of the commands

Link command group: command to start the presentation from a specific place in the same domain

Jump command group: command to start the presentation from the specific place in the different domain

Compare Go To command group: command to change the execution order of the commands, if a comparison result is correct

Compare Link command group: the presentation is started from the specific place in the same domain, if the comparison result is correct

Compare Jump command group: the presentation is started from the specific place in the different domain, if the comparison result is correct

SetSystem command group: change command of a management parameter value

Set command group: command to calculate the value of the general parameter

Compare SetSystem command group: command to change the management parameter value, if the comparison result is correct

Compare Set command group: command to calculate the value of the general parameter, if the comparison result is correct

SetSystem Link command group: command to start the presentation from the specific place in the same domain, after the management parameter value is changed

Set Link command group: command to start the presentation from the specific place in the same domain, after calculating the value of the general parameter

Set Go To command group: after calculating the value of the general parameter, the execution order of the commands is changed

Set Jump command group: command to start the presentation from the specific place in the different domain, after calculating the value of the general parameter

As concrete command examples, the Set-GPRMMD command to change the value of the general parameter or the mode, or the SetM_LCD command to set the menu description language code to SPRM(0) is included in the SetSystem command group, and the SetMove command or the SetAdd command to set the value of the general parameter to a specific value or to add a specific value to the value of the general parameter is included in the Set command group.

Moreover, a Nop command to execute nothing is included in the Go To command group, a CallSS command to start the presentation of the PGC designated by the domain ID and to record the resume information is included in the Jump command group, and a Resume command to record the resume information is included in the Link command group.

A JumpTT, JumpVTS_TT, or JumpVTS_PTT command belongs to the Jump command group. This command is used in starting the presentation in the designated position in the separate domain. The player has to hold all GPRM values, when the command is prepared.

The JumpTT is a command for starting the presentation of a designated title. Details of the process are as follows.

(1) The current presentation is stopped.
(2) The resume information (if any), the value of a navigation timer, and TT_PGC (SPRM(6)) for the navigation timer in the system parameter are discarded. To stop the navigation timer, '0' is substituted into the SPRM(9).
(3) The SPRM(1) and SPRM(2) are set.
(4) The presentation of the designated title is started from a pre-command phase.

The JumpVTS_TT is a command for starting the presentation of the title designated in the current VTS space. Details of the process are as follows.

(1) The current presentation is stopped.
(2) The resume information (if any), the value of the navigation timer, and TT_PGCN (SPRM(6)) for the navigation timer in the system parameter are discarded. To stop the navigation timer, '0' is substituted into the SPRM(9).
(3) The SPRM(1) and SPRM(2) are set.
(4) The presentation of the title designated by VTS_TTN in the current VTS space is started.

The JumpVTS_PTT is a command for starting the presentation of the PTT designated in the current VTS space. Details of the process are as follows.

(1) The current presentation is stopped.
(2) The resume information (if any), the value of the navigation timer, and TT_PGCN (SPRM(6)) for the navigation timer in the system parameter are discarded. To stop the navigation timer, '0' is substituted into the SPRM(9).
(3) The SPRM(1) and SPRM(2) are set.
(4) The command of a pre-command region of the PGC in which the designated PTTN is disposed is executed.
(5) The presentation of the PTT designated by VTS_TTN and PTTN is started in the current VTS space.

Command contents and concrete contents in the command data for use in a resume command sequence or a cell command sequence in the present embodiment will be described. As shown in FIG. 62, in the parameters for use in reproducing the DVD video contents of the HD in the information reproduction apparatus (player) of the present embodiment, there are two types: system parameters (SPRM) in which data contents to be played back are determined for each parameter number; and general parameters (GPRM) in which the data contents to be recorded can be arbitrarily set.
A command data size per navigation command is set to eight bytes, and the commands are disposed in the following:

(1) a button command region in the PCI;
(2) a cell command region in the PGCI (FIG. 35);
(3) a pre-command region in the PGCI (FIG. 35);
(4) a post-command region in the PGCI (FIG. 35); and
(5) an RSM command region in the PGCI (FIG. 35).

There are two types of navigation commands: single instruction commands each constituted of one instruction (minimum unit of a command); and composite instruction commands each constituted of two or three instructions.
In the description with reference to FIG. 36, it has been described that in the program chain command table (PGC_CMDT) 51 in the PGCI, the pre-commands (PRE_CMDs) 511, post-commands (POST_CMDs) 512, cell commands (C_CMDs) 513, and RSM commands (RSM_CMDs) 514 are set (recorded), and the region of eight bytes is set to the information of one command. A data structure in the command to which eight bytes are assigned will be described hereinafter. In the eight byte region, 16 bits from a most significant bit in the commands of Types 1 and 2, and 12 bits from the most significant bit in Type 3 are set to the recording region of the operation code. Therefore, only when the information of the operation code is read, the command can be understood.
In the operation code, information such as command ID-1, command ID-2, setting flag (I-flag for Set), and I-flag for comparison (I-flag for Comp) is recorded in order from the most significant bit. A common value of the same command ID-1 is set to be common for each command having similar contents, and the value of the command ID-1 is set to the region of three bits from the most significant bit. When 16 bits at minimum from the most significant bit of the command information are played back in the present embodiment, the contents of the operation code can be understood, and the command can be understood. Furthermore, when several bits from the most significant bit of the command information are read, the commands ID-1 and ID-2 can be understood, and the command contents can be understood. When the command information contents are structured as described above in the present embodiment, the command can be understood, and the process corresponding to the command can be speeded up. Places for setting set values or variable values such as a value in Compare Field for each command, a value in Branch Field, and a value in Set Field as variable operands in the commands are designated.
A data structure in the command information for each command for use in the HD DVD video contents of the present embodiment is as follows:

(1) When the command information includes one of a Go To instruction, Link instruction operand, and a Link sub-instruction, these instructions (or sub-instructions) are each set to the form of an instruction operand (or a sub-instruction operand) constituted of two bytes, and the instruction operand (or sub-instruction operand) is disposed in least significant two byte position in the command information.

(2) When the command includes Jump instruction or SetSystem instruction, the instruction is set in the form of the instruction operand constituted of four bytes, and the instruction operand is disposed in a middle byte (47 bits to 16 bits) which does not belong to the most significant byte or the least significant byte in the command information.

(3) When the command includes a Compare instruction or a Set instruction, a unique instruction operand is not formed with respect to the instruction.

Furthermore, there are characteristic structures in which:

(4) the contents of a composite instruction command are included in the form of the operation codes in the upper bits in the command information; and

(5) the place where the variable value or the variable required for executing the command is stored is indicated, and the variable operand is disposed in a lower bit position from the operation code.

When the method of arranging the data structures in all the command information comprises regularity as described in (1) to (5) in the present embodiment, the understanding of the command information of the information reproduction apparatus is simplified, and the understanding of the command and the execution process of the corresponding command can be effectively speeded up. That is, when the operand code is designated in the upper bit position as described above, the command contents can be instantly understood. Furthermore, when the information on one instruction constituting the composite instruction command is integrally disposed in the form of the "instruction operand" further behind the position (lower bit region), the corresponding instruction contents can be easily understood.

Furthermore, in a composite instruction command (a plurality of command processes are combined to form one command) such as a "Compare SetSystem" command to perform "SetSystem" after "Compare", in addition to the arrangement methods described in the above (1) to (5), the following structures are provided.

(6) When the instruction operand (or the sub-instruction) corresponding to one instruction is disposed in the command information, a variable operand or an instruction operand related to the other instruction is disposed in the remaining part in the command information.

(7) Especially, when the Jump instruction operand or the SetSystem instruction operand is included, a variable operand or an instruction operand related to the other instruction is disposed in lower two bytes. In this case, high-speed understanding of the command contents is facilitated, and a recognition process of the command contents and a command execution process can be speeded up and simplified.

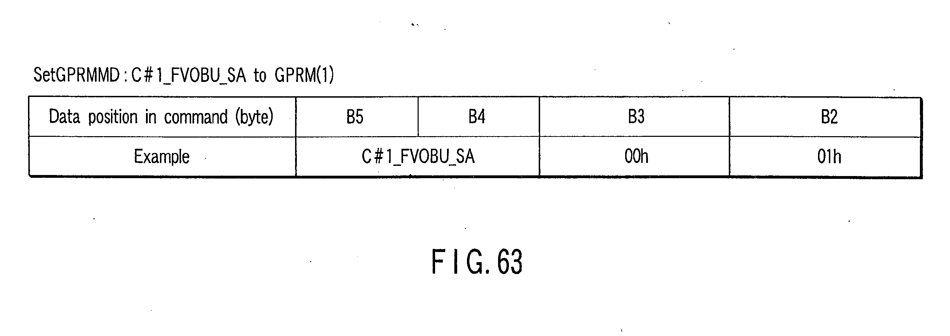

As one example concerning the concrete data structure in the instruction operand described in the data structure in the command information, an example of the data structure of the instruction operand of Set GPRMMD belonging to the SetSystem instruction group is shown in FIG. 63. This Set GPRMMD instruction is an instruction (command) which changes the value of the general parameter or the mode of the general parameter. Moreover, as concrete contents, there is an example in which "the value of the start address (C_FVOBU_SA) of the VOBU first disposed in the n-th cell shown in FIG. 38 is set to a first general parameter (GPRM(1)) [Set-GPRMMD: C#n_FVOBU_SA to GPRM(1)]". In this case, when Mode = 0b (Register Mode), and the set general parameter number is '1', a value of 'B2' (third "byte" from the least significant byte) is '01h' in hexagonal display.

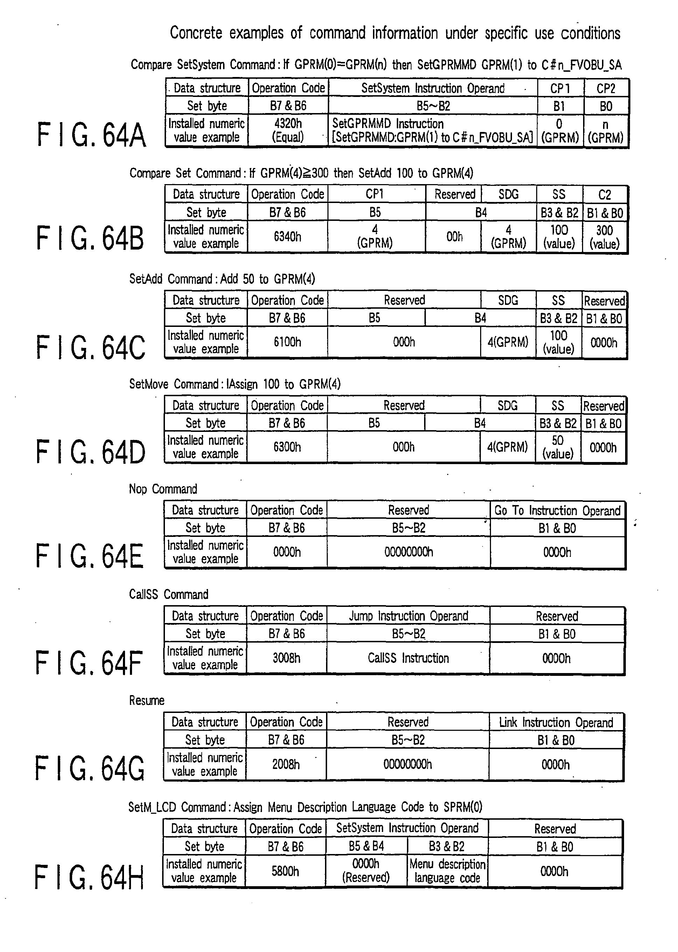

Concrete examples of the command information in which operand numeric values have been set under specific use conditions based on the above-described contents are shown in FIGS. 64A, 64B, 64C, 64D, 64E, 64F, 64G, and 64H. In FIGS. 63, 64A, 64B, 64C, 64D, 64E, 64F, 64G, and 64H, contents are expresses in byte units 'B7' to 'B0'.

FIG. 64A shows an example of a case where a command is set indicating "when a value of 0-th general parameter GPRM(0) is equal to that of an n-th general parameter GPRM(n), a value of the first general parameter GPRM(1) is set to that of C#n_FVOBU_SA [If GPRM(0) = GPRM(n) then SetSystem GPRM(1) to C#n_FVOBU_SA]".

FIG. 64B shows an example of a case where a command is set indicating "when a value of 4-th general parameter GPRM(4) is 300 or more, 100 is further added to the value of GPRM(4) [If GPRM(4) ≥ 300 then SetAdd 100 to GPRM(4)]".

FIG. 64C shows an example of a case where a command is set indicating "a value of 100 is set to the 4-th general parameter GPRM(4) [Assign 100 to GPRM (4)]".

FIG. 64D shows an example of a case where a command is set indicating "50 is further added to the current value of the 4-th general parameter GPRM(4) [Add 50 to GPRM(4)]".

FIG. 64E shows an example of a case where a command is set indicating "anything is not processed [Not Operation]".

FIG. 64F shows an example of a case where a command is set indicating "when returning to the menu screen, a value of resume information indicating an interrupted portion of the title (picture) which has been played back is stored [CallSS]".

FIG. 64G shows an example of a case where a command is set indicating "the value of the resume information indicating the interrupted portion of the title (picture) which has been played back is stored [Resume]".

FIG. 64H shows an example of a case where a command is set indicating "the specific menu description language code is set to a 0-th system parameter SPRM(0) [Assign Menu Description Language Code to SPRM(0)]".

Next, an elementary audio object set (EAOBS) will be described.

A DVD video disk has a logical structure constituted of a volume space, a video manager (VMG), a video title set (VTS), an enhanced video object set (EVOBS), and an elementary audio object set (EAOBS).

The video manager (VMG) comprises control data called video manager information (VMGI), elementary audio object set (EAOBS), enhanced video object (FP_PGCM_EVOB) for the first play PGC menu, enhanced video object (VMGM_EVOBS) for the VMG menu, and backup (VMGI_BUP) for control data.

The FP_PGCM_EVOB is an enhanced video object (EVOB) for use in selecting the menu language. The VMGM_EVOBS is a set of enhanced video objects (EVOBs) for use in the menu which supports a volume access. The EAOBS is a set of elementary audio objects for use in the background music or the like.

The EAOB is one file of 8 MB or less. The FP_PGCM_EVOB is one file of 1 GB or less. The VMGM EVOBS is divided into 98 files at maximum each of 1 GB or less. Since the video manager information (VMGI), EAOBS (if any), FP_PGCM_EVOB (if any), VMGM_EVOBS (if any), and VMGI_BUP are recorded in this order, the video manager information (VMGI) can be preloaded before the menu PGC. Therefore, the playback of the audio can be prepared beforehand, and the audio can be played back without any standby time. The files including VMGM_EVOBS are continuously arranged.

Gaps sometimes exist in boundaries among the video manager information (VMGI), EAOBS (if any), FP_PGCM_EVOB (if any), VMGM_EVOBS (if any), and VMGI_BUP. In the VMGM_EVOBS (if any), EVOBs are continuously arranged.

The video title set (VTS) comprises control data called video title set information (VTSI), enhanced video object set (VTSM_EVOBS) for the VTS menu, enhanced video object set (VTSTT_EVOBS) for the VTS title, and backup (VTSI_BUP) of the control data. The EVOBS for the titles of the VTSM_EVOBS and VTSTT_EVOBS are divided into 99 files at maximum each of 1 GB or less. The files including VTSM_EVOBS are continuously arranged. In each VTS, gaps sometimes exist in boundaries among VTSI, VTSM_EAOBS (if any), VTSTT_EVOBS, and VTSI_BUP. In each VTSM_EAOBS (if any), EVOBSs are continuously arranged. In each VTSTT_EAOBS, EVOBs are continuously arranged.

The EVOBS is a set of the enhanced video objects constituted of data such as video, graphic, audio and sub-picture. In the EVOBS, EVOBs are recorded in continuous blocks and interleaved blocks. One EVOBS comprises one or more EVOBs. EVOB_ID numbers are assigned from the EVOB having a smallest logical sector number LSN in the EVOBS in an ascending order from 1. One EVOB comprises one or more cells. C_ID numbers are assigned from a cell having a smallest logical sector number LSN in the EVOB in an ascending order from 1. The cells in the EVOBS are distinguished by the EVOB_ID number and C_ID number.

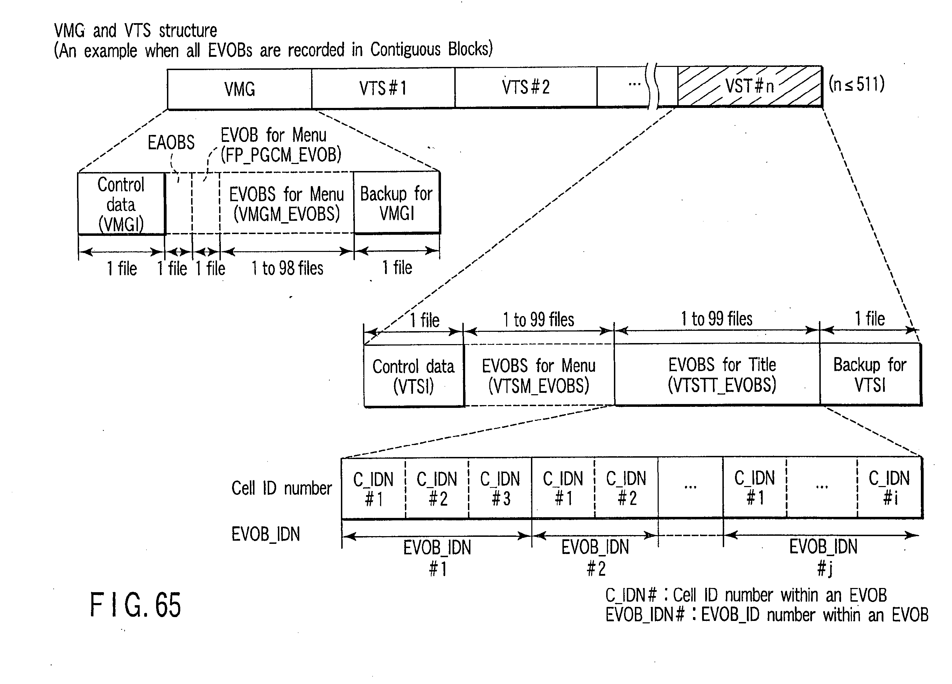

The structures of the video manager (VMG) and video title set (VTS) in a case where all the EVOBs are recorded in the continuous blocks are shown in FIG. 65. FIG. 65 is a modification of the volume structure shown in FIG. 1. At a preload time, the data of the elementary audio object set (EAOBS) can be taken in right away.

The VMG comprises control data VMGI, EAOBS, EVOB (FP_PGCM_EVOB) for the menu, EVOBS (VMGM_EVOBS) for the menu, and backup file of VMGI. Since the EAOBS is recorded just behind the control data in this manner, the EAOBS can be preloaded instantly. The VTS comprises control data VTSI, EVOBS for the menu (VTSM_EVOBS), EVOBS for the title (VTSTT_EVOBS), and backup file of VTSI. The EVOBS for the title (VTSTT_EVOBS) comprises cells. C_IDN# is a cell ID number in the EVOB, and EVOB_IDN# is an EVOB_ID number in the EVOB.

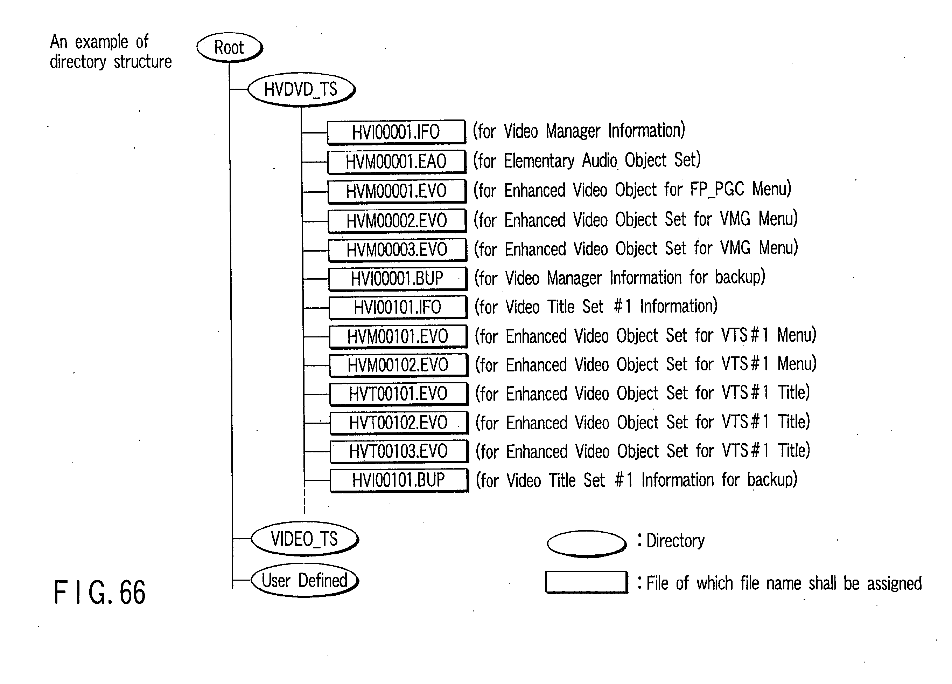

FIG. 66 shows a modification of the directory structure shown in FIG. 2. A sub-directory referred to as HVDVD_TS for HD-DVD is disposed under a route directory separately from a sub-directory VIDEO_TS of a conventional ROM-video.

The video manager information (VMGI), elementary audio object set (EAOBS), enhanced video object for an FP_RGC menu (FP_PGCM_EVOB), video manager information for backup (VMGI_BUP), video title set information (VTSI), and video title set information for backup (VTSI_BUP) are recorded in a data space of a component file of the HVDVD_TS directory. The VMGM_EVOBS having a size of 1 GB (= $2^{30}$ bytes) or more is divided into 98 at maximum. The VTSM_EVOBS or VTSTT_VOBS having a size of 1 GB (= $2^{30}$ bytes) or more is divided into 99 at maximum. Therefore, the size of each file is 1 GB or less. These files are command files of the HVDVD_TS directory. The files of VMGM_EVOBS, VTSM_EVOBS, and VTSTT_EVOBS are continuously recorded.

The following rules are applied to the file name of the video manager (VMG).

1) Directory name
A directory name of the DVD video is "HVDVD_TS".

2) File name of video manager (VMG)

The file name of the video manager information is "HVI00001.IFO".

The file name of the elementary audio object set is "HVM00001.EAO".

The file name of the enhanced video object of the FP_PGC menu is "HVM00001.EVO".

The file name of the enhanced video object set of the VMG menu is "HVM000%%.EVO".

The file name of the video manager information for backup is "HVI00001.BUP".

Here, '%%' continuously changes to '99' from '02' for each enhanced video object set for the VMG menu.

3) File name of video title set (VTS)

The file name of the video title set information is "HVI@@@##.IFO".

The file name of the enhanced video object of the VTS menu is "HVM@@@##.EVO".

The file name of the enhanced video object set for the title is "HVT@@@##.EVO".

The file name of the video title set information for backup is "HVI@@@01.BUP".

Here, '@@@' are three-digit numbers of '001' to '511' assigned to the file of the video title set number. '##' continuously changes to '99' from '01' for each enhanced video object set for the VTS menu or the title.

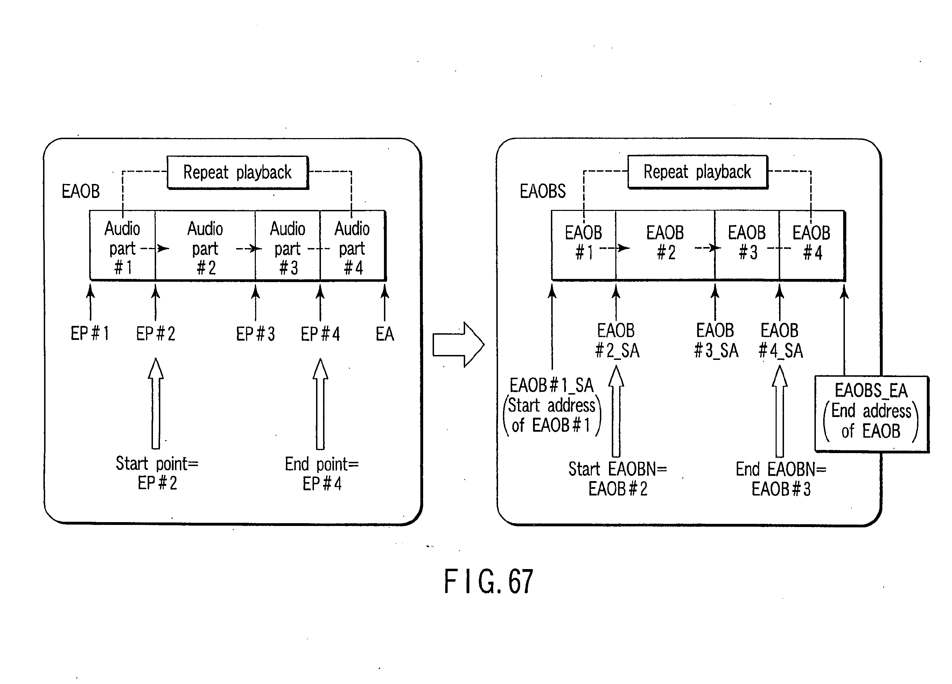

In the above-described embodiments, the structure has been described in which, as shown in FIG. 56, the playback range of the background sound (background music) played back simultaneously at the time of each menu screen display is repeatedly played back using the start boundary position or the last boundary position (AOB end address) where the audio data is recorded in the audio object (HDMENU_AOB) for the menu, or the entry position set in advance as the boundary range. A modification in which the range of the audio repeat playback is designated by the EVOBS unit will be described with reference to FIG. 67. FIG. 67 shows a concept of FIG. 56 on the left side, and the repeat playback portion in the EAOB is designated by start and end points. Therefore, it is necessary to grasp the start and end points of each part. On the other hand, in the modification shown on the right side, the playback range is designated by the elementary audio object (EAOB). The entry point (EP) is abolished, and an EAOB number (EAOBN) is introduced. A presentation start/end entry point (EP) is abolished, and a presentation start/end EAOB number (EAOBN) is introduced. The number (EAOB_EP_Ns) of the entry points (EPs) is set to the number (EAOB_Ns) of the EAOB number (EAOBN). The start address of each entry point (EP) is set as the start address of each elementary audio object (EAOB). That is, the EAOB_1ST_EP is set as the start address of the 1ST_EAOB.

As shown on the left side of FIG. 67, to designate the playback range by the entry point, the start and end points have to be designated, and designated places are doubled. Additionally, the entry point has an image of the start position, and the end position is not easily found. However, when the position is designated by the elementary audio object (EAOB) number, the block only may be designated, and the parameters to be designated are halved. Since the parameters are easily designated, they can be easily taken into the buffer in advance.

A purpose of the elementary audio object set (EAOBS) is to realize seamless audio playback, even when video presentation changes between PGCs (against any change of the menu). The EAOBS is preloaded on an elementary audio buffer of 8 MB at the time of insertion of the disk. The PGC can represent the EVOB(s) or the audio stream in the EAOB by the switching of each audio buffer. The designation of the represented audio is determined by the PGCI search pointer (VMGM_PGCI_SRP, VTSM_PGCI_SRP, or VTS_PGCI_SRP), and the audio information selection flag in the FP_PGC_CAT in the video manager information management table (VMGI_MAT).

The audio information selection flag has three states.

1) The audio in the EVOB(s) designated by the PGC is played back (the audio in the EVOB is selected).
2) An asynchronous audio EAOBS is continuously played back (the audio in the EVOBS is selected, and the audio in the EVOB is ignored).
3) The playback of the asynchronous audio EAOBS is started (the audio in the EVOB is selected, and the audio in the EVOB is ignored).

Therefore, when the EAOBS is selected, the audio seamless presentation is possible between the PGC.

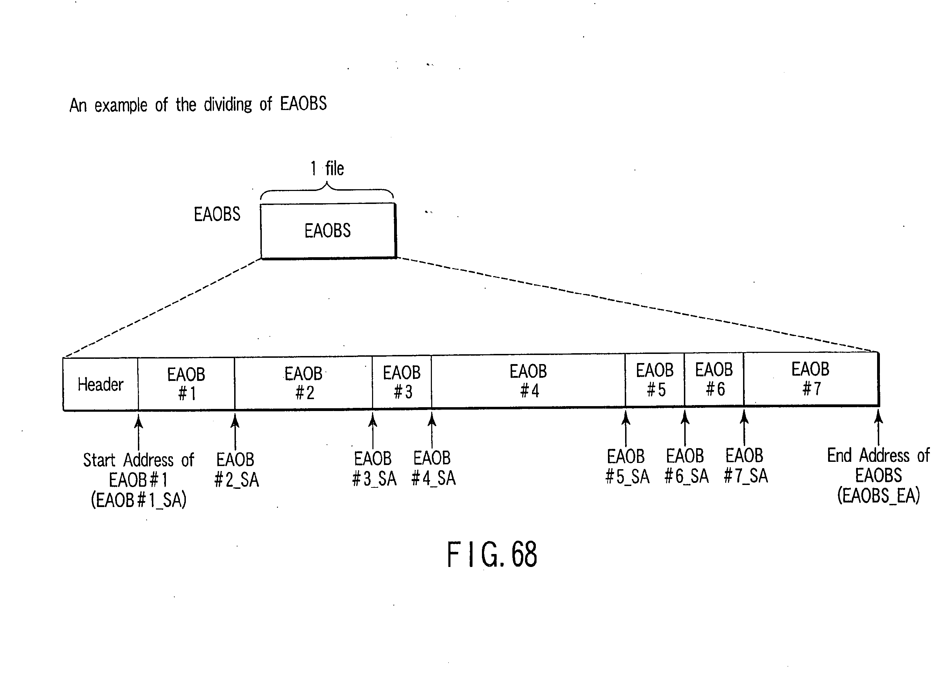

FIG. 68 shows a structure example of the elementary audio object set (EAOBS). The EAOBS is divided into two or more (seven at maximum) continuous EAOBs as shown in FIG. 68. The start address (EAOB#n_SA) of each EAOB is described in the header of the EAOBS. Each EAOB is designated from the top of the audio frame.

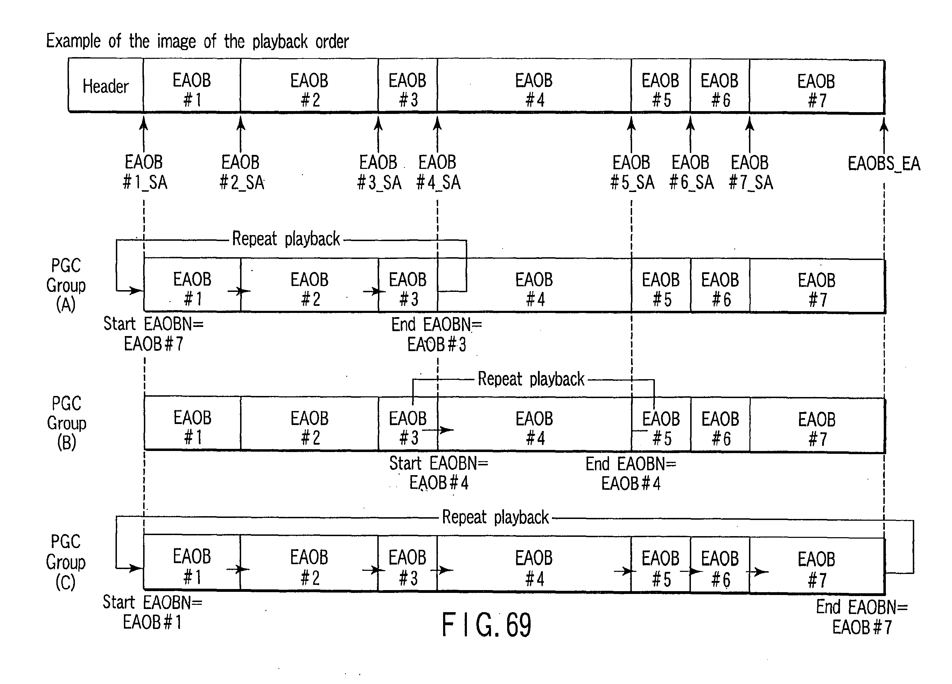

Two or more continuous EAOBs can be accessed using start EAOBN, end EAOBN in the PGCI search pointer. It is also possible to reproduce the EAOB in the PGC group constituted of one or a plurality of PGCs without being interrupted. The playback order is schematically shown in FIG. 69. FIG. 69 shows three examples.

In the PGC included in PGC group (A), the start EAOBN is equal to EAOB#1, and the end EAOBN is equal to EAOB#3. In the PGC belonging to this group, EAOB#1 to EAOB#3 are played back in this order, and the playback between EAOB#1 and EAOB#3 is repeated, even when any change occurs between PGCs.

In the PGC included in PGC group (B), the start EAOBN is equal to EAOB#4, and the end EAOBN is equal to EAOB#4. In the PGC belonging to this group, EAOB#4 only is played back, and the playback of the EAOB#4 is repeated, even when any change occurs between PGCs.

In the PGC included in PGC group (C), the start EAOBN is equal to EAOB#1, and the end EAOBN is equal to EAOB#7. In the PGC belonging to this group, EAOB#1 to EAOB#7 (all the EAOBs) are played back in this order, and the playback between EAOB#1 and EAOB#7 is repeated, even when any change occurs between PGCs.

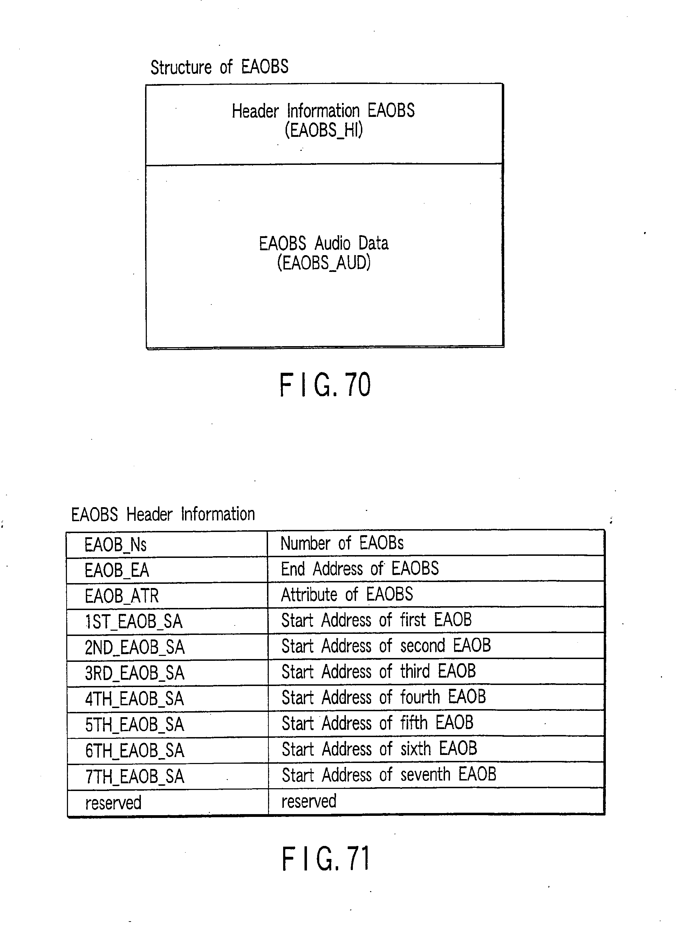

FIG. 70 shows the contents of the elementary audio object set (EAOBS). The EAOBS comprises EAOBS header information (EAOBS_HI) and EAOBS audio data (EAOBS_AUD). The EAOBS audio data (EAOBS_AUD) comprises seven EAOBs at maximum. Each EAOB comprises elementary audio data, and is disposed from the top of the audio frame.

FIG. 71 shows the contents of the EAOBS header information. EAOB_Ns is the number of EAOBs, EAOBS_EA is the end address of the EAOBS, EAOBS_ATR is the attribute of the EAOBS, the 1ST_EAOB_SA is the start address of the first EAOB, 2ND_EAOB_SA is the start address of the second EAOB, 3RD_EAOB_SA is the start address of the third EAOB, 4TH_EAOB_SA is the start address of the fourth EAOB, 5TH_EAOB_SA is the start address of the fifth EAOB, 6TH_EAOB_SA is the start address of the sixth EAOB, and 7TH_EAOB_SA is the start address of the seventh EAOB.

The EAOB_Ns describes the number of EAOBs in EAOBS. The value of EAOB_Ns shall be between 1 and 7.

The EAOBS_EA describes the end address of the EAOBS with RBN from the first byte of EAOBS.

The EAOBS_ATR is used for each EAOB in common.

The 1ST_EAOB_SA describes the start address of the first EAOB with RBN from the first byte of EAOBS. The first EAOB shall exist.

The 2ND_EAOB_SA describes the start address of the second EAOB with RBN from the first byte of EAOBS. If no the second EAOB exists, enter (0000 0000h).

The 3RD_EAOB_SA describes the start address of the third EAOB with RBN from the first byte of EAOBS. If no the third EAOB exists, enter (0000 0000h).

The 4TH_EAOB_SA describes the start address of the fourth EAOB with RBN from the first byte of EAOBS. If no the fourth EAOB exists, enter (0000 0000h).

The 5TH_EAOB_SA describes the start address of the fifth EAOB with RBN from the first byte of EAOBS. If no the fifth EAOB exists, enter (0000 0000h).

The 6TH_EAOB_SA describes the start address of the sixth EAOB with RBN from the first byte of EAOBS. If no the sixth EAOB exists, enter (0000 0000h).

The 7TH_EAOB_SA describes the start address of the seventh EAOB with RBN from the first byte of EAOBS. If no the seventh EAOB exists, enter (0000 0000h).

Note 1: Maximum size of EAOBS shall be restricted to 8MB, including EAOBS Header Information (EAOBS_HI).

Note 2: End address of the n-th EAOB is defined as either Start address of the (n+1)-th EAOB minus 1 or End address of EAOBS.

Note 3: Each EAOB in EAOBS shall be allocated contiguously without any gap.

Next, a navigation data structure will be described.

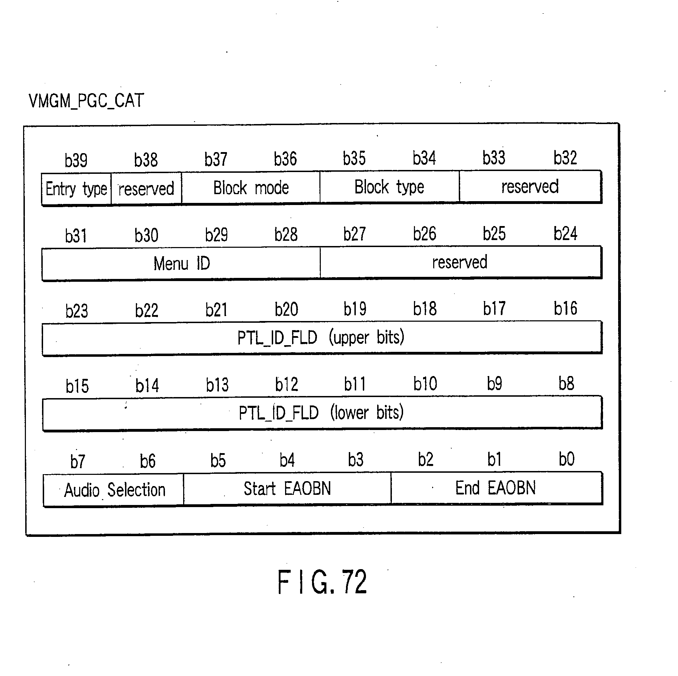

FIG. 72 shows the contents of the VMGM_PGC_CAT in the VMGM_PGCI_SRP in the VMGM_PGCI_UT in the VMGI.

Entry type (b39)···
0b : Not Entry PGC.
1b : Entry PGC
Block mode (b37, b36)···
When PGC Block type is '00b', enter '00b'.

When PGC Block type is '01b', enter '01b', '10b' or '11b'.

00b : Not a PGC in the block
01b : The first PGC in the block
10b : PGC in the block (except the first and the last PGC)
11b : The last PGC in the block
Block type (b35, b34) ···

When PTL_MAIT does not exist, enter '00b'.

00b : Not a part of the block
01b : Parental Block
Others : reserved
Menu ID (b31 to b28)···

When "Entry type" is '0b', then enter '0000b'.

When "Entry type" is '1b', then Menu ID is defined as:

0010b : Title Menu
Others : reserved
Audio Selection (b7, b6)···
00b : Audio in EVOB specified by PGC is played back
01b : reserved
10b : Non-Sync audio (EAOB) which specified by Start EAOBN is played back continuously (ignore Audio in EVOB if any)
11b : The playback of Non-Sync audio (EAOB) which specified by Start EAOBN is started (ignore Audio in EVOB if any)
Start EAOBN (b5 to b3)···

When "Audio Selection" is '00b', then Start EAOBN has no meaning.

When "Audio Selection" is '10b' or '11b', then Start EAOBN is defined as:

000b : reserved
001b to 111b : Start EAOB number

Note : Start EAOBN shall be equal to or less than End EAOBN.

End EAOBN (b2 to b0)···

When "Audio Selection" is '00b', then End EAOBN has no meaning.

When "Audio Selection" is '10b' or '11b', then End EAOBN is defined as:

000b : reserved

001b to 111b : End EAOB number

Note 1 : When "Audio Selection" is '10b' or '11b', Non-Sync audio shall continue to playback repeatedly between Start and End EAOBN.

Note 2 : When "Audio Selection" is '10b', Start and End EAOBN shall be same as those of previous PGC respectively. Then, Non-Sync audio of between PGCs are presented seamlessly.

Note 3 : If Domain change occur, seamless playback is not guaranteed.

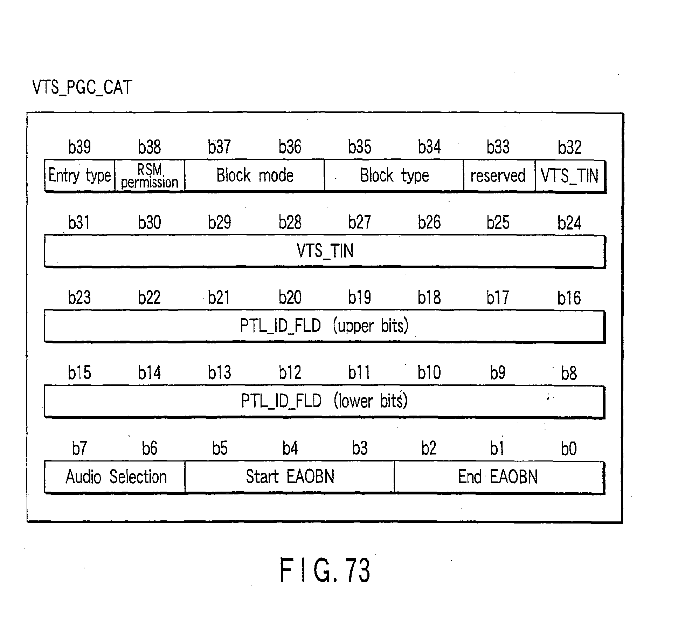

FIG. 73 shows the contents of the VTS_PGC_CAT in the VTS_PGCI_SRP in the VTS_PGCIT in the VTSI.

Entry type (b39)···

0b : Not Entry PGC

1b : Entry PGC

RSM permission (b38)···

Describes whether or not the re-start of the playback by RSM Instruction or Resume() function is permitted in this PGC.

0b : permitted (RSM Information is updated)

1b: prohibited (No RSM Information is updated)

Block mode (b37, b36)···

When PGC Block type is '00b', enter '00b'.

When PGC Block type is '01b', enter '01b', '10b' or '11b'.

00b : Not a PGC in the block

01b : The first PGC in the block

10b : PGC in the block (except the first and the last PGC)

11b : The last PGC in the block

Block type (b37, b36)···

When PTL_MAIT does not exist, enter '00b'.

00b : Not a part of the block

01b : Parental Block

Others : reserved

VTS_TTN (b32)···

'1' to '511' : VTS Title number value

Others : reserved

Audio Selection (b7, b6)···

00b : Audio in EVOB specified by PGC is played back

01b : reserved

10b : Non-Sync audio (EAOB) which specified by Start EAOBN is played back continuously (ignore Audio in EVOB if any)

11b : The playback of Non-Sync audio (EAOB) which specified by Start EAOBN is started (ignore Audio in EVOB if any)

Start EAOBN (b5 to b3)···

When "Audio Selection" is '00b', then Start EAOBN has no meaning.

When "Audio Selection" is '10b' or '11b', then Start EAOBN is defined as:

000b : reserved

001b to 111b : Start EAOB number

Note : Start EAOBN shall be equal to or less than End EAOBN.

End EAOBN (b2 to b0)···

When "Audio Selection" is '00b', then End EAOBN has no meaning.

When "Audio Selection" is '10b' or '11b', then End EAOBN is defined as:

000b : reserved

001b to 111b : End EAOB number

Note 1 : When "Audio Selection" is '10b' or '11b', Non-Sync audio shall continue to playback repeatedly between Start and End EAOBN.

Note 2 : When "Audio Selection" is '10b', Start and End EAOBN shall be same as those of previous PGC respectively. Then, Non-Sync audio of between PGCs are presented seamlessly.

Note 3 : If Domain change occur, seamless playback is not guaranteed.

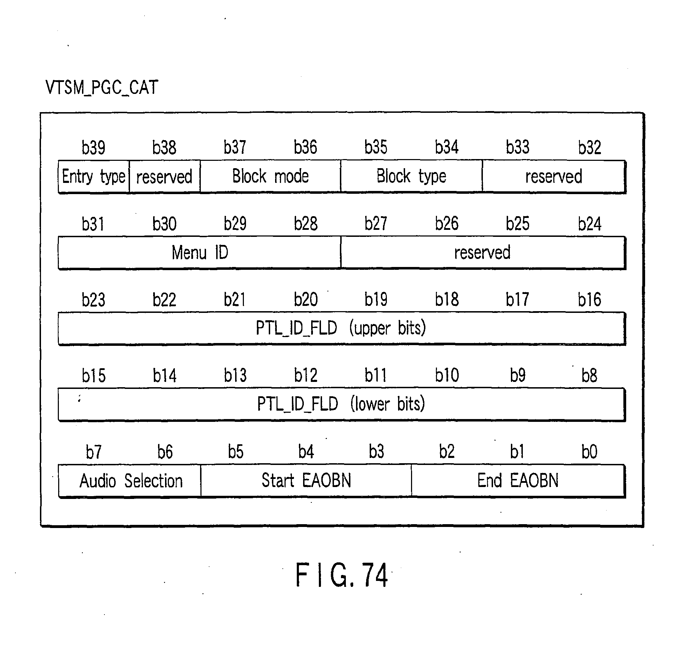

FIG. 74 shows the contents of the VTSM_PGC_CAT in the VTSM_PGCI_SRP in the VTSM_LU in the VTS.

Entry type (b39)···

0b : Not Entry PGC

1b : Entry PGC

Block mode (b37, b36)···

When PGC Block type is '00b', enter '00b'.

When PGC Block type is '01b', enter '01b', '10b' or '11b'.

00b : Not a PGC in the block

01b : The first PGC in the block

10b : PGC in the block (except the first and the last PGC)

11b : The last PGC in the block

Block type (b35, b34)···

When PTL_MAIT does not exist, enter '00b'.

00b : Not a part of the block

01b : Parental Block

Others : reserved

Menu ID (b31 to b28)···

When Entry type is '0b', enter '0000b'.

When Entry type is '1b', defined as:

0011b : Root Menu

0100b : Sub-picture Menu

0101b : Audio Menu

0110b : Angle Menu

0111b : PTT Menu

Others : reserved

Audio Selection (b7, b6)···

00b : Audio in EVOB specified by PGC is played back

01b : reserved

10b : Non-Sync audio (EAOB) which specified by

Start EAOBN is played back continuously (ignore Audio in EVOB if any)

11b : The playback of Non-Sync audio (EAOB) which specified by Start EAOBN is started (ignore Audio in EVOB if any)

Start EAOBN (b5 to b3)···

When "Audio Selection" is '00b', then Start EAOBN has no meaning.

When "Audio Selection" is '10b' or '11b', then Start EAOBN is defined as:

000b : reserved

001b to 111b : Start EAOB number

Note : Start EAOBN shall be equal to or less than End EAOBN.

End EAOBN (b2 to b0)···

When "Audio Selection" is '00b', then End EAOBN has no meaning.

When "Audio Selection" is '10b' or '11b', then End EAOBN is defined as:

000b : reserved

001b to 111b : End EAOB number

Note 1 : When "Audio Selection" is '10b' or '11b', Non-Sync audio shall continue to playback repeatedly between Start and End EAOBN.

Note 2 : When "Audio Selection" is '10b', Start and End EAOBN shall be same as those of previous PGC respectively. Then, Non-Sync audio of between PGCs are presented seamlessly.

Note 3 : If Domain change occur, seamless playback is not guaranteed.

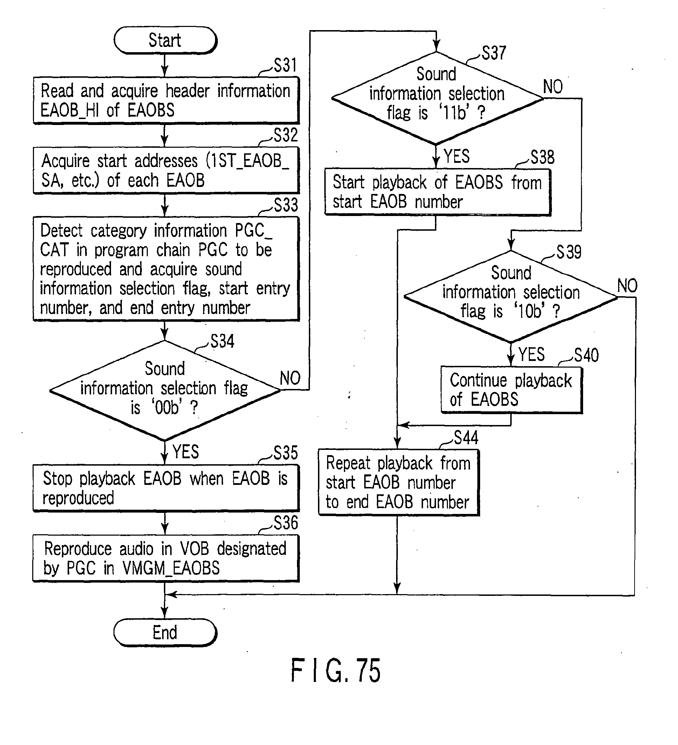

FIG. 75 is a modification of FIG. 61, and shows a playback flowchart of the menu audio object (HDMENU_AOB) in a case where the repeat playback range of the audio is designated by the start and end EAOBs instead of the start and end points.

First, the header information (EAOB_HI) of the elementary audio object set (EAOBS) is read and acquired (S31), the start address (1ST_EAOB_SA etc.) of each EAOB is acquired (S32), the category information (PGC_CAT) in the program chain (PGC) to be played back is detected, and "audio information selection flag", "start EAOB number", and "end EAOB number" are acquired (S33). It is determined whether or not the acquired "audio information selection flag" is '00b' (S34). When the flag indicates '00b', and the EAOB is played back, the playback is stopped (S35), and the audio in the VOB designated by the PGC is played back (S36).

If the "audio information selection flag" is not '00b', it is further determined whether or not the "audio information selection flag" indicates '11b' (S37). When the "audio information selection flag" indicates '11b', the playback of the EAOBS is started from the "start EAOB number" (S38). When the "audio information selection flag" is not '11b', it is further the "audio information selection flag" is '10b' (S39). If this applies, the EAOBS continues to be played back (S40). After the step S38 or S40, the repeat playback between the "start EAOB number" and the "end EAOB number" is performed (S44).

FIG. 76 shows a reference player model which plays back the asynchronous audio EAOBS. The EVOB input from the track buffer is separated into the video and the audio by a demultiplexer, and stored in the input buffer. The video data is output via a video decoder. The elementary audio object set (EAOBS) is stored in the elementary audio buffer at the time of the insertion of the disk. The output of the audio input buffer or the elementary audio buffer is selected by the audio information selection flag, and output via the audio decoder.

It is assumed that the elementary audio object set (EAOBS) is preloaded beforehand in the buffer prior to the presentation of the menu screen. Since the set is preloaded beforehand, the EAOBS can be seamlessly played back without being interrupted halfway at the time of the switch of the menu screen. The playback of the audio information recorded in the VMGM_EVOBS or the audio information recorded in the EAOBS as the sound played back simultaneously at the time of the menu display is switched by information of audio selection (audio information selection) described with reference to FIGS. 8, 58, 71, 24, 59, 89, 27, 60, and 96, and the branching process is performed as shown in the steps S14, S17, and S19 of FIG. 60, and the steps S34, S37, and S39 of FIG. 75.

Next, a navigation data structure will be described.

The navigation data is information concerning the attribute of the presentation data and the presentation control, and comprises four types of information: video manager information (VMGI), video title set information (VTSI), presentation control information (PCI), and data search information (DSI). The VMGI is described in the first and last VMGs, and VTSI is described in the first and last VTSs. The PCI and DSI are scattered/disposed in the enhanced video object set EVOBS along the presentation data.

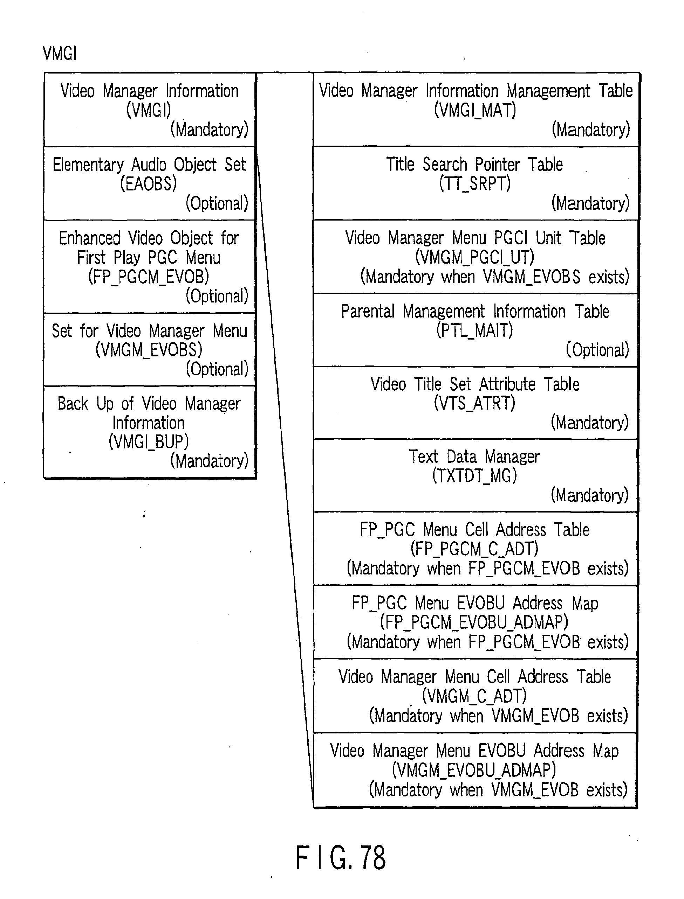

FIG. 78 shows a structure of the video manager information (VMGI).

In the video manager information (VMGI), information of an HVDVD_TS directory, for example, information for searching the title, information for reproducing FP_PGC and VMGM, and further information of parental management, each VTS_ATR, or TXTDT are described.

A video manager information management table (VMGI_MAT) (mandatory) is at the head of the video manager information (VMGI), and is followed by: a title search pointer table (TT_SRPT) (mandatory); a video manager menu PGCI unit table (VMGM_PGCI_UT) (mandatory when the VMGM_EVOBS exists); a parental management information table (PTL_MAIT) (optional); a video title set attribute table (VTS_ATRT) (mandatory); a text data manager (TXTDT_MG) (optional); an FP_PGC menu cell address table (FP_PGCM_C_ADT) (mandatory when the FP_PGCM_EVOB exists); an FP_PGC menu enhanced video object unit table map (FP_PGCM_EVOBU_ADMAP) (mandatory when the FP_PGCM_EVOB exists); a video manager menu cell address table (VMGM_C_ADT) (mandatory when the VMGM_EVOBS exists); and a video manager menu enhanced video object unit address map (VMGM_EVOBU_ADMAP) (mandatory when the VMGM_EVOBS exists). The respective tables are aligned in boundaries among the logical blocks. For this purpose, each table continues to 2,047 bytes (including '00h') at maximum.

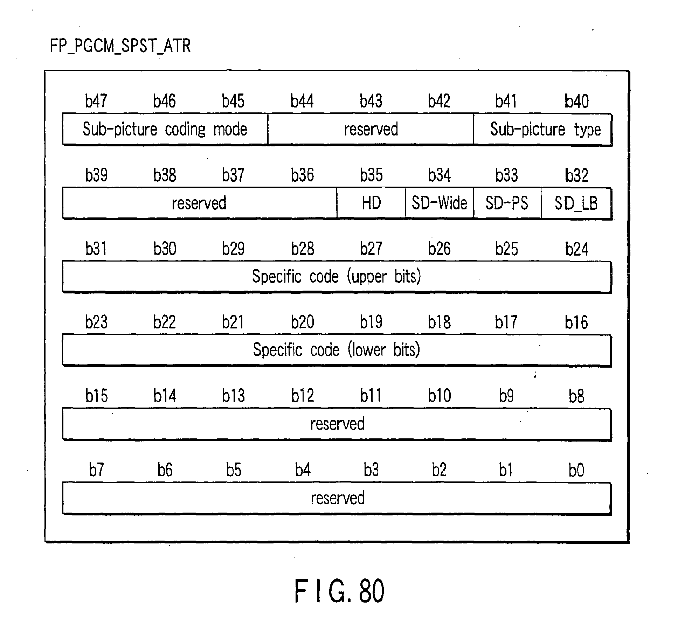

FIG. 80 shows the contents of the sub-picture stream attribute (FP_PGCM_SPST_ATR) of the FP_PGCM of FIG. 79.

Sub-picture coding mode (b47 to b45)···

000b : Run-length for 2 bits/pixel defined in 5.4.3 Sub-picture Unit. The value of PRE_HEAD is other than (0000h).

001b : Run-length for 2 bits/pixel defined in Sub-picture Unit. The value of PRE_HEAD is (0000h).

Others : reserved

HD (b35)···

When "Sub-picture coding mode" is '001b', this flag specifies whether HD stream exist or not.

0b : No stream exist

1b : Stream exist

SD-Wide (b34)···

When "Sub-picture coding mode" is '001b', this flag specifies whether SD Wide (16:9) stream exist or not.

0b : No stream exist

1b : Stream exist

SD-PS (b33)···

When "Sub-picture coding mode" is '001b', this flag specifies whether SD Pan-Scan (4:3) stream exist or not.

0b : No stream exist

1b : Stream exist

SD-LB (b32)···

When "Sub-picture coding mode" is '001b', this flag specifies whether SD Letterbox (4:3) stream exist or not.

0b : No stream exist

1b : Stream exist

Sub-picture type(b41, b40)···

01b : Language

Others : reserved

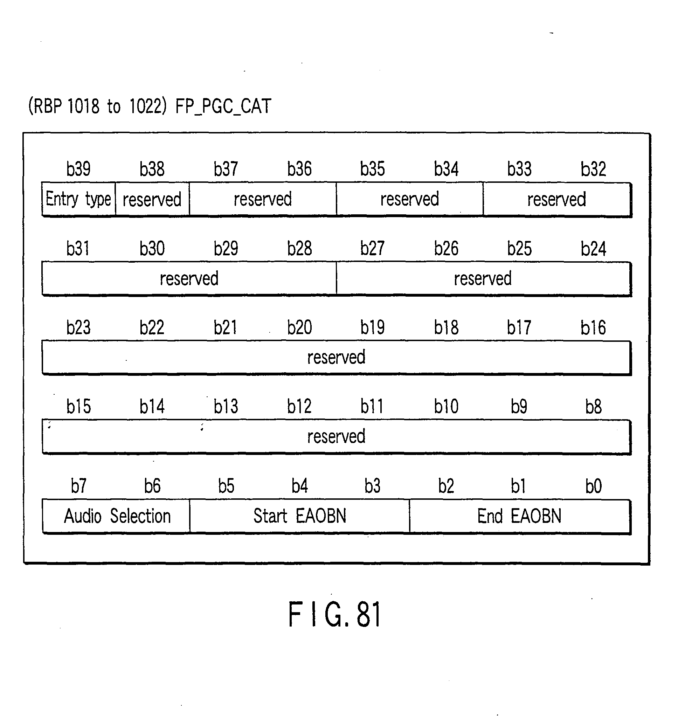

FIG. 81 shows contents of the FP_PGC category (FP_PGC_CAT) of FIG. 79.

Entry type (b39)···

1b : Entry PGC

Audio Selection (b7, b6)···

00b : Audio in EVOB specified by PGC is played back

01b : reserved

10b : Non-Sync audio (EAOB) which specified by Start EAOBN is played back continuously (ignore Audio in EVOB if any)

11b : The playback of Non-Sync audio (EAOB) which specified by Start EAOBN is started (ignore Audio in EVOB if any)

Start EAOBN (b5 to b3)···

When "Audio Selection" is '00b', then Start EAOBN has no meaning.

When "Audio Selection" is '10b' or '11b', then Start EAOBN is defined as:

000b : reserved

001b to 111b : Start EAOB number

Note : Start EAOBN shall be equal to or less than End EAOBN.

End EAOBN (b2 to b0)···

When "Audio Selection" is '00b', then End EAOBN has no meaning.

When "Audio Selection" is '10b' or '11b', then End EAOBN is defined as:

000b : reserved

001b to 111b : End EAOB number

Note 1 : When "Audio Selection" is '10b' or '11b', Non-Sync audio shall continue to playback repeatedly between Start and End EAOBN.

Note 2 : When "Audio Selection" is '10b', Start and End EAOBN shall be same as those of previous PGC respectively. Then, Non-Sync audio of between PGCs are presented seamlessly.

Note 3 : If Domain change occur, seamless playback is not guaranteed.

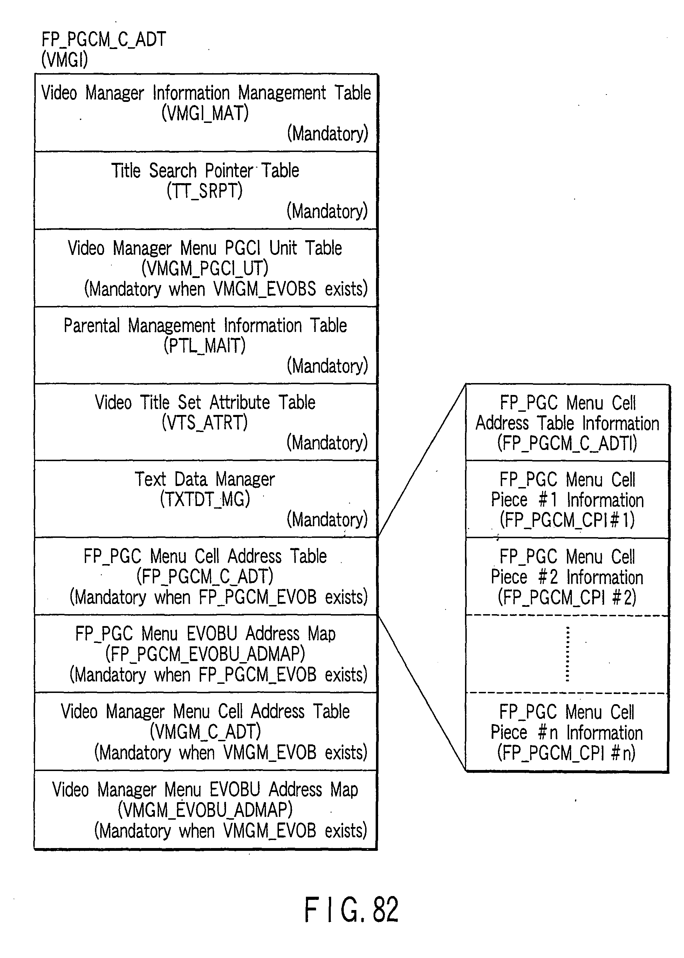

FIG. 82 shows a structure of an FP_PGC menu cell address table (FP_PGCM_C_ADT) in the VMGI.

This table describes the start and end addresses of all the cells in the FP_PGCM_EVOB. FP_PGC menu cell address table information (FP_PGCM_C_ADTI) is at the head of the FP_PGCM_C_ADT, and is followed by FP_PGC menu cell piece information (FP_PGCM_CPI) with respect to cell pieces. Continuous block sometimes exist in such a manner that the cell pieces equal the cells. These blocks are not interleaved. In the FP_PGCM_CPI of each cell piece, a playback order of the cell pieces in the cell follows: first EVOB_IDN; next C_IDN; and third cell pieces in the cell. The EVOB_IDN and C_IDN are identification numbers of the cells to which the cell pieces belong.

The video manager information (VMGI) comprises a video manager information management table (VMGI_MAT) (mandatory); a title search pointer table (TT_SRPT) (mandatory); a video manager menu PGCI unit table (VMGM_PGCI_UT) (mandatory, when the VMGM_EVOBS exists), a parental management information table (PTL_MAIT) (optional); a video title set attribute table (VTS_ATRT) (mandatory); a text data manager (TXTDT_MG) (optional); an FP_PGC menu cell address table (FP_PGCM_C_ADT) (mandatory, when the FP_PGCM_EVOB exists); an FP_PGC menu EVOBU address map (FP_PGCM_EVOBU_ADMAP) (mandatory, when the FP_PGCM_EVOB exists); a video manager menu cell address table (VMGM_C_ADT) (mandatory, when the VMGM_EVOBS exists); and a video manager menu EVOBU address map (VMGM_EVOBU_ADMAP) (mandatory, when the VMGM_EVOBS exists).

The FP_PGC menu cell address table (FP_PGCM_C_ADT) comprises FP_PGC menu cell address table information (FP_PGCM_C_ADTI); FP_PGC menu cell piece #1 information (FP_PGCM_CPI #1); FP_PGC menu cell piece #2 information (FP_PGCM_CPI #2); ... FP_PGC menu cell piece #n information (FP_PGCM_CPI #n).

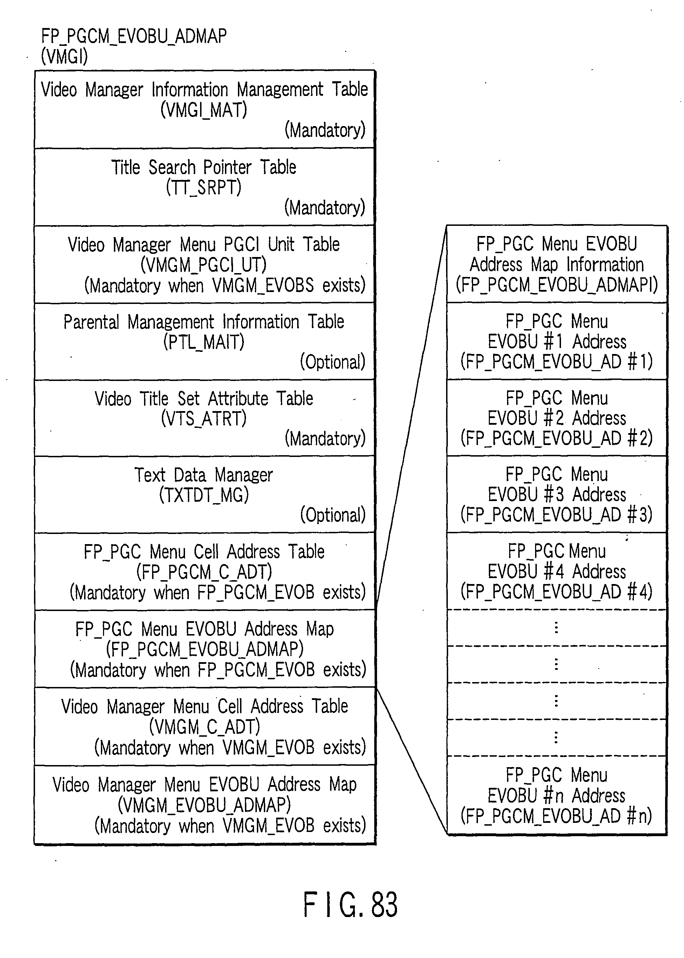

FIG. 83 shows a structure of an FP_PGC menu enhanced video object unit address map (FP_PGCM_EVOBU_ADMAP) in the VMGI.

On this map, the start addresses of all the EVOBUs in the FP_PGCM_EVOB are described in an ascending order of a logical block number (LBN). FP_PGC menu enhanced video object unit address map information (FP_PGCM_EVOBU_ADMAPI) is at the head of FP_PGCM_EVOBU_ADMAP, and is followed by FP_PGC menu enhanced video object unit #n address for each EVOBU (FP_PGCM_EVOBU_AD#n).

Next, a modification of the graphic unit will be described.

In a case where a DVD content is prepared from a movie, since the number of frames of the movie (24 frames/second) is different from that of frames per second in a television system, and frame conversion is performed. An NTSC television system has 30 frames/ second. As shown in FIG. 87, two frames of the movie are converted to five fields of NTSC (3:2 pull-down system).

The presentation start/end position in the contents is defined by a presentation time (PTM). However, since the PTS differs even with the same contents in the NTSC/PAL system, the PTS needs to be rewritten with respect to the contents of the NTSC/PAL system. However, the presentation start/end position may be designated by the frame number of the movie instead of the PTM. In this case, 3:2 pull-down is required, but there are merits that the only PTM at the head may be rewritten in the NTSC/pal system and that the contents can be processed.

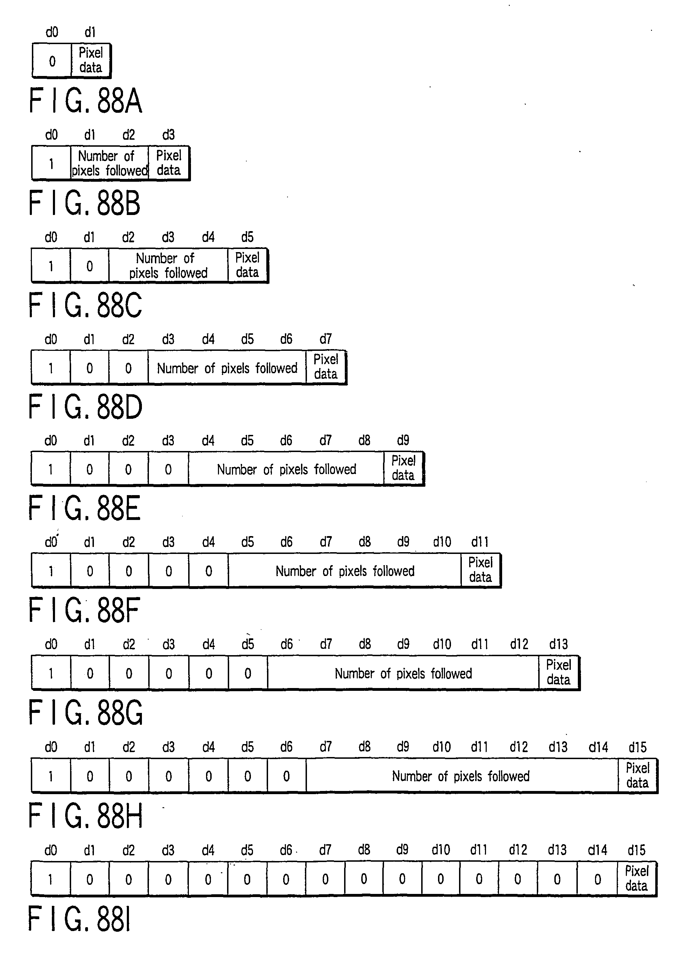

FIGS. 88A, 88B, 88C, 88D, 88E, 88F, 88G, 88H, and 88I show run length compression rules of button pattern data.

FIG. 88A: If no same value continues, specify '0' in the first bit, and the pixel data in the following a bit. The 2 bits are considered to be one unit.

FIG. 88B: If 2 to 3 pixels with the same value follow, specify '1' in the first bit, enter the number of the pixels in the following 2 bits and the pixel data in the following a bit. The 4 bits are considered to be one unit.

FIG. 88C: If 4 to 7 pixels with the same value follow, specify '1' in the first bit, specify '0' in the second bit, enter the number of the pixels in the following 3 bits and the pixel data in the last bit. The 6 bits are considered to be one unit.

FIG. 88D: If 8 to 15 pixels with the same value follow, specify '1' in the first bit, specify '0' in the next 2 bits, enter the number of the pixels in the following 4 bits and the pixel data in the last bit. The 8 bits are considered to be one unit.

FIG. 88E: If 16 to 31 pixels with the same value follow, specify '1' in the first bit, specify '0' in the next 3 bits, enter the number of the pixels in the following 5 bits and the pixel data in the last bit. The 10 bits are considered to be one unit.

FIG. 88F: If 32 to 63 pixels with the same value follow, specify '1' in the first bit, specify '0' in the next 4 bits, enter the number of the pixels in the following 6 bits and the pixel data in the last bit. The 12 bits are considered to be one unit.

FIG. 88G: If 64 to 127 pixels with the same value follow, specify '1' in the first bit, specify '0' in the next 5 bits, enter the number of the pixels in the following 7 bits and the pixel data in the last bit. The 14 bits are considered to be one unit.

FIG. 88H: If 128 to 255 pixels with the same value follow, specify '1' in the first bit, specify '0' in the next 6 bits, enter the number of the pixels in the following 8 bits and the pixel data in the last bit. The 16 bits are considered to be one unit.

FIG. 88I: If the same pixels follow to the end of a line, specify '1' in the first bit, specify '0' in the next 14 bits and describe the pixel data in the last bit. The 16 bits are considered to be one unit.

If the byte alignment is not accomplished when the description for pixels on one line is completed, insert dummy data from among the data; 2 bits '00b', 4 bits '0000b' or 6 bits '000000b' for adjustment.

Next, a modification of a sub-picture will be described.

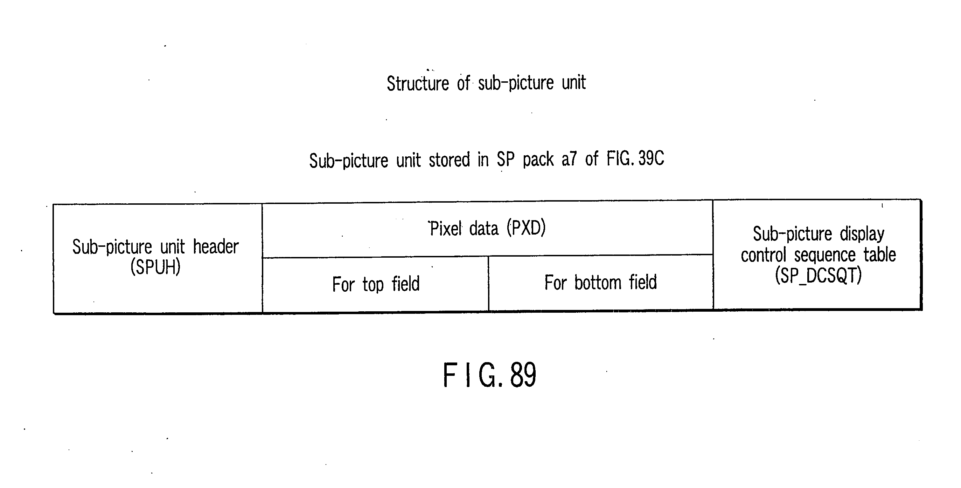

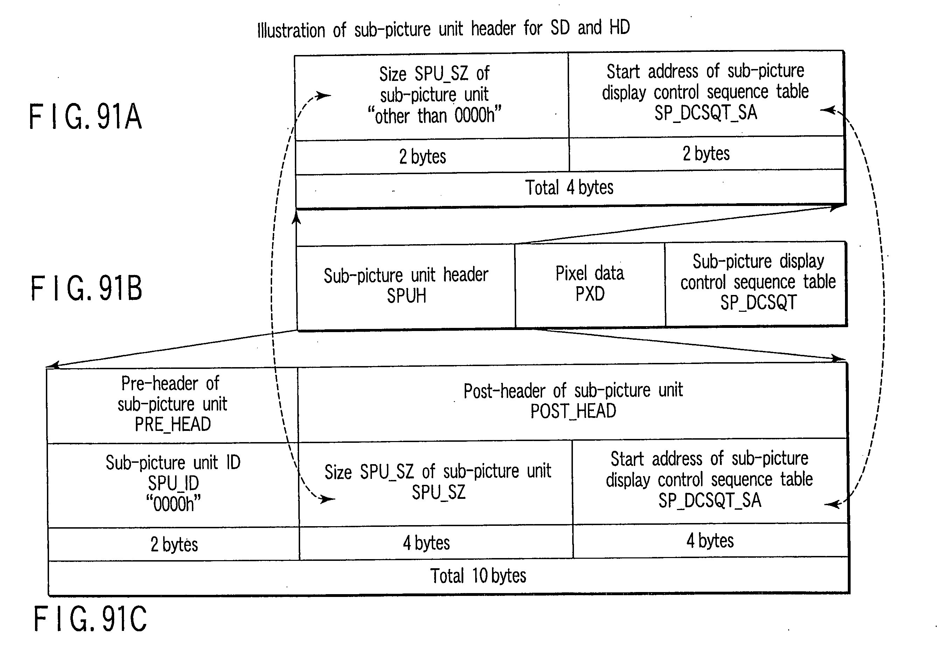

FIG. 89 shows a data structure in a sub-picture unit (SPU). Behind a sub-picture unit header (SPUH), a bit map screen of a sub-picture is subjected to run length compression (a part of a data compression technique), and the screen is recorded in a pixel data region (PXD). Further, behind this screen, a sub-picture display control sequence table (SP_DCSQT) is recorded in which information is recorded such as a display position, size, or timing, before the run length compression, of the sub-picture recorded in the pixel data region (PXD) with respect to a main picture screen of the bit map screen. As shown in FIG. 91A, a data structure in the sub-picture unit header (SPUH) for use in the existing SD-DVD content comprises size information (SPU_SZ) of a sub-picture unit, and sub-picture display control sequence table start address information (SP_DCSQT_SA), and each information is represented by two bytes.

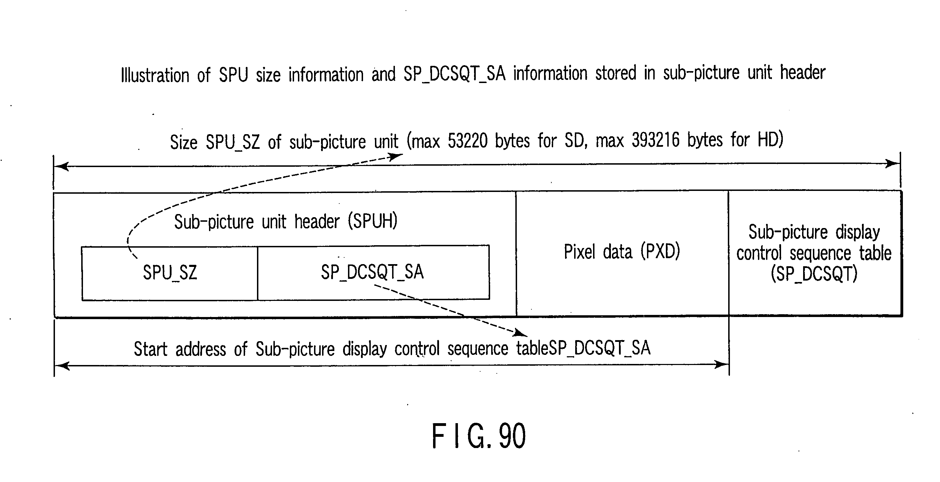

The definitions of the size information (SPU_SZ) of the sub-picture unit and the sub-picture display control sequence table start address information (SP_DCSQT_SA) are shown in FIG. 90. The sub-picture display control sequence table start address information (SP_DCSQT_SA) represents a relative address (data size) from a start position of the sub-picture unit header (SPUH) to a sub-picture display control sequence table start position. The size information (SPU_SZ) of the sub-picture unit represents the size of the whole sub-picture unit (SPU), and this value needs to be set to 53,220 bytes or less in the existing SD-DVD. The existing SD-DVD video specifications support an only standard definition (SD) image having a resolution of 480 lines × 720 pixels at maximum, for example, in National Television System Committee (NTSC). On the other hand, a high definition (HD) image having a high resolution of, for example, 1,080 lines × 1,920 pixels is supported as video information in the NTSC, and a sub-picture stream having the corresponding high resolution is to be recorded. In this case, a problem occurs that the stream does not enter the existing sub-picture unit (SPU) whose upper limit is defined as 53,220 bytes. Similarly, a size of the sub-picture display control sequence table (SP_DCSQT) in which information such as the display position of the sub-picture screen is recorded needs to be also increased. Therefore, as shown in FIG. 91C, in the sub-picture unit header (SPUH) corresponding to the HD, the size information (SPU_SZ) of the sub-picture unit is expanded to four-byte presentation from conventional two-byte presentation, and 393,216 bytes at maximum can be set. The sub-picture display control sequence table start address information (SP_DCSQT_SA) is also expanded to the four-byte presentation from the conventional two-byte presentation. Furthermore, the information is structured in such a manner as to aim at compatibility of the data structure with respect to the existing SD-DVD contents. That is, in the structure, the sub-picture unit headers (SPUHs) for the SD and the HD can be distinguished from each other by information of two bytes from the head of the sub-picture unit header (SPUH). When information other than '0000h' is recorded in the information of two bytes from the head of the sub-picture unit header (SPUH), the sub-picture unit header (SPUH) for the SD is identified, and it is recognized that the information of two bytes indicates the size information (SPU_SZ) of the sub-picture unit. Conversely, when the two-byte information is '0000h', the sub-picture unit header (SPUH) for the HD is identified, and the two-byte information is distinguished as ID information (SPU_ID) for the sub-picture unit for the HD, recorded in a pre-header (PRE_HEAD) of the sub-picture unit. In the sub-picture unit header (SPUH) for the HD, the size information (SPU_SZ) of the sub-picture unit and the sub-picture display control sequence table start address information (SP_DCSQT_SA) are recorded in a post-header (POST_HEAD) of the sub-picture unit.

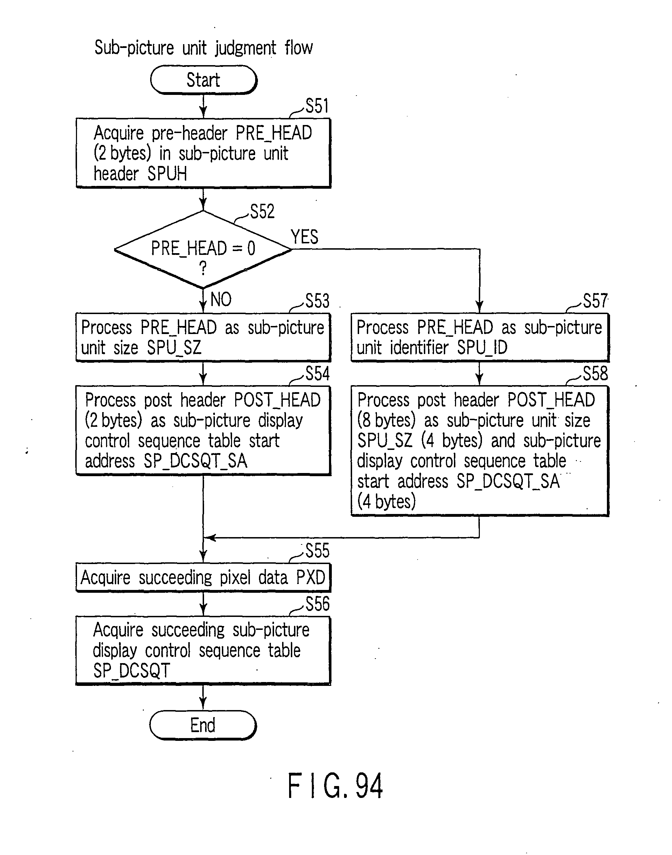

A flowchart for reproducing the sub-picture unit in accordance with the identified type based on the above-described contents is shown in FIG. 94.

First, a two-byte preceding header (PRE_HEAD) in the sub-picture unit header (SPUH) is acquired (S51), and it is determined whether or not the data in the PRE_HEAD is '0000h' (S52). When the data is other than '0000h', two-byte PRE_HEAD is processed as the sub-picture unit size (SPU_SZ) (S53), and a two-byte post-header (POST_HEAD) is processed as the sub-picture display control sequence table start address (SP_DCSQT_SA) (S54).

When the data in the PRE_HEAD is '0000h', the two-byte PRE_HEAD is process as a sub-picture unit identifier (SPU_ID) (S57), and an eight-byte post-header (POST_HEAD) is processed as a four-byte sub-picture unit size (SPU_SZ) and a four-byte sub-picture display control sequence table start address (SP_DCSQT_SA) (S58).

In either case, subsequently, after acquiring the succeeding pixel data (PXD) (S55), the succeeding sub-picture display control sequence table (SP_DCSQT) is acquired (S56).

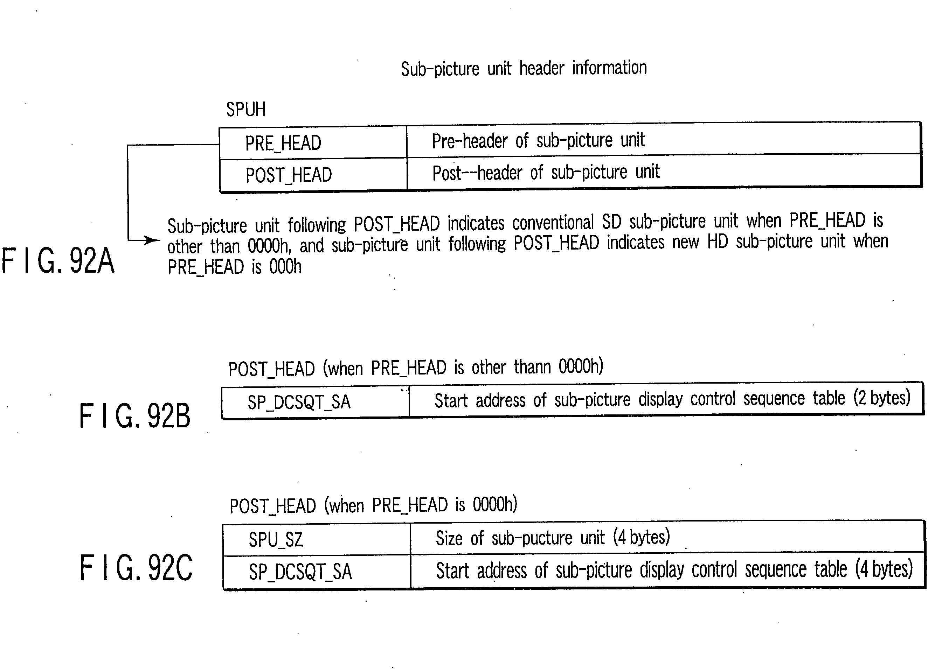

The data structure in the sub-picture unit header (SPUH) for the HD, shown in FIG. 91C, is re-drawn from another viewpoint, and shown in FIGS. 92A, 92B, and 92C.

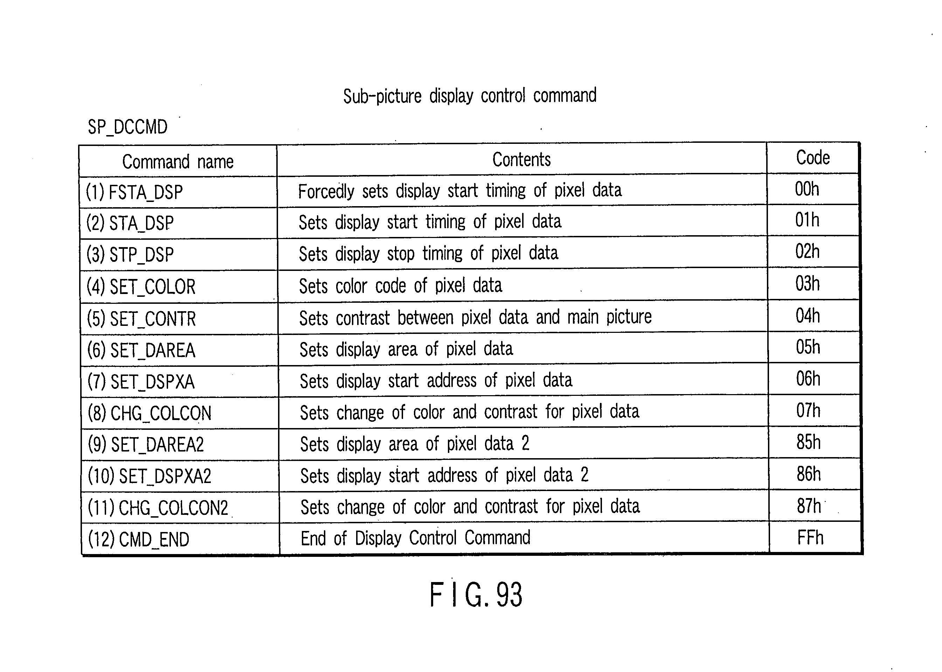

With respect to a list of sub-picture display control commands (SP_DCCMDs) recordable in the sub-picture display control sequence table (SP_DCSQT), as shown in FIG. 93, a display region of pixel data which is a command with respect to the sub-picture having a high resolution corresponding to an HD content is added as Setting 2 (SET_DAREA2), a display start address of the pixel data is added as Setting 2 (SET_DSPXA2), and changes of color and contrast of the pixel data are added as Setting 2 (CHG_COLCON2). The SET_DAREA2 which is Setting 2 of the display region of the pixel data is a command which designates a display range of the sub-picture bit map screen in the main picture screen in the same manner as in the SET_DAREA, and conditions for setting a designated value of the display range for the HD picture are added to those for the conventional SD picture. In the SET_DSPXA2 which is Setting 2 of the display start address of the pixel data, five-byte presentation (of the SET_DSPXA) is expanded to eight-byte presentation in such a manner that the display start position of the PXD data can be addressed/designated in accordance with the high resolution of the HD with a command to designate the display start address in the main picture screen of the sub-picture bit map screen in the same manner as in the SET_DSPXA. The CHG_COLCON2 which is Setting 2 of the changes of the color and contrast of the pixel data is a command which designates the changes of the color and contrast of the sub-picture bit map screen in the same manner as in the CHG_COLCON.

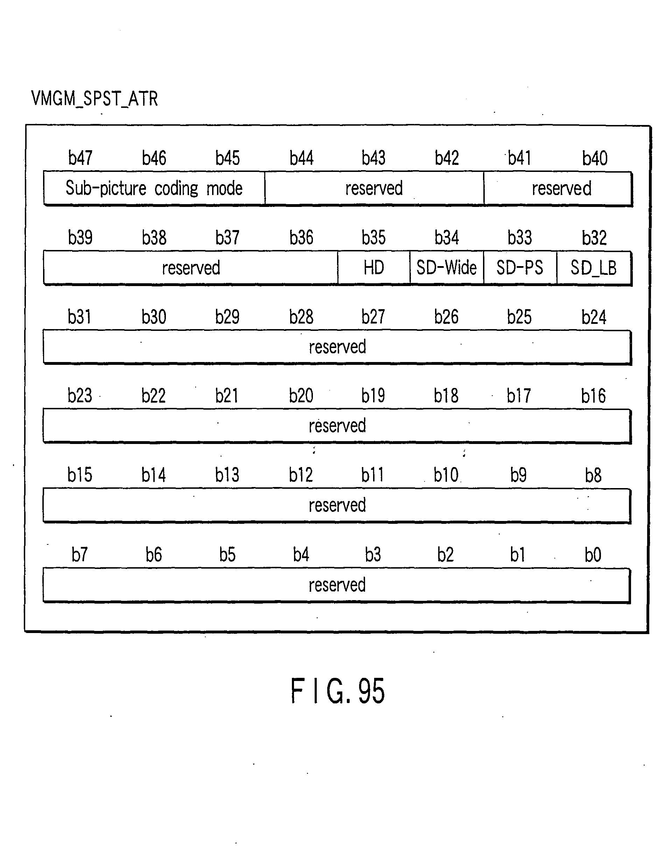

FIG. 95 shows contents of sub-picture stream attributes (VMGM_SPST_ATR) of the VMGM in the VMGI_MAT shown in FIG. 79.

Sub-picture coding mode (b47 to b45)···

000b : Run-length for 2 bits/pixel defined in Sub-picture Unit. The value of PRE_HEAD is other than (0000h).

001b : Run-length for 2 bits/pixel defined in Sub-picture Unit. The value of PRE_HEAD is (0000h).

Others : reserved

HD (b35)···

When "Sub-picture coding mode" is '001b', this flag specifies whether HD stream exist or not.

0b : No stream exist

1b : Stream exist

SD-Wide (b43)···

When "Sub-picture coding mode" is '001b', this flag specifies whether SD Wide (16:9) stream exist or not.

0b : No stream exist

1b : Stream exist

SD-PS (b33)···

When "Sub-picture coding mode" is '001b', this flag specifies whether SD Pan-Scan (4:3) stream exist or not.

0b : No stream exist

1b : Stream exist

SD-LB (b32)···

When "Sub-picture coding mode" is '001b', this flag specifies whether SD Letterbox (4:3) stream exist or not.

0b : No stream exist

1b : Stream exist

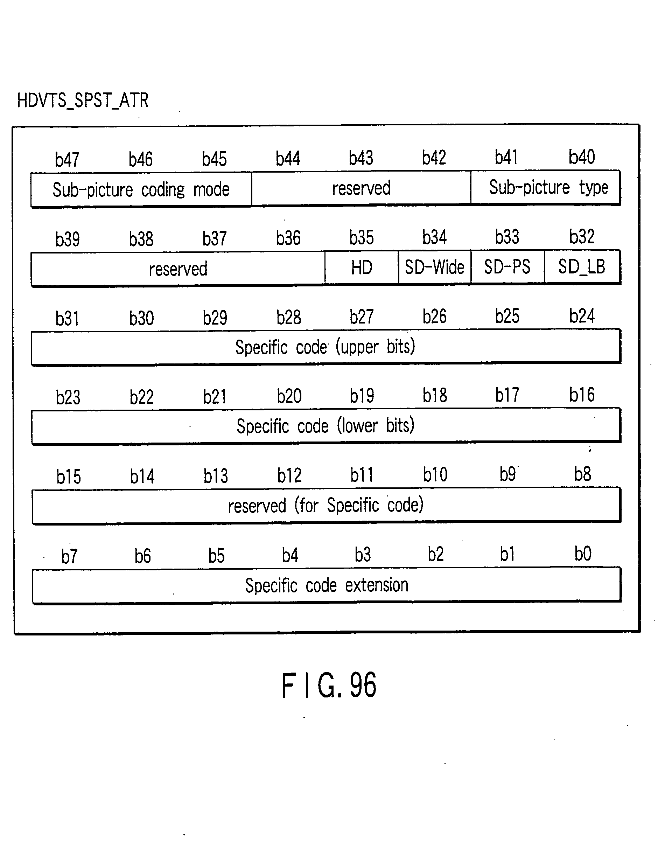

FIG. 96 shows contents of a sub-picture stream attribute (HDVTS_SPST_ATR) of the HDVTS in the HD video title set management information table (HDVTSI_MAT) shown in FIG. 21.

Sub-picture coding mode (b47 to b45)···

000b : Run-length for 2 bits/pixel defined in 5.4.3 Sub-picture Unit. The value of PRE_HEAD is other than (0000h).

001b : Run-length for 2 bits/pixel defined in 5.4.3 Sub-picture Unit. The value of PRE_HEAD is (0000h).

Others : reserved

Sub-picture type (b41, b40)···

00b : Not specified

01b : Language

Others : reserved

Note 1 : In a Title, there shall not be more than one Sub-picture stream which has Language Code extension (see Annex B) of Forced Caption (09h) among the Sub-picture streams which have the same Language Code.

Note 2 : The Sub-picture streams which has Language Code extension of Forced Caption (09h) shall have larger Sub-picture stream number than all other Sub-picture streams (which does not have Language Code extension of Forced Caption (09h)).

HD(b35)···

When "Sub-picture coding mode" is '001b', this flag specifies whether HD stream exist or not.

0b : No stream exist

1b : Stream exist

SD-Wide (b34)···

When "Sub-picture coding mode" is '001b', this flag specifies whether SD Wide (16:9) stream exist or not.

0b : No stream exist

1b : Stream exist

SD-PS (b33)···

When "Sub-picture coding mode" is '001b', this flag specifies whether SD Pan-Scan (4:3) stream exist or not.

0b : No stream exist

1b : Stream exist

SD-LB (b32)···

When "Sub-picture coding mode" is '001b', this flag specifies whether SD Letterbox (4:3) stream exist or not.

0b : No stream exist

1b : Stream exist

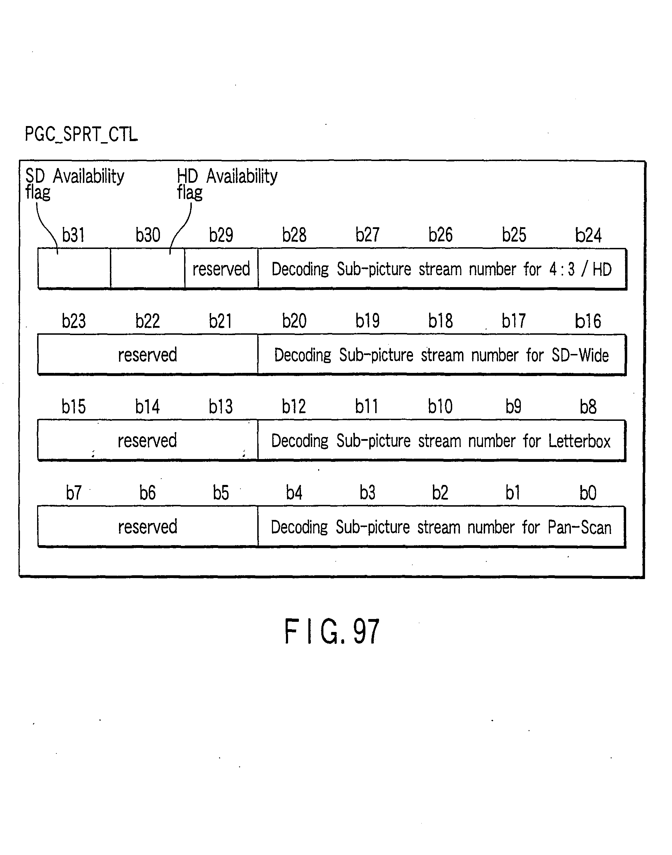

FIG. 97 shows contents of one piece of PGC sub-picture stream control information (PGC_SPST_CTL) in the PGC sub-picture stream control table (PGC_SPST_CTLT) shown in FIG. 34.

SD Availability flag (b31)···

1b : The SD Sub-picture stream is available in this PGC.

0b : The SD Sub-picture stream is not available in this PGC.

Note : For each Sub-picture stream, this value shall be equal in all TT_PGCs in the same TT_DOM, all VMGM_PGCs in the same VMGM_DOM or all VTSM_PGCs in the same VTSM_DOM.

HD Availability flag (b30)···

1b : The HD Sub-picture stream is available in this PGC.

0b : The HD Sub-picture stream is not available in this PGC.

When "Aspect ratio" in the current Video attribute (FP_PGCM_V_ATR, VMGM_V_ATR, VTSM_V_ATR or VTS_V_ATR) is '00b', this value shall be set to '0b'.

Note : For each Sub-picture stream, this value shall be equal in all TT_PGCs in the same TT_DOM, all VMGM_PGCs in the same VMGM_DOM or all VTSM_PGCs in the same VTSM_DOM.

Decoding Sub-picture stream number for 4:3/HD (b28 to b24)···

When "Aspect ratio" and "TV system" in the current Video attribute (FP_PGCM_V_ATR, VMGM_V_ATR, VTSM_V_ATR or VTS_V_ATR) is '00b', '00b' or '01b' respectively, and "SD Availability flag" is '1b', describes the least significant 5 bits of sub_stream_id for the corresponding Sub-picture stream number for 4:3.

When "Aspect ratio" and "TV system" in the current Video attribute (FP_PGCM_V_ATR, VMGM_V_ATR, VTSM_V_ATR or VTS_V_ATR) is '11b', '10b' or '11b' respectively, and "HD Availability flag" is '1b', describes the least significant 5 bits of sub_stream_id for the corresponding Sub-picture stream number for HD.

Otherwise, enter '00000b' but the value '00000b' does not specify the Decoding Sub-picture stream number '0'.

When this PGC is a PGC without EVOB, the value of Decoding Sub-picture stream number has no meaning."

Decoding Sub-picture stream number for SD-Wide (b20 to b16)···

When "Aspect ratio" in the current Video attribute (FP_PGCM_V_ATR, VMGM_V_ATR, VTSM_V_ATR or VTS_V_ATR) is '11b' and "SD Availability flag" is '1b', describes the least significant 5 bits of sub_stream_id for the corresponding Sub-picture stream number for SD-Wide.

Otherwise enter '00000b' but the value '00000b' does not specify the Decoding Sub-picture stream number '0'

When this PGC is a PGC without EVOB, the value of Decoding Sub-picture stream number has no meaning."

Decoding Sub-picture stream number for Letterbox (b12 to b8)···

When "Aspect ratio" and "Display mode" in the current Video attribute (FP_PGCM_V_ATR, VMGM_V_ATR, VTSM_V_ATR or VTS_V_ATR) is '11b', '00b' or '10b' respectively, and "SD Availability flag" is '1b', describes the least significant 5 bits of sub_stream_id for the corresponding Sub-picture stream number for Letterbox.

Otherwise, enter '00000b' but the value '00000b' does not specify the Decoding Sub-picture stream number '0'.

When this PGC is a PGC without EVOB, the value of Decoding Sub-picture stream number has no meaning.

Decoding Sub-picture stream number for Pan-scan (b4 to b0)···

When "Aspect ratio" and "Display mode" in the current Video attribute (FP_PGCM_V_ATR, VMGM_V_ATR, VTSM_V_ATR or VTS_V_ATR) is '11b', '00b' or '01b' respectively, and "SD Availability flag" is '1b' describes the least significant 5 bits of sub_stream_id for the corresponding Sub-picture stream number for Pan-scan.

Otherwise, enter '00000b' but the value '00000b' does not specify the Decoding Sub-picture stream number '0'.

When this PGC is a PGC without EVOB, the value of Decoding Sub-picture stream number has no meaning.

The coding conditions of Sub-picture bitstream which is used in each stream number shall be the same within a FP_PGCM_EVOB, VMGM_EVOBS, VTSM_EVOBS or VTSTT_EVOBS. As for exact definitions of the conditions, see corresponding field in FP_PGCM_SPST_ATR, VMGM_SPST_ATR, VTSM_SPST_ATR and VTS_SPST_ATR.

Following coding conditions of each Decoding Sub-picture stream shall be consistent with the attribute* of the Sub-picture stream which the Decoding Sub-picture stream is assigned to.

• Sub-picture coding mode

   * : FP_PGCM_SPST_ATR (in FP_PGC), VMGM_SPST_ATR (in PGC for VMGM), VTSM_SPST_ATR (in PGC for VTSM) or VTS_SPST_ATR (in PGC for Title)

   Note 1: When "Aspect ratio" and "TV system" in the current Video attribute (FP_PGCM_V_ATR, VMGM_V_ATR, VTSM_V_ATR or VTS_V_ATR) is '11b', '00b' or '01b' respectively, and "SD Availability flag" is '1b' and "HD Availability flag" is '0b', each Decoding Sub-picture stream number for SD-Wide, Letterbox and Pan-scan shall be described. When there are not three different Decoding Sub-picture stream numbers, The same Decoding Sub-picture stream number may be described.
   Note 2: When "SD Availability flag" is '1b' and "HD Availability flag" is '1b', the same number of Decoding Sub-picture stream number for HD may be used for each Decoding Sub-picture stream number for SD-Wide, Letterbox and Pan-scan.
   Note 3: When "Aspect ratio" and "TV system" in the current Video attribute (FP_PGCM_V_ATR, VMGM_V_ATR, VTSM_V_ATR or VTS_V_ATR) is '11b', '10b' or '11b' respectively and "HD Availability flag" is '0b', "SD Availability flag" shall be set to '0b'.
   Note 4: When "Aspect ratio" and "TV system" in the current Video attribute (FP_PGCM_V_ATR, VMGM_V_ATR, VTSM_V_ATR or VTS_V_ATR) is '11b', '00b' or '01b' respectively, "HD Availability flag" shall be set to '0b' and the Decoding Sub-picture stream number for HD shall not be described.

Common Note for PGC_AST_CTLT and PGC_SPST_CTLT: "stream number" described in the book (VMGI, VTSI, other part of PGCI, Navigation Commands) does not specify actual stream_id or sub_stream_id. However, in all the EVOBs presentation, "stream number" shall be converted to Decoding stream number by this PGC_AST_CTLT / PGC_SPST_CTLT and set to De-multiplexer or the Audio / Sub-picture Decoder.

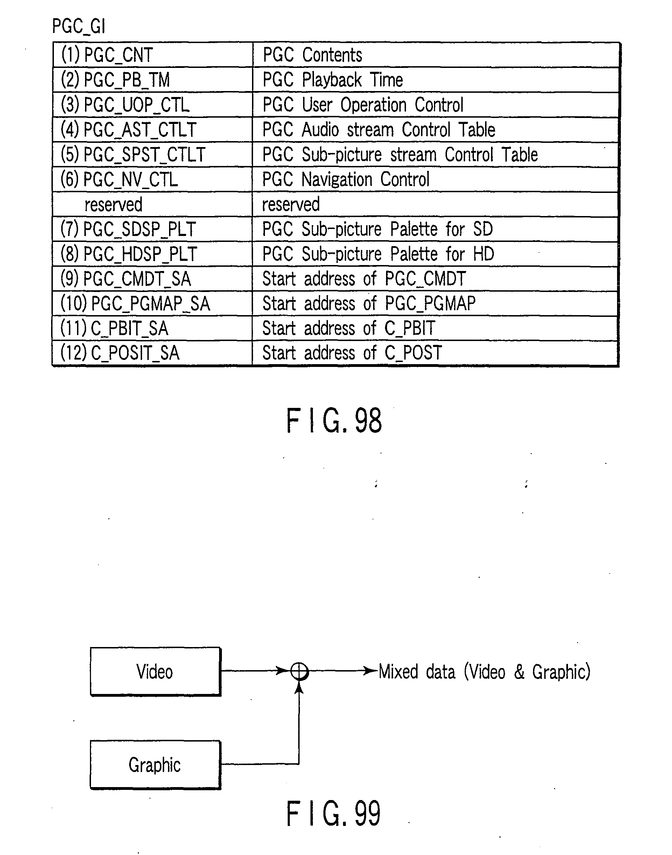

A modification of the PGC_GI shown in FIG. 33 is shown in FIG. 98. The PGC_GI is information of the PGC, and the contents include the following:

   (1) PGC_CNT: PGC contents

(2) PGC_PB_TM: time, minute, second, total presentation time of the program in the PGC, counted in a frame in a BCD format (based on a video time code system defined by tc_flag)

(3) PGC_UOP_CTL: PGC user operation time (the user operation is inhibited, when the PGC is played back)

(4) PGC_AST_CTLT: PGC audio stream control table. The availability flag of the audio stream, and conversion information into the decoding audio stream number from the audio stream number are described as follows.

The PGC_AST_CTLT comprises eight PGC_AST_CTLs. One PGC_AST_CTL is described for each audio stream. When the audio stream number is less than 8, '0b' is input into each bit of the PGC_AST_CTL of an unused stream.

(5) PGC_SPST_CTLT: PGC sub-picture stream control table. The availability flag of the sub-picture stream, and conversion information into the decoding sub-picture stream number from the sub-picture stream number are described as follows.

The PGC_SPST_CTLT comprises 32 PGC_SPST_CTLs. One PGC_SPST_CTL is described for each sub-picture stream. When the sub-picture stream number is less than 32, '0b' is input into each bit of the PGC_SPST_CTL of the unused stream.

(6) PGC_NV_CTL: PGC navigation control

Next_PGCN describes the PGCN played back after the PGC. Previous_PGCN describes LinkPrevPGC command, or PGCN referred to by PrevPG_Search(). When two or more PGCNs are played back next, one of the PGCNs is described. GoUp_PGCN describes the PGCN restored from the PGC.

When the PGC corresponding to Next_PGCN, Prev_PGCN, or GoUp_PGCN does not exist, '0b' is described in the corresponding field.

(7) PGC_SDSP_PLT: PGC sub-picture pallet for SD

16 sets of luminance signals and two color difference signals for use in common to all the SD sub-picture streams in the PGC are described. Color codes from '0' to '15' are described.

(8) PGC_HDSP_PLT: PGC sub-picture pallet for HD

16 sets of luminance signals and two color difference signals for use in common to all the HD sub-picture streams in the PGC are described. The color codes from '0' to '15' are described.

(9) PGC_CMDT_SA: start address of PGC_CMDT

The start address of the PGC_CMDT is described in a relative byte number (RBN) from the first byte of the PGCI. When the PGC_CMDT does not exist, '0000h' is input.

(10) PGC_PGMAP_SA: start address of PGC_PGMAP

The start address of the PGC_PGMAP is described in the relative byte number (RBN) from the first byte of the PGCI. When the PGC_PGMAP does not exist, '0000h' is input.

(11) C_PBIT_SA: start address of C_PBIT

The start address of the C_PBIT is described in the relative byte number (RBN) from the first byte of the PGCI. When the C_PBIT does not exist, '0000h' is input.

(12) C_POSIT_SA: start address of C_POSIT

The start address of the C_POSIT is described in the relative byte number (RBN) from the first byte of the PGCI. When the C_POSIT does not exist, '0000h' is input.

Next, a modification for the SD will be described.

There is a problem that color matrixes for the SD and the HD cannot be set to the PGC together. Therefore, a pallet table (PGC_SP_PLT) is divided:

1) PGC_SDSP_PLT in which the color matrix for the SD is used; and
2) PGC_HDSP_PLT in which the color matrix for the HD is used.

The number of pallets and a size of each pallet are equal in two pallet tables.

Next, a reference model of a player for SD outputs will be described. The player has a function of converting the display mode to an SDTV system from an HDTV system, and mixing video data, graphic data, and sub-picture data. Assumption conditions for the player reference model are as follows:

1) A resolution of the graphic data is equal to that of the video data; and
2) The graphic data (if any) is first mixed with the video data.

FIG. 99 shows a basic player reference model.

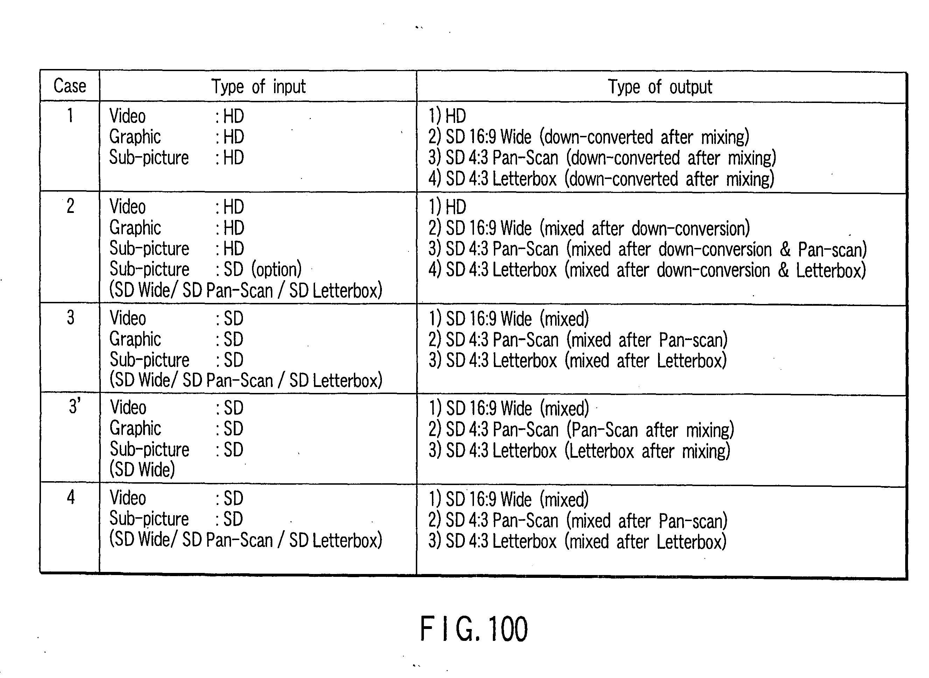

FIG. 100 shows types of the player reference model. There are four types of player reference models for SD outputs in accordance with combinations of input and output types.

Case 1: The input types are video: HD, graphic: HD, and sub-picture: HD, and the output types are (1) HD, (2) SD 16:9 Wide (down-converted after mixing), (3) SD 4:3 Pan-Scan (down-converted after the mixing), and (4) SD 4:3 Letterbox (down-converted after the mixing).

Case 2: The input types are video: HD, graphic: HD, sub-picture: HD, sub-picture: SD (option), and (SD Wide/SD Pan-Scan/SD Letterbox), and the output types are (1) HD, (2) SD 16:9 Wide (mixed after down-conversion), (3) SD 4:3 Pan-Scan (mixed after down-conversion & Pan-Scan), and (4) SD 4:3 Letterbox (mixed after down-conversion & Letterbox).

Case 3: The input types are video: SD, graphic: SD, sub-picture: SD, sub-picture: SD (option), and (SD Wide/SD Pan-Scan/SD Letterbox), and the output types are (1) SD 16:9 Wide (mixed), (2) SD 4:3 Pan-Scan (mixed after Pan-Scan), and (3) SD 4:3 Letterbox (mixed after Letterbox).

Case 3': The input types are video: SD, graphic: SD, sub-picture: SD, and (SD Wide), and the output types are (1) SD 16:9 Wide (mixed), (2) SD 4:3 Pan-Scan (Pan-Scan after mixed), and (3) SD 4:3 Letterbox (Letterbox after mixing).

Case 4: The input types are video: SD, sub-picture: SD, and (SD Wide/SD Pan-Scan/SD Letterbox), and the output types are (1) SD 16:9 Wide (mixed), (2) SD 4:3 Pan-Scan (mixed after Pan-Scan), and (3) SD 4:3 Letterbox (mixed after Letterbox).

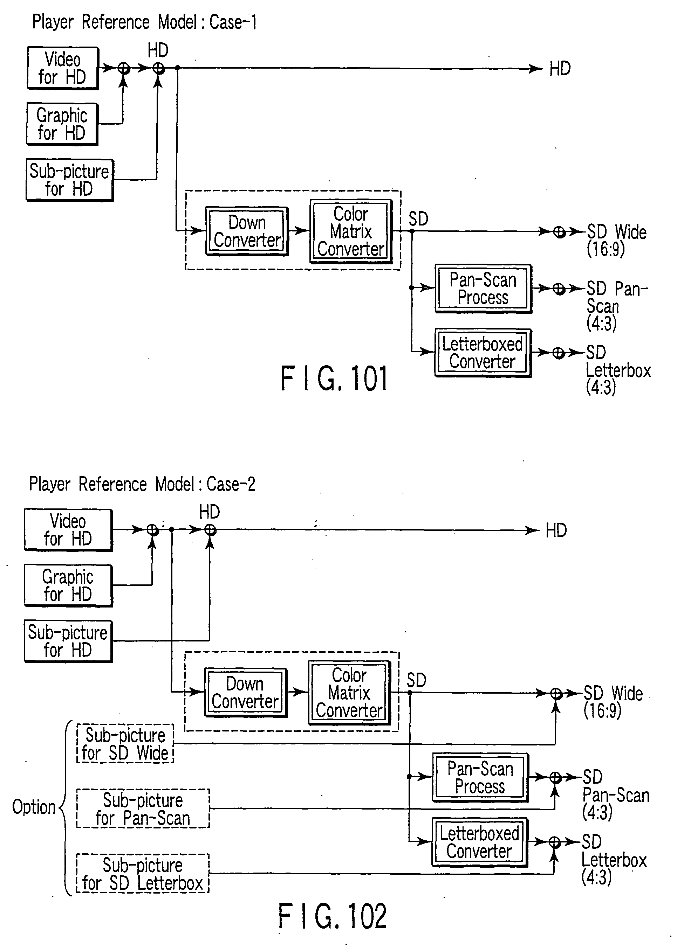

The player reference model of Case 1 is shown in FIG. 101. In this model, after mixing the video data for the HD with the graphic data for the HD, the sub-picture for the HD is mixed. After the mixed data is down converted, the data is divided into SD Wide, SD Pan-Scan, and SD Letterbox.

The player reference model of Case 2 is shown in FIG. 102. In this model, after mixing the video data for the HD with the graphic data for the HD, the data is converted down, and divided into SD Wide, SD Pan-Scan, and SD Letterbox. It is to be noted that the SD Wide, SD Pan-Scan, and SD Letterbox data are arbitrarily mixed with SD Wide, SD Pan-Scan, and SD Letterbox sub-pictures.

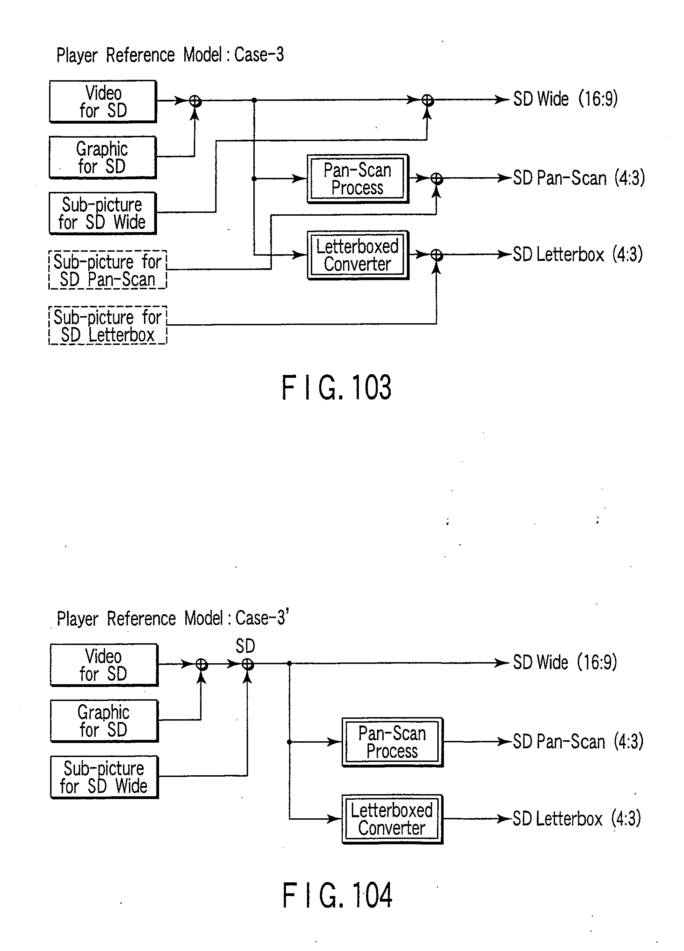

The player reference model of Case 3 is shown in FIG. 103. In this model, after mixing the video data for the SD with the graphic data for the SD, the data is divided into SD Pan-Scan, and SD Letterbox data. It is to be noted that the SD Pan-Scan and SD Letterbox data are arbitrarily mixed with the sub-pictures for the SD Pan-Scan and SD Letterbox. After mixing the video data for the SD with the graphic data for the SD, the sub-picture for the SD Wide is further mixed, and SD Wide is produced.

The player reference model of Case 3' is shown in FIG. 104. In this model, after mixing the video data for the SD with the graphic data and sub-picture data for the SD, the data is divided into the SD Wide, SD Pan-Scan, and SD Letterbox.

The player reference model of Case 4 is shown in FIG. 105. In this model, there is not any graphic data, and the video data for the SD is mixed with the sub-picture data for the SD Wide to produce the SD Wide. The video data for the SD is divided into the SD Pan-Scan, and SD Letterbox. It is to be noted that the SD Pan-Scan and SD Letterbox data are mixed with the sub-pictures for the SD Pan-Scan and SD Letterbox.

Next, resume commands/cell commands will be described.

A program chain command table PGC_CMDT describes program chain/command table information (PGC_CMDTI), a pre-command (PRE_CMD) and a post-command (POST_CMD) of the PGC, a cell command (C_CMD), and a resume command (RSM_CMD).

The number i of the pre-commands (PRE_CMDs), the number j of the post-commands (POST_CMD), the number k of the cell commands (C_CMD), and the number m of the resume commands (RSM_CMDs) have the following relation:

$$i + j + k + m < 1023.$$

Program chain/command table information (PGC_CMDTI) describes PRE_CMD_Ns: the number of pre-commands (PRE_CMDs), POST_CMD_Ns: the number of post-commands (POST_CMDs), C_CMD_Ns: the number of cell commands (C_CMDs), RSM_CMD_Ns: the number of resume commands (RSM_CMDs), PGC_CMDT_EA: end address of the program chain command table (PGC_CMDT).

RSM_CMD_Ns: The number of resume commands (RSM_CMDs) (FIG. 36) is described using numbers between '0' and '1023'.

Note: The TT_PGC having an RSM permission flag of '0b' has this command area. When the RSM permission flag is '1b', the TT_PGC, EP_PGC, VMGM_PGC, or VTSM_PGC does not have any command area. This field is set to '0'.

The resume command (RSM_CMD) (FIG. 36) describes the command performed before resuming the PGC. The last command of the RSM_CMD is an interruption (break) command.

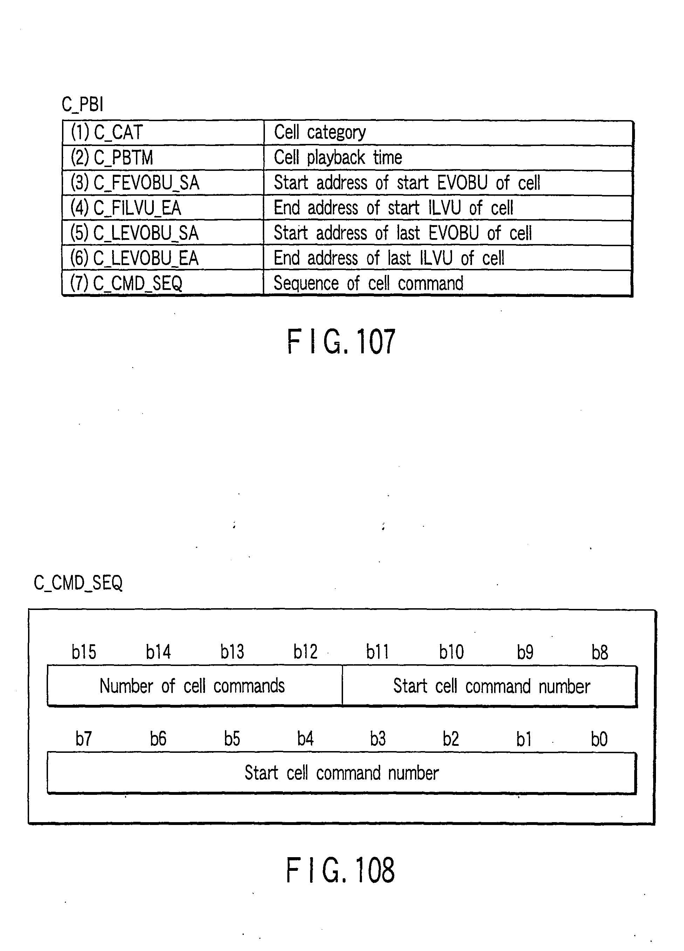

FIG. 107 shows a modification of the cell playback information (C_PBI) shown in FIG. 38. Here, C_PBI includes the following.

(1) C_CAT: cell category
(2) C_PBTM: cell playback time
(3) C_FEVOBU_SA: start address of the first EVOBU of the cell
(4) C_FILVU_EA: end address of the first ILVU of the cell
(5) C_LEVOBU_SA: start address of the last EVOBU of the cell
(6) C_LILVU_EA: end address of the last ILVU of the cell
(7) C_CMD_SEQ: sequence of the cell commands

FIG. 108 shows contents of the cell command sequence (C_CMD_SEQ) which describes the information of the sequence of the cell commands shown in FIG. 107. The C_CMD_SEQ includes the following:

Cell command number (b15 to b12)

The number of the cell commands successively executed from the start cell command number in the cell is described by the number between '0' and '8'. The value '0' indicates that there is not any cell command executed in the cell.

Start cell command number (b11 to b0)

The start number of the cell command executed in the cell is described by the number between '0' and '1023'. The value '0' indicates that there is not any cell command executed in the cell.

Note: When a seamless presentation flag in C_CAT is '1b', and one or more cell commands exist in the previous cell, the presentation of the previous cell and the current cell becomes seamless. The command of the previous cell is executed within 0.5 second from the start of the presentation of the cell. When the command includes a command to branch the presentation, the presentation of the cell ends, and new presentation starts in response to the command.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, some constituting elements may be deleted from all the constituting elements described in the embodiments. Furthermore, the constituting elements in the different embodiments may be appropriately combined.

Although the present invention has been described using a DVD as an example for the realization of the present invention it should be stressed that the present invention is not limited to this kind of information storage medium and that other kinds of information storage media not fulfilling the DVD specification can be used to implement the concept of the present invention as well.

**Claims**

1. An information storage medium which records a video manager (HDVMG 30), **characterized in that** the video manager (HDVMG 30) records an audio object set (HDMENU_AOBS 33) for menu comprising a header information recording area (AOB_HI) and data recording area (AOB) and the header information recording area records entry points (AOB_EP) determining a playback range of the audio object.

2. The information storage medium according to claim 1, **characterized in that** the header information recording area stores start addresses of the entry points.

3. An information storage medium which records a video manager program chain category information (HDVMG_PGC_CAT), **characterized in that** the video manager program chain category information (HDVMG_PGC_CAT) records an audio selection flag (Audio information selection) designating whether an audio object or an audio in a video object is to be played back is recorded.

4. The information storage medium according to claim 3, **characterized in that** the video manager program chain category information records a start address of playback of the audio object and an end address of playback of the audio object.

5. An information reproduction apparatus for reproducing an information storage medium which records a video manager (HDVMG 30) in which an audio object set (HDMENU_AOBS 33) for menu comprising a header information recording area (AOB_HI) and data recording area (AOB) is recorded and a video manager program chain category information (HDVMG_PGC_CAT) in which an audio selection flag (Audio information selection) designating whether an audio object or an audio in a video object is to be played back is recorded, the apparatus **characterized by** comprising:

   means for acquiring the audio selection flag (Audio information selection) from the video manager program chain category information (HDVMG_PGC_CAT); and
   means for playing back the audio based on the acquired audio selection flag (Audio information selection).

6. The information reproduction apparatus according to claim 5, **characterized in that** the video manager program chain category information records a start address of playback of the audio object and an end address of playback of the audio object; and
   the playing back means plays back a portion of the audio object between the start address of playback of the audio object and the end address of playback of the audio object when the audio selection flag designates that the audio object is to be played back.

7. The information reproduction apparatus according to claim 6, **characterized in that** when the audio selection flag designates that the audio object is to be played back, the start address of playback of the audio object is not 0, and the end address of playback of the audio object is 0, the playing back means repeatedly plays back the portion of the audio object between the start address of playback of the audio object and the end address of playback of the audio object.

8. The information reproduction apparatus according to claim 6, **characterized by** further comprising means for measuring a playback time of the audio object.

9. An information reproduction method for reproducing an information storage medium which records a video manager (HDVMG 30) in which an audio object set (HDMENU_AOBS 33) for menu comprising a header information recording area (AOB_HI) and data recording area is recorded and a video manager program chain category information (HDVMG_PGC_CAT) in which an audio selection flag (Audio information selection) designating whether an audio object or an audio in a video object is to be played back is recorded, the method **characterized by** comprising steps of:

acquiring the audio selection flag (Audio information selection) from the video manager program chain category information (HDVMG_PGC_CAT); and
playing back the audio based on the acquired audio selection flag.

10. The information reproduction method according to claim 9, **characterized in that** the video manager program chain category information (HDVMG_PGC_CAT) records a start address of playback of the audio object and an end address of playback of the audio object; and
the playing back step plays back a portion of the audio object between the start address of playback of the audio object and the end address of playback of the audio object when the audio selection flag designates that the audio object is to be played back.

11. The information reproduction method according to claim 9, **characterized in that** when the audio selection flag (Audio information selection) designates that the audio object is to be played back, the start address of playback of the audio object is not 0, and the end address of playback of the audio object is 0, the playing back step repeatedly plays back the portion of the audio object between the start address of playback of the audio object and the end address of playback of the audio object.

12. An information storage medium in which an audio object for background is recorded, **characterized in that** the audio object for background comprises at least one elementary audio object and a playback range in the audio object is designated by designating an elementary audio object number.

13. An information reproducing apparatus for reproducing an information storage medium in which an audio object for background comprising at least one elementary audio object is recorded, the apparatus **characterized by** comprising:

means for designating an elementary audio object number to designate a playback range in the audio object; and
means for playing back the audio object in the playback range.

14. An information reproducing method for reproducing an information storage medium in which an audio object for background comprising at least one elementary audio object is recorded, the method **characterized by** comprising steps of:

designating an elementary audio object number to designate a playback range in the audio object; and
playing back the audio object in the playback range.

Disc-shaped information storage medium 1

## FIG. 1A

## FIG. 1B

| 10 | 11 | 12 | 13 |
|---|---|---|---|
| Lead-in area | Volume/file structure information area | Data area | Lead-out area |

## FIG. 1C

| 20 | 21 | 22 |
|---|---|---|
| Video data recording area | Other video data recording area | General computer information recording area |

## FIG. 1D

| 30 | 40 | 40 | | 40 |
|---|---|---|---|---|
| HD video manager (HDVMG) | HD video title set #1 (HDVTS#1) | HD video title set #2 (HDVTS#2) | ‥‥‥ | HD video title set #n (HDVTS#n) |

| | |
|---|---|
| HD video manager information (HDVMGI) | ～31 |
| Language selection menu VOBS for first play PGC (FP_PGCM_VOBS) | ～35 |
| Video object set for HD video manager menu (HDVMGM_VOBS) | ～32 |
| Audio object set for HD video manager menu (HDMENU_AOBS) | ～33 |
| Back up of HD video manager information (HDVMGI_BUP) | ～34 |

## FIG. 1E

| | |
|---|---|
| HD video title set information (HDVTSI) | 41～ |
| Video object set for HD video title set menu (HDVTSM_VOBS) | 42～ |
| Video object set for HD video title set title (HDVTSTT_VOBS) | 43～ |
| Back up of HD video title set (HDVTSI_BUP) | 44～ |

## FIG. 1F

ROOT

Disc-shaped
information
storage medium
1

VIDEO_TS

| VIDEO_TS.IFO |
| VIDEO_TS.VOB |
| VTS_01_0.IFO |
| VTS_01_0.VOB |
| VTS_01_1.VOB |
| VTS_01_2.VOB |

File group of DVD
video standards

VIDEO_HD

| HD_VMG00.HDI | ···File of HDVMGI 31 |
| HD_FPPGC.HDV | ···File of FP_PGCM_ VOBS 35 |
| HD_VMG01.HDV | ···Files #1 to #n of HDVMGM_VOBS 32 |
| HD_MENU0.HDA | ···File #1 of HDMENU_ AOBS 33 |
| HD_VMG00.BUP | ···File of HDVMGI_BUP 34 (backup file) |
| VTS00100.IFO | ···File of HDVTSI (#1) 41 |
| VTS00100.HDV | ···File of HDVTSM_ VOBS (#1) 42 |
| VTS00101.HDV | ···File #1 of HDVTSTT_ VOBS (#1) 43 |
| VTS00102.HDV | |
| ⋮ | Files #2 to #n of HDVTSTT_VOBS (#1) 43 |
| VTS0010n.HDV | |
| VTS00100.BUP | ···HDVTSI (#1)_BUP 44 (backup file) |

FIG.2

HD video manager (HDVMG) 30

| | | | |
|---|---|---|---|
| HD video manager information (HDVMGI) | ~31 | HD video manager information management table (HDVMGI_MAT) | ~310 |
| Language selection menu VOBS for first play PGC (FP_PGCM_VOBS) | ~31A | Title search pointer table (TT_SRPT) | ~311 |
| Video object set for HD video manager menu (HDVMGM_VOBS) | ~32 | HD video manager menu PGCI unit table (HDVMGM_PGCI_UT) | ~312 |
| Audio object set for HD video manager menu (HDMENU_AOBS) | ~33 | Parental management information table (PTL_MAIT) | ~313 |
| Back up of HD video manager information (HDVMGI_BUP) | ~34 | HD video title set attribute table (HDVTS_ATRT) | ~314 |
| | | Text data manager (TXTDT_MG) | ~315 |
| | | HD video manager menu cell address table (HDVMGM_C_ADT) | ~316 |
| | | HD video manager menu video object unit address map (HDVMGM_VOBU_ADMAP) | ~317 |
| | | HD menu audio object set information table (HDMENU_AOBSIT) | ~318 |

# FIG. 3

HDVMGI_MAT

310

HD video manager information management table (HDVMGI_MAT)

| HDVMG_ID | HD video manager identifier |
|---|---|
| HDVMG_EA | End address of HD video manager |
| HDVMGi_EA | End address of HD video manager information |
| VERN | Version number of HD-DVD video standards |
| HDVMG_CAT | HD video manager category |
| VLMS_ID | Volume set identifier |
| ADP_ID | Adaptation identifier |
| HDVTS_Ns | Number of HD video title sets |
| PVR_ID | Identifier unique to provider |
| POS_CD | POS code |
| HDVMGI_MAT_EA | End address of HD video manager management information table |
| FP_PGCI_SA | Start address of first play program chain information |
| HDVMGM_VOBS_SA | Start address of HDVMGM_VOBS |
| HDMENU_AOBS_SA | Start address of HDVMGM_AOBS |
| TT_SRPT_SA | Start address of TT_SRPT |
| HDVMGM_PGCI_UT_SA | Start address of HDVMGM_PGCI_UT |
| PTL_MAIT_SA | Start address of PTL_MAIT |
| HDVTS_ATRT_SA | Start address of HDVTS_ATRT |
| TXTDT_MG_SA | Start address of TXTDT_MG |
| HDVMGM_C_ADT_SA | Start address of HDVTSM_C_ADT |
| HDVMGM_VOBU_ADMAP_SA | Start address of HDVTSM_VOBU_ADMAP |
| HDMENU_AOBSIT_SA | Start address of information table HDVMGM_AOBS |
| HDVMGM_V_ATR | Video attribute of HDVMGM |
| HDVMGM_AST_Ns | Number of HDVMGM audio streams |
| HDVMGM_AST_ATR | Attribute of HDVMGM audio stream |
| HDVMGM_SPST_Ns | Number of HDVMGM sub-picture streams |
| HDVMGM_SPST_ATR | Attribute of HDVMGM sub-picture stream |
| HDVMGM_GUST_Ns | Number of HDVMGM graphic unit streams |
| HDVMGM_GUST_ATR | Attribute of HDVMGM graphic unit stream |
| FP_PGCI | First play PGCI |

FIG. 4

311

| Title search pointer table (TT_SRPT) |
|---|

| | |
|---|---|
| Title search pointer table information (TT_SRPTI) | ~311a |
| Title search pointer #1 (TT_SRP#1) | ~311b |
| Title search pointer #2 (TT_SRP#2) | ~311b |
| ⋮ | |
| Title search pointer #n (TT_SRP#n) | |

311b

TT_SRPTI

| TT_SRP_Ns | Number of title search pointers |
|---|---|
| TT_SRPT_EA | End address of TT_SRPT |

TT_SRP

| TT_PB_TY | Title playback type |
|---|---|
| AGL_Ns | Number of angles |
| PTT_Ns | Number of Part_of_Titles (PTTs) |
| TT_PTL_ID_FLD | Parental_ID_Field for title |
| HDVTSN | HDVTS number |
| HDVTS_TTN | HDVTS title number |
| HDVTS_SA | Start address of present HDVTS |

FIG.5

**HDVMGM_PGCI_UT**

| | |
|---|---|
| HD video manager menu program chain information unit table information (HDVMGM_PGCI_UTI) | ~312a |
| HD video manager menu language unit search pointer #1 (HDVMGM_LU_SRP#1) | ~312b |
| ⋯ | |
| HD video manager menu language unit search pointer #n (HDVMGM_LU_SRP#n) | ~312b |
| HD video manager menu language unit #1 (HDVMGM_LU#1) | ~312c |
| ⋯ | |
| HD video manager menu language unit #n (HDVMGM_LU#n) | ~312c |

312 — HD video manager menu PGCI unit table (HDVMGM_PGCI_UT)

**HDVMGM_PGCI_UTI**

| | |
|---|---|
| HDVMGM_LU_Ns | Number of HD video manager menu language units |
| HDVMGM_PGCI_UT_EA | End address of HDVMGM_PGCI_UT |

**HDVMGM_LU_SRP**

| | |
|---|---|
| HDVMGM_LCD | HD video manager menu language code |
| HDVMGM_EXST | Presence/absence of HD video manager menu |
| HDVMGM_UT_SA | Start address of HDVMGM_LU |

FIG.6

312c

HDVMGM_LU

| HD video manager menu language unit #n (HDVMGM_LU#n) |
|---|

HDVMGM_LUI

| HDVMGM_PGCI_SRP_Ns | Number of HDVMGM_PGCI_SRPs |
|---|---|
| HDVMGM_LU_EA | End address of HDVMGM_LU |

| | |
|---|---|
| HD video manager menu language unit information (HDVMGM_LUI) | ～312c1 |
| HDVMGM_PGCI search pointer #1 (HDVMGM_PGCI_SRP#1) | ～312c2 |
| ⋮ | |
| HDVMGM_PGCI search pointer #n (HDVMGM_PGCI_SRP#n) | ～312c2 |
| HD video manager menu program chain information (HDVMGM_PGCI) | ～312c3 |
| ⋮ | |
| HD video manager menu program chain information (HDVMGM_PGCI) | ～312c3 |

HDVMGM_PGCI_SRP

| HDVMGM_PGC_CAT | HDVMGM_PGC category |
|---|---|
| HDVMGM_PGCI_SA | Start address of HDVMGM_PGCI |

To FIG. 8

F I G. 7

HDVMGM_PGC_CAT

| Byte / Bit | b7 | b6 | b5 | b4 | b3 | b2 | b1 | b0 |
|---|---|---|---|---|---|---|---|---|
| 0 | Entry type | Reserved | Audio information selection | | Menu ID | | | |
| 1 | Block mode | | Block type | | Audio information number | | | |
| 2 | PTL_ID_FLD (upper bits) | | | | | | | |
| 3 | PTL_ID_FLD (lower bits) | | | | | | | |

Audio information selection
Indicate selection of audio reproduction of HDMENU_AOBS or
HDVMGM_VOBS, and start/end trigger of HDMENU_AOBS
...00b : Audio in VOB designated by PGC is reproduced (stop HDMENU_AOBS)
...10b : HDMENU_AOBS is continuously reproduced (ignore audio in VOB)
...11b : Start reproduction of HDMENU_AOBS (ignore audio in VOB)

Audio information number
Designate AOB number #n to be reproduced in HDMENU_AOBS

FIG. 8

EP 1 513 154 A1

PTL_MAIT

| Parental management information table (PTL_MAIT) | |
|---|---|

| Parental management information table information (PTL_MAITI) | ⟩313a |
|---|---|

PTL_MAITI

| CTY_Ns | Number of countries |
|---|---|
| HDVTS_Ns | Number of HDVTSs |
| PTL_MAIT_EA | End address of PTL_MAIT |

| Parental management information search pointer #1 (PTL_MAI_SRP#1) | 313b |
|---|---|
| ⋮ | |
| Parental management information search pointer #n (PTL_MAI_SRP#n) | 313b |
| Parental management information #1 (PTL_MAI#1) | 313c |
| ⋮ | |
| Parental management information #n (PTL_MAI#n) | 313c |

PTL_MAI_SRP

| CTY_CD | Country code |
|---|---|
| PTL_MAI_SA | Start address of PTL_MAI |

FIG.9

EP 1 513 154 A1

PTL_MAI

Parental management information
(PTL_MAI#n)

PTL_LVLI

Parental_ID_Field for HDVMG
(PTL_ID_FLD_HDVMG)

313c11

Parental_ID_Field for HDVTS#1
(PTL_ID_FLD_HDVTS#1)

313c12

Parental_ID_Field for HDVTS#m
(PTL_ID_FLD_HDVTS#m)

313c12

Parental level information #8
(PTL_LVLI#8)

313c1

Parental level information #7
(PTL_LVLI#7)

313c1

Parental level information #1
(PTL_LVLI#1)

313c1

PTL_ID_FLD_HDVMG/PTL_ID_FLD_HDVTS

| PTL_ID_FLD | Parental_ID_Field for PGC selection |
|---|---|

F I G. 10

314

HDVTS_ATRT

HD video title set attribute
information table (HDVTS_ATRT)

| | |
|---|---|
| HD video title set attribute table information (HDVTS_ATRTI) | ~314a |
| Video title set attribute search pointer for HDVTS #1 (HDVTS_ATR_SRP#1) | ~314b |
| ⋮ | |
| Video title set attribute search pointer for HDVTS #n (HDVTS_ATR_SRP#n) | ~314b |
| Video title set attribute for HDVTS #1 (HDVTS_ATR#1) | ~314c |
| ⋮ | |
| Video title set attribute for HDVTS #n (HDVTS_ATR#n) | ~314c |

HDVTS_ATRTI

| HDVTS_Ns | Number of HDVTSs |
|---|---|
| HDVTS_ATRT_EA | End address of HDVTS_ATRT |

HDVTS_ATR_SRP

| HDVTS_ATR_SA | Start address of HDVTS_ATR |
|---|---|

HDVTS_ATR

| HDVTS_ATRT_EA | End address of HDVTS_ATR |
|---|---|
| HDVTS_CAT | Category of HD video title set |
| HDVTS_ATRI | Attribute information of HD video title set |

F I G. 11

EP 1 513 154 A1

EP 1 513 154 A1

315

TXTDT_MG

| Text data manager (TXTDT_MG) |
| :---: |

| Text data manager information (TXTDT_MGI) | ~315a |
| :---: | :---: |
| Text data language unit search pointer #1 (TXTDT_LU_SRP#1) | ~315b |
| ⋮ | |
| Text data language unit search pointer #n (TXTDT_LU_SRP#n) | ~315b |
| Text data language unit #1 (TXTDT_LU#1) | ~315c |
| ⋮ | |
| Text data language unit #n (TXTDT_LU#n) | ~315c |

TXTDT_MGI

| TXTDT_ID | Text data identifier |
| :--- | :--- |
| TXTDT_LU_Ns | Number of TXTDT_LUs |
| TXTDT_MG_EA | End address of text data manager |

TXTDT_LU_SRP

| TXTDT_LCD | Text data language code |
| :--- | :--- |
| CHRS | Character set |
| TXTDT_LU_SA | Start address of TXTDT_LU |

F I G. 12

315c

| Text data language unit #n (TXTDT_LU#n) |
|---|

TXTDT_LUI

| TXTDT_LU_EA | End address of TXTDT_LU |
|---|---|

IT_TXT_SRP_SRP_VLM

| IT_TXT_SRP_SA_VLM | Start address of IT_TXT_SRP for volume |
|---|---|

IT_TXT_SRP_SRP_TT#n

| IT_TXT_SRP_SA_TT#n | Start address of IT_TXT_SRP for title #n |
|---|---|

TXTDT_LU

| Text data language unit information (TXTDT_LUI) | ~315c1 |
|---|---|
| Item text search pointer search pointer for volume (IT_TXT_SRP_SRP_VLM) | ~315c2 |
| Item text search pointer search pointer for title #1 (IT_TXT_SRP_SRP_TT#1) | ~315c3 |
| ⋮ | |
| Item text search pointer search pointer for title #99 (IT_TXT_SRP_SRP_TT#99) | ~315c3 |
| Text data (TXTDT) | ~315c4 |

F I G. 13

FIG.14

Text data (TXTDT) — 315c4

TXTDTI: IT_TXT_SRP_Ns | Number of IT_TXT_SRPs

IT_TXT_SRP: IT_TXT_IDCD | Item text identifier code ; IT_TXT_SA | Start address of IT_TXT

IT_TXT: IT_TXT | Item text

Text data information (TXTDT_I) — 315c41

Item text data search pointer #1 (IT_TXT_SRP#1) — 315c42

Item text data search pointer #n (IT_TXT_SRP#n) — 315c42

Item text (IT_TXT) — 315c43

Item text (IT_TXT) — 315c43

TXTDT

HDVMGM_C_ADT

| HD video manager menu cell address table (HDVMGM_C_ADT) | | HD video manager menu cell address table information (HDVMGM_C_ADTI) | ~316a |

HDVMGM_C_ADTI

| HDVMGM_VOB_Ns | Number of VOBs in HDVMGM_VOBS |
|---|---|
| HDVMGM_C_ADT_EA | End address of HDVMGM_C_ADT |

| HD video manager menu cell piece #1 information (HDVMGM_CPI#1) | ~316b |
|---|---|
| HD video manager menu cell piece #2 information (HDVMGM_CPI#2) | ~316b |
| ⋮ | |
| HD video manager menu cell piece #n information (HDVMGM_CPI#n) | ~316b |

HDVMGM_CPI

| HDVMGM_VOB_IDN | VOB_ID number of HDVMGM_CP |
|---|---|
| HDVMGM_C_IDN | Cell_ID number of HDVMGM_CP |
| HDVMGM_CP_SA | Start address of HDVMGM_CP |
| HDVMGM_CP_EA | End address of HDVMGM_CP |

FIG. 15

EP 1 513 154 A1

EP 1 513 154 A1

317

| HD video manager menu<br>video object unit address map<br>(HDVMGM_VOBU_ADMAP) |

HDVMGM_VOBU_ADMAPI

| HDVMGM_VOBU_ADMAP_EA | End address of HDVMGM_VOBU_ADMAP |

HDVMGM_VOBU_ADMAP

| HD video manager menu video object<br>unit address map information<br>(HDVMGM_VOBU_ADMAPI) | 317a |
| HD video manager menu video object<br>unit #1 address<br>(HDVMGM_VOBU_AD#1) | 317b |
| HD video manager menu video object<br>unit #2 address<br>(HDVMGM_VOBU_AD#2) | 317b |
| HD video manager menu video object<br>unit #3 address<br>(HDVMGM_VOBU_AD#3) | 317b |
| ⋮ | |
| HD video manager menu video object<br>unit #n address<br>(HDVMGM_VOBU_AD#n) | 317b |

HDVMGM_VOBU_AD#n

| HDVMGM_VOBU_SA#n | Start address of HDVMGM_VOBU #n |

F I G. 16

EP 1 513 154 A1

318

| HD menu audio object set information table (HDMENU_AOBSIT) | |
|---|---|

HDMENU_AOBSIT

| HDMENU_AOB_Ns | Number of VOBs in HDMENU_AOBS |
|---|---|
| HDMENU_AOBSIT_EA | End address of HDMENU_AOBSIT |

HDMENU_AOBI#n

| HDMENU_AOB_PBI | Playback information of HDMENU_AOB |
|---|---|
| HDMENU_AOB_ATR | Attribute information of HDMENU_AOB |
| HDMENU_AOB_SA | Start address of HDMENU_AOB #n |
| HDMENU_AOB_EA | End address of HDMENU_AOB #n |

HDMENU_AOBSIT

| | |
|---|---|
| HD menu audio object set information table information (HDMENU_AOBSITI) | 318a |
| HD menu audio object #1 information (HDMENU_AOBI#1) | 318b |
| HD menu audio object #2 information (HDMENU_AOBI#2) | 318b |
| ⋮ | |
| HD menu audio object #n information (HDMENU_AOBI#n) | 318b |

FIG. 17

HDVMGM_VOBS

| |
|---|
| VOB(s) for menu (Japanese) |
| VOB(s) for menu (English) |
| VOB(s) for menu (French) |
| VOB(s) for menu (Spanish) |
| ⋮ |
| VOB(s) for menu (Chinese) |

32

Video object set for HD video manager menu (HDVMGM_VOBS)

F I G. 18

HDMENU_AOBS

| |
|---|
| AOB #1 for menu (HDMENU_AOB#1) |
| AOB #2 for menu (HDMENU_AOB#2) |
| AOB #3 for menu (HDMENU_AOB#3) |
| ⋮ |
| AOB #n for menu (HDMENU_AOB#n) |

33

Audio object set for HD video manager menu (HDMENU_AOBS)

F I G. 19

HD video title set
(HDVTS#n) 40

HDVTSI

| HD video title set information (HDVTSI) | ~41 |
|---|---|
| Video object set for HD video title set menu (HDVTSM_VOBS) | ~42 |
| Video object set for HD video title set title (HDVTSTT_VOBS) | ~43 |
| Back up of HD video title set (HDVTSI_BUP) | ~44 |

| HD video title set information management table (HDVTSI_MAT) | ~410 |
|---|---|
| HD video title set PTT search pointer table (HDVTS_PTT_SRPT) | ~411 |
| HD video title set program chain information table (HDVTS_PGCIT) | ~412 |
| HD video title set menu PGCI unit table (HDVTSM_PGCI_UT) | ~413 |
| HD video title set time map table (HDVTS_TMAPT) | ~414 |
| HD video title set menu cell address table (HDVTSM_C_ADT) | ~415 |
| HD video title set menu video object unit address map (HDVTSM_VOBU_ADMAP) | ~416 |
| HD video title set cell address table (HDVTS_C_ADT) | ~417 |
| HD video title set video object unit address map (HDVTS_VOBU_ADMAP) | ~418 |

F I G. 20

EP 1 513 154 A1

HDVTSI_MAT

410

HD video title
set information
management table
(HDVTSI_MAT)

| HDVTS_ID | HD video title set identifier |
|---|---|
| HDVTS_EA | End address of HDVTS |
| HDVTSI_EA | End address of HDVTSI |
| VERN | Version number of HD-DVD video standards |
| HDVTS_CAT | HDVTS category |
| HDVTSI_MAT_EA | End address of HDVTSI_MAT |
| HDVTSM_VOBS_SA | Start address of HDVTSM_VOBS |
| HDVTSTT_VOBS_SA | Start address of HDVTSTT_VOBS |
| HDVTS_PTT_SRPT_SA | Start address of HDVTS_PPT_SRPT |
| HDVTS_PGCIT_SA | Start address of HDVTSM_PGCIT |
| HDVTSM_PGCI_UT_SA | Start address of HDVTSM_PGCI_UT |
| HDVTS_TMAP_SA | Start address of HDVTS_TMAP |
| HDVTSM_C_ADT_SA | Start address of HDVTSM_C_ADT |
| HDVTSM_VOBU_ADMAP_SA | Start address of HDVTSM_VOBU_ADMAP |
| HDVTS_C_ADT_SA | Start address of HDVTS_C_ADT |
| HDVTS_VOBU_ADMAP_SA | Start address of HDVTS_VOBU_ADMAP |
| HDVTSM_V_ATR | Video attribute of HDVTSM |
| HDVTSM_AST_Ns | Number of HDVTSM audio streams |
| HDVTSM_AST_ATR | HDVTSM audio stream attribute |
| HDVTSM_SPST_Ns | Number of HDVTSM sub-picture streams |
| HDVTSM_SPST_ATR | HDVTSM sub-picture stream attribute |
| HDVTS_V_ATR | Video attribute of HDVTS |
| HDVTS_AST_Ns | Number of HDVTS audio streams |
| HDVTS_AST_ATRT | HDVTS audio stream attribute table |
| HDVTS_SPST_Ns | Number of HDVTS sub-picture streams |
| HDVTS_SPST_ATRT | HDVTS sub-picture stream attribute table |
| HDVTS_MU_AST_ATRT | HDVTS multi-channel audio stream attribute table |
| HDVTSM_GUST_Ns | Number of HDVSTM graphic unit streams |
| HDVTSM_GUST_ATR | HDVSTM graphic unit stream attribute |
| HDVTS_GUST_Ns | Number of HDVTS graphic unit streams |
| HDVTS_GUST_ATRT | HDVTS graphic unit stream attribute table |

F I G. 21

EP 1 513 154 A1

411

| HD video title set PTT search pointer table (HDVTS_PPT_SRPT) |
|---|

PTT_SRPTI

| HDVTS_TTU_Ns | Number of TTUs of HDVTS |
|---|---|
| HDVTS_PTT_SRPT_EA | End address of HDVTS_PTT_SRPT |

TTU_SRP

| TTU_SA | Start address of TTU |
|---|---|

PTT_SRP

| PGCN | Program chain number |
|---|---|
| PGN | Program number |

| | |
|---|---|
| PTT search pointer table information (PTT_SRPTI) | 411a |
| Title unit #1 search pointer (TTU_SRP#1) | 411b |
| ⋮ | |
| Title unit #n search pointer (TTU_SRP#n) | 411b |
| PTT search pointer #1 (PTT_SRP#1) | 411c |
| ⋮ | TTU #1 |
| PTT search pointer #n (PTT_SRP#n) | 411c |
| ⋮ | |
| PTT search pointer (PTT_SRPs) | TTU #n |

411c

F I G. 22

412

| HD video title set program chain information table (HDVTS_PGCIT) | |

HDVTS_PGCIT

| HD video title set PGCI information table (HDVTS_PGCITI) | ~412a |

**HDVTS_PGCITI**

| HDVTS_PGCI_SRP_Ns | Number of HDVTS_PGCI_SRP |
|---|---|
| HDVTS_PGCIT_EA | End address of HDVTS_PGCIT |

| HDVTS_PGCI search pointer #1 (HDVTS_PGCI_SRP #1) | ~412b |
| : | |
| HDVTS_PGCI search pointer #n (HDVTS_PGCI_SRP #n) | ~412b |
| HDVTS_PGCI (HDVTS_PGCI) | ~412c |
| : | |
| HDVTS_PGCI (HDVTS_PGCI) | ~412c |

**HDVTS_PGCI_SRP**

| HDVTS_PGC_CAT | HDVTS_PGC category |
|---|---|
| HDVTS_PGCI_SA | Start address of HDVTS_PGCI |

To FIG. 24

F I G. 23

EP 1 513 154 A1

HDVTS_PGC_CAT

| Byte \ Bit | b7 | b6 | b5 | b4 | b3 | b2 | b1 | b0 |
|---|---|---|---|---|---|---|---|---|
| 0 | Entry type | VTS_TTN | | | | | | |
| 1 | Block mode | | Block type | | Reserved | | | RSM permission |
| 2 | PTL_ID_FLD (upper bits) | | | | | | | |
| 3 | PTL_ID_FLD (lower bits) | | | | | | | |

RSM permission
Indicate whether or not reproduction resume by RSM command or Resume () function is permitted by this PGC
...0b : Permission (update RSM information)
...1b : Prohibition (RSM information is not updated)

FIG. 24

EP 1 513 154 A1

EP 1 513 154 A1

413

| HD video title set menu PGCI unit table (HDVTSM_PGCI_UT) |
|---|

HDVTSM_PGCI_UTI

| HDVTSM_LU_Ns | Number of HD video title set menu language units |
|---|---|
| HDVTSM_PGCI_UT_EA | End address of HDVTSM_PGCI_UT. |

HDVTSM_LU_SRP

| HDVTSM_LCD | HD video title set menu language code |
|---|---|
| HDVTSM_EXST | Presence/absence HD video title set menu |
| HDVTSM_UT_SA | Start address of HDVTSM_LU |

HDVTSM_PGCI_UT

| HD video title set menu program chain information unit table information (HDVTSM_PGCI_UTI) | 413a |
|---|---|
| HD video title set menu language unit search pointer #1 (HDVTSM_LU_SRP#1) | 413b |
| ⋮ | |
| HD video title set menu language unit search pointer #n (HDVTSM_LU_SRP#n) | 413b |
| HD video title set menu language unit #1 (HDVTSM_LU#1) | 413c |
| ⋮ | |
| HD video title set menu language unit #n (HDVTSM_LU#n) | 413c |

FIG. 25

413c

HDVTSM_LU

| HD video title set menu language unit #n (HDVTSM_LU#n) | | |
|---|---|---|

| HDVTSM_LU | |
|---|---|
| HD video title set menu language unit information (HDVTSM_LUI) | 413c1 |
| HDVTSM_PGCI search pointer #1 (HDVTSM_PGCI_SRP #1) | 413c2 |
| ⋮ | |
| HDVTSM_PGCI search pointer #n (HDVTSM_PGCI_SRP #n) | 413c2 |
| HD video title set menu program chain information (HDVTSM_PGCI) | 413c3 |
| ⋮ | |
| HD video title set menu program chain information (HDVTSM_PGCI) | 413c3 |

HDVTSM_LUI

| HDVTSM_PGCI_SRP_Ns | Number of HDVTSM_PGCI_SRP |
|---|---|
| HDVTSM_LU_EA | End address of HDVTSM_LU |

HDVTSM_PGCI_SRP

| HDVTSM_PGC_CAT | HDVTSM_PGC category |
|---|---|
| HDVTSM_PGCI_SA | Start address of HDVTSM_PGCI |

To FIG. 27

F I G. 26

EP 1 513 154 A1

HDVTSM_PGC_CAT

| Byte \ Bit | b7 | b6 | b5 | b4 | b3 | b2 | b1 | b0 |
|---|---|---|---|---|---|---|---|---|
| 0 | Entry type | Reserved | Audio information selection | | Menu ID | | | |
| 1 | Block mode | | Block type | | Audio information number | | | |
| 2 | PTL_ID_FLD (upper bits) | | | | | | | |
| 3 | PTL_ID_FLD (lower bits) | | | | | | | |

Audio information selection
Indicate selection of audio reproduction of HDMENU_AOBS or HDVTSM_VOBS, and start/end trigger of HDMENU_AOBS
...00b : Audio in VOB designated by PGC is reproduced (stop HDMENU_AOBS)
...10b : HDMENU_AOBS is continuously reproduced (ignore audio in VOB)
...11b : Reproduction of HDMENU_AOBS is started (ignore audio in VOB)

Audio information number
Designate AOB number #n to be reproduced in HDMENU_AOBS

FIG. 27

EP 1 513 154 A1

HDVTS_TMAPT

| HD video title set time map table information (HDVTS_TMAPTI) | 414a |
| HD video title set time map #1 search pointer (HDVTS_TMAP_SRP #1) | 414b |
| HD video title set time map #2 search pointer (HDVTS_TMAP_SRP #2) | 414b |
| · · | |
| HD video title set time map #n search pointer (HDVTS_TMAP_SRP #n) | 414b |
| HD video title set time map #1 (HDVTS_TMAP #1) | 414c |
| HD video title set time map #2 (HDVTS_TMAP #2) | 414c |
| · · | |
| HD video title set time map #v n (HDVTS_TMAP #n) | 414c |

HD video title set time map table (HDVTS_TMAPT)  414

HDVTS_TMAPTI

| HDVTS_TMAP_Ns | Number of HDVTS_TMAPs |
| HDVTS_TMAPT_EA | End address of HDVTS_TMAPT |

HDVTS_TMAP_SRP

| HDVTS_TMAP_SA | Start address of HDVTS_TMAP |

HDVTS_TMAP

| HDTMU | Time unit (second) |
| HDMAP_EN_Ns | Number of HD map entries |
| HDMAP_EN #1 | HD map entry #1 |
| HDMAP_EN #2 | HD map entry #2 |
| · · · · · · · · | · · · · · · · |
| HDMAP_EN #m | HD map entry #m |

| Discontinuous flag | Judgment flag indicating whether or not corresponding HDMAP_ENA and next HDMAP_ENA exist in the same cell |
| HDMAP_ENA | Start address of VOBU including playback time corresponding to map entry #m |

F I G. 28

84

415

HDVTSM_C_ADT

| HD video title set menu cell address table (HDVTSM_C_ADT) | |
|---|---|

HDVTSM_C_ADTI

| HDVTSM_VOB_Ns | Number of VOBs in HDVTSM_VOBS |
|---|---|
| HDVTSM_C_ADT_EA | End address of HDVTSM_C_ADT |

HDVTSM_CPI

| HDVTSM_VOB_IDN | VOB number of HDVTSM_CPI |
|---|---|
| HDVTSM_C_IDN | Cell_ID number of HDVTSM_CPI |
| HDVTSM_CP_SA | Start address of HDVTSM_CPI |
| HDVTSM_CP_EA | End address of HDVTSM_CPI |

| HD video title set menu cell address table information (HDVTSM_C_ADTI) | ~415a |
|---|---|
| HD video title set menu cell piece #1 information (HDVTSM_CPI#1) | ~415b |
| HD video title set menu cell piece #2 information (HDVTSM_CPI#2) | ~415b |
| ⋮ | |
| HD video title set menu cell piece #n information (HDVTSM_CPI#n) | ~415b |

F I G. 29

HDVTSM_VOBU_ADMAP

| HD video title set menu video object unit address map (HDVTSM_VOBU_ADMAP) |
|---|

HDVTSM_VOBU_ADMAPI

| HDVTSM_VOBU_ADMAP_EA | End address of HDVTSM_VOBU_ADMAP |
|---|---|

HDVTSM_VOBU_AD#n

| HDVTSM_VOBU_SA#n | Start address of HDVMGM_VOBU #n |
|---|---|

| | |
|---|---|
| HD video title set menu video object unit address map information (HDVTSM_VOBU_ADMAPI) | ~416a |
| HD video title set menu video object unit #1 address (HDVTSM_VOBU_AD#1) | ~416b |
| HD video title set menu video object unit #2 address (HDVTSM_VOBU_AD#2) | ~416b |
| HD video title set menu video object unit #3 address (HDVTSM_VOBU_AD#3) | ~416b |
| ⋮ | |
| HD video title set menu video object unit #n address (HDVTSM_VOBU_AD#n) | ~416b |

F I G. 30

EP 1 513 154 A1

EP 1 513 154 A1

417

| HD video title set cell address table (HDVTS_C_ADT) |
|---|

**HDVTS_C_ADTI**

| HDVTS_VOB_Ns | Number of VOBs in HDVTS_VOBS |
|---|---|
| HDVTS_C_ADT_EA | End address of HDVTS_C_ADT |

**HDVTS_CPI**

| HDVTS_VOB_IDN | VOB_ID number of HDVTS_CP |
|---|---|
| HDVTS_C_IDN | Cell_ID number of HDVTS_CP |
| HDVTS_CP_SA | Start address of HDVTS_CP |
| HDVTS_CP_EA | End address of HDVTS_CP |

HDVTS_C_ADT

| | |
|---|---|
| HD video title set cell address table information (HDVTS_C_ADTI) | 417a |
| HD video title set cell piece #1 information (HDVTS_CPI#1) | 417b |
| HD video title set cell piece #2 information (HDVTS_CPI#2) | 417b |
| ⋮ | |
| HD video title set cell piece #n information (HDVTS_CPI#n) | 417b |

FIG. 31

418

HDVTS_VOBU_ADMAP

| HD video title set video object unit address map (HDVTS_VOBU_ADMAP) |
|---|

HDVTS_VOBU_ADMAPI

| HDVTS_VOBU_ADMAP_EA | End address of HDVTS_VOBU_ADMAP |
|---|---|

HDVTS_VOBU_ADMAP

| HD video title set video object unit address map information (HDVTS_VOBU_ADMAPI) | ～418a |
|---|---|
| HD video title set video object unit #1 address (HDVTS_VOBU_AD#1) | ～418b |
| HD video title set video object unit #2 address (HDVTS_VOBU_AD#2) | ～418b |
| HD video title set video object unit #3 address (HDVTS_VOBU_AD#3) | ～418b |
| ⋮ | |
| HD video title set video object unit #n address (HDVTS_VOBU_AD#n) | ～418b |

HDVTS_VOBU_AD#n

| HDVTS_VOBU_SA#n | Start address of HDVMG_VOBU #n |
|---|---|

FIG. 32

EP 1 513 154 A1

PGCI_GI

PGCI

| Program chain general information (PGC_GI) | 50 |
| Program chain command table (PGC_CMDT) | 51 |
| Program chain program map (PGC_PGMAP) | 52 |
| Cell Playback information table (C_PBIT) | 53 |
| Cell position information table (C_POSIT) | 54 |

| | |
|---|---|
| PGC_CNT | PGC content |
| PGC_PB_TM | PGC playback time |
| PGC_UOP_CTL | PGC user operation control |
| PGC_AST_CTLT | PGC audio stream control table |
| PGC_SPST_CTLT | PGC sub-picture stream control table |
| PGC_GUST_CTLT | PGC graphic unit stream control table |
| PGC_NV_CTL | PGC navigation control |
| PGC_SP_PLT | PGC sub-picture palette |
| PGC_CMDT_SA | Start address of PGC_CMDT |
| PGC_PGMAP_SA | Start address of PGC_PGMAP |
| C_PBIT_SA | Start address of C_PBIT |
| C_POSIT_SA | Start address of C_POSIT |
| RSM&AOB_CAT | RSM&AOB category |

FIG. 33

To FIG. 34

EP 1 513 154 A1

PGCI_GI

| PGC_CNT | PGC content |
|---|---|
| PGC_PB_TM | PGC playback time |
| PGC_UOP_CTL | PGC user operation control |
| PGC_AST_CTLT | PGC audio stream control table |
| PGC_SPST_CTLT | PGC sub-picture stream control table |
| PGC_GUST_CTLT | PGC graphic unit stream control table |
| PGC_NV_CTL | PGC navigation control |
| PGC_SP_PLT | PGC sub-picture palette |
| PGC_CMDT_SA | Start address of PGC_CMDT |
| PGC_PGMAP_SA | Start address of PGC_PGMAP |
| C_PBIT_SA | Start address of C_PBIT |
| C_POSIT_SA | Start address of C_POSIT |
| RSM&AOB_CAT | RSM&AOB category |

RSM&AOB_CAT

| Bit / Byte | b7 | b6 | b5 | b4 | b3 | b2 | b1 | b0 |
|---|---|---|---|---|---|---|---|---|
| 0 | Entry type | RSM permission | Audio selection | | Audio number | | | |
| 1 | Block mode | | Block type | | Reserved | | | |
| 2 | PTL_ID_FLD (upper bits) | | | | | | | |
| 3 | PTL_ID_FLD (lower bits) | | | | | | | |

RSM permission
Indicate whether or not reproduction resume by RSM command
or Resume () function is permitted by this PGC
...0b : Permission (update RSM information)
...1b : Prohibition (RSM information is not updated)

PGC_GUST_CTLT

| PGC_GUST#0 | PGC_GUST_CTL of HD graphic unit stream #0 |
|---|---|
| PGC_GUST#1 | PGC_GUST_CTL of SD wide graphic unit stream #1 |
| PGC_GUST#2 | PGC_GUST_CTL of 4:3 graphic unit stream #2 |
| PGC_GUST#3 | PGC_GUST_CTL of letter box graphic unit stream #3 |
| PGC_GUST#4 | PGC_GUST_CTL of pan-scan graphic unit stream #4 |

# F I G. 34

EP 1 513 154 A1

PGCI

| |  |
|---|---|
| Program chain general information (PGC_GI) | ~50 |
| Program chain command table (PGC_CMDT) | ~51 |
| Program chain program map (PGC_PGMAP) | ~52 |
| Cell Playback information table (C_PBIT) | ~53 |
| Cell position information table (C_POSIT) | ~54 |

PGCI_CMDT

| |  |
|---|---|
| Program chain command table information (PGC_CMDTI) | ~510 |
| Pre-command #1 (PRE_CMD#1) | ~511 |
| ⋮ | |
| Pre-command #i (PRE_CMD#i) | ~511 |
| Post-command #1 (POST_CMD#1) | ~512 |
| ⋮ | |
| Post-command #j (POST_CMD#j) | ~512 |
| Cell command #1 (C_CMD#1) | ~513 |
| ⋮ | |
| Cell command #k (C_CMD#k) | ~513 |
| RSM command #1 (RSM_CMD#1) | ~514 |
| ⋮ | |
| RSM command #m (RSM_CMD#m) | ~514 |

Resume (RSM) command sequence

FIG. 35

Data structure of PGC_CMDTI and RSM_CMD

**PGCI_CMDT**

- Program chain command table information (PGC_CMDTI) — 510
- Pre-command #1 (PRE_CMD#1) — 511
- Pre-command #i (PRE_CMD#i) — 511
- Post-command #1 (POST_CMD#1) — 512
- Post-command #j (POST_CMD#j) — 512
- Cell command #1 (C_CMD#1) — 513
- Cell command #k (C_CMD#k) — 513
- RSM command #1 (RSM_CMD#1) — 514
- RSM command #m (RSM_CMD#m) — 514

**PGC_CMDTI**

| PGC_CMDTI | Contents |
| --- | --- |
| PRE_CMD_Ns | Number of pre-commands |
| POST_CMD_Ns | Number of post-commands |
| C_CMD_Ns | Number of cell commands |
| RSM_CMD_Ns | Number of resume commands |
| RSM_CMD_SA | Start address of resume command |
| PGC_CMDT_EA | End address of PGC_CMDT |

**RSM_CMD**

| RSM_CMD | Contents |
| --- | --- |
| RSM_CMD | Resume command (8 bytes) |

F I G. 36

PGCI

| Program chain general information (PGC_GI) | ~50 |
| Program chain command table (PGC_CMDT) | ~51 |
| Program chain program map (PGC_PGMAP) | ~52 |
| Cell Playback information table (C_PBIT) | ~53 |
| Cell position information table (C_POSIT) | ~54 |

PGC_PGMAP

| Entry cell number for program #1 (cell number = 1) | ~520 |
| Entry cell number for program #2 | ~520 |
| ⋮ | |
| Entry cell number for program #n | ~520 |

Entry cell number

| EN_CN | Entry cell number |

C_POSIT

| Cell position information #1 (C_POSI#1) | ~540 |
| Cell position information #2 (C_POSI#2) | ~540 |
| ⋮ | |
| Cell position information #n (C_POSI#n) | ~540 |

C_POSI

| C_VOB_IDN | VOB_ID number of cell |
| C_IDN | Cell ID number of cell |

FIG. 37

EP 1 513 154 A1

EP 1 513 154 A1

PGCI

| | |
|---|---|
| Program chain general information (PGC_GI) | ~50 |
| Program chain command table (PGC_CMDT) | ~51 |
| Program chain program map (PGC_PGMAP) | ~52 |
| Cell Playback information table (C_PBIT) | ~53 |
| Cell position information table (C_POSIT) | ~54 |

C_PBIT

| | |
|---|---|
| Cell Playback information #1 (C_PBI#1) | ~530 |
| Cell Playback information #2 (C_PBI#2) | ~530 |
| : | |
| Cell Playback information #n (C_PBI#n) | ~530 |

C_PBI

| | |
|---|---|
| C_CAT | Cell category |
| C_PBTM | Cell playback time |
| C_FVOBU_SA | Start address of first VOBU of cell |
| C_FILVU_EA | End address of first ILVU of cell |
| C_LVOBU_SA | Start address of last VOBU of cell |
| C_LVOBU_EA | End address of last VOBU of cell |
| C_CMD_SN | Cell command start number |
| C_CMD_C_Ns | Number of continuous cell commands |

F I G. 38

Arrangement method of graphic unit (GU) in video object

FIG.39A

| Video object (VOB) ~a1 |
| --- |

FIG.39B

| Vide object unit (VOBU) ~a2 | Vide object unit (VOBU) | .......... | Vide object unit (VOBU) |
| --- | --- | --- | --- |

FIG.39C

~a3 ~a4 ~a5 ~a6 ~a7

| Navi pack | Video pack | GU pack #1-1 | Audio pack #1-1 | SP pack #1-1 | Audio pack #2-1 | GU pack #2-1 | ... | SP pack #2-1 | GU pack #1-2 | Video pack | GU pack #3-1 | Audio pack #1-2 | ... |
| --- | --- | --- | --- | --- | --- | --- | --- | --- | --- | --- | --- | --- | --- |

FIG.39D

Graphic unit stream #1 (for HD)

| GU pack #1-1 | GU pack #1-2 | GU pack #1-3 | ......... | GU pack #1-n | ~a51 |
| --- | --- | --- | --- | --- | --- |

Graphic unit stream #2 (for SD wide)

| GU pack #2-1 | GU pack #2-2 | ... | GU pack #2-n | a52 |
| --- | --- | --- | --- | --- |

Graphic unit stream #3 (for 4:3)

| GU pack #3-1 | GU pack #3-2 | ... | GU pack #3-n | ~a53 |
| --- | --- | --- | --- | --- |

Graphic unit stream #4 (for letter box)

| GU pack #4-1 | GU pack #4-2 | ... | GU pack #4-n | ~a54 |
| --- | --- | --- | --- | --- |

Graphic unit stream #5 (for pan-scan)

| GU pack #5-1 | GU pack #5-2 | ... | GU pack #5-n | ~a55 |
| --- | --- | --- | --- | --- |

EP 1 513 154 A1

Substream ID of Graphic unit stream

Private stream 1 : 1011 1101b

| Substream ID<br>0101 0xxxb | Graphic stream<br>number | Contents |
|---|---|---|
| 0101 0001b | 1 | Graphic unit for HD |
| 0101 0010b | 2 | Graphic unit for SD wide |
| 0101 0011b | 3 | Graphic unit for 4 : 3 |
| 0101 0100b | 4 | Graphic unit for letter box |
| 0101 0101b | 5 | Graphic unit for pan-scan |

F I G. 40

Graphic unit (GU)
(mask pattern)

a5

| GU pack #1-1 | GU pack #1-2 | GU pack #1-3 | GU pack #1-4 | ....... | GU pack #1-m | ............ | GU pack #1-n |

Graphic unit

b1 — Header information

b2 — Highlight information (HLI)

b3 — Mask data #1

:

Mask data #n

b4 — Graphic data

b21

General information

b22 — Color palette information

Button information #1

:

Button information #n

b23

Usual color palette — b221

Color palette for selection — b222

Color palette for activation — b223

Start address of mask data #n — b231

Size of mask data #n — b232

Adjacent button position information — b233

Button command — b234

FIG. 41

F I G. 42

Header information contents and general information contents in graphic unit

Header information b1

| GU_SZ | Graphic unit size |
|---|---|
| GU_ATRI | Graphic unit attribute information |
| HLI_SA | Start address of highlight information (HLI) |
| GD_SA | Start address of graphic data |

F I G. 43A

General information b21

| GU_PB_S_PTM | Graphic unit playback start time |
|---|---|
| GU_PB_E_PTM | Graphic unit playback end time |
| BTN_OFN | Button offset number |
| BTN_Ns | Number of buttons |
| NSL_BTN_Ns | Number of number selection buttons |
| FOSL_BTNN | Forced selection button number |
| FOAC_BTNN | Forced activation button number |

F I G. 43B

Image of mask data and graphic data in graphic unit

Graphic unit

b1 — Header information

b2 — Highlight information (HLI)

b3 — Mask data #1

:

Mask data #n

b4 — Graphic data

1920

Mask data #1~#n

1080

Button pattern

1 bit/pixel

1920

MOVIE    A

MUSIC    B

SPORT    C

1080

8 bits/pixel

Graphic data

F I G. 44

EP 1 513 154 A1

Example of video synthesis including mask pattern

Mask plane

Main picture plane

Graphic plane

(1)

Main picture

+

Graphic pattern
(for buttons, etc.)

+ (2)

=

Synthesis output

(3)

Mask pattern
(for buttons, etc.)

FIG. 45

Stored in graphic unit

EP 1 513 154 A1

Example of color/contrast information table

| | Usual color pallette | | Color pallette for selection | | Color pallete for activation | |
|---|---|---|---|---|---|---|
| | Color (R,G,B) | Contrast | Color (R,G,B) | Contrast | Color (R,G,B) | Contrast |
| 00h | Black | Opaque (00h) | Black | Opaque (00h) | Black | Opaque (00h) |
| 01h | Gray | Transparency (FFh) | Gray | Transparency (FFh) | Gray | Transparency (FFh) |
| : | : | : | : | : | : | : |
| 80h | Red (R:FFh, G:00h, B:00h) | Semi-transparency (80h) | Blue (R:00h, G:00h, B:FFh) | Semi-transparency (80h) | Green (R:00h, G:FFh, B:00h) | Semi-transparency (80h) |
| : | : | : | : | : | : | : |
| FFh | White | Transparency (FFh) | White | Transparency (FFh) | White | Transparency (FFh) |

F I G. 46    (Usual color/contrast)    (Color/contrast for selection)    (Color/contrast for activation)

EP 1 513 154 A1

Definition of mask plane

| | Definition |
|---|---|
| 1b | Display with color/contrast for selection or activation specified by graphic pattern |
| 0b | Transparentize background (main picture plane on graphic plane) |

1920

N numbers of mask patterns

1080

1 bit/pixel

〈Mask pattern〉

F I G. 47

EP 1 513 154 A1

Structure in information reproduction device

FIG. 48

Structure of graphic decoder (decoder model A) in information reproduction device

F I G. 49

Structure of graphic decoder (decoder model B) in information reproduction device

FIG. 50

EP 1 513 154 A1

106

Structure of graphic decoder (decoder model C) in information reproduction device

FIG.51

EP 1 513 154 A1

Button position information in graphic unit (GU)

FIG. 52

EP 1 513 154 A1

Example of video synthesis including mask pattern

Main picture plane

Graphic plane

(1) Position information for
    button 1
  • Position information for
    hot spot 11
  • Position information for
    hot spot 12

※Three buttons
(two hot spots)

11

12

21

22

MOVIE

MUSIC

SPORTS

A

B

C

(2) Position information for
    button 2
  • Position information for
    hot spot 21
  • Position information for
    hot spot 22

MOVIE

MUSIC

SPORTS

A

B

C

(A) Main picture

31

32

(C) Synthesis output

(3) Position information for
    button 3
  • Position information for
    hot spot 31
  • Position information for
    hot spot 32

Where button 1 is selected

(B) Graphic pattern
    (for buttons, etc.)

Stored in graphic unit

FIG. 53

EP 1 513 154 A1

Example of video synthesis including sub picture

Main picture plane

Main picture

Sub-picture plane

MOVIE    A
MUSIC    B
SPORTS   C

Sub-picture

Graphic plane

Graphic pattern
(for button)

Mask plane

(1)
(2)
(3)
(4)
(5)
(6)

Mask patterns
(for button)

Stored in graphic unit

Synthesis output

MOVIE
MUSIC
SPORTS

F I G. 54

Start

Decode video data by video decoder ⌒S1

Decode sub-picture data by sub-picture decoder ⌒S2

Decode graphic data by graphic decoder ⌒S3

Decode mask data by highlight decoder ⌒S4

Mix graphic data with mask data by mixer ⌒S5

Execute color pallet selection and highlight process ⌒S6

Mix respective decoded data of video, sub-picture, and graphic decoders by mixer ⌒S7

Execute conversion processes such as down conversion, LB(letter box)/PS(pan/scan) conversion (if necessary), and output video ⌒S8

End

F I G. 55

Structure of HDMENU_AOB

HDMENU_AOB

Header information (AOB_HI)
of HDMENU_AOB

First entry———▶

AOB#1 for menu

Second entry———▶

AOB#2 for menu

Repeat range
for playback
of PGC#A

Repeat range
for playback
of PGC#B

Third entry———▶

AOB#3 for menu

Fourth entry———▶

AOB#4 for menu

Fifth entry———▶

AOB#5 for menu

Repeat range
for playback
of PGC#C

End address of AOB———▶

FIG. 56

Structure of HDMENU_AOB header information

HDMENU_AOB_HI

| AOB_EA | End address of HDMENU_AOB |
|---|---|
| AOB_EP_Ns | Number of entry points in HDMENU_AOB |
| AOB_ATR | Attribute of HDMENU_AOB |
| AOB_1ST_EP | Start address of 1st entry point of HDMENU_AOB |
| AOB_2ND_EP | Start address of 2nd entry point of HDMENU_AOB |
| AOB_3RD_EP | Start address of 3rd entry point of HDMENU_AOB |
| AOB_4TH_EP | Start address of 4th entry point of HDMENU_AOB |
| AOB_5TH_EP | Start address of 5th entry point of HDMENU_AOB |

FIG. 57

EP 1 513 154 A1

HDVMGM_PGC_CAT (modification of FIG. 8)

| Byte \ Bit | b7 | b6 | b5 | b4 | b3 | b2 | b1 | b0 |
|---|---|---|---|---|---|---|---|---|
| 0 | Entry type | Reserved | Block mode | | Block type | | Reserved | |
| 1 | Menu ID | | | | Reserved | | | |
| 2 | PTL_ID_FLD (upper bits) | | | | | | | |
| 3 | PTL_ID_FLD (lower bits) | | | | | | | |
| 4 | Audio information selection | | Start entry number | | | End entry number | | |

Audio information selection
Indicate selection of audio reproduction of HDMENU_AOBS or
HDVMGM_VOBS, and start/end trigger of HDMENU_AOBS
...00b : Audio in VOB designated by PGC is reproduced (stop HDMENU_AOBS)
...10b : HDMENU_AOBS is continuously reproduced (ignore audio in VOB)
...11b : Start reproduction of HDMENU_AOBS (ignore audio in VOB)

Start entry number
Designate entry number starting playback in HDMENU_AOB

End entry number
Designate entry number ending playback in HDMENU_AOB
and is end address of HDMENU_AOB if 000b

F I G. 58

HDVTS_PGC_CAT (modification of FIG. 24)

| Byte \ Bit | b7 | b6 | b5 | b4 | b3 | b2 | b1 | b0 |
|---|---|---|---|---|---|---|---|---|
| 0 | Entry type | RSM permission | Block mode | | Block type | | VTS_TTN (upper bits) | |
| 1 | VTS_TTN | | | | | | | |
| 2 | PTL_ID_FLD (upper bits) | | | | | | | |
| 3 | PTL_ID_FLD (lower bits) | | | | | | | |
| 4 | Audio information selection | | Start entry number | | | End entry number | | |

RSM permission
Indicate whether or not restart of playback by RSM instruction or Resume () function is permitted by this PGC
...0b : permit (update RSM information)
...1b : inhibit (does not update RSM information)

Audio information selection
Indicate selection of audio reproduction of HDMENU_AOBS or HDVMGM_VOBS, and start/end trigger of HDMENU_AOBS
...00b : Audio in VOB designated by PGC is reproduced (stop HDMENU_AOBS)
...10b : HDMENU_AOBS is continuously reproduced (ignore audio in VOB)
...11b : Start reproduction of HDMENU_AOBS (ignore audio in VOB)

Start entry number
Designate entry number starting playback in HDMENU_AOB

End entry number
Designate entry number ending playback in HDMENU_AOB and is end address of HDMENU_AOB if 000b

FIG. 59

EP 1 513 154 A1

HDVTSM_PGC_CAT (modification of FIG. 27)

| Byte \ Bit | b7 | b6 | b5 | b4 | b3 | b2 | b1 | b0 |
|---|---|---|---|---|---|---|---|---|
| 0 | Entry type | Reserved | Block mode | | Block type | | Reserved | |
| 1 | Menu ID | | | | Reserved | | | |
| 2 | PTL_ID_FLD (upper bits) | | | | | | | |
| 3 | PTL_ID_FLD (lower bits) | | | | | | | |
| 4 | Audio information selection | | Start entry number | | | End entry number | | |

Audio information selection
Indicate selection of audio reproduction of HDMENU_AOBS or
HDVMGM_VOBS, and start/end trigger of HDMENU_AOBS
...00b : Audio in VOB designated by PGC is reproduced (stop HDMENU_AOBS)
...10b : HDMENU_AOBS is continuously reproduced (ignore audio in VOB)
...11b : Start reproduction of HDMENU_AOBS (ignore audio in VOB)

Start entry number
Designate entry number starting playback in HDMENU_AOB

End entry number
Designate entry number ending playback in HDMENU_AOB and is end address of HDMENU_AOB if 000b

F I G. 60

```
                    ┌─────────────┐
                    │    Start    │
                    └──────┬──────┘
                           │  ~S11
        ┌──────────────────▼─────────────────┐
        │ Read and acquire header information │
        │ AOB_HI of HDMENU_AOB                │
        └──────────────────┬─────────────────┘
                           │  ~S12
        ┌──────────────────▼─────────────────┐
        │ Acquire addresses (AOB_1 ST_EP,     │
        │ etc.) of each entry point           │
        └──────────────────┬─────────────────┘
                           │  ~S13
        ┌──────────────────▼─────────────────┐
        │ Detect category information         │
        │ PGC_CAT in program chain PGC to     │
        │ be reproduced and acquire sound     │
        │ information selection flag, start   │
        │ entry number, and end entry number  │
        └──────────────────┬─────────────────┘
                           │  ~S14
                      ◇ Sound ◇  NO
            information selection flag
                   is '00b' ?
                         │ YES  ~S15
        ┌──────────────────▼─────────────────┐
        │ Stop playback HDMENU_AOB when       │
        │ HDMENU_AOB is reproduced            │
        └──────────────────┬─────────────────┘
                           │  ~S16
        ┌──────────────────▼─────────────────┐
        │ Reproduce audio in VOB designated   │
        │ by PGC                              │
        └──────────────────┬─────────────────┘
                    ┌──────▼──────┐
                    │     End     │
                    └─────────────┘
```

S17 — Sound information selection flag is '11b' ? — NO / YES

S18 — Start playback of HDMENU_AOB from start entry number

S19 — Sound information selection flag is '10b' ? — NO / YES

S20 — Continue playback of HDMENU_AOB

S21 — End entry number is '000b' ? — NO / YES

S22 — Continue playback of HDMENU_AOB until AOB end address

S23 — Continue playback of HDMENU_AOB before and entry number

S24 — Repeat playback from start entry number

F I G. 61

| SPRM | Meaning |
|------|---------|
| 0 | Current Menu Description Language Code (CM_LCD) |
| 1 | Audio stream number (ASTN) for TT_DOM |
| 2 | Sub-picture stream number (SPSTN) and On/Off flag for TT_DOM |
| 3 | Angle number (TTN) for TT_DOM |
| 4 | Title number (TTN) for TT_DOM |
| 5 | VTS_Title number (VTS_TTN) for TT_DOM |
| 6 | Title PGC number (TT_PGCN) for TT_DOM |
| 7 | Part of Title number (PTTN) for One Sequential PGC Title |
| 8 | Highlighted Button number (HL_BTNN) for Selection state |
| 9 | Navigation Timer (NV_TMR) |
| 10 | TT_PGCN for NV_TMR |
| 11 | Player Audio Mixing Mode (P_AMXMD) for Karaoke |
| 12 | Country Code (CTY_CD) for Parental Management |
| 13 | Parental Level (PTL_LVL) |
| 14 | Player Configuration (P_CFG) for Video |
| 15 | P_CFG for Audio |
| 16 | Initial Language Code (INI_LCD) for AST |
| 17 | Initial Language Code extension (INI_LCD_EXT) for AST |
| 18 | INI_LCD for SPST |
| 19 | INI_LCD_EXT for SPST |
| 20 | Player Region Code |
| 21 | Initial Menu Description Language Code (INI_M_LCD) |
| 22 | reserved |
| 23 | reserved for extended playback mode |
| 24 | reserved |
| 25 | reserved |
| 26 | Audio stream number (ASTN) for Menu-space |
| 27 | Sub-picture stream number (SPSTN) and On/Off flag for Menu-space |
| 28 | Angle number (AGLN) for Menu-space |
| 29 | Audio stream number (ASTN) for FP_DOM |
| 30 | Sub-picture stream number (SPSTN) and On/Off flag for FP_DOM |
| 31 | reserved |

F I G. 62

SetGPRMMD : C # 1_FVOBU_SA to GPRM(1)

| Data position in command (byte) | B5 | B4 | B3 | B2 |
|---|---|---|---|---|
| Example | C # 1_FVOBU_SA | | 00h | 01h |

F I G. 63

EP 1 513 154 A1

Concrete examples of command information under specific use conditions

Compare SetSystem Command: If GPRM(0)=GPRM(n) then SetGPRMMD GPRM(1) to C#n_FVOBU_SA

**F I G. 64A**

| Data structure | Operation Code | SetSystem Instruction Operand | CP1 | CP2 |
|---|---|---|---|---|
| Set byte | B7 & B6 | B5~B2 | B1 | B0 |
| Installed numeric value example | 4320h (Equal) | SetGPRMMD Instruction [SetGPRMMD:GPRM(1) to C#n_FVOBU_SA] | 0 (GPRM) | n (GPRM) |

Compare Set Command: If GPRM(4)≧300 then SetAdd 100 to GPRM(4)

**F I G. 64B**

| Data structure | Operation Code | CP1 | Reserved | SDG | SS | C2 |
|---|---|---|---|---|---|---|
| Set byte | B7 & B6 | B5 | B4 | | B3 & B2 | B1 & B0 |
| Installed numeric value example | 6340h | 4 (GPRM) | 00h | 4 (GPRM) | 100 (value) | 300 (value) |

SetAdd Command: Add 50 to GPRM(4)

**F I G. 64C**

| Data structure | Operation Code | Reserved | | SDG | SS | Reserved |
|---|---|---|---|---|---|---|
| Set byte | B7 & B6 | B5 | B4 | | B3 & B2 | B1 & B0 |
| Installed numeric value example | 6100h | 000h | | 4(GPRM) | 100 (value) | 0000h |

SetMove Command: IAssign 100 to GPRM(4)

**F I G. 64D**

| Data structure | Operation Code | Reserved | | SDG | SS | Reserved |
|---|---|---|---|---|---|---|
| Set byte | B7 & B6 | B5 | B4 | | B3 & B2 | B1 & B0 |
| Installed numeric value example | 6300h | 000h | | 4(GPRM) | 50 (value) | 0000h |

Nop Command

**F I G. 64E**

| Data structure | Operation Code | Reserved | Go To Instruction Operand |
|---|---|---|---|
| Set byte | B7 & B6 | B5~B2 | B1 & B0 |
| Installed numeric value example | 0000h | 00000000h | 0000h |

CallSS Command

**F I G. 64F**

| Data structure | Operation Code | Jump Instruction Operand | Reserved |
|---|---|---|---|
| Set byte | B7 & B6 | B5~B2 | B1 & B0 |
| Installed numeric value example | 3008h | CallSS Instruction | 0000h |

Resume

**F I G. 64G**

| Data structure | Operation Code | Reserved | Link Instruction Operand |
|---|---|---|---|
| Set byte | B7 & B6 | B5~B2 | B1 & B0 |
| Installed numeric value example | 2008h | 00000000h | 0000h |

SetM_LCD Command: Assign Menu Description Language Code to SPRM(0)

**F I G. 64H**

| Data structure | Operation Code | SetSystem Instruction Operand | | Reserved |
|---|---|---|---|---|
| Set byte | B7 & B6 | B5 & B4 | B3 & B2 | B1 & B0 |
| Installed numeric value example | 5800h | 0000h (Reserved) | Menu description language code | 0000h |

VMG and VTS structure
(An example when all EVOBs are recorded in Contiguous Blocks)

| VMG | VTS #1 | VTS #2 | ··· | VST #n | (n ≤ 511) |

EAOBS    EVOB for Menu
(FP_PGCM_EVOB)

| Control data (VMGI) | | EVOBS for Menu (VMGM_EVOBS) | Backup for VMGI |

1 file | 1 file | 1 file | 1 to 98 files | 1 file

| Control data (VTSI) | EVOBS for Menu (VTSM_EVOBS) | EVOBS for Title (VTSTT_EVOBS) | Backup for VTSI |

1 file | 1 to 99 files | 1 to 99 files | 1 file

Cell ID number

| C_IDN #1 | C_IDN #2 | C_IDN #3 | C_IDN #1 | C_IDN #2 | ... | C_IDN #1 | ... | C_IDN #i |

EVOB_IDN

| EVOB_IDN #1 | EVOB_IDN #2 | EVOB_IDN #j |

F I G. 65

C_IDN# : Cell ID number within an EVOB
EVOB_IDN# : EVOB_ID number within an EVOB

EP 1 513 154 A1

An example of
directory structure

F I G. 66

Root
├─ HVDVD_TS
│    ├─ HVI00001.IFO      (for Video Manager Information)
│    ├─ HVM00001.EAO     (for Elementary Audio Object Set)
│    ├─ HVM00001.EVO     (for Enhanced Video Object for FP_PGC Menu)
│    ├─ HVM00002.EVO     (for Enhanced Video Object Set for VMG Menu)
│    ├─ HVM00003.EVO     (for Enhanced Video Object Set for VMG Menu)
│    ├─ HVI00001.BUP     (for Video Manager Information for backup)
│    ├─ HVI00101.IFO     (for Video Title Set #1 Information)
│    ├─ HVM00101.EVO     (for Enhanced Video Object Set for VTS#1 Menu)
│    ├─ HVM00102.EVO     (for Enhanced Video Object Set for VTS#1 Menu)
│    ├─ HVT00101.EVO     (for Enhanced Video Object Set for VTS#1 Title)
│    ├─ HVT00102.EVO     (for Enhanced Video Object Set for VTS#1 Title)
│    ├─ HVT00103.EVO     (for Enhanced Video Object Set for VTS#1 Title)
│    └─ HVI00101.BUP     (for Video Title Set #1 Information for backup)
├─ VIDEO_TS
└─ User Defined

◯ : Directory

▭ : File of which file name shall be assigned

EP 1 513 154 A1

FIG. 67

EP 1 513 154 A1

An example of the dividing of EAOBS

1 file

EAOBS

EAOBS

| Header | EAOB #1 | EAOB #2 | EAOB #3 | EAOB #4 | EAOB #5 | EAOB #6 | EAOB #7 |
|---|---|---|---|---|---|---|---|

Start Address of
EAOB#1
(EAOB#1_SA)

EAOB
#2_SA

EAOB       EAOB
#3_SA    #4_SA

EAOB    EAOB    EAOB
#5_SA   #6_SA   #7_SA

End Address of
EAOBS
(EAOBS_EA)

FIG. 68

Example of the image of the playback order

FIG. 69

Structure of EAOBS

| |
|---|
| Header Information EAOBS<br>(EAOBS_HI) |
| EAOBS Audio Data<br>(EAOBS_AUD) |

# F I G. 70

EAOBS Header Information

| | |
|---|---|
| EAOB_Ns | Number of EAOBs |
| EAOB_EA | End Address of EAOBS |
| EAOB_ATR | Attribute of EAOBS |
| 1ST_EAOB_SA | Start Address of first EAOB |
| 2ND_EAOB_SA | Start Address of second EAOB |
| 3RD_EAOB_SA | Start Address of third EAOB |
| 4TH_EAOB_SA | Start Address of fourth EAOB |
| 5TH_EAOB_SA | Start Address of fifth EAOB |
| 6TH_EAOB_SA | Start Address of sixth EAOB |
| 7TH_EAOB_SA | Start Address of seventh EAOB |
| reserved | reserved |

# F I G. 71

VMGM_PGC_CAT

| b39 | b38 | b37 | b36 | b35 | b34 | b33 | b32 |
|---|---|---|---|---|---|---|---|
| Entry type | reserved | Block mode | | Block type | | reserved | |

| b31 | b30 | b29 | b28 | b27 | b26 | b25 | b24 |
|---|---|---|---|---|---|---|---|
| Menu ID | | | | reserved | | | |

| b23 | b22 | b21 | b20 | b19 | b18 | b17 | b16 |
|---|---|---|---|---|---|---|---|
| PTL_ID_FLD (upper bits) | | | | | | | |

| b15 | b14 | b13 | b12 | b11 | b10 | b9 | b8 |
|---|---|---|---|---|---|---|---|
| PTL_ID_FLD (lower bits) | | | | | | | |

| b7 | b6 | b5 | b4 | b3 | b2 | b1 | b0 |
|---|---|---|---|---|---|---|---|
| Audio Selection | | Start EAOBN | | | End EAOBN | | |

F I G. 72

VTS_PGC_CAT

| b39 | b38 | b37 | b36 | b35 | b34 | b33 | b32 |
|-----|-----|-----|-----|-----|-----|-----|-----|
| Entry type | RSM permission | Block mode | | Block type | | reserved | VTS_TIN |

| b31 | b30 | b29 | b28 | b27 | b26 | b25 | b24 |
|-----|-----|-----|-----|-----|-----|-----|-----|
| VTS_TIN | | | | | | | |

| b23 | b22 | b21 | b20 | b19 | b18 | b17 | b16 |
|-----|-----|-----|-----|-----|-----|-----|-----|
| PTL_ID_FLD (upper bits) | | | | | | | |

| b15 | b14 | b13 | b12 | b11 | b10 | b9 | b8 |
|-----|-----|-----|-----|-----|-----|-----|-----|
| PTL_ID_FLD (lower bits) | | | | | | | |

| b7 | b6 | b5 | b4 | b3 | b2 | b1 | b0 |
|-----|-----|-----|-----|-----|-----|-----|-----|
| Audio Selection | | Start EAOBN | | | End EAOBN | | |

F I G. 73

VTSM_PGC_CAT

| b39 | b38 | b37 | b36 | b35 | b34 | b33 | b32 |
|---|---|---|---|---|---|---|---|
| Entry type | reserved | Block mode | | Block type | | reserved | |

| b31 | b30 | b29 | b28 | b27 | b26 | b25 | b24 |
|---|---|---|---|---|---|---|---|
| Menu ID | | | | reserved | | | |

| b23 | b22 | b21 | b20 | b19 | b18 | b17 | b16 |
|---|---|---|---|---|---|---|---|
| PTL_ID_FLD (upper bits) | | | | | | | |

| b15 | b14 | b13 | b12 | b11 | b10 | b9 | b8 |
|---|---|---|---|---|---|---|---|
| PTL_ID_FLD (lower bits) | | | | | | | |

| b7 | b6 | b5 | b4 | b3 | b2 | b1 | b0 |
|---|---|---|---|---|---|---|---|
| Audio Selection | | Start EAOBN | | | End EAOBN | | |

F I G. 74

```
                Start
                  │
                  ▼                   ┌─────────────┐
        ┌──────────────────┐ S31      │             │
        │ Read and acquire header      ▼
        │ information                      Sound         S37
        │ EAOB_HI of EAOBS         ◇ information selection ◇──NO──┐
        └──────────────────┘           flag is '11b' ?            │
                  │                          │                    │
                  ▼ S32                       ▼ YES    S38         │
        ┌──────────────────┐          ┌──────────────────┐        │
        │ Acquire start addresses      │ Start playback of EAOBS   │
        │ (1ST_EAOB_SA, etc.) of       │ from start EAOB number    │
        │ each EAOB        │          └──────────────────┘        │
        └──────────────────┘                   │                  │
                  │                             ▼                  ▼
                  ▼ S33                                  Sound          S39
        ┌──────────────────┐               ◇ information selection ◇──NO──┐
        │ Detect category information        flag is '10b' ?              │
        │ PGC_CAT in program chain                 │                      │
        │ PGC to be reproduced and                  ▼ YES    S40           │
        │ acquire sound information          ┌──────────────────┐          │
        │ selection flag, start entry        │ Continue playback │         │
        │ number, and end entry number       │ of EAOBS          │         │
        └──────────────────┘               └──────────────────┘          │
                  │                                   │                    │
                  ▼ S34                               ▼          S44        │
              Sound                          ┌──────────────────┐          │
       ◇ information selection ◇──NO──►       │ Repeat playback from │       │
          flag is '00b' ?                     │ start EAOB number    │       │
                  │                           │ to end EAOB number   │       │
                  ▼ YES    S35                └──────────────────┘          │
        ┌──────────────────┐                           │                    │
        │ Stop playback EAOB when                       │                    │
        │ EAOB is reproduced                            │                    │
        └──────────────────┘                           │                    │
                  │                                     │                    │
                  ▼ S36                                 │                    │
        ┌──────────────────┐                           │                    │
        │ Reproduce audio in VOB                        │                    │
        │ designated by PGC in                          │                    │
        │ VMGM_EAOBS       │                            │                    │
        └──────────────────┘                           │                    │
                  │◄──────────────────────────────────┴────────────────────┘
                  ▼
                 End
```

# F I G. 75

Reference model of
non-synchronized audio

Input Buffer

Track Buffer
(EVOB)

De-
Multiplex

Video Buffer

Video
Decoder

⋮

Audio Buffer

Audio
Decoder

Elementary Audio
Object Set
(EAOBS)

Pre-load when
a disc is inserted

Elementary
Audio
Buffer (8MB)

Audio Decoder
Buffer

Controlled by the flag
of Audio Selection

F I G. 76

An example of Language Menu

Language Selection Menu

*Please choose your Language*

English

Español

日本語

F I G. 77

VMGI

| Video Manager Information<br>(VMGI)<br>(Mandatory) | Video Manager Information Management Table<br>(VMGI_MAT)<br>(Mandatory) |
|---|---|
| Elementary Audio Object Set<br>(EAOBS)<br>(Optional) | Title Search Pointer Table<br>(TT_SRPT)<br>(Mandatory) |
| Enhanced Video Object for<br>First Play PGC Menu<br>(FP_PGCM_EVOB)<br>(Optional) | Video Manager Menu PGCI Unit Table<br>(VMGM_PGCI_UT)<br>(Mandatory when VMGM_EVOBS exists) |
| Set for Video Manager Menu<br>(VMGM_EVOBS)<br>(Optional) | Parental Management Information Table<br>(PTL_MAIT)<br>(Optional) |
| Back Up of Video Manager<br>Information<br>(VMGI_BUP)<br>(Mandatory) | Video Title Set Attribute Table<br>(VTS_ATRT)<br>(Mandatory) |
| | Text Data Manager<br>(TXTDT_MG)<br>(Mandatory) |
| | FP_PGC Menu Cell Address Table<br>(FP_PGCM_C_ADT)<br>(Mandatory when FP_PGCM_EVOB exists) |
| | FP_PGC Menu EVOBU Address Map<br>(FP_PGCM_EVOBU_ADMAP)<br>(Mandatory when FP_PGCM_EVOB exists) |
| | Video Manager Menu Cell Address Table<br>(VMGM_C_ADT)<br>(Mandatory when VMGM_EVOB exists) |
| | Video Manager Menu EVOBU Address Map<br>(VMGM_EVOBU_ADMAP)<br>(Mandatory when VMGM_EVOB exists) |

# F I G. 78

|  | Contents |
|---|---|
| VMG_ID | VMG Identifier |
| VMG_EA | End address of VMG |
| reserved | reserved |
| VMGI_EA | End address of VMGI |
| VERN | Version number of DVD Video Specifications |
| VMG_CAT | Video Manager Category |
| VLMS_ID | Volume Set Identifier |
| ADP_ID | Adaptation Identifier |
| reserved | reserved |
| VTS_Ns | Number of Video Title Sets |
| PVR_ID | Provider unique ID |
| POS_CD | POS Code |
| reserved | reserved |
| VMGI_MAT_EA | End address of VMGI_MAT |
| FP_PGCI_SA | Start address of FP_PGCI |
| reserved | reserved |
| EAOBS_SA | Start address of EAOBS |
| FP_PGCM_EVOB_SA | Start address of FP_PGCM_EVOB |
| VMGM_EVOBS_SA | Start address of VMGM_EVOBS |
| TT_SRPT_SA | Start address of TT_SRPT |
| VMGM_PGCI_UT_SA | Start address of VMGM_PGCI_UT |
| PTL_MAIT_SA | Start address of PTL_MAIT |
| VTS_ATRT_SA | Start address of VTS_ATRT |
| TXTDT_MG_SA | Start address of TXTDT_MG |
| FP_PGCM_C_ADT_SA | Start address of FP_PGCM_C_ADT |
| FP_PGCM_EVOBU_ADMAP_SA | Start address of FP_PGCM_EVOBU_ADMAP |
| VMGM_C_ADT_SA | Start address of VMGM_C_ADT |
| VMGM_EVOBU_ADMAP_SA | Start address of VMGM_EVOBU_ADMAP |
| reserved | reserved |
| VMGM_AGL_Ns | Number of Angles for VMGM |
| VMGM_V_ATR | Video attribute of VMGM |
| VMGM_AST_Ns | Number of Audio streams of VMGM |
| VMGM_AST_ATRT | Audio stream attribute table of VMGM |
| reserved | reserved |
| VMGM_SPST_Ns | Number of Sub-picture streams of VMGM |
| VMGM_SPST_ATRT | Sub-picture stream attribute table of VMGM |
| VMGM_GRST_ATR | Graphic stream attribute of VMGM |
| reserved | reserved |
| FP_PGCM_V_ATR | Video attribute of FP_PGCM |
| FP_PGCM_AST_Ns | Number of Audio streams of FP_PGCM |
| FP_PGCM_AST_ATRT | Audio stream attribute table of FP_PGCM |
| FP_PGCM_SPST_Ns | Number of Sub-picture streams of FP_PGCM |
| FP_PGCM_SPST_ATRT | Sub-picture stream attribute table of FP_PGCM |
| FP_PGCM_GRST_ATR | Graphic stream attribute of FP_PGCM |
| EAOB_Ns | Number of EAOBs |
| EAOBS_ATR | Audio data attribute of EAOBS |
| reserved | reserved |
| FP_PGC_CAT | FP_PGC Category |
| reserved | reserved |
| FP_PGCI | First Play PGCI |

FIG. 79

133

FP_PGCM_SPST_ATR

| b47 | b46 | b45 | b44 | b43 | b42 | b41 | b40 |
|---|---|---|---|---|---|---|---|
| Sub-picture coding mode | | | reserved | | | Sub-picture type | |

| b39 | b38 | b37 | b36 | b35 | b34 | b33 | b32 |
|---|---|---|---|---|---|---|---|
| reserved | | | | HD | SD-Wide | SD-PS | SD_LB |

| b31 | b30 | b29 | b28 | b27 | b26 | b25 | b24 |
|---|---|---|---|---|---|---|---|
| Specific code (upper bits) | | | | | | | |

| b23 | b22 | b21 | b20 | b19 | b18 | b17 | b16 |
|---|---|---|---|---|---|---|---|
| Specific code (lower bits) | | | | | | | |

| b15 | b14 | b13 | b12 | b11 | b10 | b9 | b8 |
|---|---|---|---|---|---|---|---|
| reserved | | | | | | | |

| b7 | b6 | b5 | b4 | b3 | b2 | b1 | b0 |
|---|---|---|---|---|---|---|---|
| reserved | | | | | | | |

FIG. 80

(RBP 1018 to 1022) FP_PGC_CAT

| b39 | b38 | b37 | b36 | b35 | b34 | b33 | b32 |
|------|----------|----------|----------|----------|----------|----------|----------|
| Entry type | reserved | reserved | | reserved | | reserved | |

| b31 | b30 | b29 | b28 | b27 | b26 | b25 | b24 |
|------|------|------|------|------|------|------|------|
| reserved | | | | reserved | | | |

| b23 | b22 | b21 | b20 | b19 | b18 | b17 | b16 |
|------|------|------|------|------|------|------|------|
| reserved | | | | | | | |

| b15 | b14 | b13 | b12 | b11 | b10 | b9 | b8 |
|------|------|------|------|------|------|------|------|
| reserved | | | | | | | |

| b7 | b6 | b5 | b4 | b3 | b2 | b1 | b0 |
|------|------|------|------|------|------|------|------|
| Audio Selection | | Start EAOBN | | | End EAOBN | | |

F I G. 81

FP_PGCM_C_ADT
(VMGI)

| |
|---|
| Video Manager Information Management Table (VMGI_MAT) (Mandatory) |
| Title Search Pointer Table (TT_SRPT) (Mandatory) |
| Video Manager Menu PGCI Unit Table (VMGM_PGCI_UT) (Mandatory when VMGM_EVOBS exists) |
| Parental Management Information Table (PTL_MAIT) (Mandatory) |
| Video Title Set Attribute Table (VTS_ATRT) (Mandatory) |
| Text Data Manager (TXTDT_MG) (Mandatory) |
| FP_PGC Menu Cell Address Table (FP_PGCM_C_ADT) (Mandatory when FP_PGCM_EVOB exists) |
| FP_PGC Menu EVOBU Address Map (FP_PGCM_EVOBU_ADMAP) (Mandatory when FP_PGCM_EVOB exists) |
| Video Manager Menu Cell Address Table (VMGM_C_ADT) (Mandatory when VMGM_EVOB exists) |
| Video Manager Menu EVOBU Address Map (VMGM_EVOBU_ADMAP) (Mandatory when VMGM_EVOB exists) |

| |
|---|
| FP_PGC Menu Cell Address Table Information (FP_PGCM_C_ADTI) |
| FP_PGC Menu Cell Piece #1 Information (FP_PGCM_CPI#1) |
| FP_PGC Menu Cell Piece #2 Information (FP_PGCM_CPI #2) |
| ⋮ |
| FP_PGC Menu Cell Piece #n Information (FP_PGCM_CPI #n) |

F I G. 82

FP_PGCM_EVOBU_ADMAP
(VMGI)

| |
|---|
| Video Manager Information Management Table<br>(VMGI_MAT)<br>(Mandatory) |
| Title Search Pointer Table<br>(TT_SRPT)<br>(Mandatory) |
| Video Manager Menu PGCI Unit Table<br>(VMGM_PGCI_UT)<br>(Mandatory when VMGM_EVOBS exists) |
| Parental Management Information Table<br>(PTL_MAIT)<br>(Optional) |
| Video Title Set Attribute Table<br>(VTS_ATRT)<br>(Mandatory) |
| Text Data Manager<br>(TXTDT_MG)<br>(Optional) |
| FP_PGC Menu Cell Address Table<br>(FP_PGCM_C_ADT)<br>(Mandatory when FP_PGCM_EVOB exists) |
| FP_PGC Menu EVOBU Address Map<br>(FP_PGCM_EVOBU_ADMAP)<br>(Mandatory when FP_PGCM_EVOB exists) |
| Video Manager Menu Cell Address Table<br>(VMGM_C_ADT)<br>(Mandatory when VMGM_EVOB exists) |
| Video Manager Menu EVOBU Address Map<br>(VMGM_EVOBU_ADMAP)<br>(Mandatory when VMGM_EVOB exists) |

| |
|---|
| FP_PGC Menu EVOBU<br>Address Map Information<br>(FP_PGCM_EVOBU_ADMAPI) |
| FP_PGC Menu<br>EVOBU #1 Address<br>(FP_PGCM_EVOBU_AD #1) |
| FP_PGC Menu<br>EVOBU #2 Address<br>(FP_PGCM_EVOBU_AD #2) |
| FP_PGC Menu<br>EVOBU #3 Address<br>(FP_PGCM_EVOBU_AD #3) |
| FP_PGC Menu<br>EVOBU #4 Address<br>(FP_PGCM_EVOBU_AD #4) |
| ⋮ |
| ⋮ |
| ⋮ |
| ⋮ |
| FP_PGC Menu<br>EVOBU #n Address<br>(FP_PGCM_EVOBU_AD #n) |

# F I G. 83

PCI

| PCI_GI | PCI General Information |
|---|---|
| NSML_AGLI | Angle Information for non-seamless |
| reserved | reserved |
| RECI | Recording Information |

# FIG. 84

GRUH

| GRU_TY | Graphic Unit type |
|---|---|
| reserved | reserved |
| GRU_SZ | Size of Graphic Unit |
| HLI_SA | Start address of Highlight Information |
| BTNPDT_SA | Start address of Button Pattern Data Table |
| GRD_SA | Start address of Graphic Data |

# FIG. 85

HL_GI

| | |
|---|---|
| GRU_PB_S_FRM | Start video frame of GRU playback |
| GRU_PB_E_FRM | End video frame of GRU playback |
| BTN_SL_E_FRM | End video frame of Button select |
| BTN_OFN | Button Offset number |
| BTN_Ns | Number of Buttons |
| NSL_BTN_Ns | Number of Numerical Select Buttons |
| reserved | reserved |
| FOSL_BTNN | Forcedly Selected Button number |
| FOAC_BTNN | Forcedly Activated Button number |

F I G. 86

| 1 | 2 | 3 | 4 | 5 |
|---|---|---|---|---|

| 1 | 1 | 2 | 2 | 2 | 3 | 3 | 4 | 4 | 4 |
|---|---|---|---|---|---|---|---|---|---|

F I G. 87

| d0 | d1 |
|---|---|
| 0 | Pixel data |

# F I G. 88A

| d0 | d1 | d2 | d3 |
|---|---|---|---|
| 1 | Number of pixels followed | | Pixel data |

# F I G. 88B

| d0 | d1 | d2 | d3 | d4 | d5 |
|---|---|---|---|---|---|
| 1 | 0 | Number of pixels followed | | | Pixel data |

# F I G. 88C

| d0 | d1 | d2 | d3 | d4 | d5 | d6 | d7 |
|---|---|---|---|---|---|---|---|
| 1 | 0 | 0 | Number of pixels followed | | | | Pixel data |

# F I G. 88D

| d0 | d1 | d2 | d3 | d4 | d5 | d6 | d7 | d8 | d9 |
|---|---|---|---|---|---|---|---|---|---|
| 1 | 0 | 0 | 0 | Number of pixels followed | | | | | Pixel data |

# F I G. 88E

| d0 | d1 | d2 | d3 | d4 | d5 | d6 | d7 | d8 | d9 | d10 | d11 |
|---|---|---|---|---|---|---|---|---|---|---|---|
| 1 | 0 | 0 | 0 | 0 | Number of pixels followed | | | | | | Pixel data |

# F I G. 88F

| d0 | d1 | d2 | d3 | d4 | d5 | d6 | d7 | d8 | d9 | d10 | d11 | d12 | d13 |
|---|---|---|---|---|---|---|---|---|---|---|---|---|---|
| 1 | 0 | 0 | 0 | 0 | 0 | Number of pixels followed | | | | | | | Pixel data |

# F I G. 88G

| d0 | d1 | d2 | d3 | d4 | d5 | d6 | d7 | d8 | d9 | d10 | d11 | d12 | d13 | d14 | d15 |
|---|---|---|---|---|---|---|---|---|---|---|---|---|---|---|---|
| 1 | 0 | 0 | 0 | 0 | 0 | 0 | Number of pixels followed | | | | | | | | Pixel data |

# F I G. 88H

| d0 | d1 | d2 | d3 | d4 | d5 | d6 | d7 | d8 | d9 | d10 | d11 | d12 | d13 | d14 | d15 |
|---|---|---|---|---|---|---|---|---|---|---|---|---|---|---|---|
| 1 | 0 | 0 | 0 | 0 | 0 | 0 | 0 | 0 | 0 | 0 | 0 | 0 | 0 | 0 | Pixel data |

# F I G. 88I

Structure of sub-picture unit

Sub-picture unit stored in SP pack a7 of FIG. 39C

| Sub-picture unit header (SPUH) | Pixel data (PXD) | | Sub-picture display control sequence table (SP_DCSQT) |
|---|---|---|---|
| | For top field | For bottom field | |

F I G. 89

EP 1 513 154 A1

Illustration of SPU size information and SP_DCSQT_SA information stored in sub-picture unit header

Size SPU_SZ of sub-picture unit (max 53220 bytes for SD, max 393216 bytes for HD)

Sub-picture unit header (SPUH)

SPU_SZ

SP_DCSQT_SA

Pixel data (PXD)

Sub-picture display control sequence table (SP_DCSQT)

Start address of Sub-picture display control sequence tableSP_DCSQT_SA

F I G. 90

142

Illustration of sub-picture unit header for SD and HD

FIG.91A

| Size SPU_SZ of sub-picture unit "other than 0000h" | Start address of sub-picture display control sequence table SP_DCSQT_SA |
|---|---|
| 2 bytes | 2 bytes |
| Total 4 bytes | |

FIG.91B

| Sub-picture unit header SPUH | Pixel data PXD | Sub-picture display control sequence table SP_DCSQT |
|---|---|---|

FIG.91C

| Pre-header of sub-picture unit PRE_HEAD | Post-header of sub-picture unit POST_HEAD | |
|---|---|---|
| Sub-picture unit ID SPU_ID "0000h" | Size SPU_SZ of sub-picture unit SPU_SZ | Start address of sub-picture display control sequence table SP_DCSQT_SA |
| 2 bytes | 4 bytes | 4 bytes |
| Total 10 bytes | | |

EP 1 513 154 A1

Sub-picture unit header information

SPUH

| PRE_HEAD | Pre-header of sub-picture unit |
|---|---|
| POST_HEAD | Post--header of sub-picture unit |

Sub-picture unit following POST_HEAD indicates conventional SD sub-picture unit when PRE_HEAD is other than 0000h, and sub-picture unit following POST_HEAD indicates new HD sub-picture unit when PRE_HEAD is 000h

F I G. 92A

POST_HEAD (when PRE_HEAD is other thann 0000h)

| SP_DCSQT_SA | Start address of sub-picture display control sequence table (2 bytes) |
|---|---|

F I G. 92B

POST_HEAD (when PRE_HEAD is 0000h)

| SPU_SZ | Size of sub-pucture unit (4 bytes) |
|---|---|
| SP_DCSQT_SA | Start address of sub-picture display control sequence table (4 bytes) |

F I G. 92C

EP 1 513 154 A1

Sub-picture display control command

SP_DCCMD

| Command name | Contents | Code |
|---|---|---|
| (1) FSTA_DSP | Forcedly sets display start timing of pixel data | 00h |
| (2) STA_DSP | Sets display start timing of pixel data | 01h |
| (3) STP_DSP | Sets display stop timing of pixel data | 02h |
| (4) SET_COLOR | Sets color code of pixel data | 03h |
| (5) SET_CONTR | Sets contrast between pixel data and main picture | 04h |
| (6) SET_DAREA | Sets display area of pixel data | 05h |
| (7) SET_DSPXA | Sets display start address of pixel data | 06h |
| (8) CHG_COLCON | Sets change of color and contrast for pixel data | 07h |
| (9) SET_DAREA2 | Sets display area of pixel data 2 | 85h |
| (10) SET_DSPXA2 | Sets display start address of pixel data 2 | 86h |
| (11) CHG_COLCON2 | Sets change of color and contrast for pixel data | 87h |
| (12) CMD_END | End of Display Control Command | FFh |

F I G. 93

EP 1 513 154 A1

Sub-picture unit judgment flow

```
              ┌─────────────┐
              │    Start    │
              └──────┬──────┘
                     │           ┌─S51
         ┌───────────▼───────────┐
         │ Acquire pre-header    │
         │ PRE_HEAD (2 bytes) in │
         │ sub-picture unit      │
         │ header SPUH           │
         └───────────┬───────────┘
                     │       ┌─S52
                 ╱───▼───╲         YES
               ╱  PRE_HEAD ╲──────────────────┐
               ╲   = 0  ?  ╱                   │
                 ╲───┬───╱                     │
                     │ NO   ┌─S53              │   ┌─S57
         ┌───────────▼──────────┐  ┌───────────▼──────────┐
         │ Process PRE_HEAD as  │  │ Process PRE_HEAD as  │
         │ sub-picture unit     │  │ sub-picture unit     │
         │ size SPU_SZ          │  │ identifier SPU_ID    │
         └───────────┬──────────┘  └───────────┬──────────┘
                     │      ┌─S54              │     ┌─S58
         ┌───────────▼──────────┐  ┌───────────▼──────────┐
         │ Process post header  │  │ Process post header  │
         │ POST_HEAD (2 bytes)  │  │ POST_HEAD (8 bytes)  │
         │ as sub-picture       │  │ as sub-picture unit  │
         │ display control      │  │ size SPU_SZ (4 bytes)│
         │ sequence table start │  │ and sub-picture      │
         │ address SP_DCSQT_SA  │  │ display control      │
         │                      │  │ sequence table       │
         │                      │  │ start address        │
         │                      │  │ SP_DCSQT_SA (4 bytes)│
         └───────────┬──────────┘  └───────────┬──────────┘
                     │◄───────────────────────┘
                     │      ┌─S55
         ┌───────────▼──────────────┐
         │ Acquire succeeding pixel │
         │ data PXD                 │
         └───────────┬──────────────┘
                     │      ┌─S56
         ┌───────────▼──────────┐
         │ Acquire succeeding   │
         │ sub-picture display  │
         │ control sequence     │
         │ table SP_DCSQT       │
         └───────────┬──────────┘
                     │
              ┌──────▼──────┐
              │    End      │
              └─────────────┘
```

F I G. 94

VMGM_SPST_ATR

| b47 | b46 | b45 | b44 | b43 | b42 | b41 | b40 |
|---|---|---|---|---|---|---|---|
| Sub-picture coding mode | | | reserved | | | reserved | |

| b39 | b38 | b37 | b36 | b35 | b34 | b33 | b32 |
|---|---|---|---|---|---|---|---|
| reserved | | | | HD | SD-Wide | SD-PS | SD_LB |

| b31 | b30 | b29 | b28 | b27 | b26 | b25 | b24 |
|---|---|---|---|---|---|---|---|
| reserved | | | | | | | |

| b23 | b22 | b21 | b20 | b19 | b18 | b17 | b16 |
|---|---|---|---|---|---|---|---|
| reserved | | | | | | | |

| b15 | b14 | b13 | b12 | b11 | b10 | b9 | b8 |
|---|---|---|---|---|---|---|---|
| reserved | | | | | | | |

| b7 | b6 | b5 | b4 | b3 | b2 | b1 | b0 |
|---|---|---|---|---|---|---|---|
| reserved | | | | | | | |

F I G. 95

HDVTS_SPST_ATR

| b47 | b46 | b45 | b44 | b43 | b42 | b41 | b40 |
|---|---|---|---|---|---|---|---|
| Sub-picture coding mode | | | reserved | | | Sub-picture type | |

| b39 | b38 | b37 | b36 | b35 | b34 | b33 | b32 |
|---|---|---|---|---|---|---|---|
| reserved | | | | HD | SD–Wide | SD–PS | SD_LB |

| b31 | b30 | b29 | b28 | b27 | b26 | b25 | b24 |
|---|---|---|---|---|---|---|---|
| Specific code (upper bits) | | | | | | | |

| b23 | b22 | b21 | b20 | b19 | b18 | b17 | b16 |
|---|---|---|---|---|---|---|---|
| Specific code (lower bits) | | | | | | | |

| b15 | b14 | b13 | b12 | b11 | b10 | b9 | b8 |
|---|---|---|---|---|---|---|---|
| reserved (for Specific code) | | | | | | | |

| b7 | b6 | b5 | b4 | b3 | b2 | b1 | b0 |
|---|---|---|---|---|---|---|---|
| Specific code extension | | | | | | | |

FIG. 96

PGC_SPRT_CTL

SD Availability flag      HD Availability flag

| b31 | b30 | b29 | b28 | b27 | b26 | b25 | b24 |
|-----|-----|-----|-----|-----|-----|-----|-----|
| | | reserved | Decoding Sub-picture stream number for 4 : 3 / HD | | | | |

| b23 | b22 | b21 | b20 | b19 | b18 | b17 | b16 |
|-----|-----|-----|-----|-----|-----|-----|-----|
| reserved | | | Decoding Sub-picture stream number for SD-Wide | | | | |

| b15 | b14 | b13 | b12 | b11 | b10 | b9 | b8 |
|-----|-----|-----|-----|-----|-----|-----|-----|
| reserved | | | Decoding Sub-picture stream number for Letterbox | | | | |

| b7 | b6 | b5 | b4 | b3 | b2 | b1 | b0 |
|-----|-----|-----|-----|-----|-----|-----|-----|
| reserved | | | Decoding Sub-picture stream number for Pan-Scan | | | | |

FIG. 97

PGC_GI

| (1) PGC_CNT | PGC Contents |
|---|---|
| (2) PGC_PB_TM | PGC Playback Time |
| (3) PGC_UOP_CTL | PGC User Operation Control |
| (4) PGC_AST_CTLT | PGC Audio stream Control Table |
| (5) PGC_SPST_CTLT | PGC Sub-picture stream Control Table |
| (6) PGC_NV_CTL | PGC Navigation Control |
| reserved | reserved |
| (7) PGC_SDSP_PLT | PGC Sub-picture Palette for SD |
| (8) PGC_HDSP_PLT | PGC Sub-picture Palette for HD |
| (9) PGC_CMDT_SA | Start address of PGC_CMDT |
| (10) PGC_PGMAP_SA | Start address of PGC_PGMAP |
| (11) C_PBIT_SA | Start address of C_PBIT |
| (12) C_POSIT_SA | Start address of C_POST |

# FIG. 98

FIG. 99

| Case | Type of input | Type of output |
|---|---|---|
| 1 | Video : HD<br>Graphic : HD<br>Sub-picture : HD | 1) HD<br>2) SD 16:9 Wide (down-converted after mixing)<br>3) SD 4:3 Pan-Scan (down-converted after mixing)<br>4) SD 4:3 Letterbox (down-converted after mixing) |
| 2 | Video : HD<br>Graphic : HD<br>Sub-picture : HD<br>Sub-picture : SD (option)<br>(SD Wide/ SD Pan-Scan / SD Letterbox) | 1) HD<br>2) SD 16:9 Wide (mixed after down-conversion)<br>3) SD 4:3 Pan-Scan (mixed after down-conversion & Pan-scan)<br>4) SD 4:3 Letterbox (mixed after down-conversion & Letterbox) |
| 3 | Video : SD<br>Graphic : SD<br>Sub-picture : SD<br>(SD Wide/ SD Pan-Scan / SD Letterbox) | 1) SD 16:9 Wide (mixed)<br>2) SD 4:3 Pan-Scan (mixed after Pan-scan)<br>3) SD 4:3 Letterbox (mixed after Letterbox) |
| 3' | Video : SD<br>Graphic : SD<br>Sub-picture : SD<br>(SD Wide) | 1) SD 16:9 Wide (mixed)<br>2) SD 4:3 Pan-Scan (Pan-Scan after mixing)<br>3) SD 4:3 Letterbox (Letterbox after mixing) |
| 4 | Video : SD<br>Sub-picture : SD<br>(SD Wide/ SD Pan-Scan / SD Letterbox) | 1) SD 16:9 Wide (mixed)<br>2) SD 4:3 Pan-Scan (mixed after Pan-scan)<br>3) SD 4:3 Letterbox (mixed after Letterbox) |

# F I G. 100

EP 1 513 154 A1

Player Reference Model : Case-1

Video for HD ⊕ HD ⊕ → HD

Graphic for HD

Sub-picture for HD

Down Converter → Color Matrix Converter → SD ⊕→ SD Wide (16:9)

Pan-Scan Process ⊕→ SD Pan-Scan (4:3)

Letterboxed Converter ⊕→ SD Letterbox (4:3)

F I G. 101

Player Reference Model : Case-2

Video for HD ⊕ HD ⊕ → HD

Graphic for HD

Sub-picture for HD

Down Converter → Color Matrix Converter → SD ⊕→ SD Wide (16:9)

Sub-picture for SD Wide

Option { Sub-picture for Pan-Scan }

Pan-Scan Process ⊕→ SD Pan-Scan (4:3)

Letterboxed Converter ⊕→ SD Letterbox (4:3)

Sub-picture for SD Letterbox

F I G. 102

152

Player Reference Model : Case-3

| | |
|---|---|
| Video for SD | |
| Graphic for SD | |
| Sub-picture for SD Wide | |
| Sub-picture for SD Pan-Scan | |
| Sub-picture for SD Letterbox | |

Pan-Scan Process

Letterboxed Converter

SD Wide (16:9)

SD Pan-Scan (4:3)

SD Letterbox (4:3)

F I G. 103

Player Reference Model : Case-3'

SD

Video for SD

Graphic for SD

Sub-picture for SD Wide

Pan-Scan Process

Letterboxed Converter

SD Wide (16:9)

SD Pan-Scan (4:3)

SD Letterbox (4:3)

F I G. 104

Player Reference Model : Case-4

F I G. 105

F I G. 106

C_PBI

| (1) C_CAT | Cell category |
|---|---|
| (2) C_PBTM | Cell playback time |
| (3) C_FEVOBU_SA | Start address of start EVOBU of cell |
| (4) C_FILVU_EA | End address of start ILVU of cell |
| (5) C_LEVOBU_SA | Start address of last EVOBU of cell |
| (6) C_LEVOBU_EA | End address of last ILVU of cell |
| (7) C_CMD_SEQ | Sequence of cell command |

F I G. 107

C_CMD_SEQ

| b15 | b14 | b13 | b12 | b11 | b10 | b9 | b8 |
|---|---|---|---|---|---|---|---|
| Number of cell commands | | | | Start cell command number | | | |

| b7 | b6 | b5 | b4 | b3 | b2 | b1 | b0 |
|---|---|---|---|---|---|---|---|
| Start cell command number | | | | | | | |

F I G. 108

**European Patent Office**

# DECLARATION

which under Rule 45 of the European Patent Convention EP 04 02 1019
shall be considered, for the purposes of subsequent
proceedings, as the European search report

**Application Number**

| The Search Division considers that the present application, does not comply with the provisions of the EPC to such an extent that it is not possible to carry out a meaningful search into the state of the art on the basis of *all* claims | **CLASSIFICATION OF THE APPLICATION (Int.Cl.7)** |
|---|---|
| Reason: | G11B27/10<br>G11B27/32 |

The Applicant is informed that no search
report has been established because the
application as filed fails to comply with
the provisions of the Convention to such
an extent that it is not possible to carry
out a meaningful search into the state of
the art on the basis of the claims (Rule
45 EPC).
The search is rendered de facto impossible
by the failure of the application to meet
the prescribed requirements of the EPC
regarding the sufficiency of disclosure
and support, as set out in Art. 83, Rule
27(1)(e), and Art. 84.
Because the DVD specifications were not
available to the public at the filing
date, a definition of terms as e.g. "video
manager" and "audio object set", which
appear in the claims and are used
throughout the description, is not
available, which brings about lack of
support for the claims and insufficiency
of disclosure of the claimed invention.
For the same reason the technical problem,
its solution and the advantageous effects
of the claimed invention cannot be
understood. This renders a meaningful
comparison of the contents of the
description with any prior art impossible,
and therefore makes the search impossible.
Moreover, a search would serve no useful
purpose when having regard to any possible
future prosecution of the application
while considering the insufficiency of
disclosure and lack of support, as
mentioned above (see also B-VIII (6), C-II
(4.9), C-II (4.10), C-III (6) of the
Guidelines for examination in The EPO).

-/--

| Place of search | Date | Examiner |
|---|---|---|
| The Hague | 17 December 2004 | Bruma, C |

EPO FORM 1504 (P04C37)

**European Patent Office**

## DECLARATION

which under Rule 45 of the European Patent Convention shall be considered, for the purposes of subsequent proceedings, as the European search report

**Application Number**

EP 04 02 1019

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason:<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>----- | |

| Place of search | Date | Examiner |
|---|---|---|
| The Hague | 17 December 2004 | Bruma, C |

EPO FORM 1504 (P04C37)